# EUROPÄISCHE PATENTANMELDUNG

(11) **EP 4 767 992 A2**
(43) Veröffentlichungstag der Anmeldung: **01.07.2026**
(21) Anmeldenummer: 26164193.0
(22) Anmeldetag: 16.08.2024
(51) Int. Cl.: A61C 15/04

(54) **VERBINDUNGSEINHEIT FÜR EIN KÖRPERPFLEGEPRODUKT**

(30) Priorität: 17.08.2023 EP 23191946
(62) Teilanmeldung aus: 24765942.8
(71) Anmelder: Trisa Holding AG, 6234 Triengen (CH)
(72) Erfinder: BÄRTSCHI, Armin, 4652 Winznau (CH); FISCHER, Herbert, 5057 Reitnau (CH); ZWIMPFER, Martin, 6004 Luzern (CH)
(74) Vertreter: Daub, Thomas

(57) **Zusammenfassung**

Die Erfindung geht aus von einer Verbindungseinheit (18i; 18cc) für ein Körperpflegeprodukt (10i; 10cc), insbesondere Rasierer, umfassend: einen Grundkörper (84i; 84cc) mit einem Verbindungselement (20i; 20cc), wobei das Verbindungselement (20i; 20cc) mindestens eine Einfahrnut (108i; 108cc) und mindestens einen Rastkamm (110i), eine erste Kontaktfläche (104i), eine zweite Kontaktfläche (106i), eine dritte Kontaktfläche (106i') und ein Formschlusselement (186i; 186cc; 188cc) aufweist.

## Beschreibung

### Stand der Technik

Die Erfindung betrifft eine Verbindungseinheit für ein Körperpflegeprodukt.

Es ist bereits ein Körperpflegeprodukt, mit zumindest einer Anwendungseinheit, mit zumindest einer Griffeinheit, welche zumindest einen materiellen Griffkörper aufweist, der zumindest teilweise, insbesondere zumindest zu einem Großteil, aus einem Papierwerkstoff besteht, und mit einer Verbindungseinheit, über welche die Anwendungseinheit mit der Griffeinheit verbunden ist, vorgeschlagen worden.

Aus der EP 3 964 166 A1, der DE 20 2020 000 613 U1, der WO 2021/081438 A1 sowie der DE 10 2020 100 106 A1 sind bereits Mundhygienemittel bekannt.

Die Aufgabe der Erfindung besteht insbesondere darin, eine gattungsgemäße Vorrichtung mit verbesserten Eigenschaften hinsichtlich einer Haltbarkeit, eines Komforts sowie hinsichtlich der Ökologie bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Verbindungseinheit für ein Körperpflegeprodukt, insbesondere Rasierer, umfassend: einen Grundkörper mit einem Verbindungselement, wobei das Verbindungselement mindestens eine Einfahrnut und mindestens einen Rastkamm, eine erste Kontaktfläche, eine zweite Kontaktfläche, eine dritte Kontaktfläche und ein Formschlusselement aufweist.

Im Vergleich zum Stand der Technik, bei dem die Griffeinheit und Verbindungseinheit vergleichbarer Produkte vollständig aus Kunststoff und allenfalls Metall hergestellt sind, wird im Rahmen dieser Erfindung mindestens ein wesentlicher Anteil der Griffeinheit durch einen flächigen und möglichst nachhaltigen Werkstoff wie Papier, Holz, Bambus etc. ersetzt. Dadurch ergeben sich leichtere, dadurch auch besser handhabbare und nachhaltigere Produkte.

Ferner wird ein Körperpflegeprodukt, insbesondere Mundhygieneprodukt oder Rasierer, mit zumindest einer Anwendungseinheit, vorgeschlagen. Das Körperpflegeprodukt weist zumindest eine Griffeinheit auf, welche zumindest einen materiellen Griffkörper aufweist, der zumindest teilweise, insbesondere zumindest zu einem Großteil, aus einem Papierwerkstoff besteht, und mit einer Verbindungseinheit, über welche die Anwendungseinheit mit der Griffeinheit verbunden ist.

Es wird vorgeschlagen, dass die Verbindungseinheit zumindest ein mit der Anwendungseinheit verbundenes Verbindungselement und zumindest ein mit der Griffeinheit verbundenes weiteres Verbindungselement aufweist, wobei das Verbindungselement der Verbindungseinheit zumindest teilweise, insbesondere zumindest zu einem Großteil, aus einem Polymer, insbesondere aus einem Kunststoff bzw. einer Kunststoffkomponente, besteht. Vorzugsweise sind das Verbindungselement und das weitere Verbindungselement korrespondierend ausgebildet. Bevorzugt bildet das Verbindungselement einen Teil der Anwendungseinheit und das weitere Verbindungselement einen Teil der Griffeinheit. Es wäre jedoch auch eine getrennte Ausbildung denkbar. Vorzugsweise besteht das Verbindungselement der Verbindungseinheit zumindest zu einem Großteil aus einer Hartkomponente.

Unter "zumindest zu einem Großteil" soll insbesondere verstanden werden, dass zumindest ein Hauptbestandteil eines Materials des materiellen Griffkörpers der Griffeinheit ein Papierwerkstoff bzw. des Verbindungselements der Verbindungseinheit ein Polymer, insbesondere ein Kunststoff, ist. Vorzugsweise sind zumindest 50 Gew.% (Gewichtsprozent), vorzugsweise zumindest 70 Gew.% und besonders bevorzugt zumindest 90 Gew.% oder sogar 95 Gew.% des materiellen Griffkörpers der Griffeinheit aus einem Papierwerkstoff bzw. des Verbindungselements der Verbindungseinheit aus einem Polymer, insbesondere aus einem Kunststoff. Besonders bevorzugt besteht der materielle Griffkörper der Griffeinheit vollständig aus einem Papierwerkstoff. Bevorzugt besteht das Verbindungselement der Verbindungseinheit vollständig aus einem Kunststoff. Ferner soll in diesem Zusammenhang unter einem "Papierwerkstoff" insbesondere ein, vorzugsweise flächiger, Werkstoff verstanden werden, der im Wesentlichen aus Fasern, vorzugsweise pflanzlicher Herkunft, besteht. Unter flächigem Werkstoff wird ein Werkstoff verstanden, welcher mindestens während eines Herstellungsschrittes als flächiger Werkstoff zur Verfügung steht, beispielsweise als Zuschnitt, Bogen, Rolle oder dergleichen. Der Werkstoff wird vorzugsweise durch Entwässerung einer Fasersuspension auf einem Sieb gebildet. Das entstehende Faservlies wird anschließend insbesondere verdichtet und getrocknet. Vorzugsweise ist der Werkstoff aus Zellstoff, Holzschliff und/oder Altpapier hergestellt. Es ist denkbar, das Papier durch eine andere nachhaltige Werkstoffalternative wie z.B. Holz, Bambus oder einer Folie aus einer Kunststoffkomponente, insbesondere eine nachhaltige Kunststoffkomponente zu ersetzen. Auch diese Alternativen werden vorzugsweise zumindest als Rohstoff und/oder Halbfabrikat flächig bereitgestellt. Flächig heißt in der ersten und zweiten Ausdehnungsdimension deutlich größer als in der dritten Ausdehnungsdimension. Flächige Werkstoffe sind üblicherweise in einem Bearbeitungsschritt in Bogen oder Rollenform verfügbar. Falls in dieser Schrift daher von einem Papierwerkstoff gesprochen wird, gilt dies selbstverständlich auch für die genannten Alternativen aus vorzugsweise flächig verfügbar gemachten Werkstoffalternativen.

Vorzugsweise besteht der Papierwerkstoff insbesondere aus Fasern, wobei insbesondere verschiedene Verarbeitungsmöglichkeiten bestehen. Der Papierwerkstoff kann zudem behandelt sein. Der Papierwerkstoff kann beschichtet sein, wie insbesondere lackiert, beispielsweise mit einem Lack zu einer Verbesserung der Verbindung beim Verbinden und/oder zur Verbesserung der Resistenz gegen Wasser, und/oder getränkt. Der Papierwerkstoff kann insbesondere sowohl in flacher Form, in Block-Form oder in flüssiger bis pappeförmiger Form und/oder Konsistenz vorliegen, wobei ausgehend von der Form verschiedene Verarbeitungen möglich sind. In flacher Form kann der Papierwerkstoff gerollt, geschichtet, gepresst, laminiert, gerillt, geprägt, gefaltet, gestanzt und/oder grainiert, also insbesondere aufgeraut oder gekörnt, werden. Zu einem Verbinden kann der Papierwerkstoff geklebt werden, wobei allenfalls Vorbereitungsschritte wie Grainieren oder dergleichen nötig sind, verschweißt werden, wie insbesondere mittels Ultraschall-Schweißen, gesiegelt (heiß oder kalt) werden oder laminiert werden, etc. Zu einem Verbinden können auf dem Papierwerkstoff Spezialschichten nötig sein, um die Verbindung zu ermöglichen bzw. zu verbessern. Verbindungen können mit einem Papierwerkstoff oder anderen in dieser Schrift genannten Materialien bzw. Werkstoffen hergestellt werden. Insbesondere können Verbindungen zwischen dem Papierwerkstoff und einer Kunststoffkomponente hergestellt werden. In Block-Form kann der Papierwerkstoff mechanisch bearbeitet, beispielsweise gefräst, gebohrt oder gestanzt werden. In flüssiger Form kann der Papierwerkstoff gegossen oder spritzgegossen werden, wie insbesondere mittels Papierspritzguss oder Papierguss bzw. Faserguss. Hierbei wird der Papierwerkstoff insbesondere analog zu einem Spritzgussprozess in einer Kavität geformt. Anschließend wird das gegossene Teil ausgehärtet bzw. getrocknet. Vorzugsweise sind beim Papierspritzguss oder Papierguss bzw. Faserguss am Körper aus Papierwerkstoff keine Nachbearbeitungen nötig, jedoch sind diese möglich, beispielsweise kann mechanisch nachbearbeitet werden, beispielsweise durch Fräsen, Bohren oder Stanzen. Beim Papierspritzguss ist insbesondere auch ein Anspritzen an andere Teile bzw. Materialien, beispielsweise Kunststoff mit Papier umspritzt, denkbar. Alternativ kann ein Kunststoffteil auch an einem Papierwerkstoff angespritzt werden, indem der plastifizierte Kunststoff bzw. die plastifizierte Kunststoffkomponente (z.B. ein Thermoplast bzw. eine Hartkomponente) form- und/oder kraftschlüssig an den Papierwerkstoff angespritzt wird. Insgesamt kann der Produktaufbau des Körperpflegeprodukts verschiedener Art sein, wie insbesondere vollständig aus einem Papierwerkstoff oder in einer Hybridtechnik, beispielsweise aus Papierwerkstoff kombiniert mit einer Kunststoffkomponente, insbesondere beispielsweise mit einem Wechselkopf und/oder mit einer Griffeinheit aus Papier und einer Anwendungseinheit aus Kunststoff. Weitere Materialkombinationen mit Papier können wie erwähnt Kunststoff und/oder Metall und/oder organische Materialien wie Holz, Bambus und/oder anorganische Materialien wie Stein, Glas etc. sein. Es sei angemerkt, dass in dieser Schrift der Einfachheit halber Papier als bevorzugter Werkstoff für die Griffeinheit beschrieben wird, es aber durchaus im Sinne der Erfindung ist, Papier durch einen vorzugsweise aus im Wesentlichen nachhaltigen Bestandteilen bestehenden Werkstoff wie z.B. Holz oder Bambus oder einer Folie aus einer Kunststoffkomponente, insbesondere eine nachhaltige Kunststoffkomponente zu ersetzen. Der Werkstoff für die Griffeinheit ist zumindest als Rohmaterial bzw. Halbfabrikat vorzugsweise in einer flächigen Form bereitgestellt.

Der Papierwerkstoff weist insbesondere Anforderungen hinsichtlich der Wasserresistenz auf, so sollte der Papierwerkstoff eine geringe bis keine Wasseraufnahme aufweisen. Ferner sollte der Papierwerkstoff eine vorteilhafte Biegefestigkeit aufweisen, was insbesondere für die spätere Anwendung sehr wichtig ist.

Der Papierwerkstoff kann dabei einlagig oder mehrlagig ausgebildet sein. Mehrlagiger Papierwerkstoff besteht aus mehreren Lagen von Papier gleicher oder unterschiedlicher Dicke und/oder unterschiedlichen Eigenschaften und/oder zumindest teilweise aus unterschiedlichem Material. Vorzugsweise können mehrere Lagen von Papier eine Schicht ausbilden, wobei der Körper wiederum auch aus einer oder mehreren Schichten bestehen kann.

Schichten können z.B. mittels Laminieren/Verkleben/Pressen/Falten einer oder mehrerer Lagen erzeugt werden. Die Lagen können sich teilweise oder ganz überlappen, z.B. um eine Verbindung der einen oder mehreren Lagen herzustellen und/oder mindestens teilweise einen Hohlkörper auszubilden.

Äußere Lagen können über unterschiedliche wasserabweisende Eigenschaften verfügen als innere Lagen. Äußere Lagen können über eine unterschiedliche Farbe verfügen als innere Lagen. Äußere Lagen können aus einer Hartkomponente, bevorzugt einer nachhaltigen bestehen. Einzelne oder alle Lagen können im Wesentlichen aus Frischfaser bzw. Primärfaser bestehen. Einzelne oder alle Lagen können im Wesentlichen auch aus Sekundärfaser bestehen.

Der Papierwerkstoff kann über bis zu 15 Lagen verfügen, bevorzugt über zwischen 1 - 12 Lagen, besonders bevorzugt sind Körperpflegeprodukte aus 1, 2, 3, 4, 5, 6, 7, 8, 9 oder 10 Lagen hergestellt. Die Schichten können dabei durch Laminieren, Zusammenkleben oder Zusammenpressen, insbesondere auch ohne Einsatz von Klebstoff, der Lagen hergestellt werden.

Das fertige Körperpflegeprodukt kann zumindest in einzelnen Bereichen aus einer oder mehreren Schichten des Papierwerkstoffs gebildet sein. Beispielsweise können 1, 2, 3, 4, 5 oder 6 Schichten gebildet werden. Die totale Anzahl Lagen errechnet sich in diesem Fall durch die Summe der Lagen der einzelnen integrierten Schichten.

Mehrere Schichten können z.B. mittels Falten einer Schicht erzeugt werden. Die Schichten können sich teilweise oder ganz überlappen z.B. um eine Verbindung herzustellen und/oder mindestens teilweise einen Hohlkörper auszubilden.

Bei einem Produkt aus mehreren Schichten hat insbesondere ein Nachbearbeitungsschritt durch Laminieren/Verkleben/Pressen/Falten etc. stattgefunden. Es wurden insbesondere Schichtpakete erstellt. Es wurden insbesondere mehrere Schichten verbunden.

Eine einzelne Lage weist insbesondere ein Flächengewicht von 50 g/m² bis 500 g/m², vorzugsweise 100 g/m² bis 450 g/m² auf. Die Materialstärke der Lage beträgt insbesondere von 0,05 mm bis 0,65 mm, vorzugsweise von 0 0,1 mm bis 0,5 mm.

Das Material ist insbesondere so aufgebaut, dass Elemente für die Wasserresistenz vorzugsweise direkt im Papiermaterial eingebracht sind. Es wird daher insbesondere keine Beschichtung hierfür vorgesehen, sondern es werden bereits bei der Herstellung des Papierwerkstoffs Bestandteile beigemischt. Die Beimischung von Stärke, beispielsweise Kartoffelstärke, bringt beispielsweise eine Reduktion der Wasseraufnahme. Die Wasseraufnahme ist vorzugsweise möglichst gering, insbesondere nicht größer als 30%, vorzugsweise nicht größer als 25% und besonders bevorzugt nicht größer als 20%, wobei die Prozentzahl insbesondere eine prozentuale, maximale Gewichtszunahme des Papierwerkstoffs zwischen nass und trocken beschreibt. Zur Evaluation dieses Wertes wird ein Teststreifen wie nachfolgend beschrieben ins Wasser getaucht und zuvor und auch direkt anschließend gewogen.

Ferner kann die Faserausrichtung des Papierwerkstoffs längs oder quer ausgerichtet sein, wobei längs, d.h. in der Haupterstreckungsrichtung des Körperpflegeproduktes bevorzugt ist. Das Körperpflegeprodukt ist insbesondere so gestaltet, dass eine oder mehrere Schichten verwendet werden.

Mehrere Lagen bzw. Schichten können vorab verbunden werden und/oder im eigentlichen Produkterstellungsprozess verbunden werden, beispielsweise bei der Integration eines weiteren Elementes wie z.B. der Verbindungseinheit. Die Lagen bzw. Schichten werden insbesondere durch Laminieren, Verkleben, Falten und/oder Siegeln verbunden.

Eine Knick- bzw. Biegesteifigkeit des Papierwerkstoffs kann insbesondere durch interne Tests überwacht werden. Der Test kann dabei insbesondere vor und/oder während eines Prozesses durchgeführt werden. Der Test sieht dabei insbesondere vor, dass so lange gegen den Papierwerkstoff gedrückt wird, bis dieser nachgibt und knickt. Hierfür werden insbesondere Teststreifen in einer Länge von beispielhaft 100 mm und einer Breite von beispielhaft 30 mm eingesetzt. Ein Testaufbau sieht insbesondere vor, dass der Teststreifen an einem Einspannpunkt mit 63 mm ab freiem Ende eingespannt wird. Ein Druckpunkt liegt dann insbesondere wiederum 25 mm ab freiem Ende. Ferner sind verschiedene Testarten denkbar. So kann ein trockener Teststreifen verwendet werden. Das Material wird daher insbesondere so getestet wie er angeliefert wird. Alternativ oder zusätzlich kann ein nasser Teststreifen getestet werden. Dieser wird hierfür insbesondere ab freiem Ende 70 mm über zumindest 2 Sekunden in Wasser getaucht, anschließend abtropfen gelassen und darauffolgend direkt getestet. Alternativ oder zusätzlich kann ein Trocken-Nass-Teststreifen getestet werden. Das Vorgehen ist hierbei wie bei dem nassen Teststreifen, wobei der Teststreifen vor einem Test 24 Stunden trocknet. Der Trocken-Nass-Teststreifen dient insbesondere zu einer Simulation der Zahnreinigung mit Trocken-Nass-Zyklus. Eine einzelne Lage weist dabei trocken insbesondere eine Biegesteifigkeit von 0,8 N bis 2 N, vorzugsweise von 1 N bis 1,6 N auf. Der nass-trocken Teststreifen weist insbesondere eine Biegesteifigkeit von 0,8 N bis 2 N, vorzugsweise von 1 N bis 1,6 N auf. Mehrere verbundene Lagen, hier insbesondere 2 verbundene Lagen, weisen trocken insbesondere eine Biegesteifigkeit von 5 N bis 7 N, vorzugsweise von 5,7 N bis 6,7 N, nass von 1 N bis 2,5 N, vorzugsweise von 1,5 N bis 2 N, und nass-trocken insbesondere von 5 N bis 7 N, vorzugsweise von 5,7 N bis 6,7 N, auf.

Die Erfindung beschreibt insbesondere, dass der Papierwerkstoff vorzugsweise ein flächig vorbereiteter Werkstoff ist. Aus diesem Grund kann der Papierwerkstoff wie beschrieben synonym für Holz-, Furnier- oder auch Bambus-Werkstoffe verwendet werden, die dem Papier entsprechend vorzugsweise flächig vorbereitet sind bzw. verarbeitet werden. Die beschriebenen Ausführungsformen mit Papierwerkstoff können somit synonym mit den oben genannten alternativen Werkstoffen ausgeführt werden.

Das Vorbereiten des Holz- oder auch Bambus-Werkstoffs beinhaltet verschiedene Schritte. Das Holz bzw. der Bambus muss in einem ersten Schritt geschält werden, d.h. die Oberfläche beispielsweise des Stammes wird von der Rinde befreit. Im Anschluss wird eine flache Schicht ab dem Holz-/Bambus-Stamm abgetrennt, beispielsweise durch Abschälen wird so das Holz / der Bambus in eine dünne, flache Form gebracht, welche die Basis für die weitere Verarbeitung bildet. Die abgeschälte Holzschicht kann eine Rolle ausbilden. Aus dieser Schicht wird im Anschluss beispielsweise der Körper ausgestanzt, der dann benutzt werden soll. Vorzugsweise wird gleich komplett gestanzt - ohne dass später noch weiter gestanzt werden muss. Die auf diese Weise vorbereiteten Teile werden sodann geschliffen oder auch trowalisiert, damit die scharfen Kanten und Gräte entfernt werden und auch die Oberfläche entsprechend feiner wird. Falls die Körper eine 3D-Form erhalten, können sie anschließend mittels Druck und/oder Wärme und/oder Feuchtigkeit verformt werden, damit sie fertig vorbereitet sind.

Eine 3D-Formung von Griffkörpern und auch ein Stanzen kann auch direkt im Spritzgusswerkzeug passieren. Dabei wird durch das Schließen des Spritzgusswerkzeugs beispielsweise gleichzeitig der Körper verformt, sodass er eine 3D-Geometrie erhält. Auf die gleiche Weise kann auch der Griffkörper gestanzt werden, durch das Schließen des Werkzeugs findet eine Stanzung statt. Die Formung und Stanzung im Spritzgusswerkzeug kann für alle beschriebenen Produkte und Werkstoffe realisiert werden.

Die verschiedenen Aspekte der Erfindung sind im Zusammenhang vorzugsweise aus flächigen Rohstoffen ausgestalteten Körpern beschrieben. Grundsätzlich können die Aspekte dennoch auch auf voluminösere Körper übertragen werden, beispielsweise zylinderförmige Körper (Stäbe) oder andere Volumen in 3D-Form. Dies kommt beispielsweise im Zusammenhang mit den beschriebenen Papierspritzguss- oder Papierguss- bzw. Faserguss-Verfahren zur Anwendung.

Durch die Ausgestaltung des Körperpflegeprodukts können vorteilhafte Eigenschaften hinsichtlich einer Ergonomie sowie einer Herstellbarkeit des Körperpflegeprodukts bereitgestellt werden. Es kann insbesondere ein vorteilhaft ökologisches bzw. ein zu einem wesentlichen Teil aus nachhaltigen Werkstoffen bestehendes Körperpflegeprodukt bereitgestellt werden. Es kann insbesondere ein vorteilhaft leichtes und dadurch gut manövrierbares Körperpflegeprodukt bereitgestellt werden.

Es kann insbesondere eine vorteilhaft einfache Trennung bzw. Entsorgung des Körperpflegeprodukts erreicht werden. Ferner kann durch die Verbindungseinheit ein vorteilhaft langlebiges und stabiles Körperpflegeprodukt bereitgestellt werden.

Das Körperpflegeprodukt ist insbesondere von einem Rasierer, insbesondere einem manuellen Rasierer, einem Dermaplaning-Rasierer, einem Pinsel, insbesondere einem Applikationspinsel für kosmetische Anwendungen wie z.B. zur Haarfärbung, oder einem Applikator für medizinische Anwendungen wie z.B. Applikatoren im Dentalbereich wie beispielsweise Applikationspinsel für Hilfsmittel für Füllungen, Kronen oder dergleichen, oder einem Applikator für kosmetische Anwendungen beispielsweise ein Applikator für Mascara, und/oder einem Mundhygienemittel gebildet. Der Rasierer kann beispielsweise von einem Einwegrasierer oder einem Mehrwegrasierer mit einer wechselbaren Klinge gebildet sein.

Unter einem "Mundhygienemittel" soll insbesondere eine Zahnbürste und/oder ein Zungenreiniger oder ein Flosser verstanden werden. Vorteilhaft ist das Mundhygienemittel als eine Zahnbürste, insbesondere eine Handzahnbürste, ausgebildet. Das Mundhygienemittel kann hierbei bei einer Ausbildung als Zahnbürste insbesondere eine Einwegzahnbürste (für Einmalgebrauch), eine Mehrwegzahnbürste (für Mehrfachgebrauch) oder auch eine Wechselkopfzahnbürste sein. Das Mundhygienemittel könnte jedoch auch allgemein von einem Bürstenprodukt gebildet sein. Unter einem "Körperpflegeprodukt" soll insbesondere eine Mundhygienebürste und/oder eine Kosmetikbürste und/oder eine Haarbürste und/oder eine Haushaltsbürste verstanden werden. Als Mundhygienebürsten sind beispielsweise manuelle Zahnbürsten wie Mehrwegzahnbürsten, Wechselkopfzahnbürsten, Aufsteckbürsten für elektrische Zahnbürsten, Einwegzahnbürsten oder Single-Tuft-Bürsten oder Zungenreiniger oder Flosser denkbar. Als Körperpflegeprodukte, insbesondere Kosmetikbürsten, sind ferner beispielsweise Mascarabürsten, Nagellackpinsel, Gesichtsbürsten, Applikatoren, Massagegeräte, Make-up-Pinsel, Rasierpinsel und/oder Nassrasierer oder andere Körperpflegeprodukte denkbar.

Generell können auch medizinische Applikatoren, die in ähnlicher Form aufgebaut sind wie die Körperpflegeprodukte, mit der vorliegenden Erfindung realisiert werden, beispielsweise Applikatoren im Dentalbereich, wie beispielsweise Applikationspinsel für Hilfsmittel für Füllungen, Kronen oder dergleichen, Whitening Fluide oder ein Applikator für kosmetische Anwendungen, beispielsweise ein Applikator für Mascara.

Bei einer Ausbildung als Zahnbürste ist insbesondere denkbar, dass die Anwendungseinheit aus einem Grundkörper und einem Borstenplättchen, welches mit Borsten und/oder alternativen Reinigungselementen besetzt ist, zusammengesetzt ist. Weiter kann die Anwendungseinheit aus einem Grundkörper bestehen, welcher mit Borsten umspritzt bzw. besetzt wird, oder die Anwendungseinheit kann ohne Grundkörper direkt bzw. einstückig gespritzt sein. Vorzugsweise besteht das Körperpflegeprodukt aus einer Anwendungseinheit mit Borsten, der Verbindungseinheit und der Griffeinheit, wobei die Griffeinheit insbesondere einen Halsteil aufweist. Alle gespritzten Teilelemente können aus mindestens einer Hart- und/oder einer oder mehreren Weichkomponente/n und/oder einem oder mehreren Materialien für gespritzte Borsten bestehen.

Das Körperpflegeprodukt weist insbesondere eine Längsachse auf, die vorteilhaft zumindest im Wesentlichen parallel zu einer Haupterstreckungsrichtung des Körperpflegeprodukts angeordnet ist. Bevorzugt verläuft die Längsachse zumindest abschnittsweise innerhalb des Körperpflegeprodukts und insbesondere durch dessen Schwerpunkt. Insbesondere ist die Längsachse des Körperpflegeprodukts eine Zentralachse des Körperpflegeprodukts und/oder eine Zentralachse der Griffeinheit. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Punkten schneidet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter einer "Haupterstreckung" eines Objekts soll in diesem Zusammenhang insbesondere eine Erstreckung einer längsten Kante eines kleinsten gedachten Quaders, welcher das Objekt gerade noch vollständig umschließt, verstanden werden.

Vorteilhaft weist die Anwendungseinheit zumindest einen Reinigungsbereich auf, der zu einer Zahnreinigungsanwendung, insbesondere in einem Mundraum des Benutzers, vorgesehen ist. Vorzugsweise umfasst der Reinigungsbereich zumindest eine Reinigungseinheit. Die Reinigungseinheit kann einen Bürstenkopf, vorteilhaft einen Zahnbürstenkopf, bevorzugt mit mehreren Borsten und/oder Borstenbündeln und/oder gespritzten Reinigungselementen bzw. gespritzten Borsten und/oder weichelastischen Reinigungselementen, umfassen. Alternativ oder zusätzlich kann die Reinigungseinheit auch als ein Single Tuft (d.h. als einzelnes großes Borstenbündel), ein Zahnzwischenraumreinigungselement (z.B. Zahnseide, Zahnstocher, Stick, Interdentalbürste etc.) oder dergleichen ausgebildet sein. Ferner weist die Anwendungseinheit vorteilhaft zumindest einen Grundkörper auf, welcher bevorzugt mit dem Reinigungsbereich, insbesondere unmittelbar und/oder einstückig, verbunden ist. Alternativ oder zusätzlich weist die Anwendungseinheit zumindest einen Applikationsbereich auf, der beispielsweise zu einer Speicherung und Abgabe einer Farbe, insbesondere einer Haarfarbe, vorgesehen ist. Alternativ oder zusätzlich weist die Anwendungseinheit zumindest einen Rasierbereich mit zumindest einer Klinge auf.

Alternativ oder zusätzlich weist die Anwendungseinheit zumindest einen Applikationsbereich auf, der beispielsweise zu einer Speicherung und Abgabe eines Mediums, insbesondere eines Hilfsmittels für Füllungen, Kronen oder dergleichen insbesondere eines Dentalklebstoffs, -primers oder ähnlichem, vorgesehen ist. Dieser Applikationsbereich ist als Applikatorkopf ausgebildet, wobei die Form des Applikatorkopfs vorzugsweise kugelförmig oder ellipsoidförmig gestaltet ist. Die Oberfläche des Applikatorkopfs ist mit Elementen gestaltet, welche die Applikation bzw. Speicherung und / oder Abgabe eines Mediums unterstützen. Dabei können beispielsweise Ausnehmungen in der Oberfläche gestaltet sein, die dies ermöglichen oder der Applikatorkopf kann mit einer Beflockung versehen sein, welche dies ermöglicht. Die Ausnehmungen können rund um den Applikatorkopf ausgebildet sein oder nur partiell auf gewissen Teilflächen. Die Ausnehmungen können als einzelne isolierte Elemente realisiert sein - beispielsweise in Form von einzelnen Streifen, oder die Ausnehmung kann als eine durchgehende Form über den ganzen Körper gebildet sein - beispielsweise in Form einer Spirale.

Die Ausgestaltung eines entsprechenden Applikatorkopfs kann durch Spritzgießen erfolgen. Der Applikatorkopf kann an einen Griffkörper angespritzt werden, der Griffkörper wird damit umspritzt und die Verbindung zwischen dem Applikatorkopf und dem Griffkörper wird auf diese Weise ausgestaltet.

Ein Applikatorkopf für die Applikation eines Mundhygienemittels beispielsweise eines Whitening Fluids kann an einen Griffkörper angespritzt sein. Der Applikatorkopf, d.h. die Anwendungseinheit ist mittels der Verbindungseinheit mit der weiteren Verbindungseinheit bzw. der Griffeinheit verbunden. Die Anwendungseinheit trägt eine sich unter Speicheleinfluss öffnende Fluidkugel mit einer Whitening Flüssigkeit in einem Träger des Körperpflegeprodukts. Die Anwendungseinheit weist einen Träger mit einer Vertiefung und in dieser mit radial nach außenstehenden Lamellen auf, welcher im Zentrum eine Ausnehmung für die Fluidkugel bildet. Die Fluidkugel kann so von Wasser oder Speichel umflossen werden, wobei sie sich auflöst und die in sich tragende Flüssigkeit freisetzt. Alternativ zur Fluidkugel kann der entsprechende Bereich auch leer gestaltet sein, sodass ein Anwender eine Paste zur Anwendung in diese Öffnung einbringen kann. Die ganze Anwendungseinheit kann so im Mund beispielsweise an die Zähne geführt werden, um das Fluid auf die Zähne aufzubringen. Die Lamellen und die Form der Anwendungseinheit unterstützen dabei.

Unter "einstückig" soll insbesondere zumindest stoffschlüssig verbunden, beispielsweise durch einen Verbindungsprozess wie einen Schweißprozess, einen Siegelprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorzugsweise weist die Griffeinheit zumindest ein Griffelement auf, das vorteilhaft zu einem Halten mit einer Hand vorgesehen ist. Es ist denkbar, dass das Griffelement zumindest bereichsweise tailliert und/oder mit einem konkaven Oberflächenbereich und/oder mit einem konvexen Oberflächenbereich ausgebildet ist. Das Griffelement verfügt vorzugsweise zumindest bereichsweise über einen Querschnitt, welcher ein U-Profil bildet. Dies erlaubt vorteilhaft eine höhere Stabilität, einen sicheren Halt und optimiert die Ergonomie. Besonders bevorzugt ist das Griffelement länglich ausgebildet, wobei vorteilhaft eine Längsachse des Griffelements der Längsachse des Körperpflegeprodukts entspricht. Das Griffelement ist zumindest im Wesentlichen, insbesondere vollständig, aus mindestens einem Papierwerkstoff oder den bereits erwähnten Alternativen wie Holz, Bambus, etc. ausgebildet. Alternativ oder zusätzlich kann das Griffelement und/oder die Griffeinheit zumindest teilweise aus einer Hartkomponente und/oder aus einer oder mehreren Weichkomponenten und/oder aus Material für gespritzte Borsten ausgebildet sein. Vorzugsweise ist der materielle Griffkörper zumindest zu einem Großteil, insbesondere vollständig, aus mindestens einem Papierwerkstoff ausgebildet. Insbesondere umfasst das Griffelement vorteilhaft zumindest einen Daumengriffbereich bzw. Fingerablagebereich und/oder zumindest einen Handgriffbereich. Vorteilhaft ist der Daumengriffbereich bzw. Fingerablagebereich auf der Vorderseite oder seitlich am Körperpflegeprodukt und insbesondere auf einer Vorderseite oder seitlich am Griffelement angeordnet. Es ist denkbar, dass der Daumengriffbereich und/oder der Handgriffbereich zumindest ein Element und/oder eine Oberflächenstrukturierung aus mindestens einem Papierwerkstoff, aus mindestens einer Weichkomponente und/oder mindestens einer Hartkomponente aufweisen/aufweist.

Die für die Herstellung eingesetzten Kunststoffe aus Hart- und/oder Weichkomponenten, welche mittels Spritzguss verarbeitet werden, können insbesondere wie folgt eingeteilt werden:
- Konventionelle Materialien bzw. Materialkomponenten: Materialien, im Wesentlichen Neumaterialien, die größtenteils erdölbasiert sind.
- Nachhaltige Materialien bzw. nachhaltige Materialkomponenten: wie nachfolgend aufgezählt und später beschrieben vorzugsweise biobasiert, abbaubar und/oder recycliert.
   ∘ Biobasierte Materialien: Material, welches insbesondere zu mehr als 60 %, vorzugsweise zu mehr als 80 % und besonders bevorzugt zu 100 % aus nachwachsenden Rohstoffen hergestellt ist. Eine weitere mögliche zusätzliche Eigenschaft biobasierter Materialien ist insbesondere, dass die biobasierten Materialien biologisch abbaubar sind. Vorzugsweise basieren die Materialien nicht auf Nahrungsmitteln, wie insbesondere Mais etc..
   ∘ Biologisch abbaubare Materialien: Material, das gemäß den gängigen Normen biologisch abbaubar ist. Hierzu zählt insbesondere die Kompostierbarkeit (industriell oder nicht-industriell). Dabei können Materialien aus nachwachsenden Rohstoffen diese Eigenschaft aufweisen.
   ∘ Recyclierte Materialien: Materialien, die aus einem Recycling-Prozess stammen, wie beispielsweise Post Consumer Recycled Materialien, Post Industrial Recycled Materialien, Ocean Waste Plastic oder Social Plastic. Besonders bevorzugt wird eine recyclierte Hartkomponente wie recycliertes Polypropylen (PP) oder recycliertes Polyethylenterephthalat (PET) verwendet. Die eingesetzten Materialien können recyclebare Materialien sein. Für recyclierbare Materialien besteht nach dem Gebrauch vorteilhaft eine Recyclingmöglichkeit.

Im Rahmen dieser Offenbarung kommen nahezu beliebige Hartkomponenten und Weichkomponenten infrage, die der Fachmann zweckgemäß geeignet kombinieren und/oder auswählen wird.

Als Hartkomponente kommen beispielsweise Styrolpolymerisate wie Styrolacrylnitril (SAN), Polystyrol (PS), Acrylnitrylbutadienstyrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephthalat (PET), insbesondere in Form von säuremodifiziertem Polyethylenterephthalat (PETA) oder glykolmodifiziertem Polyethylenterephthalat (PETG), Polybutylenterephthalat (PBT), säuremodifiziertes Polycyclohexylendimethylenterephthalat (PCT-A), glykolmodifiziertes Polycyclohexylendimethylenterephthalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphthalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Als Hartkomponente wird bevorzugt Polypropylen (PP) eingesetzt. Mindestens gewisse als Hartkomponente genannte Materialien können nachhaltige Materialien sein. Insbesondere Materialien mit Celluloseanteil sind zumindest teilweise biobasiert.

Vorteilhaft werden Hartkomponenten für stabile und/oder strukturtragende Elemente, insbesondere in dem Griffelement und/oder in einem Verbindungselement der Anwendungseinheit oder dergleichen eingesetzt. Vorteilhaft ist denkbar, dass eine verwendete Hartkomponente und eine verwendete Weichkomponente unterschiedliche Farben aufweisen, sodass Oberflächenstrukturen, Beschriftungen, Motive und dergleichen mittels geeigneter Gestaltung von Grundkörper und Weichelement realisierbar sind.

Als Weichkomponenten kommen beispielsweise thermoplastische Styrol-Elastomere (TPE-S) wie etwa ein Styrol-Ethylen-Butylen-Styrol-Copolymer (SEBS), ein StyrolButadien-Styrol-Copolymer (SBS) oder dergleichen infrage. Zudem ist eine Verwendung thermoplastischer Polyurethan-Elastomere (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar. Weiterhin kann eine Weichkomponente beispielsweise zumindest ein Silikon umfassen. Vorteilhaft weist eine Weichkomponente eine Shore-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss. Die unter der Weichkomponente genannten Materialien können nachhaltige Materialien sein. Hartkomponente, Weichkomponente oder Material für gespritzte Borsten bilden mit dem Papierwerkstoff keinen Materialschluss.

Das Körperpflegeprodukt weist bei einer Ausbildung als Zahnbürste insbesondere eine Vorderseite und eine Rückseite auf, die insbesondere einander abgewandt angeordnet sind. Vorzugsweise ist der Reinigungsbereich bzw. der Behandlungsbereich der Anwendungseinheit auf der Vorderseite des Körperpflegeprodukts angeordnet. Die Vorderseite ist insbesondere eine in einer Betrachtungsrichtung senkrecht zu der Längsachse des Körperpflegeprodukts und senkrecht zu der Breitenachse des Körperpflegeprodukts sichtbare Seite des Körperpflegeprodukts. Als Vorderseite des Körperpflegeprodukts ist insbesondere jene Seite der Bürste bezeichnet, auf welcher der Daumen aufgelegt wird. Die Vorderseite ist normalerweise auch jene Seite, auf welche das Borstenfeld gerichtet ist. Die Rückseite entspricht vorteilhaft einer in einer entgegengesetzten Betrachtungsrichtung sichtbaren Seite des Körperpflegeprodukts. Als Rückseite des Körperpflegeprodukts wird die dem Borstenfeld entgegengesetzte Seite der Zahnbürste bezeichnet. Als linke Seite des Körperpflegeprodukts wird insbesondere eine Seite bezeichnet, welche links liegt, wenn man senkrecht auf die Vorderseite des Körperpflegeprodukts blickt und der Reinigungsbereich oben liegt. Als rechte Seite des Körperpflegeprodukts wird insbesondere eine Seite bezeichnet, welche rechts liegt, wenn man senkrecht auf die Vorderseite des Körperpflegeprodukts blickt. Als Oberseite wird insbesondere ein Ende des Körperpflegeprodukts bezeichnet, an welchem der Reinigungsbereich angeordnet ist. Als Unterseite wird insbesondere ein der Oberseite entgegengesetztes Ende des Körperpflegeprodukts bezeichnet, welches dem Griffbereich am nächsten liegt.

Unter einer "Verbindungseinheit" soll in diesem Zusammenhang insbesondere eine Einheit verstanden werden, welche zu einer Bereitstellung einer festen und/oder lösbaren Verbindung zwischen zwei Einheiten, insbesondere Bauteilen, vorgesehen ist. Vorzugsweise verbindet die Verbindungseinheit die Anwendungseinheit mit der Griffeinheit. Bevorzugt sind die Anwendungseinheit und die Griffeinheit zumindest für eine Benutzung miteinander verbunden. Vorzugsweise kann die Verbindungseinheit sowohl von einer separaten Einheit gebildet sein, als auch zumindest teilweise fest mit der Griffeinheit und/oder der Anwendungseinheit verbunden sein. Die Verbindungseinheit weist insbesondere das Verbindungselement auf, welches fest mit der Anwendungseinheit verbunden ist, und das weitere Verbindungselement auf, welches fest mit der Griffeinheit verbunden ist. Darunter, dass zumindest ein erstes Element mit zumindest einem weiteren Element "verbunden" ist, soll insbesondere verstanden werden, dass das erste Element vorteilhaft über zumindest einen Kraftschluss und/oder zumindest einen Formschluss (z. B. durch das Zusammenstecken von Formschlusselementen)und/oder zumindest einen Stoffschluss mit dem weiteren Element verbunden ist. Ein Kraft- und/oder Formschluss ist dabei beispielsweise über eine Vernietung und/oder eine Rastverbindung und/oder eine Nut-Feder-Verbindung und/oder eine Nietverbindung und/oder eine Klemmverbindung und/oder eine Steckverbindung und/oder eine weitere, dem Fachmann als sinnvoll erscheinende Verbindung, realisierbar. Ein Stoffschluss ist dabei beispielsweise durch einen Schweißprozess und/oder einen Siegelprozess und/oder einen Klebeprozess, unter bestimmten Umständen einen Umspritz- bzw. Anspritzprozess und/oder einen Verformungsprozess und/oder einen anderen, dem Fachmann als sinnvoll erscheinenden Prozess, realisierbar. Unter einer "formschlüssigen Verbindung" soll in diesem Zusammenhang insbesondere eine Verbindung verstanden werden, bei welcher aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander. Vorzugsweise ist insbesondere zwischen der Anwendungseinheit und der Griffeinheit ein Formschluss, wie beispielsweise durch aneinander angepasste Geometrien, und/oder ein Form- und/oder Stoffschluss, wie insbesondere unter bestimmten Umständen durch ein Umspritz- bzw. Anspritzprozess, vorgesehen. So können insbesondere an der Anwendungseinheit, der Griffeinheit und/oder der Verbindungseinheit Vertiefungen, Ausnehmungen, Kämme und/oder Formschlusselemente vorgesehen sein. Insbesondere kann die formschlüssige Verbindung auch lediglich einer Orientierung der Verbindungsmöglichkeiten dienen, um bei einer Montage eine einfache Verbindung zu ermöglichen oder um beispielsweise bei einer Klebeverbindung schädliche Querkräfte abzufangen. Die Orientierung der Verbindungsmöglichkeiten kann insbesondere rund um die Griffeinheit erfolgen, wie beispielsweise bei einem Pinsel, einem Rasierer oder dergleichen auf der Vorderseite, der Rückseite oder den kurzen Seiten. Wenn bei dem Körperpflegeprodukt lange und kurze Seiten vorhanden sind, erfolgt eine Orientierung der Verbindungsmöglichkeiten insbesondere an einer langen Seite.

Alternativ oder zusätzlich bestehen zusätzlich Befestigungsmöglichkeiten für eine Verbindung der Verbindungseinheit. Eine Befestigungsmöglichkeit stellt das Heißnieten dar. Hierbei wird das Verbindungselement mit einer Nietgeometrie gestaltet und an dem weiteren Verbindungselement montiert. Anschließend wird mittels eines heißen Stempels der Nietkörper verdrückt. Dies ist insbesondere auch bei einer, insbesondere nicht auf die konkrete Ausgestaltung beschränkten, Ausgestaltung des Körperpflegeprodukts als Flosser möglich, wenn jede Kappe mit einer Nieteinheit ausgestattet ist, welche sich beispielsweise durch eine Ausnehmung im Arm erstrecken kann. Eine weitere Befestigungsmöglichkeit stellt das Kleben dar. Eine weitere Befestigungsmöglichkeit stellt eine Schnappverbindung dar.

Eine weitere Befestigungsmöglichkeit stellt das Schweißen dar, wie beispielsweise das Ultraschall- oder Reibschweißen. Hierfür kann der Papierwerkstoff, insbesondere das weitere Verbindungselement, mit einer Folie aus Hartkomponente laminiert werden und ein Borstenfeld hergestellt aus einer kompatiblen Hartkomponente (z.B. mit dem AFT Verfahren) mit Schweißen, insbesondere Ultraschallschweißen oder Reibschweißen, verbunden werden. Insbesondere stellt das Schweißen und/oder Laminieren eines ersten Materials auf ein zweites Material eine weitere Befestigungsmöglichkeit dar. Dabei kann beispielsweise das erste Material eine harte Komponente und das zweite Material eine harte Komponente enthalten. Ein weiteres Beispiel ist, dass das erste Material eine harte Komponente und das zweite Material eine weiche Komponente enthalten kann. Ein weiteres Beispiel ist, dass das erste Material eine weiche Komponente und das zweite Material eine weiche Komponente enthalten kann. In einigen Ausführungsformen umfasst das erste Material ein Papiermaterial. In einigen Ausführungsformen kann das erste Material und/oder das zweite Material ein Papiermaterial und ein Folienmaterial (z. B. eine PBT-Folie, eine Polypropylen (PP)-Folie, eine Polyethlyen (PE)-Folie, eine Polyacryl (PA)-Folie, eine Polyurethan (PU)-Folie oder Kombinationen davon usw.) umfassen. In einigen Ausführungsformen kann das erste Material und/oder das zweite Material eine Kunststoffkomponente enthalten (z. B. eine spritzgegossene oder extrudierte Kunststoffkomponente).

Z.B. kann der Papierwerkstoff, insbesondere das weitere Verbindungselement, mit einer Folie aus Hartkomponente z.B. einer PA-Folie laminiert und/oder ein Borstenfeld aus PA Borsten (z.B. mit AFT hergestellt) mit Schweißen, insbesondere Ultraschallschweißen oder Reibschweißen, verbunden werden.

Z.B. kann der Papierwerkstoff mit einer PBT-Folie laminiert und/oder einem Borstenfeld aus PBT Borsten (z.B. mit AFT hergestellt) mit Schweißen, insbesondere Ultraschallschweißen oder Reibschweißen, verbunden werden.

Z.B. kann der Papierwerkstoff mit einer PP- oder PE-Folie laminiert und/oder ein dünner Bürstenkopf aus PP mittels Schweißen verbunden werden. Der Bürstenkopf aus PP oder PE kann mittels Ankerstanzen oder auch mittels ankerlosen Verfahren mit Borsten besetzt werden (z.B. AFT-, PTt-, Inmouldverfahren, etc.).

Z.B. kann der Papierwerkstoff mit einer PU-Folie laminiert und/oder ein dünner, gespritzter Bürstenkopf aus PU mittels Schweißen verbunden werden.

Alternativ kann der Papierwerkstoff mit einer Folie aus einer Kunststoffkomponente laminiert und dann mit einer kompatiblen Kunststoffkomponente umspritzt werden.

Z.B. kann der Papierwerkstoff mit einer PP- oder PE-Folie laminiert und/oder eine Verbindungseinheit bzw. Anwendungseinheit aus PP oder PE umspritzt, bzw. angespritzt werden.

Z.B. kann der Papierwerkstoff mit einer PU-Folie laminiert und mit gespritzten PU Borsten Komponenten umspritzt werden. Die gespritzten Borsten können im gleichen Arbeitsprozess mit dem Umspritzen ausgebildet werden.

Bei diesen Schweißprozessen sind die eingesetzten Materialien für den Schweißprozess affin bzw. kompatibel und gehen durch den Schweißprozess einen Stoffschluss ein.

Die für die Verbindungseinheit genannten Befestigungsmöglichkeiten bzw. Materialkombinationen können ebenfalls verwendet werden, falls die Anwendungseinheit direkt auf der Griffeinheit befestigt werden soll.

Die Verbindungseinheit weist insbesondere die Funktion auf, die Anwendungseinheit oder eine Schnittstelle der Anwendungseinheit mit der Griffeinheit zu verbinden. Die Verbindungseinheit weist insbesondere mehrere Funktionen auf. Insbesondere ist die Verbindungseinheit dazu vorgesehen, die Griffeinheit zu verbinden und die Anwendungseinheit zu halten. Die Verbindungseinheit bildet insbesondere eine Schnittstelle zu der Griffeinheit aus. Ferner kann die Verbindungseinheit insbesondere ein Wechselsystem enthalten, mit welchem die Anwendungseinheit ausgetauscht werden kann. Die Verbindungseinheit kann die Anwendungseinheit auch beweglich lagern.

Zudem kann die Verbindungseinheit beispielsweise eine Haltegeometrie zu einem Greifen bzw. Halten des Körperpflegeprodukts beispielsweise während der Anwendung aufweisen. Insbesondere kann die Verbindungseinheit über eine Fingerauflage(n) bzw. Daumenauflage verfügen. Diese Fingerauflage(n) kann über Strukturelemente verfügen, welche das Halten erleichtern. Die Griffeinheit ist vorzugsweise eher dünn und flächig geformt ausgestaltet, dies muss für die Verbindungseinheit nicht zutreffen, da sie aus einem Formteil gebildet wird. Die Verbindungseinheit kann daher steifer bzw. weniger flexibel (z.B. bezüglich Biegung, Torsion) ausgestaltet werden als das Griffeinheit. Die Komponente für die Verbindungseinheit wird vorzugsweise härter gewählt als die Komponente der Griffeinheit. Dadurch kann die Verbindungseinheit mittels derer Fingerauflage(n) bzw. Daumenauflage in der Anwendung eine wesentliche Rolle zum Führen bzw. Manövrieren des Produktes übernehmen.

Die Verbindungseinheit kann über Mittel verfügen, um eine Trennung von der Griffeinheit bzw. Anwendungseinheit zu erleichtern (z.B. für eine fachgerechte Entsorgung). Z.B. können Abzugslaschen, Sollbruchstellen, Trennhilfen, etc. vorgesehen sein.

So ist insbesondere eine Kombination aus verschiedenen genannten Funktionen denkbar, wie beispielsweise innen einer Einführungsgeometrie oder einer Stützgeometrie und außen eines Halteelements.

Das Körperpflegeprodukt weist zumindest eine Anwendungseinheit mit zumindest einer Griffeinheit auf, welche zumindest einen materiellen Griffkörper aufweist, der zumindest teilweise, insbesondere zumindest zu einem Großteil, aus einem Papier-, Holz- oder Bambuswerkstoff besteht, und mit einer Verbindungseinheit, über welche die Anwendungseinheit mit der Griffeinheit verbunden ist, Es wird vorgeschlagen, dass die Verbindungseinheit zumindest ein mit der Anwendungseinheit verbundenes Verbindungselement und zumindest ein mit der Griffeinheit verbundenes weiteres Verbindungselement aufweist, wobei das Verbindungselement der Verbindungseinheit zumindest teilweise, insbesondere zumindest zu einem Großteil, aus einem Polymer, insbesondere aus einem Kunststoff, besteht.

Für einen flachen Griffkörper kann insbesondere ein Holz- oder Bambuswerkstoff oder eine Papier- bzw. Karton-Basis verwendet werden. Holz- oder Bambuswerkstoffe sind für den voluminösen Aufbau eines Griffkörpers bestehend aus flachen Elementen nicht geeignet. Die Materialstärken für flache Griffkörper betragen insbesondere von 1 mm bis 4 mm, vorzugsweise von 1,3 mm bis 3 mm. Bei einem Griffkörper aus einem Holz- oder Bambuswerkstoff kann dieser vorteilhaft durch Beizen, den Auftrag von Farbe oder Lasur, oder durch Druckimprägnierung behandelt werden. Generell können die Griffkörper insbesondere vorteilhaft lackiert oder gefärbt werden.

In einer bevorzugten Ausgestaltung besteht die Griffeinheit aus einem Papierwerkstoff, einem Bambus- oder einem Holzwerkstoff. Bei der Anwendung von Faserwerkstoffen, wie Papier oder bevorzugt Holz, ist insbesondere die Faserrichtung für die Gestaltung des Körperpflegeprodukts entscheidend. So ist beispielsweise für Holz die Faserrichtung bezüglich des Brechens des Griffkörpers zentral. Belastungen quer zur Faserrichtung können vom Körper schlecht aufgenommen werden und führen zu einem Brechen. Abhängig von einer Produktausgestaltung kann eine Orientierung der Fasern unterschiedlichen gewählt werden. Im Falle eines Flossers kann eine Faserrichtung parallel zur Längsrichtung der Arme und senkrecht zur Seide gewählt werden. Im Falle eines Rasierers verläuft die Faserrichtung in Längsrichtung des Griffs. Im Falle eines Dermaplaning-Rasierers verläuft die Faserrichtung in Längsrichtung des Griffs. Im Falle eines Bartfärbepinsels verläuft die Faserrichtung in Längsrichtung des Griffs. Im Falle einer Interdentalbürste verläuft die Faserrichtung in Längsrichtung des Griffs. Im Falle einer Zahnbürste verläuft die Faserrichtung in Längsrichtung des Griffs.

Ferner kann der Papierwerkstoff insbesondere von einem Wabenpapier, insbesondere mit Wellen oder Waben in einer Mittelschicht, oder einer Wellpappe gebildet sein. Wabenpapier oder Wellpappe kann insbesondere für voluminösere Griffkörper eingesetzt werden. Wabenpapier oder Wellpappe kann insbesondere vorteilhaft komprimiert werden.

Ferner wird vorgeschlagen, dass das Verbindungselement der Verbindungseinheit zumindest teilweise einstückig mit der Anwendungseinheit ausgebildet ist. Vorzugsweise ist das Verbindungselement zumindest teilweise einteilig mit der Anwendungseinheit ausgebildet. Bevorzugt ist das Verbindungselement an einem der Griffeinheit zugewandten Ende der Anwendungseinheit angeordnet. Vorzugsweise bildet das Verbindungselement der Verbindungseinheit ein Teil der Anwendungseinheit. Bevorzugt bildet das weitere Verbindungselement der Verbindungseinheit ein Teil der Griffeinheit. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Vorteilhaft soll unter einstückig auch einteilig verstanden werden. Unter "einteilig" soll insbesondere in einem Stück geformt verstanden werden. Vorzugsweise wird dieses eine Stück aus einem einzelnen Rohling, einer Masse und/oder einem Guss, besonders bevorzugt in einem Spritzgussverfahren, insbesondere einem Ein- und/oder Mehrkomponenten-Spritzgussverfahren, hergestellt. Dadurch kann insbesondere eine vorteilhaft zuverlässige Verbindungseinheit bereitgestellt werden. Ferner kann eine Anzahl an Bauteilen vorteilhaft gering gehalten werden.

Des Weiteren wird vorgeschlagen, dass das weitere Verbindungselement der Verbindungseinheit zumindest teilweise einstückig mit der Griffeinheit ausgebildet ist. Vorzugsweise ist das weitere Verbindungselement zumindest teilweise einteilig mit der Griffeinheit ausgebildet. Bevorzugt ist das weitere Verbindungselement an einem der Anwendungseinheit zugewandten Ende der Griffeinheit angeordnet. Bevorzugt bildet das weitere Verbindungselement der Verbindungseinheit ein Teil der Griffeinheit. Dadurch kann insbesondere eine vorteilhaft zuverlässige Verbindungseinheit bereitgestellt werden. Ferner kann eine Anzahl an Bauteilen vorteilhaft gering gehalten werden.

Es wird ferner vorgeschlagen, dass das Verbindungselement der Verbindungseinheit zumindest teilweise stoffschlüssig mit dem weiteren Verbindungselement der Verbindungseinheit verbunden ist, wobei das weitere Verbindungselement der Verbindungseinheit zumindest teilweise, insbesondere zumindest zu einem Großteil, aus einem Papierwerkstoff besteht. Vorzugsweise besteht das weitere Verbindungselement zumindest zu einem Großteil aus einem Papierwerkstoff, während das Verbindungselement zumindest zu einem Großteil aus einem Polymer, insbesondere einem Kunststoff, besteht. Bevorzugt ist das weitere Verbindungselement von dem Verbindungselement umspritzt bzw. angespritzt ausgebildet. Es wird ferner vorgeschlagen, dass das weitere Verbindungselement der Verbindungseinheit mit dem Verbindungselement der Verbindungseinheit umspritzt ist. Vorzugsweise ist das Verbindungselement in einem Spritzgussverfahren direkt an dem weiteren Verbindungselement hergestellt. Bevorzugt ist das Verbindungselement in einem Spritzgussverfahren hergestellt, wobei sich das weitere Verbindungselement bei einer Herstellung des Verbindungselements insbesondere zumindest teilweise in einer Form des Verbindungselements befindet. Dadurch kann insbesondere eine vorteilhaft stabile vorzugsweise form- und kraftschlüssige Verbindungseinheit bereitgestellt werden.

Mit Umspritzen kann beispielsweise die Verbindungseinheit bzw. die Verbindung zwischen der Anwendungseinheit und der Griffeinheit realisiert werden. Zur Verarbeitung wird das weitere Verbindungselement in ein Spritzgusswerkzeug eingebracht, wo es im Anschluss umspritzt wird. Beim Einbringen des weiteren Verbindungselements in das Spritzgusswerkzeug wird das Element bzw. der Griffkörper im Werkzeug gehalten und in Grenzbereichen zwischen dem umspritzten und dem nicht umspritzten Teil abgedichtet. Ein Abdichten kann beispielsweise durch ein Vorspannen bzw. Drücken passieren, indem das Werkzeug auf das weitere Verbindungselement bzw. den Griffkörper drückt und ihn auf diese Weise etwas mit Vorspann verdrückt. Der Druck, der sich so auf das weitere Verbindungselement und/oder den Griffkörper aufbaut und zwischen dem weiteren Verbindungselement und dem Spritzgusswerkzeug wirkt, dient dem Abdichten. Dadurch wird verhindert, dass sich die plastifizierte Kunststoffkomponente, vorzugsweise eine Hartkomponente, entlang dem Griffkörper ausdehnt und dadurch Überspritzungen ungewollt entstehen.

Der Druck, der durch das Spritzgusswerkzeug bzw. die Kavitätenwand ausgeübt wird, wird durch eine Differenz der Masse des eingelegten weiteren Verbindungselements und/oder des Griffkörpers und der Kavitätenwand geschaffen. Im Fall eines runden zylindrischen oder hohlzylindrischen weiteren Verbindungselements beträgt die Differenz im Durchmesser zwischen 0,05 mm und 0,5 mm, vorzugsweise zwischen 0,1 mm und 0,3 mm. Generell taucht die Kavitätenwand pro Fläche zwischen 0,025 mm und 0,25 mm, vorzugsweise zwischen 0,05 mm und 0,15 mm in die Oberfläche des weiteren Verbindungselements und/oder des Griffkörpers ein und bildet den entsprechenden Vorspann.

Die Verbindung zwischen dem weiteren Verbindungselement und dem Verbindungselement, das durch Umspritzen geschaffen wird, kann auf verschiedene Weise passieren. Das weitere Verbindungselement kann beispielsweise mittels eines Form- bzw. Kraftschlusses mit dem Verbindungselement verbunden werden. Dabei kann sich der Formschluss auf verschiedene Weise ausprägen. Beispielsweise kann sich das weitere Verbindungselement beim Einspritzen aufgrund der Einspritzdrücke deformieren, sodass sich ein oder mehrere Hinterschnitte ausbildet(n), welche(r) die Verbindung stabilisiert. Die Deformation ist geplant (z.B. abhängig vom Spritzdruck) und geht nur soweit, dass keine Defekte am weiteren Verbindungselement entstehen. Die eingespritzte Kunststoffkomponente verändert die Form und Oberflächenstruktur am weiteren Verbindungselement. Der Formschluss kann sich auch dadurch ausbilden, dass sich der eingespritzte Kunststoff an die Oberfläche anschmiegt und auch in Poren und Hohlräume in der Oberfläche eindringt und sich so ein Formschluss und/oder Reibschluss ausbildet. Der Formschluss kann sich auch dadurch ausbilden, dass der eingespritzte Kunststoff mittels Spritzdruck die vorab im Wesentlichen glatte Oberfläche mindestens teilweise deformiert bzw. rauer wird und sich so ein Formschluss und/oder Reibschluss ausbildet. Die Kunststoffkomponente kann in die Oberfläche eindringen, dass bei Trennen der Bauteile ein Teil der Oberfläche abgeschält wird. Typischerweise kann bei einem Papierwerkstoff dadurch ein Faserriss erzeugt werden, ohne dass der Papierwerkstoff und die Kunststoffkomponente einen Stoff- bzw. Materialschluss eingehen. Analog kann bei einem Holz- oder Bambuswerkstoff dadurch auch ein Faser- bzw. Oberflächenabriss erzeugt werden, ohne dass der Holz- oder Bambuswerkstoff und die Kunststoffkomponente einen Stoff- bzw. Materialschluss eingehen. Beim Auskühlen des Kunststoffes übt der Schwund zusätzlich Kräfte auf Papier-, Holz- oder Bambuswerkstoff aus, um die Verbindung weiter zu stärken. Es entsteht dadurch ein Form- und Kraftschluss. Möglichkeiten um zusätzlich einen Stoff- bzw. Materialschluss zu erzeugen, werden weiter unten besprochen.

Weiter ist es auch möglich, an dem weiteren Verbindungselement Ausnehmungen beispielsweise in Form von Sacklöchern, Durchgangslöchern, Nuten, Rillen zu schaffen, die vom Kunststoff umflossen oder durchflossen werden. Es bildet sich eine feste, formschlüssige Verbindung aus. Der Griffkörper kann auch soweit vorbereitet werden, dass die Oberfläche im Kontaktbereich - in welchem die Umspritzung realisiert wird - vorab aufgeraut wird und die Kunststoffkomponente mindestens teilweise leicht in die Oberfläche eindringen kann. Dadurch kann die Verbindung auf der Oberfläche mittels Reibschluss verbessert werden.

Weiter können auf der Oberfläche des Papierwerkstoffs im Bereich der späteren Umspritzung Mikrostrukturen geschaffen werden. Beim Umspritzen kann so die Kunststoffkomponente die Mikrostrukturen umfließen und so für eine Haftung/mechanische Verbindung schaffen.

Wie bereits erwähnt kann zusätzlich oder alternativ die Griffeinheit aus Papierwerkstoff mit einer Folie aus Kunststoffkomponente ein- oder beidseitig laminiert sein. Beim Umspritzen mit der gleichen oder einer kompatiblen, bzw. affinen Kunststoffkomponente entsteht dann der gewünschte Materialschluss. Dieses Vorgehen bietet sich bei mit der laminierten Folienkomponente kompatiblen Hart-, Weichkomponenten, nachhaltigen Kunststoffkomponenten oder auch Komponenten für gespritzte Borsten an.

Das Umspritzen und Verbinden mittels Form- und/oder Kraftschluss gemäß vorheriger Beschreibung kann auch mit einem minimierten umspritzten Körper passieren. Die Möglichkeit kann genutzt werden, um eine Basis für die weitere Verarbeitung zu schaffen. Beispielsweise um eine Weichkomponente aufzubringen, welche sich schwer mit dem weiteren Verbindungselement aus Papierwerkstoff verbinden lässt. So kann eine Hartkomponente vorzugsweise mittels Kraft- und/oder Formschluss angespritzt werden, welche am Papierwerkstoff angebracht ist, auf welche im Anschluss die Weichkomponente angebracht wird. Wobei die Hart- und die Weichkomponente einen Materialschluss eingehen. Die Hartkomponente wird somit dazu verwendet indirekt eine Weichkomponente mit guter Haftung auf dem Papierwerkstoff anzubringen. Beispielsweise kann der Papierwerkstoff mittels PP oder PE Form schlüssig umspritzt werden und anschließend die Weichkomponente aus TPE auf den Umspritzkörper aus PP oder PE erneut aufgespritzt werden. Das PP geht dann mit dem Papierwerkstoff eine formschlüssige, jedoch keine materialschlüssige Verbindung ein. Die Weichkomponente aus TPE kann jedoch anschließend eine materialschlüssige Verbindung mit dem PP eingehen. Selbstverständlich sind zusätzlich auch formschlüssige Verbindungen möglich.

Analog zum oben beschriebenen Verfahren mittels Laminieren einer Folie aus Kunststoffkomponente auf dem Papierwerkstoff kann auch eine kompatible Weichkomponente auf dem Papierwerkstoff bzw. der darauf laminierten Folie materialschlüssig aufgespritzt werden.

Weiter ist es möglich den Papierwerkstoff vorzubehandeln, um ein Umspritzen zu ermöglichen. So kann eine Kunststofffolie im Rahmen eines Standardprozesses der Papierverarbeitung auf den Papierwerkstoff aufgebracht werden. Diese auf dem Papierwerkstoff laminierte Kunststofffolie ist dann vorzugsweise kompatibel mit der aufgespritzten Weich- und/oder Hartkomponente und diese kann damit materialschlüssig aufgespritzt werden. Die Verbindung zwischen der Umspritzkomponente und der Kunststoff-Oberfläche ist in diesem Fall eine Materialverbindung und bildet einen Materialschluss. Beispielsweise kann auf dem Papierwerkstoff ein oder zweiseitig eine Folie aus PP oder PE laminiert sein. Falls anschließend mit einer Hartkomponente aus PP oder PE oder einer Weichkomponente aus TPE umspritzt wird entsteht der gewünschte Materialschluss und eine vorteilhafte Haftung.

Die Oberfläche des Papierwerkstoffs kann aber auch derart behandelt werden, dass sie mit einem Haftvermittler versehen wird, und auf diese Weise ansonsten nicht mögliche Materialkombinationen ermöglicht. Dieser Haftvermittler, auch Adhäsionsförderer genannt, verstärkt oder ermöglicht erst die Bindung zwischen der Kunststoffkomponente und dem Papierwerkstoff und wird auf die Oberfläche des Papierwerkstoffs aufgebracht.

Weiter alternativ ist es möglich, Hilfsstoffe, welche die Verbindung beim Umspritzen unterstützen, direkt im Papierwerkstoff zu integrieren. Damit wird die Verbindung erst ermöglicht. Beispielsweise kann ein Haftvermittler oder eine kompatible Kunststoffkomponente direkt im Papierwerkstoff integriert bzw. eingearbeitet sein. Es kann eine Mischung aus einer Kunststoffkomponente und Papierfasern zu einem flächigen Werkstoff bzw. zu einer Folie verarbeitet sein.

Das Umspritzen kann insbesondere für Papierwerkstoffe und wie erwähnt auch für Holz und Bambus genutzt werden. Insbesondere gelten die oben erwähnten Verbindungsmöglichkeiten analog für Bambus und Holz, alternativ zum flächigen Papierwerkstoff wird flächiger Holzwerkstoff oder Bambuswerkstoff verwendet.

Beim Umspritzen wird die Hart- und/oder Weichkomponente mit einem Spritzdruck von 600 bar bis 1500 bar, vorzugsweise von 800 bar bis 1300 bar eingespritzt.

Die Körper, die umspritzt werden, können eine spezielle Oberflächenbehandlung erfahren, bevor sie verarbeitet werden oder nicht.

Die aus flächigen Papierwerkstoff geformten Körper, die umspritzt werden, können beliebige Formen aufweisen. Beispielsweise können sie mindestens teilweise oder komplett flach, flächig geformt, gefaltet, etc. sein und in einem Teilbereich ganz oder teilweise umspritzt werden.

Weiter kann der Körper mindestens teilweise einen Zylinder oder einen Hohlzylinder (ein Rohr), einen Kegel bzw. einen Hohlkegel, eine Pyramide bzw. eine Hohlpyramide bilden. Die Querschnitte dieser Körper können beliebige Formen ausbilden, beispielsweise (kreis-)rund, elliptisch, n-eckig, vorzugsweise 3-eckig oder 4-eckig. Diese Körper können mindestens teilweise mit einer Kunststoffkomponente umspritzt sein.

In diesem Fall ist es bevorzugt, dass die Umspritzung an einem Ende des Körpers erfolgt und im Fall des Hohlkörpers ist es möglich, dass die Kunststoffkomponente des Umspritz-Materials einen Teil des Hohlraums füllt. Werden Hohlkörper umspritzt, so werden die Hohlkörper vorzugsweise im Innenbereich (Hohlraum) mittels eines Stempels bzw. Kerns im Spritzgusswerkzeug gestützt. Der Stempel wird in den Hohlraum eingefahren, stützt den Körper und begrenzt am Ende auch die Umspritzung, falls die Material-Komponente in den Hohlraum eindringt. Es ist alternativ auch möglich den Papierwerkstoff im flachen Zustand zu umspritzen und anschließend zum Körper zu formen.

Insbesondere bei Körpern, die im Wesentlichen im flachen Zustand umspritzt werden, kann es nötig sein, den Körper zu stützen bzw. zu positionieren, damit die Kunststoffkomponente, die eingespritzt wird, das weitere Verbindungselement bzw. den Körper an dieser Stelle nicht verschiebt und das Umspritzen um den ganzen Körper passieren kann. Dazu können beispielsweise in der jeweiligen Kavität des Spritzgusswerkzeugs kleine Stützen eingebracht sein, die das weitere Verbindungselement bzw. den Körper in der vorgesehenen Position halten. Die Stützen sind beispielsweise kleine Zylinder oder Stifte, die später von der Kunststoffkomponente umflossen werden.

Weiter wäre es möglich, den Körper in mehreren Schritten zu umspritzen. Dies ist beispielsweise bereits vorgängig erwähnt, mit dem Anspritzen einer zweiten Komponente an eine erste Komponente, welche mit dem Papierwerkstoff verbunden ist. Neben diesem flächigen Fall ist es auch möglich, in einem ersten Schritt isolierte Noppen aus Hartkomponente anzuspritzen, welche einerseits für einen weiteren Umspritz-Schritt als Distanzhalter zur Kavitätenwand dienen, zum anderen aber auch als Halte-, bzw. Fixierpunkte für Weichkomponenten dienen können. Die Weichkomponente würde in einem zweiten Schritt an die erste Komponente und das Papier angespritzt. Der Materialschluss würde zwischen Hart- und Weichkomponente entstehen.

Weiter kann der umspritzte Körper nachbehandelt werden. Beispielsweise kann der Körper beflockt werden.

Im vorliegenden Fall kann die Anwendung auch mit einem Griffkörper aus Holz oder Bambus realisiert werden.

Die beschriebene flache Form des Griffkörpers kann insbesondere auch für Zahnbürsten und Rasierer genutzt werden. Ein flacher Griffkörper wird in das Spritzgusswerkzeug eingelegt und umspritzt. Als Variante kann der Körper beispielsweise nachträglich noch gefaltet werden, um ihm dennoch eine 3D-Form zu geben, beispielsweise einer Form analog des beschriebenen gefalteten Griffs mit einem dreieckigen Querschnitt für Zahnbürsten oder auch Rasierer. Alternativ oder zusätzlich kann als Variante der Körper beispielsweise nachträglich noch gefaltet werden, um ihm dennoch eine 3D-Form zu geben, beispielsweise einer Form analog des beschriebenen gefalteten Griffs mit einer polygonalen oder prismatischen Form, und/oder mit einem dreieckigen, viereckigen oder polygonalen Querschnitt

Das umschriebene Umspritzen des Papierwerkstoffs bzw. eines Holz- oder Bambuswerkstoffes kann auch für andere Produkte wie Verbrauchsmaterial für die Zahnarztpraxis, wie z.B. Zungenniederhalter oder für Besteck wie z.B. Messer, Gabel, Löffel, Kaffeerührsticks, Eislöffel etc. verwendet werden. Ferner kann ein Kunststoffteil an einem Papierwerkstoff angespritzt bzw. fixiert werden, indem der plastifizierte Kunststoff (z.B. ein Thermoplast) form- und/oder kraftschlüssig an den Papierwerkstoff angespritzt wird.

Es wird weiter vorgeschlagen, dass die Anwendungseinheit zumindest einen Zahnseidefaden, insbesondere eine Zahnseide, aufweist, wobei der Zahnseidefaden von dem Verbindungselement der Verbindungseinheit umspritzt ist. Der Zahnseidefaden ist insbesondere von einer Zahnseide gebildet.

Die Garnstärke beträgt insbesondere zwischen 300 und 2000 Dtex, vorzugsweise zwischen 400 und 700 Dtex. Die Verwendung von einem Zahnseidefaden mit geringerem Querschnitt bringt insbesondere weniger Kraft in der Anwendung, was weniger Kraft auf den Griffkörper beziehungsweise auf die Verbindungselemente bzw. die Verbindungseinheit mit sich bringt. Hierdurch kann die Gefahr des Knickens oder Brechens des Griffkörpers bzw. das Ausreißen des Fadens vermindert werden.

Vorzugsweise weist der Zahnseidefaden einen Durchmesser von 0,05 mm bis 0,3 mm, vorzugsweise 0,10 m bis 0,25 mm auf. Bevorzugt weist der Zahnseidefaden eine Feinheit von 300 Dtex bis 1000 Dtex, vorzugsweise von 400 Dtex bis 700 Dtex, auf. Der Zahnseidefaden kann von einem einzelnen Filament bzw. einem Band oder einem Multifilament bestehend aus mehreren Filamenten gebildet sein. Es sind insbesondere alle Varianten möglich. Vorzugsweise weist der Zahnseidefaden für die maximale Haltbarkeit des Körperpflegeprodukts eine maximale Gleitwirkung auf. Der Zahnseidefaden ist insbesondere gewachst. Es muss jedoch berücksichtigt werden, dass das Halten an dem Verbindungselement dennoch klappen sollte.

Der Zahnseidefaden besteht vorzugsweise aus einer Hartkomponente insbesondere Polypropylen, Polyethylen, z.B. ein HMWPE (High Molecular Weight Polyethylene), Polyamid oder Polyester. Alternativ besteht der Zahnseidefaden aus einer Weichkomponente, beispielsweise aus einem thermoplastischen Elastomer.

Der Zahnseidefaden kann aus einer nachhaltigen Kunststoffkomponente bestehen, beispielsweise aus PA10.10 (auf Basis von Rizinusöl), PLA, Cellulose.

Vorzugsweise ist die Kunststoffkomponente des Zahnseidefadens mit dem Material des Verbindungselements kompatibel bzw. affin und bildet beim Umspritzen einen Stoff- bzw. Materialschluss. Gleiches gilt insbesondere auch beim Schweißen des Zahnseidefadens auf eine Oberfläche des Papierwerkstoffes. Der Papierwerkstoff ist in diesem Fall mit einer Kunststofffolie laminiert oder besteht aus einem Gemisch der Kunststoffkomponente und Papierfasern.

So kann ein PE-Faden beispielsweise auf eine mit einer PP oder PE Folie beschichtete Oberfläche aus Papierwerkstoff gesiegelt, geschweißt oder mit PP oder PE umspritzt werden. Weiter kann ein PA-Faden beispielsweise auf eine mit einer PA Folie beschichtete Oberfläche aus Papierwerkstoff gesiegelt, geschweißt oder mit PA umspritzt werden. Weiter kann ein Polyester-Faden beispielsweise auf eine mit einer Polyester Folie beschichtete Oberfläche aus Papierwerkstoff gesiegelt, geschweißt oder mit Polyester umspritzt werden. Weiter kann ein PLA-Faden beispielsweise auf eine mit einer PLA Folie beschichtete Oberfläche aus Papierwerkstoff gesiegelt, geschweißt oder mit PLA umspritzt werden.

Mögliche Kombinationen sind beispielsweise Zahnseidefaden aus PE und Verbindungselement aus PE oder PP, Zahnseidefaden aus PA und Verbindungselement aus PA oder Zahnseidefaden aus Polyester und Verbindungselement ebenfalls aus Polyester.

Der Griffkörper für ein als Flosser ausgebildetes Körperpflegeprodukt kann insbesondere als Einzelstück oder im Bogen mit mehreren Einzelstücken bereitgestellt werden. Bei einer Bereitstellung als Einzelstück ist der Griffkörper fertig aus dem Papierwerkstoff gestanzt, d.h. der Körper aus Papierwerkstoff braucht keine Nachbearbeitung bezüglich weiterem Abtrennen von Papierwerkstoff an der Peripherie.

Bei einer Bereitstellung als Bogen erfolgt entweder keine Vorstanzung, wobei ein Stanzen später inline bzw. im selben Prozessschritt mit dem Spritzgießen erfolgt, oder der Bogen wird vorgestanzt. Der Bogen kann dabei lediglich teilweise vorgestanzt sein, wobei beispielsweise nur eine Schnittstellengeometrie im Umspritzbereich, also die Geometrie, die später umspritzt wird, vorgestanzt wird. Der Griffkörper wird durch die Vorstanzung für die Umspritzung vorbereitet, wobei der Bogen soweit freigestellt wird, dass die Umspritzung möglich ist. Alternativ wäre auch denkbar, dass der Bogen bis auf Haltepunkte am Bogen komplett gestanzt ist. Der Griffkörper kann daher soweit ausgestanzt sein, dass einerseits die Schnittstellengeometrie freigestellt ist und zum anderen der weitere Körper bis auf Haltepunkte am Bogen freigestellt ist. Die Haltepunkte sind dabei dafür da, dass ein einfaches Handling mit dem Bogen möglich ist, indem die Körperpflegeprodukte noch im Bogen zusammengehalten werden. Die Haltepunkte sind dabei insbesondere nicht im Bereich der Umspritzung. Vorzugsweise kann eine Breite der Haltepunkte in Schnittrichtung von 1 mm bis 4 mm, vorzugsweise von 1,5 mm bis 3 mm betragen. Die Abstände zwischen den Haltepunkten betragen insbesondere von 10 mm bis 50 mm, vorzugsweise von 15 mm bis 30 mm. Die Abstände sind vorzugsweise möglichst groß, sodass so wenig wie möglich Haltepunkte existieren, da jeder Haltepunkt eine potentielle Quelle für Fehler bzw. eine unschöne Fortsetzung bzw. Diskontinuität der Kontur nach dem Ausstanzen sein kann, da alles toleranzbehaftet ist. Abhängig von der Geometrie des finalen Körperpflegeprodukts und vom Material können die Abstände insbesondere variieren. Beispielsweise sind die Abstände größer, wenn stärkeres Material verwendet wird, während die Abstände kürzer sind, wenn eine finale Geometrie filigraner ist, insbesondere damit der Griffkörper sauber eingelegt werden kann und das Material nicht flattert, d. h. instabil ist beim Umlegen. Der Vorteil von Bögen ist insbesondere das Handling mehrerer Griffkörper gleichzeitig. Es können insbesondere mehrere Griffkörper in einem bewegt werden. Ferner ist auch das Einlegen ins Werkzeug aufgrund der Größe einfacher und die Fehlerquelle somit geringer. Die Anzahl pro Griffkörper nebeneinander auf einem Bogen beträgt insbesondere von 2 bis 20, vorzugsweise von 4 bis 12.

Eine Problematik beim Stanzen ist insbesondere, dass eine Schnittkante auf der Messer-Eintrittsseite gerundet wird. Beim Eindringen wird das Material durch die Klinge in Stanzrichtung eingedrückt und somit auf der Seite des eindringenden Messers gerundet. Gleichzeitig wird eine Schnittkante auf der Messer-Austrittsseite scharfkantig. Auf der Austrittsseite des Stanzmessers entsteht eine scharfe Schnittkante, welche für die Anwendung im Mundhygienebereich problematisch sein kann. Dem kann durch Nachbearbeitung entgegengewirkt werden, um die Schnittkante zu verrunden. So kann eine Schnittkante nachträglich entgratet, gepresst und/oder umspritzt werden. Der Radius beträgt von 0,1 mm bis 2 mm, vorzugsweise von 0,2 mm bis 0,7 mm. Weiter ist es möglich das gestanzte Teil zu schleifen, trowalisieren, entgraten, erhitzen, pressen, formen und/oder zerdrücken, um die Schnittkante zu entschärfen. Falls ein Teil umspritzt wird, kann das Pressen, Formen oder Zerdrücken direkt im Spritzgusswerkzeug passieren.

Bei nicht vorgestanzten Bögen kann eine Stanzung vor dem Umspritzen nötig sein, da die Schnittstelle für das Spritzgießen freigestellt sein muss. Das Stanzen kann hierfür inline mit dem Spritzgießen erfolgen. Inline heißt, dass verschiedene Herstellungsprozesse miteinander auf einer Maschine oder mittels gekoppelten Maschinen in einer Fließfertigung verbunden sind.

Bei einer Ausbildung als Flosser weist der Papierwerkstoff des Griffkörpers insbesondere von 1 bis 15 Lagen, vorzugsweise von 1 bis 12 Lagen und besonders bevorzugt 1, 2, 3, 4, 5, 6, 7, 8, 9 oder 10 Lagen auf. Diese Lagen bilden eine Schicht. Die Anzahl der Lagen hängt insbesondere von der gewünschten Endstärke bzw. Stabilität des Griffkörpers ab. Es können insbesondere viele dünne Lagen oder wenige dickere Lagen realisiert werden. Die Lagen werden vorzugsweise mittels Kleber verbunden bzw. laminiert. Durch das Realisieren des Griffkörpers in mehreren Lagen ergeben sich Stabilitätsvorteile gegenüber einem Körper aus einer oder weniger Lagen. Der Papierwerkstoff weist insbesondere eine Materialstärke von 0,5 mm bis 2,5 mm, vorzugsweise von 0,8 mm bis 1,8 mm, auf. Eine einzelne Lage weist insbesondere ein Flächengewicht von 50 g/m² bis 500 g/m², vorzugsweise 100 g/m² bis 450 g/m² auf. Die Materialstärke der einzelnen Lage beträgt insbesondere von 0,25 0,05 mm bis 0,65 mm, vorzugsweise von 0,1 mm bis 0,5 mm. Der Papierwerkstoff kann ferner durch Lackierung, Bedruckung oder das Aufbringen einer wasserabweisenden Beschichtung behandelt sein.

Bei einer Ausbildung als Flosser ist die Form des Griffkörpers im Bereich des Zahnseidefadens insbesondere U-förmig gestaltet, um eine Zugänglichkeit zu den Zähnen zu gewährleisten. Ein Griffbereich des Griffkörpers kann gerade, also insbesondere senkrecht zu einer Erstreckung der Zahnseide, oder schräg dazu, d.h. in einem Winkel zu dem Zahnseidefaden verlaufen. Der Winkel beträgt 15° bis 70°, vorzugsweise 25° bis 45°. Das Körperpflegeprodukt weist bei einer Ausbildung als Flosser insbesondere eine Länge von 40 mm bis 100 mm, vorzugsweise von 60 mm bis 90 mm, auf. Eine Breite der Arme beträgt wenigstens 4 mm, insbesondere wenigstens 5 mm, vorzugsweise wenigstens 6 mm, besonders bevorzugt wenigstens 8 mm. Eine dünnste Stelle der Arme ist insbesondere im Bereich gegen das freie Ende der Arme. Ein Verhältnis der Dicke des Papierwerkstoffs des Griffkörpers zu Breite der Arme beträgt von 1:3 bis 1:9, vorzugsweise von 1:3.5 bis 1:8, besonders bevorzugt von 1:4 bis 1:7. Der Abstand der Arme beträgt insbesondere von 10 mm bis 25 mm, vorzugsweise von 12 mm bis 20 mm und entspricht der freien Länge des Zahnseidefadens. Mit Zahnseide Faden ist wie besprochen auch ein Zahnseideband beansprucht.

Das weitere Verbindungselement aus Papierwerkstoff kann beispielsweise mit einem Verbindungselement aus Kunststoff (Hart- oder Weichkomponente) umspritzt werden, um einen Flosser auszubilden und mit dem Umspritzen den Zahnseidefaden zu fixieren. Der Zahnseidefaden wird im Endbereich des Griffkörpers, d.h. im Kopfbereich in einer U-förmigen Geometrie mit zwei Schenkeln bzw. Armen gehalten. Die jeweiligen Schenkel sind dabei in ihren Endbereichen mit Kunststoff versehen, in welcher der Zahnseidefaden fixiert ist. Der Kunststoff umspritzt dabei einerseits einen Teil des Griffkörpers bzw. des weiteren Verbindungselements und andererseits einen Teil des Zahnseidefadens, jeweils auf beiden Schenkeln, und schafft so eine Verbindung zwischen Zahnseidefaden und Griffkörper. Als Kunststoff wird vorzugsweise eine Hartkomponente oder eine nachhaltige Kunststoffkomponente verwendet. Der Kunststoff bildet einen Form- und/oder Kraftschluss mit dem Schenkel. Der Kunststoff verändert beim Umspritzen die Oberfläche des Schenkels und bildet einen Reibschluss. Der Kunststoff schwindet beim Abkühlen auf den Schenkel und bildet einen Kraftschluss. Vorzugsweise ergibt sich beim Ablösen des Kunststoffes ein Faserriss am Papier- Holz- oder Bambuswerkstoff des Schenkels.

In der Herstellung wird dazu ein Griffkörper, der mit zwei Teil-Schenkeln im späteren Kopfbereich ausgestattet ist, und/oder das weitere Verbindungselement aus Papierwerkstoff bereitgestellt. Die Enden der Teilschenkel sind für ein Umspritzen vorbereitet, vorzugsweise sind sie symmetrisch vorbereitet und gleich ausgestattet.

Beim Umspritzen des Zahnseidefadens wird dieser vorzugsweise von den Enden der Teilschenkel leicht beabstandet, damit die Kunststoffkomponente den Zahnseidefaden in diesem Teilbereich vollständig umfließen kann und damit eine optimale Verankerung bildet. Weniger bevorzugt berührt der Zahnseidefaden die Enden der Teilschenkel mindestens teilweise. Die Kunststoffkomponente zum Umspritzen sowie die Kunststoffkomponente des Zahnseidefadens gehen vorzugsweise einen Materialschluss ein.

Die Enden des Zahnseidefadens können vorzugsweise nach dem Umspritzprozess angeschmolzen werden. Dies kann die Haftung des Zahnseidefadens in der Kunststoffkomponente weiter verstärken, weil das Kugel-, bez. pilzförmige Ende des angeschmolzenen Zahnseidefadens eine zusätzliche mechanische Verankerung bildet.

Der Vorteil dieser Ausgestaltung bzw. des Herstellprozesses des Flossers liegt darin, dass der Papierwerkstoff bzw. Holz- oder Bambuswerkstoff vorzugsweise in nur einer Schicht (allenfalls bestehend aus mehreren Lagen) bereitgestellt werden muss und nicht mehrere Schichten verbunden werden, zwischen welchen der Zahnseidefaden fixiert wird. Dies vereinfacht die Herstellung maßgeblich. Diese Methode erlaubt eine sehr gute Verankerung des Zahnseidefadens. Der Kunststoffanteil soll so gering wie möglich gehalten werden. Der Anteil von Kunststoff und Zahnseidefaden am gesamten Produkt soll idealerweise 5% des Gewichts nicht überschreiten, damit ein Recycling des Produkts im Papier- bzw. Karton-Recycling bestmöglich ist. Idealerweise wird zudem ein Kunststoff auf nachhaltiger Basis eingesetzt. Bevorzugt wird eine nachhaltige Kunststoffkomponente für den Zahnseidefaden und/oder für das Umspritzen verwendet, welche biologisch abbaubar ist.

Ferner wird vorgeschlagen, dass das Verbindungselement der Verbindungseinheit aus einem Hartkunststoff besteht. Vorzugsweise ist der Hartkunststoff in einem Spritzgussverfahren verarbeitbar. Bevorzugt ist das Verbindungselement dazu vorgesehen, in einem Spritzgussverfahren hergestellt zu werden. Das Verbindungselement besteht insbesondere aus einer Hartkomponente.

Das Verbindungselement besteht bevorzugt aus Polypropylen (PP) und/oder einem nachhaltigen und/oder abbaubaren Material. Eine weitere Variante wäre die Verwendung von Polyethylen (PE). Wie bereits beschrieben kann der Papierwerkstoff mit einer Folie laminiert werden. Die Folie wird ein oder beidseitig als äußere Lage angebracht. Alternativ ist die Kunststoffkomponente mit den Papierfasern zu einer Folie bzw. einem flächigen Werkstoff verarbeitet. Die Kunststoffkomponente zum Umspritzen des Papierwerkstoffes bzw. zur Herstellung des Verbindungselementes geht mit der Kunststoffkomponente der Folie einen Materialschluss ein.

Neben dem Grundaufbau mit den erwähnten Komponenten ist selbstverständlich auch ein Überspritzen mit einer weiteren Kunststoffkomponente möglich. So könnte insbesondere eine weitere Kunststoffkomponente auf die erste Kunststoffkomponente des Verbindungselements aufgebracht werden. Vorzugsweise bilden die beiden Kunststoffkomponenten einen Materialschluss. Alternativ oder zusätzlich könnte die weitere Kunststoffkomponente auch mindestens teilweise auf den Papierwerkstoff aufgebracht werden, wobei hierbei eine entsprechende technische Gestaltung für die Verbindung nötig ist. Alternativ oder zusätzlich sind auch alternative Materialien denkbar. So ist beispielsweise ein Spritzgussmaterial auf Papier-Basis denkbar, wobei grundsätzlich die Eigenschaften ähnlich der erwähnten Hartkomponenten sein müssen.

Ferner sind weitere Funktionen des Körperpflegeprodukts denkbar. So können beispielsweise weitere Teile des Griffkörpers umspritzt sein. Es kann insbesondere beispielsweise eine Geometrie zum Halten, wie beispielsweise Noppen durch Ausnehmungen im Griffkörper vorgesehen sein. Ferner kann eine Zahnstocherspitze durch Umspritzen ausgebildet sein. Ferner wäre auch denkbar, dass eine Umspritzung weiter verbessert wird. So kann beispielsweise das Haften des Verbindungselements am Griffkörper durch Verwendung affiner/kompatibler Materialien verbessert werden. Alternativ kann der Griffkörper eine Beschichtung aus einem kompatiblen Material aufweisen. Eine entsprechende Beschichtung könnte beispielsweise eine PE-Beschichtung für eine PE-Umspritzung sein. Ferner wäre auch eine Nachbearbeitung des Körperpflegeprodukts denkbar. So kann beispielsweise eine Schicht/Beschichtung auf das ganze Körperpflegeprodukt oder einen Teil des Körperpflegeprodukts aufgebracht werden. Mögliche Positionen der Schicht könnten beispielsweise eine Zahnstocherspitze sein, auf der ein Mundpflegemittel auftragen ist. Alternativ könnte das ganze Körperpflegeprodukt, beispielsweise mit einem Lack, beschichtet sein, wobei die Beschichtung beispielsweise eine Stabilität und/oder Wasserfestigkeit des Körpers verbessert oder eine Oberflächenbeschaffenheit verändert. Als Medium für eine entsprechende Schicht kommen beispielsweise Mundpflegemittel, Lacke oder dergleichen in Frage. Ein Auftrag kann beispielsweise mittels Tauchen, wobei Teile des Körperpflegeprodukts in ein Tauchbad getunkt werden, mittels Bedrucken, Besprühen oder mittels Bestreichen erfolgen.

Ein Zahnstocher kann insbesondere beispielsweise auf einer der Anwendungseinheit abgewandten Seite durch eine spezielle Behandlung dieses Bereiches erzeugt werden. Beispielsweise kann dieser Bereich mittels Verpressen des Papierwerkstoffes verdichtet werden. Es können weitere, dem Fachmann bekannte Verfahren genutzt werden, um in diesem Bereich den Papierwerkstoff steifer und stabiler zu machen als im restlichen Griffkörper. Es wird insbesondere durch eine zulaufende Geometrie eine Spitze geschaffen.

Ferner können Heiß- oder Kalt-Prägungen oder Stanzungen im Griffkörper geschaffen werden. Die Prägungen oder Stanzungen können beispielsweise zu einer Verbesserung der Haptik, für Logos oder für Grafiken wie Smileys genutzt werden. Ebenso können die Prägungen im Bereich des Zahnstochers Oberflächenstrukturen schaffen, die die Reinigung unterstützen.

Des Weiteren wird vorgeschlagen, dass der materielle Griffkörper zu der Anwendungseinheit hin zumindest zwei Arme aufweist, wobei das weitere Verbindungselement an einem Ende der Arme zumindest zwei Verbindungsbereiche, d. h. pro Arm einen Verbindungsbereich, ausbildet. Das weitere Verbindungselement ist insbesondere in einem Endbereich des Griffkörpers ausgebildet. Der Griffkörper läuft in einem der Anwendungseinheit zugewandten Endbereich insbesondere in einer U-förmigen Geometrie mit zwei Schenkeln bzw. Armen aus. Die jeweiligen Arme bilden dabei in ihren Endbereichen das weitere Verbindungselement aus, an welchem die Anwendungseinheit fixiert ist. Das weitere Verbindungselement bildet dabei insbesondere ein Teil des Griffkörpers aus. Das weitere Verbindungselement ist einteilig mit dem Griffkörper ausgebildet. Dadurch kann insbesondere ein vorteilhaftes, insbesondere als Flosser ausgebildetes, Körperpflegeprodukt bereitgestellt werden. Es kann insbesondere eine vorteilhafte Anbindung der Anwendungseinheit bereitgestellt werden. Ferner kann eine vorteilhafte Verbindungseinheit bereitgestellt werden.

Es wird ferner vorgeschlagen, dass das Verbindungselement der Verbindungseinheit zumindest eine Kappe aufweist, welche das weitere Verbindungselement der Verbindungseinheit zumindest teilweise übergreift. Vorzugsweise weist das Verbindungselement insbesondere zwei Kappen auf, welche jeweils die Arme des Griffkörpers im Bereich des weiteren Verbindungselements übergreifen. Vorzugsweise übergreift das Verbindungselement das weitere Verbindungselement zumindest derart, dass zumindest ein Punkt des weiteren Verbindungselements existiert, welcher in zumindest einer Ebene, insbesondere in einer Ebene senkrecht zu einer Haupterstreckungsebene des Griffkörpers, in einem Winkelbereich von zumindest 120°, vorzugsweise zumindest 180°, von dem Verbindungselement umschlossen ist. Vorzugsweise übergreift das Verbindungselement zumindest eine freie Spitze des weiteren Verbindungselements. Das Verbindungselement erstreckt sich insbesondere wie eine Kappe um die Arme, sodass nur eine Seite, wo der Arm aus der Kappe kommt, offen ist. Alternativ kann sich das Verbindungselement auch jeweils klammerartig um die Arme erstrecken. Das Verbindungselement kann dabei insbesondere zwei Klammern ausbildet, welche sich von der Zahnseidefadenseite her über die Arme erstrecken. Das Körperpflegeprodukt besteht insbesondere zu weniger als 5 Gew.% aus Kunststoff, insbesondere Kunststoff und Zahnseidefaden sowie Papierwerkstoff und Beschichtung kumuliert, um eine nachhaltige Entsorgung bzw. ein Recycling zu ermöglichen. Das Körperpflegeprodukt ist vorzugsweise nach gängigen Normen mindestens teilweise oder vollständig biologisch abbaubar. Vorzugsweise wird ein biologisch abbaubarer Papierwerkstoff und/oder eine biologisch abbaubare Kunststoffkomponente zum Umspritzen und/oder ein biologisch abbaubarer Zahnseidefaden verwendet.

Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Dadurch kann insbesondere eine vorteilhaft stabile Verbindungseinheit bereitgestellt werden. Ferner kann insbesondere eine vorteilhafte Abdeckung eines Endes der Griffeinheit bereitgestellt werden. Hierdurch können wiederum Verletzungen durch scharfe Kanten vermieden werden.

Es wird weiter vorgeschlagen, dass das Verbindungselement der Verbindungseinheit zumindest zwei Kappen aufweist, welche die zwei Verbindungsbereiche des weiteren Verbindungselements der Verbindungseinheit zumindest teilweise übergreift, wobei das Verbindungselement zumindest einen Verbindungsbügel aufweist, welcher die zumindest zwei Kappen verbindet. Der Verbindungsbügel ist einteilig mit den Kappen ausgebildet. Der Verbindungsbügel erstreckt sich insbesondere über den Griffkörper. Vorzugsweise folgt der Verbindungsbügel einem U-förmigen Verlauf des Griffkörpers in einem der Anwendungseinheit zugewandten Endbereich. Bevorzugt ist der Verbindungsbügel auf den Griffkörper, insbesondere in einem Spritzgussverfahren, aufgespritzt. Der Verbindungsbügel ist insbesondere dazu vorgesehen, eine Stabilität des Griffkörpers zu unterstützen. Das Material des Verbindungsbügels ist insbesondere auf den Grundkörper aufgebracht und über die Arme zum Ende der Arme geführt. Eine Materialhaftung des Verbindungsbügels auf dem Griffkörper kann durch Hinterschnitte und Durchbrüche mittels Form- und/oder Kraftschluss erreicht werden. Das Kunststoffmaterial des Verbindungsbügels kann insbesondere auch über die seitlichen Kanten geführt und so beidseitig ausgeprägt sein. Hierdurch kann eine bessere Haftung erreicht werden. Ferner kann der Verbindungsbügel eine Stanzkante überdecken und als Schutz dienen. Hierzu kann das Material des Verbindungsbügels auf der schmalen Kante im U-förmigen Bogen zwischen den Armen geführt sein und eine scharfe Kante des Griffkörpers überdecken. Der Verbindungsbügel kann insbesondere als ein Bumper (Schutzkissen bzw. Schutzschicht) ausgebildet sein, welcher in der Anwendung das Zahnfleisch eines Benutzers von einer Verletzung an einer Kante des Griffkörpers schützt. Eine Materialhaftung und Verbindung zwischen dem Griffkörper und dem Verbindungsbügel kann mit bereits erwähnten Mitteln erreicht werden wie z.B. auch durch Hinterschnitte und/oder Durchbrüche erreicht werden. Alternativ oder zusätzlich wird der Griffkörper teilweise von dem Verbindungsbügel umspritzt. Der Verbindungsbügel kann dabei Design-Elemente, einen Bumper und/ oder eine Haltegeometrie für das Umspritzmaterial, insbesondere ohne Durchbrüche und Hinterschnitte, bereitstellen. Von dem Verbindungsbügel wird dabei eine Stanzkante teilweise überdeckt. Ferner kann an dem Verbindungsbügel gleichzeitig ein Anspritzpunkt des Verbindungselements realisiert werden.

Ferner wäre denkbar, dass an dem Verbindungselement eine Abzugslasche ausgebildet ist. Die Abzugslasche hat insbesondere das Ziel, ein Entfernen der Kunststoffteile bzw. ein Trennen von Papierwerkstoff und Kunststoff zu ermöglichen. Die Abzugslasche kann beispielsweise als vorstehendes Element an dem Verbindungselement, insbesondere an einer Kappe des Verbindungselements, ausgebildet sein, das das Lösen vereinfacht. Es ist insbesondere ein Abtrennen des Kunststoffs durch Abziehen von dem Griffkörper vorgesehen. Die Verbindung von Kunststoff und Papierwerkstoff ist dabei insbesondere nicht über Durchgangslöcher gestaltet, sondern alternativ über seitliche Kerben, damit ein Abziehen möglich ist. Es ist auch denkbar, den Papier-, Holz- oder Bambuswerkstoff ohne zusätzliche Elemente zu überspritzen. Die Haftung wird in diesem Fall nur durch Schwund und die veränderte Oberflächenstruktur bzw. den damit erzeugten Reibschluss erzeugt. Alternativ wäre auch denkbar, dass zusätzlich mit dem Verbindungselement, das weitere Verbindungselement abgetrennt wird. Es kann daher insbesondere ein Abtrennen von Papierwerkstoff, Kunststoff und Zahnseidefaden von dem Griffkörper aus Papierwerkstoff ermöglicht werden. Ferner wäre auch eine Anordnung der Abzugslasche an dem Verbindungsbügel denkbar. Beispielsweise wäre denkbar, die Abzugslasche an einem Anspritzpunkt des Verbindungsbügels vorzusehen, insbesondere wenn ein Kunststoff nur einseitig an dem Griffkörper angebracht ist. Aufgrund des Verankerungsverfahrens können am abgezogenen Kunststoff Fasern des Papier- Holz- oder Bambuswerkstoffes hängen bleiben.

Des Weiteren wird vorgeschlagen, dass das Verbindungselement zumindest einen Anspritzpunkt aufweist, welcher an der Kappe angeordnet ist. Ein Anspritzpunkt eines Spritzgussverfahrens ist vorzugsweise in einem Nahbereich des Zahnseidefadens, insbesondere in einem Nahbereich eines Verbindungspunkts zwischen dem Zahnseidefaden und der Kappe. Unter einem "Nahbereich" soll in diesem Zusammenhang insbesondere ein gedachter kugelförmiger Bereich verstanden werden, welcher sich insbesondere um einen Verbindungspunkt zwischen dem Zahnseidefaden und der Kappe erstreckt, und welcher einen Radius von maximal 1,5 cm, vorzugsweise maximal 1 cm und besonders bevorzugt maximal 0,5 cm aufweist. Dadurch kann insbesondere ein vorteilhaft unauffälliger Anspritzpunkt bereitgestellt werden.

Es wird ferner vorgeschlagen, dass das Verbindungselement zumindest einen Anspritzpunkt aufweist, welche an dem Verbindungsbügel angeordnet ist. Vorzugsweise ist der Anspritzpunkt an dem Verbindungsbügel zwischen der ersten Kappe und der zweiten Kappe angeordnet. Bevorzugt ist der Anspritzpunkt an einem Tiefpunkt des Verbindungsbügels des U-förmigen Verlaufs des Griffkörpers angeordnet. Dadurch kann insbesondere ein vorteilhaft unauffälliger Anspritzpunkt bereitgestellt werden. Ferner kann insbesondere ein Anspritzpunkt bereitgestellt werden, welcher während einer Anwendung vorteilhaft entfernt von einem Zahnfleisch eines Benutzers angeordnet ist.

Es wird weiter vorgeschlagen, dass das Verbindungselement der Verbindungseinheit zumindest teilweise formschlüssig mit dem weiteren Verbindungselement der Verbindungseinheit verbunden ist, wobei das weitere Verbindungselement der Verbindungseinheit zumindest teilweise, insbesondere zumindest zu einem Großteil, aus einem Papierwerkstoff besteht. Ein Formschluss ist dabei beispielsweise über eine Vernietung und/oder eine Rastverbindung und/oder eine Nut-Feder-Verbindung und/oder eine Nietverbindung, eine Steckverbindung und/oder eine weitere, dem Fachmann als sinnvoll erscheinende formschlüssige Verbindung, realisierbar.

Das weitere Verbindungselement bildet insbesondere einen Teil des Griffkörpers, welcher insbesondere zu einem Großteil aus einem Papierwerkstoff besteht. Es wird ferner vorgeschlagen, dass das weitere Verbindungselement der Verbindungseinheit zumindest eine Formschlusskontur aufweist, welche dazu vorgesehen ist, einen Formschluss mit dem Verbindungselement auszubilden. Die Formschlusskontur ist insbesondere derart gestaltet, dass keine Rotation des Verbindungselements möglich ist. Es wird weiter vorgeschlagen, dass die Formschlusskontur des weiteren Verbindungselements zu einer Verdrehsicherung des Verbindungselements vorgesehen ist. Im Fall von zwei Armen ist die Formschlusskontur insbesondere auf beiden Armen nötig. Insbesondere muss der Kunststoff des Verbindungselements auf beiden Seiten, insbesondere an beiden Armen halten. Die Formschlusskontur kann beispielsweise in Form einer seitlichen Einkerbung ausgebildet sein. Vorzugweise sind die Einkerbungen dabei von Einkerbungen gebildet, welche seitlich außen an den Armen angeordnet sind. Die Einkerbungen sind dabei insbesondere beidseits jeweils außen. Im Falle von Kappen lässt der Druck auf den Zahnseidefaden die Kappe mehr in die Ausnehmung ziehen, was ein besseres Halten der Zahnseidefaden am Griffkörper bewirkt. Die Einkerbungen weisen bevorzugt eine Breite von 1 mm bis 5 mm, vorzugsweise von 2 mm bis 4 mm auf. Die Tiefe entspricht bevorzugt maximal 1 mm bis 5 mm, vorzugsweise von 2 mm bis 4 mm. Bevorzugt muss eine Rest-Wandstärke der Arme von 2 mm bis 4 mm betragen. Die Einkerbung der Formschlusskontur ist bevorzugt zu einer Drehvermeidung vorgesehen. Dadurch kann insbesondere eine vorteilhaft zuverlässige Verbindungseinheit bereitgestellt werden. Es gibt wie oben besprochen auch Verbindungen ohne Formschlusskontur, bei denen die Haftung v.a. über den Schwund der Kunststoffkomponente sowie den Reibschluss über die veränderte Oberfläche des Papier-, Holz- oder Bambuswerkstoffes gewährleistet wird. Eine zusätzliche Formschlusskontur hat jedoch Vorteile, da sie die Haftung mittels Formschluss weiter erhöht.

Eine weitere Möglichkeit zur Drehsicherung des Kunststoffs am Papierwerkstoff besteht darin, auf den Armen Prägungen bzw. Rillen zu realisieren, die parallel oder in einem Winkel von maximal 45° zur Längsrichtung des Zahnseidefadens ausgerichtet sind. Die Dicke des Griffkörpers wird durch das Prägen/Rillen reduziert und es muss geprüft werden, ob nicht eine Bruck-/Knickstelle entsteht, ansonsten muss die Tiefe der Prägung/Rillung reduziert werden. Die Prägungen/Rillen werden mittels Spritzgießen umspritzt und bringen so einen Formschluss und eine bessere Fixierung des Zahnseidefadens mittels den Verbindungselementen.

Zudem wird vorgeschlagen, dass die Formschlusskontur des weiteren Verbindungselements zumindest eine Durchgangsausnehmung aufweist, wobei sich das Verbindungselement durch die Durchgangsausnehmung erstreckt. Vorzugsweise weist die Formschlusskontur des weiteren Verbindungselements zwei Durchgangsausnehmungen auf, welche sich durch jeweils einen der Arme des Griffgrundkörpers erstrecken. Die zumindest eine Durchgangsausnehmung kann insbesondere die Form eines runden Lochs oder eines länglichen Schlitzes aufweisen. Alternativ wäre auch ein nicht rundes Loch, wie beispielsweise ein quadratisches Loch, ein rechteckiges Loch und/oder ein Loch mit einer anderen, einem Fachmann als sinnvoll erscheinenden Geometrie, die insbesondere eine Drehsicherung erzeugt, denkbar. Der Durchmesser der Durchgangsausnehmung beträgt insbesondere von 1 mm bis 5 mm, vorzugsweise von 2 mm bis 4 mm. Der Abstand zu einem Rand des Griffgrundkörpers, d.h. eine Rest-Wandstärke pro Seite, beträgt insbesondere von 1 mm bis 4 mm. Es wäre auch denkbar, dass die Formschlusskontur eine Durchgangsausnehmung und eine Einkerbung kombiniert. Die Oberfläche bzw. die Stanzfläche der Einkerbung erstreckt sich insbesondere senkrecht zum Zahnseidefaden. Die Einkerbung ist insbesondere oben auf den Armen angeordnet, damit ein Drehen nicht möglich ist. Die Tiefe der Einkerbung beträgt dabei insbesondere von 1 mm bis 3 mm, vorzugsweise 1,2 mm bis 2 mm. Die Durchgangsausnehmung der Formschlusskontur ist bevorzugt zu einer Drehvermeidung vorgesehen. Die Durchgangsausnehmung ist hierfür bevorzugt nicht rund, sodass ein Material des Verbindungselements in der Durchgangsausnehmung nicht drehen kann.

Hierdurch kann sich der Zahnseidefaden nicht entspannen durch das Drehen der Verankerung. Die Durchgangsausnehmung ist insbesondere beispielsweise von einem Langloch und/oder einem runden Loch mit seitlichen Kerben gebildet. Dadurch kann insbesondere eine vorteilhaft zuverlässige Verbindungseinheit bereitgestellt werden.

Das fertige Körperpflegeprodukt kann insbesondere Kräfte, insbesondere senkrecht zum Zahnseidefaden wirkend, von 2 kg bis 12 kg, vorzugsweise von 4 kg bis 10 kg, aufnehmen. Die Verankerung des Zahnseidefadens kann so balanciert sein, dass nicht der Zahnseidefaden reißt bzw. ausreißt, sondern der Griffkörper knickt. Der Zahnseidefaden liegt insbesondere nicht am Griffkörper an. Zwischen dem Zahnseidefaden und dem Griffkörper besteht insbesondere ein Abstand von 0,2 mm bis 3 mm, vorzugsweise von 0,35 mm bis 0,8 mm. Ein Kunststoff des Verbindungselements muss insbesondere um den Faden fließen, um optimale Ausreißkräfte zu erreichen. Nach dem Spritzprozess und aufgrund des Spritzdruckes kann sich der Zahnseidefaden in Teilbereichen sogar näher am Griffkörper befinden oder weniger bevorzugt diesen sogar berühren.

Der Zahnseidefaden ist insbesondere oben auf dem Arm, insbesondere in Verlängerung zu den Armen angeordnet. Es wäre jedoch auch denkbar, dass der Zahnseidefaden seitlich der Arme angeordnet ist. Hierbei können jedoch Schwierigkeiten bei der Entformung im Spritzgusswerkzeug entstehen. Der Zahnseidefaden ist insbesondere nur mit dem Kunststoff des Verbindungselements in Berührung. Das Verbindungselement ist wiederum mit dem Papierwerkstoff des Griffkörpers und dem Zahnseidefaden in Kontakt. Der Papierwerkstoff des Griffkörpers, d. h. das weitere Verbindungselement ist vorzugsweise lediglich in Kontakt mit dem Kunststoff des Verbindungselements. Der Zahnseidefaden muss insbesondere bei der Herstellung im Spritzgusswerkzeug in der Formtrennung liegen.

Es wird ferner vorgeschlagen, dass die Formschlusskontur des weiteren Verbindungselements zumindest eine Einkerbung aufweist, welche von dem Verbindungselement hinterfüllt ist. Vorzugsweise wird die Einkerbung, insbesondere die Einkerbung und/oder die Durchgangsausnehmung der Formschlusskontur vollständig mit einem Material, insbesondere der Kunststoffkomponente des Verbindungselements gefüllt. Die Einkerbung bildet insbesondere einen Hinterschnitt aus. Ein Hinterfüllen erfolgt insbesondere während einer Herstellung des Verbindungselements. Dadurch kann insbesondere eine vorteilhaft zuverlässige Verdrehsicherung erreicht werden.

Die Arme des Griffkörpers werden in einem Spritzgusswerkzeug insbesondere teilweise anliegend an die Kavitätenwand gestaltet, sodass in diesen dichtenden Bereichen keine Freistellung besteht. Die Arme müssen insbesondere abdichten, damit die Kunststoffkomponente beim Einspritzen nicht ausläuft und eine Überspritzung am Papierwerkstoff bildet. Durch die Form und das Anliegen an den Kavitätenwänden verrutscht der Griffkörper nicht. Der Griffkörper wird mit den Armen in die entsprechende Ausnehmung des Spritzgusswerkzeugs unter Vorspann hinein gedrückt, insbesondere in Richtung Zahnseidefaden. Die Flächen werden insbesondere im Winkel in das Spritzgusswerkzeug reingedrückt. Ein Andrücken passiert insbesondere nicht über normale Kavitätenwände, es werden Mittel benötigt, z.B. ein Verpressmechanismus, der den Griffkörper unter Vorspann effektiv in Richtung des Zahnseidefadens drückt und in Position hält. Allenfalls wird eine Kontur in den Griffkörper integriert, die ein Andrücken verbessert. Beispielsweise kann eine Abflachung hinten am Bogen, insbesondere parallel zum Zahnseidefaden, vorgesehen sein. Die Arme des Griffkörpers sind insbesondere seitlich in einem Winkel. Die Arme liegen bevorzugt innen mindestens teilweise an einer Kavitätenwand des Bogens an. Bevorzugt liegen die Arme auch seitlich an. Die Enden der Arme sind dazu insbesondere abgeschrägt und stehen so in einem Winkel gegeneinander. Schenkel gegen Schenkel bildet sich so ein Winkel von 30° bis 70°, vorzugsweise 40° bis 60° aus.

Es wird weiter ein Körperpflegeprodukt vorgeschlagen, welches eine Griffeinheit aufweist, welche winklig gebogen ist. Ein erster Teil des Griffkörpers steht in einem Winkel zu einem zweiten Teil des Griffkörpers. Der zweite Teil des Griffkörpers ist mit der Verbindungseinheit ausgestattet. Das Körperpflegeprodukt kann insbesondere als Interdental- oder Kosmetikbürste ausgestaltet sein.

Die Anwendungseinheit dieses Körperpflegeprodukts besteht vorzugsweise aus einer eingedrehten Bürste, welche sich von der Verbindungseinheit her parallel erstreckt.

Der materielle Griffkörper besteht aus einem gerollten, im Wesentlichen zylindrischen Papierkörper.

Zwischen dem Kopfbereich und dem Griffbereich ist der Griffkörper gewinkelt ausgebildet. Der Griffkörper ist mit einem Biege-Radius von 1,5 cm bis 4,5 cm, vorzugsweise 2 cm bis 3,5 cm, abgewinkelt ausgebildet. Der Winkel zwischen dem Kopfbereich und dem Griffbereich beträgt insbesondere von 120° bis 160°, vorzugsweise 130° bis 150°. Die Länge des Kopfbereichs nach der Krümmung beträgt insbesondere maximal 2 cm, vorzugsweise maximal 1 cm. Ein Durchmesser des Griffkörpers beträgt insbesondere von 2,5 mm bis 5 mm, vorzugsweise 2,5 mm bis 4 mm bei der Anwendung im Mundhygienebereich. Bei einer Anwendung des Körperpflegeprodukts in der Kosmetik wäre insbesondere auch denkbar, dass ein Durchmesser des Griffkörpers von 2,5 mm bis 5 mm, vorzugsweise 3 mm bis 4 mm, beträgt. Der abgewinkelte Bereich des Griffkörpers ist durch nachträgliches Drücken, insbesondere Verpressen stabilisiert. Der Griffkörper ist in einem Bereich zwischen dem Kopfbereich und dem Griffbereich partiell verpresst, sodass der Griffkörper in diesem Bereich einen annähernd rechteckigen Querschnitt aufweist. Insbesondere ist in dem Bereich eine Quererstreckung des Griffkörpers verringert. Ein Biegen des abgewinkelten Bereichs des Griffkörpers kann bei der Herstellung insbesondere durch Befeuchten, Benetzen, Dampf und/oder Wärme verbessert werden. Der Bereich des Griffkörpers, welcher den Winkel aufweist, ist flachgepresst, um dessen mechanische Stabilität zu erhöhen. Die gepresste Dicke des Bereichs des Griffkörpers, welcher den Winkel aufweist, beträgt insbesondere von 1,5 mm bis 3 mm, vorzugsweise von 1,7 mm bis 2,3 mm sowohl bei der Anwendung im Mundhygiene- wie auch Kosmetikbereich.

Es wird weiter vorgeschlagen, dass das weitere Verbindungselement der Verbindungseinheit einteilig mit dem Griffkörper ausgebildet ist und aus einem Papierwerkstoff besteht, wobei das weitere Verbindungselement in einem Querschnitt senkrecht zu einer Haupterstreckungsrichtung in eine polygonale Form gefaltet ist, welche einen Aufnahmebereich begrenzt. Vorzugsweise ist das Körperpflegeprodukt dabei insbesondere dreiteilig aufgebaut, und zwar mit dem Griffkörper mit einem Grundkörper der Anwendungseinheit und mit einem Funktionsteil der Anwendungseinheit, welches beispielhaft von einem Borstenfeld gebildet ist. Der Griffkörper mit dem weiteren Verbindungselement besteht insbesondere aus einem Zuschnitt zum Falten. Der Griffkörper bildet im montierten Zustand insbesondere einen dreieckigen Querschnitt aus. Der Griffkörper bildet im montierten Zustand mindestens abschnittsweise eine hohle Pyramide aus.

Bevorzugt sind dazu zumindest zwei Schenkel des dreieckigen Querschnitts im Endprodukt mindestens teilweise doppellagig ausgebildet. Zumindest eine, insbesondere beide, der Doppellagen sind insbesondere verbunden, beispielsweise geklebt gesiegelt, geschweißt oder dergleichen, jedoch insbesondere zumindest die äußere Doppellage. Der Griffkörper ist insbesondere in Längsrichtung konisch gestaltet und bildet mindestens abschnittsweise eine hohle Pyramide. Im gefalteten Zustand ist der Griffkörper vorzugsweise zumindest auf der Bürstenkopf-Seite offen, damit später das Verbindungselement eingefahren werden kann. Bevorzugt ist der Griffkörper auch an einem unteren, freien Ende offen gestaltet. Vorzugsweise ist die Vorderseite des Griffkörpers länger als die beiden Rückseiten. Es bildet sich insbesondere ein Verlauf von einer Vorderseite des freien Endes hin zu den Seitenflächen aus, welche insbesondere zurückspringen. Die Längserstreckung des Griffkörpers reduziert sich insbesondere zur hinteren Faltkante hin. Ferner ist der Griffkörper und/oder das weitere Verbindungselement zu der Anwendungseinheit hin offen gestaltet. Dabei ist die Vorderseite des Griffkörpers insbesondere länger als die Seiten, sodass sich eine Einführgeometrie für das Verbindungselement ausbildet. Eine Körperstabilität des Griffkörpers wird insbesondere durch die Faltung bzw. durch das dadurch entstehende Fachwerk im Querschnitt erreicht. Ein Winkel zwischen der Vorderseite und den Seiten des Grundkörpers ist insbesondere links und rechts symmetrisch, insbesondere zwischen 45° und 85°, vorzugsweise zwischen 55° und 75°. Zwischen den Seiten des Griffkörpers beträgt der Winkel insbesondere zwischen 30° und 70°, vorzugsweise zwischen 40° und 60°. Die Länge des Griffkörpers beträgt insbesondere über alles von 130 mm bis 210 mm, vorzugsweise von 180 mm bis 200 mm. Die Breite des Griffkörpers beträgt insbesondere am freien Ende von 10 mm bis 22 mm, vorzugsweise von 12 mm bis 19 mm, und im Bereich der Anwendungseinheit von 5 mm bis 13 mm, vorzugsweise von 7 mm bis 11 mm. Die Höhe des Griffkörpers beträgt am freien Ende insbesondere von 10 mm bis 20 mm, vorzugsweise von 13 mm bis 17 mm, und in einem Bereich der Anwendungseinheit von 3 mm bis 9 mm, vorzugsweise von 4 mm bis 7 mm. Der Griffkörper besteht vorzugsweise aus einem Papierwerkstoff, Holz, Bambus oder einer Folie aus nachhaltiger Kunststoffkomponente. Bevorzugt beträgt eine Anzahl an Lagen des Griffkörpers im Endprodukt von 1 bis 15 Lagen, vorzugsweise von 1 bis 10 Lagen. Vorzugsweise besteht der Griffkörper aus genau einer Lage. Diese Lage bildet die Schicht. Die Anzahl an Lagen hängt insbesondere von der gewünschten Endstärke des Griffkörpers ab. Es können viele dünne Lagen oder wenige dickere Lagen realisiert werden. Die Lagen werden vorzugsweise verbunden. Durch das Realisieren des Körpers in mehreren Lagen ergeben sich Stabilitätsvorteile gegenüber einem Körper aus einer Masse. Eine Materialstärke des Griffkörpers beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Ferner kann ein Material des Griffkörpers behandelt sein. Beispielsweise kann der Griffkörper eine Lackierung und/oder Bedruckung und/oder eine wasserabweisende Beschichtung aufweisen und/oder aus einer Mischung von Papierfasern und einer Kunststoffkomponente bestehen und/oder eine Folie aus Kunststoffkomponente aufweisen. Dadurch kann insbesondere eine vorteilhafte Anbindung der Anwendungseinheit an die Griffeinheit erreicht werden. Es kann insbesondere eine vorteilhafte Verbindungseinheit bereitgestellt werden. Es kann ein vorteilhafter Schutz der Griffeinheit im Nassbereich gewährleistet werden.

Ferner wird vorgeschlagen, dass das Verbindungselement einen Kernfortsatz aufweist, welcher dazu vorgesehen ist, in den Aufnahmebereich des weiteren Verbindungselements einzugreifen. Vorzugsweise weist die Anwendungseinheit einen Grundkörper auf, wobei das Verbindungselement einteilig mit dem Grundkörper der Anwendungseinheit ausgebildet ist. Der Grundkörper der Anwendungseinheit ist insbesondere von einem Schuh gebildet, welcher dazu vorgesehen ist, auf ein Ende des Griffkörpers aufgeschoben zu werden - selbstverständlich können auch andere Formen eines Aufschubes abweichend von der Schuhform vorgesehen sein. Der Kernfortsatz dient insbesondere als Stützgeometrie im Inneren des Griffkörpers. Der Kernfortsatz folgt insbesondere dem Querschnitt innen im Griffkörper bzw. in dem weiteren Verbindungselement. Der Kernfortsatz ist insbesondere von einem Zylinder mit einer dreieckigen Grundseite gebildet. Der Kernfortsatz ist insbesondere einseitig freigestellt, damit der Griffkörper eingefahren werden kann. Der Kernfortsatz ist insbesondere kürzer als eine den Kernfortsatz teilweise umgreifende Hülle des Griffkörpers gestaltet. Der Kernfortsatz kann aber gerade bei den Fixierungsalternativen auch länger als die Hülle gestaltet sein. Die Hülle des Grundkörpers liegt insbesondere außen an dem Griffkörper der Griffeinheit an. Vorzugsweise ist der Griffkörper in einem montierten Zustand zwischen der Hülle und dem Kernfortsatz geklemmt. Ferner weist der Grundkörper der Anwendungseinheit insbesondere zwischen dem Kernfortsatz und der Hülle insbesondere eine Schnittstelle zu einer Anordnung eines Borstenfelds, insbesondere eines Borstenplättchens auf. Der Grundkörper der Anwendungseinheit weist insbesondere einen Aufnahmebereich zu einer Aufnahme eines Borstenplättchens auf. Dadurch kann insbesondere eine vorteilhaft stabile und leicht herzustellende Verbindung zwischen der Anwendungseinheit und der Griffeinheit bereitgestellt werden. Es kann insbesondere ein Abknicken der Griffeinheit in einem der Anwendungseinheit zugewandten Bereich vermieden werden.

Die Herstellung und/oder Montage eines entsprechenden Körperpflegeprodukts erfolgt insbesondere durch Erstellen eines Zuschnitts für den Griffkörper, insbesondere durch Stanzen und Rillen, und anschließendes Falten und Fixieren bzw. Verbinden des Papierwerkstoffes des Griffkörpers. Daraufhin kann die Anwendungseinheit mit dem Verbindungselement an dem Griffkörper montiert werden. Hierzu wird der Kernfortsatz in den Griffkörper eingefahren und ggf. verrastet und/oder verklebt evtl. mit einem Hinterschnitt.

Anschließend wird ein Borstenplättchen der Anwendungseinheit hergestellt, beispielsweise durch Spritzen des Plättchens, anschließendes Versehen mit Borsten, insbesondere in einem AFT-Verfahren konventionellen Anker-Stanzverfahrens, PTt Verfahrens, etc. und/oder beispielsweise durch Spritzen des gesamten Borstenplättchens mit gespritzten Borsten und/oder Bilden des Borstenplättchens mittels Aufschmelzen der Borsten.

Anschließend kann das Borstenplättchen in den Aufnahmebereich des Grundkörpers der Anwendungseinheit eingebracht werden. Ein Papierwerkstoff des Griffkörpers wird dabei zwischen dem Kernfortsatz und dem Borstenplättchen bzw. dem Grundkörper und dem Borstenplättchen geklemmt. Eine Verbindung zwischen dem Borstenplättchen und dem Grundkörper erfolgt insbesondere durch Kleben, Schweißen, Rasten und/oder Nieten oder andere, dem Fachmann bekannte Verbindungsverfahren, welche eine form-und/oder stoffschlüssige Verbindung zwischen Kunststoffkomponenten zulassen. Allenfalls ergibt sich parallel bzw. zusätzlich noch die Verbindung zur Griffeinheit im Bereich der Vorderseite des Griffkörpers. Dabei kann beispielsweise die Verbindung zu dem Griffkörper gesichert werden, insbesondere durch das Verbinden des Kernfortsatzes und des Borstenplättchens. Diese Verbindung kann mit den in dieser Schrift bereits beschriebenen form- und/oder stoffschlüssigen Verbindungsverfahren zwischen Papierwerkstoff und einer Kunststoffkomponente bereitgestellt werden.

Insbesondere ist es auch denkbar die Stützgeometrie des Kernfortsatzes derart zu gestalten, dass sie zumindest einen vorstehenden Nocken in Richtung der Vorderseite des Griffkörpers aufweist, wobei der Griffkörper eine korrespondierende Ausnehmung und/oder korrespondierende Schlitze aufweist, in welche der zumindest eine Nocken eingreift und/oder einrastet. Der zumindest eine Nocken kann dabei von einem Steg oder einem zylindrischen Nocken gebildet sein. Alternativ wäre auch die Ausbildung zumindest eines Nockens auf einer oder mehreren Seiten des Kernfortsatzes denkbar. Eine Verbindungsgeometrie wäre dann eben nicht mehr auf der Vorderseite realisiert, sondern auf zumindest einer der Seiten des Griffkörpers, wobei eine mögliche mehrlagige Ausbildung des Griffkörpers berücksichtigt werden müsste.

Ferner wäre auch denkbar, dass ein Borstenfeld und/oder ein Borstenplättchen einteilig mit dem Grundkörper der Anwendungseinheit ausgebildet ist.

Des Weiteren wird vorgeschlagen, dass die Anwendungseinheit zumindest einen Bürstenkopf aufweist. Der Bürstenkopf umfasst insbesondere ein Borstenfeld. Das Borstenfeld ist insbesondere an einem Borstenplättchen, insbesondere hergestellt mittels AFT-, PTt, konventionellem Anker Stanzverfahren, IMT Verfahren mit konventionellen, extrudierten Filamenten angeordnet. Das Borstenplättchen kann auch mittels Borstenschmelze geformt werden. Es wäre jedoch auch ein Borstenplättchen mit gespritzten Borsten denkbar. In diesem Fall wären die gespritzten Borsten und das Borstenplättchen aus derselben Kunststoffkomponente gefertigt.

Das Körperpflegeprodukt ist insbesondere als Bürste, insbesondere Zahnbürste ausgebildet. Bei einer Ausgestaltung des Körperpflegeprodukts als Zahnbürste weist die Anwendungseinheit insbesondere ein Borstenfeld auf. Das Borstenfeld kann dabei insbesondere aufgesetzt sein. Alternativ wäre auch denkbar, dass die Anwendungseinheit genietet ist, wobei das Borstenfeld so gestaltet ist, dass die Anordnung eines Gegenhalters im Bereich von Formschlusselementen möglich ist. Die Anwendungseinheit weist insbesondere ein Borstenplättchen auf. Das Borstenfeld kann dabei beispielsweise in einem Ankerstanz-, IMT, PTt oder AFT-Verfahren hergestellt sein. Dabei ist insbesondere auch denkbar, dass das Borstenplättchen aus einem Papierwerkstoff besteht, wobei eine Verbindung zu der Verbindungseinheit beispielsweise mittels Kleben herstellbar ist. Alternativ wäre denkbar, dass das Borstenplättchen aus Kunststoff, insbesondere zumindest aus einer Hartkomponente besteht, wobei eine Verbindung zu der Verbindungseinheit beispielsweise mittels Schweißen, Siegeln, Kleben, Nieten, Rasten, Verformen, Schnappen oder einer Kombination davon erfolgen kann. Das Borstenplättchen kann dabei insbesondere direkt eine Verbindungsstruktur, wie beispielsweise Niete, zu einer Verbindung mit der Verbindungseinheit und/oder direkt mit der Griffeinheit aufweisen. Alternativ wäre jedoch auch eine Ausgestaltung der Anwendungseinheit ohne Borstenplättchen denkbar, wobei das Borstenfeld weiterhin in einem AFT-Verfahren hergestellt werden kann. Hierbei kann insbesondere das Schmelzbad (welches auf der Befestigungsseite, d.h. der Nutzung abgewandten Seite der Borsten entsteht) zur Verankerung des Borstenfeldes genutzt werden. Die Anwendungseinheit kann hier mittels Kleben, Einklemmen oder Siegeln bzw. Schweißen, Nieten, Rasten, Schnappen oder einer Kombination davon mit der Verbindungseinheit und/oder direkt mit der Griffeinheit verbunden werden. Alternativ können die Borsten in das Borstenplättchen mittels Anker gestanzt oder ankerlos mittels IMT oder PTt im Borstenplättchen verankert werden. Dabei sind konventionelle Verfahren, bei welchen das Borstenplättchen mit Borstenlöchern und Borsten versehen wird, bekannt (z.B. Ankerstanzverfahren, IMT, PTt, etc.). Die Anwendungseinheit kann hier mittels Kleben, Nieten oder Siegeln bzw. Schweißen oder einer Kombination davon mit der Verbindungseinheit und/oder direkt mit der Griffeinheit verbunden werden. Das Borstenplättchen kann dabei insbesondere direkt eine Verbindungsstruktur, wie beispielsweise Niete, zu einer Verbindung mit der Verbindungseinheit und/oder direkt mit der Griffeinheit aufweisen. Alternativ können die Borsten direkt an einen Grundkörper der Anwendungseinheit angespritzt werden (d.h. gespritzte Borsten aus Material für gespritzte Borsten). Die Borsten und die Anwendungseinheit können dabei einstückig ausgebildet sein. Es können dabei eine oder mehrere Materialkomponenten verwendet werden. Beispielsweise kann eine Hartkomponente und/oder eine Weichkomponente und/oder ein Material bzw. eine Kunststoffkomponente für gespritzte Borsten verwendet werden. Die Anwendungseinheit kann hier beispielsweise mittels Siegeln bzw. Schweißen, Nieten, Schnappen, Rasten und/oder Umspritzen oder einer Kombination davon mit der Verbindungseinheit und/oder direkt mit der Griffeinheit verbunden werden. Der Grundkörper der Anwendungseinheit kann dabei insbesondere direkt eine Verbindungsstruktur, wie beispielsweise Nieten, zu einer Verbindung mit der Verbindungseinheit und/oder direkt mit der Griffeinheit aufweisen, welche direkt auf einer Unterseite des Grundkörpers der Anwendungseinheit angespritzt ist.

Die Anwendungseinheit weist vorteilhaft zumindest eine Reinigungseinheit, bzw. einen Bürstenkopf, insbesondere einen Zahnbürstenkopf, mit Borsten auf. Die Reinigungseinheit weist zudem vorteilhaft zumindest einen Borstenträger, beispielsweise einen Bürstenkopfgrundkörper, insbesondere den Grundkörper, auf. Ferner wird vorgeschlagen, dass ein Grundkörper der Anwendungseinheit vollständig aus einer Hartkomponente ausgebildet ist und einen Borstenträger ausbildet. Alternativ oder zusätzlich wird vorgeschlagen, dass das Körperpflegeprodukt ein von dem Grundkörper aufgenommenes Borstenplättchen aufweist, welches eine Mehrzahl Borsten, insbesondere eine Mehrzahl von Borstenbündeln umfasst. Hierzu werden (beispielhaft für das AFT Verfahren) zunächst mittels Spritzgießen Borstenplättchen mit Durchgangslöchern gefertigt, durch welche anschließend Borsten geführt werden. Vorzugsweise werden die Borsten anschließend auf einer Rückseite mindestens bündelweise verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere der Verbindungseinheit, verbunden, z.B. verschweißt, gesiegelt und/oder verklebt werden, oder mechanisch mittels Nieten, Verstemmen, vorzugsweise mittels eines Ultraschallschweißens, form-und/oder stoffschlüssig verbunden werden. Hierzu weist der Grundkörper vorzugsweise eine entsprechende Struktur zur Aufnahme / Verbindung auf, welche zur Verbindung des Borstenplättchens genutzt werden kann. Alternativ kann das Borstenplättchen mit in dieser Schrift genannten Verbindungs-Verfahren direkt, d.h. ohne zusätzlichen Grundkörper mit dem Griffkörper verbunden werden. Das Borstenplättchen kann alternativ auch mittels anderer Verfahren mit Borsten besetzt werden (Anker-Stanzen, PTt, IMT etc.). Damit eine möglichst gute Verbindung mit dem Griffkörper aus Papierwerkstoff entsteht sind in dieser Schrift entsprechende Verfahren genannt.

Ferner wäre denkbar, dass das Borstenplättchen aus einem Papierwerkstoff, Holz, Bambus oder Folie aus einer nachhaltigen Kunststoffkomponente hergestellt ist. Das Borstenplättchen kann aus einem Papierwerkstoff gestanzt sein. Dazu können eine oder mehrere Lagen bzw. Schichten aus Papierwerkstoff bereitgestellt werden, die den Körper des Borstenplättchens bilden. Die Ausnehmungen werden anschließend gebildet, dafür kann ein Stanzprozess, Schneiden z.B. Laserschneiden, Fräsen/Bohren oder ein anderes geeignetes Verfahren zur Bearbeitung von Papierwerkstoff eingesetzt werden. Die Borsten werden wiederum im AFT-Verfahren mit dem Borstenplättchen verbunden, wobei dieses dann im Anschluss in der entsprechenden Ausnehmung in der Griffeinheit oder auf der Griffeinheit fixiert werden kann.

Die Anwendungseinheit weist vorteilhaft zumindest eine Reinigungseinheit, insbesondere einen Zahnbürstenkopf, mit Borsten auf. Die Reinigungseinheit weist zudem vorteilhaft zumindest einen Borstenträger, beispielsweise einen Bürstenkopfgrundkörper, auf. Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT, PET, PTT) gefertigt, wobei beliebige andere Materialien (wie z.B. die aufgeführten Hartkomponenten) denkbar sind und auch in dieser Schrift aufgeführte nachhaltige Materialien bzw. Kunststoffkomponenten insbesondere abbaubare (wie z.B. PLA oder PTT) möglich sind. Ferner ist denkbar, dass zumindest einige der Borsten am nutzungsseitigen Ende eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten aus mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Im Gegensatz zu gespritzten Borsten oder gummielastischen Massage- und Reinigungselementen, welche mittels Spritzguss hergestellt sind, werden konventionelle Borsten extrudiert, geschnitten, bearbeitet (z.B. deren Enden geschliffen und/oder abgerundet) und am Zahnbürstengriff mittels eines angepassten Verfahrens eingesetzt, wie beispielsweise mittels des Ankerstanz-Verfahrens oder eines ankerlosen Verfahrens.

Insbesondere kommen zylindrische oder zugespitzte Borsten mit rundem Querschnitt infrage, wobei beliebige andere Querschnitte wie beispielsweise polygonale, dreieckige, rechteckige, quadratische, elliptische, sternförmige, trapezförmige, kreuzförmige, parallelogrammförmige, rhombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig, aber auch unregelmäßig angeordnet sein. Insbesondere können sich in Gruppen und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten einen Durchmesser, insbesondere senkrecht zu ihrer Längsachse, von wenigstens 0,075 mm und/oder von höchstens 0,25 mm auf. Vorteilhaft weisen die Borsten eine Querschnittsfläche, insbesondere senkrecht zu ihrer Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden, insbesondere Borsten mit einem Durchmesser, insbesondere senkrecht zu ihrer Längsachse, von wenigstens 0,025 mm und/oder von höchstens 0,2 mm und/oder mit einer Querschnittsfläche, insbesondere senkrecht zu ihrer Längsachse, von wenigstens 0,001 mm² und/oder von höchstens 0,15 mm². Im Fall von zugespitzten Borsten ist insbesondere Polyester (z.B. PBT, PET, PTT) als Material geeignet, wobei auch nachhaltige Materialien möglich sind, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch in Längsrichtung auch gewellte und/oder gedrillte und/oder wendelförmige und/oder gedrehte Borsten denkbar sowie insbesondere auch Kombinationen unterschiedlicher Borsten. Ferner sind Borsten mit einer glatten Oberfläche denkbar, ebenso wie Borsten mit strukturierter und/oder texturierter Oberfläche.

Ferner sind die Borsten, insbesondere als Borstenbündel, vorzugsweise mittels zumindest eines Ankerstanz-Verfahrens oder eines ankerlosen Verfahrens z.B. AFT, PTt, IMT oder dergleichen verarbeitet, insbesondere an dem Borstenträger befestigt. Vorzugsweise weist der Borstenträger eine Mehrzahl von, insbesondere gebohrten und/oder im Spritzgussverfahren geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren (wie z.B. AFT, PTt, IMT, etc.) denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist hierbei denkbar, dass die Borstenbündel zunächst vereinzelt verschmolzen und/oder ihre Borstenenden, insbesondere anschließend, zu deren Befestigung z.B. umspritzt oder mittels Materialverdichtung des Bürstenkopfes fixiert werden können. Hierbei können vorteilhaft Borstenbündel zusammengeführt werden.

Ferner ist denkbar, dass die Anwendungseinheit aus einem Grundkörper und einem Borstenplättchen, welches mit Borsten und/oder alternativen Reinigungselementen besetzt ist, zusammengesetzt ist. Hierzu werden zunächst mittels Spritzgießens Borstenplättchen mit Durchgangslöchern gefertigt, durch welche anschließend Borsten geführt werden. Vorzugsweise werden die Borsten anschließend auf einer Rückseite mindestens bündelweise verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verbunden, z.B. verschweißt, gesiegelt und/oder verklebt werden, und/oder mechanisch, mittels Nieten, Verstemmen, vorzugsweise mittels eines Ultraschallschweißens oder einer Kombination davon, verbunden werden. Hierzu weist der Grundkörper, insbesondere der Bürstenkopf, vorzugsweise eine Ausnehmung auf, in welche das Borstenplättchen eingesetzt werden kann. Alternativ kann das Borstenplättchen auch auf der Oberfläche des Grundkörpers aufgesetzt werden. Als bekanntes Herstellungsverfahren ist in diesem Zusammenhang das Anchor-Free-Tufting-Verfahren (AFT) zu nennen, das insbesondere ein Zusammenführen von Borstenbündeln ermöglicht. Als Unterseite des Borstenplättchens wird insbesondere eine Seite bezeichnet, welche in eine Ausnehmung des Grundkörpers bzw. auf den Grundkörper gelegt wird und in Richtung Rückseite des Körperpflegeprodukts zeigt. Entsprechend zeigt die Oberseite des Borstenplättchens in Richtung der Vorderseite des Körperpflegeprodukts. Der Grundkörper kann aus einer Hartkomponente aus einem nachhaltigen Material oder einem Papierwerkstoff bestehen. Bevorzugt besteht der Grundkörper aus einer Hartkomponente.

Alternativ kann das Borstenplättchen aus einem Papierwerkstoff oder einem Werkstoff aus Fasern, bzw. Zellstoff oder aus Holz hergestellt werden. Das Borstenplättchen aus Papierwerkstoff ist außerhalb des Borstenfeldes mit einem Randbereich versehen, welcher mit einem Verbindungsmittel wie Siegellack, Leim oder Ähnlichem versehen ist und welcher eine Siegelung bzw. Verankerung des Borstenplättchens mit einer Griffeinheit oder einem Grundkörper z.B. aus einem Papierwerkstoff oder einer Hartkomponente oder einem nachhaltigen Material bzw. Kunststoffkomponente ermöglicht. Dabei wird insbesondere der genannte Randbereich mit der Griffeinheit bzw. mit dem Grundkörper verbunden. Weiter kann der Randbereich des Borstenplättchens auch mit einem effektiven Absatz versehen sein, sodass sich auf der Rückseite des Borstenplättchens eine Ausnehmung ausbildet, die sicherstellt, dass die Schmelze der Borsten nicht über den Rand des Borstenplättchens reicht bzw. auch den Randbereich nicht bedeckt.

Ein Borstenplättchen aus Papierwerkstoff, Holz, Bambus oder Folie aus nachhaltigem Material bzw. Kunststoffkomponente wird mittels eines geeigneten Verfahrens aus flächigem Papier, Holzblättern (z.B. Furnier) oder Folie gebildet. Mögliche Verfahren sind z.B. Stanzen, Laserschneiden oder Schneiden. Der flächige Bereich des Borstenplättchens hat eine Dicke von 0,1 mm - 3,0 mm, vorzugsweise 0,3 mm - 2,0 mm, besonders bevorzugt 0,5 mm - 1,5 mm.

Alternativ kann ein mit den Borsten / Reinigungselementen zusammen hergestelltes, vorzugsweise einstückiges Borstenplättchen realisiert werden. Dabei kann alles (z.B. Bürstenkopf und/oder Aufnahme für ein Borstenplättchen und/oder Borstenplättchen und/oder Borsten) in einem Spritzvorgang hergestellt werden. Bevorzugt wird dafür Material bzw. eine Kunststoffkomponente für gespritzte Borsten verwendet. Zusätzlich kann auch eine Hartkomponente und/oder eine Weichkomponente eingesetzt werden. Auch dieses Borstenplättchen kann wiederum mit den verschiedensten in dieser Schrift erwähnten Verbindungstechniken mit dem Grundkörper verbunden werden, beispielsweise mittels Kleben, Siegeln, Schweißen, Verstemmen, Vernieten oder eine Kombination davon.

Alternativ kann die Herstellung eines beborsteten Elements ohne Borstenplättchen vorgesehen sein. Die Herstellung bzw. Beborstung dieses Elements geschieht ähnlich zur Herstellung eines bestückten Borstenplättchens. Borsten werden in der nötigen Konfiguration bereitgestellt und an ihren befestigungsseitigen Enden verschmolzen. Die Verschmelzung muss in diesem Fall so sein, dass sich über alle Borstenbündel und allfälligen weiteren Elementen ein Schmelzeteppich aus der Borstenkomponente ausbildet welches ein Borstenplättchen bildet. Das beborstete Element wird im Anschluss auf einen Bürstenkörper/Grundkörper montiert bzw. damit verbunden. Hierbei ist das Element in einer Ausgestaltungsvariante nicht mit einem zusätzlichen, separat gefertigten Borstenplättchen ausgestattet, sondern ist in sich selbst über den eigenen Schmelzeteppich stabil, wobei der Schmelzteppich das Borstenplättchen bildet. Der Schmelzeteppich wird aus den befestigungsseitigen, aufgeschmolzenen Enden der Borsten gebildet. Der Schmelzeteppich bildet im Wesentlichen eine Fläche bzw. eine Platte und dient so als Basis für die Verbindung mit dem Grundkörper. Der Schmelzeteppich kann auch so geformt werden, dass er Verbindungselemente in Form von Vorsprüngen, Nieten, Kämmen oder anderen formschlüssigen Elementen aufweist. Der Schmelzeteppich mit den Borstenbündeln kann mittels AFT oder mit einem anderen ankerlosen Beborstungsverfahren hergestellt werden. Auch dieses Element kann wiederum mit den verschiedensten in dieser Schrift erwähnten Verbindungstechniken mit dem Grundkörper verbunden werden, beispielsweise mittels Kleben, Siegeln, Schweißen, Verstemmen, Vernieten oder Kombinationen davon. Der Grundkörper kann hierbei mit einer Ausnehmung versehen sein, damit der Schmelzeteppich in dieser versenkt befestigt werden kann. Damit eine möglichst gute Verbindung mit dem Griffkörper aus Papierwerkstoff entsteht sind in dieser Schrift entsprechende Verfahren genannt.

Anstelle eines Borstenplättchens können die Borsten / Reinigungselemente auch direkt am Grundkörper angespritzt werden.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs.

Alternativ zum separaten Borstenplättchen ist das Borstenplättchen als ein Teil des Grundkörpers ausgebildet, bzw. damit einstückig verbunden. Analog wird der Bürstenkopf auch in dieser Variante als eine mögliche Ausgestaltungsvariante mit Durchgangslöchern versehen. Die Borsten können auch in diesem Fall durch die Durchgangslöcher geführt werden und auf der Rückseite mindestens bündelweise verschmolzen werden, dies insbesondere miteinander und/oder mit dem Bürstenkopf.

Zudem ist denkbar, zunächst einen Bürstenkopf mit Sacklöchern, beispielsweise mittels Spritzgießens und/oder mittels eines Bohrens der Sacklöcher und/oder mittels Schneiden/Stanzen, zu fertigen. Borsten werden in diesem Fall insbesondere zu Bündeln zusammengelegt und an einem Ende verschmolzen und/oder anderweitig verbunden. Der Bürstenkopf wird anschließend erwärmt und/oder mit Wasser oder Wasserdampf befeuchtet. Sodann können vorteilhaft Borstenbündel auf der verbundenen Seite in die Sacklöcher eingeführt und mittels eines Andrückens bzw. Komprimierens des Bürstenkopfs verankert werden. Insbesondere verformen bzw. komprimieren sich hierbei die erwärmten und/oder befeuchteten Sacklöcher bzw. der Bürstenkopf, sodass die Borstenbündel in denselben verankert werden. Gleichzeitig kann auch der Bürstenkopf verformt werden. Dieses Verfahren kann für Hartkomponenten, vorzugsweise mittels zusätzlicher Befeuchtung, aber auch für Papierwerkstoff bzw. Holz eingesetzt werden.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten und/oder Papierwerkstoff und/oder Holz und/oder Bambus und/oder anderen Materialien des Körperpflegeprodukts ein. Bevorzugt werden gespritzte Borsten vielmehr mittels eines Formschlusses, beispielsweise mittels zumindest eines Hinterschnitts und/oder zumindest eines Durchbruchs am Grundkörper der Anwendungseinheit und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Des Weiteren kann der Kunststoff zusätzlich oder alternativ beim Umspritzen aufgrund der Wärme und des Spritzdrucks zumindest teilweise in die Oberfläche des Papier-, Holz- oder Bambuswerkstoffs eindringen und/oder diese zumindest aufrauen und damit eine feste Verbindung schaffen.

Es ist jedoch auch eine Verbindung mittels zumindest eines Materialschlusses insbesondere mit affinen bzw. kompatiblen Kunststoff-Materialien bzw. -Komponenten denkbar.

Ein weiteres mögliches Verfahren zur Beborstung des Bürstenkopfs stellt das Eindrehen dar. Hierbei wird beispielsweise Filament von einer Rolle zugeführt, wobei insbesondere mehrere Filamentstränge auf einer Rolle aufgewickelt sind. Für die Maschinenbeschickung sind jeweils mehrere Rollen vorgespannt, denn jedes Filament in der Bürste entspricht einem Filamentstrang. Die Filamente werden in der Breite korrekt ausgebreitet, damit sie die Breite haben, in welcher sie in die Bürste eingeführt werden. Die Filamente werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche größer ist als die abgewickelte Länge der eingedrehten Bürste, das endgültige Ablängen erfolgt nach dem Eindrehen. Der Draht wird zu einem U gebogen, damit die offene Seite anschließend über die Filamente geschoben werden kann, um die Borsten einzufädeln. Der Draht wird am Boden des U's gehalten. Darauffolgend wird das offene Drahtende geklemmt, damit die Filamente zwischen den Drahtstücken halten. Die Filamente werden auf eine Länge geschnitten, welche größer ist als die Endlänge in der Bürste, damit die Bürste anschließend, wenn die Filamente eingedreht sind, korrekt geschnitten werden kann. Der Draht wird gedreht, sodass die Filamente zwischen dem Draht eingeklemmt und damit fixiert werden. Nachdem die Filamente im Draht fixiert sind, werden sie auf die korrekte Länge geschnitten und profiliert. Nachdem der Bürstenteil fertiggestellt ist, wird der überschüssige Draht abgeschnitten. Die auf diese Weise bereitgestellte Anwendungseinheit, eine eingedrehte Bürste, kann wiederum mit den entsprechenden Verbindungselementen mit dem Griffkörper/der Griffeinheit verbunden werden.

Für sämtliche erwähnten möglichen Spritzgussprozesse ist grundsätzlich ein Ein-, Zwei- und/oder Mehrkomponentenspritzguss denkbar. Verwendete Materialien, insbesondere unterschiedliche Weichkomponenten und/oder Hartkomponenten und/oder Material für gespritzte Borsten, können hierbei, wie erwähnt, stoffschlüssig und/oder formschlüssig verbunden werden und/oder sein. Auch eine Ausbildung von gelenkigen bzw. beweglichen oder flexiblen Verbindungen mittels geeigneter Spritzgussschritte ist denkbar. Es kommen grundsätzlich beispielsweise Heißkanalverfahren, Kaltkanalverfahren und/oder Co-Injektionsverfahren in Frage.

Alternativ oder zusätzlich zu einem mit Borsten besetzten Bürstenkopf kann die Anwendungseinheit auch zumindest einen Zungenreiniger und/oder zumindest ein alternatives Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein.

Material bzw. Kunststoffkomponente für gespritzte Borsten: Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien für gespritzte Borsten denkbar, beispielsweise thermoplastische Polyester-Elastomere (TPE-E), thermoplastische Polyamid-Elastomere (TPE-A), Polyethylen (PE), beispielsweise in den Formen low density Polyethylen (LDPE) oder linear low density Polyethylen (LLDPE), oder dergleichen. Je nach gewünschten Borsteneigenschaften können grundsätzlich auch die aufgeführten Hartkomponenten bzw. Weichkomponenten als Material für gespritzte Borsten dienen.

Materialien für gespritzte Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-D-Härte eines Materials gespritzter Borsten vorteilhaft höher als eine Shore-D-Härte übriger verwendeter Weichkomponenten, beispielsweise für Griffelemente, Massageelemente, weitere Reinigungselemente oder dergleichen. Die für die Herstellung von gespritzten Borsten eingesetzten Materialien können nachhaltige Materialien bzw. Kunststoffkomponenten sein.

Grundsätzlich ist ferner eine Verwendung wasserlöslicher Polymere denkbar, beispielsweise für Hartkomponenten, Weichkomponenten, gespritzte Borsten, Zungenreiniger oder andere Elemente des Körperpflegeprodukts.

Ebenso können für die Hartkomponente, die Weichkomponente und/oder das Material für gespritzte Borsten nachhaltige Kunststoffkomponenten bzw. Biokunststoffe herangezogen werden, welche insbesondere mindestens teilweise aus nachwachsenden Rohstoffen gewonnen sein können und/oder biologisch abbaubar, insbesondere kompostierbar, sein können und/oder aus einem recycelten und/oder recycelbaren Material bestehen können. Vorzugsweise ist das Material insbesondere aus einem Kunststoff gebildet. Vorzugsweise ist das biologisch abbaubare, insbesondere kompostierbare, und/oder recycelte und/oder recycelbare Material von einem Biokunststoff, insbesondere aus einem Kunststoff auf Basis nachwachsender Rohstoffe und/oder aus einem biologisch abbaubaren Kunststoff, gebildet. Das Material kann daher insbesondere fossil-basiert und bioabbaubar sein, wie beispielsweise PVOH, PCL, PBAT, PET oder PBS, auf nachwachsenden Rohstoffen basieren und bioabbaubar sein, wie beispielsweise PLA, PHA, Cellophan oder Stärke-Blends, oder auf nachwachsenden Rohstoffen basieren und nicht bioabbaubar sein, wie beispielsweise Ca, Bio-PE, Bio-PP, Bio-PA, Bio-PET. Es sind verschiedene, einem Fachmann als sinnvoll erscheinende Biokunststoffe denkbar, wie beispielsweise stärkebasierte Biokunststoffe, cellulosebasierte Biokunststoffe, Polyhydroxy-Alkanoate, wie insbesondere Polyhydroxybuttersäure (PHB), Polymilchsäure (PLA), aliphatische und/oder aromatische Copolyester, oder weitere Biokunststoffe wie beispielsweise Ligninbasierte Biokunststoffe. Bevorzugt kann die Anwendungseinheit bzw. die Griffeinheit zu einem Großteil aus einem biologisch abbaubaren, insbesondere kompostierbaren, und/oder aus einem recycelten Material bestehen. Vorzugsweise besteht das Körperpflegeprodukt nur aus einer Komponente. Insbesondere weist das Körperpflegeprodukt eine Hartkomponente auf. Der materielle Griffkörper der Griffeinheit kann mindestens teilweise aus der Hartkomponente bestehen. Die Hartkomponente und/oder die Weichkomponente und/oder das Material für gespritzte Borsten besteht vorteilhaft aus einem Biokunststoff, welcher insbesondere aus nachwachsenden Rohstoffen gewonnen sein kann. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können.

Des Weiteren wird vorgeschlagen, dass die Anwendungseinheit zumindest einen Klingenkopf aufweist. Bei einer Ausgestaltung des Körperpflegeprodukts als Rasierer weist die Anwendungseinheit insbesondere einen Klingenkopf auf, wobei der Klingenkopf sowohl direkt mit der Verbindungseinheit verbunden hergestellt sein kann, als auch wechselbar ausgeführt sein kann, wobei die wechselbare Montage des Klingenkopfs an der Verbindungseinheit erfolgt. Vorzugsweise ist die Anwendungseinheit zumindest teilweise einstückig mit der Verbindungseinheit ausgebildet. Die Verbindung kann drehbeweglich ausgestaltet sein. Vorzugsweise sind bei einer Ausgestaltung des Körperpflegeprodukts als Rasierer mehrere Verankerungspunkte zwischen dem Verbindungselement und der Griffeinheit bzw. dem weiteren Verbindungselement vorgesehen. Dabei sind insbesondere drei Verbindungsmöglichkeiten einzeln oder kombiniert denkbar, und zwar Nieten, Einklemmen und/oder seitliches Halten, zusätzlich oder alternativ sind auch Kleben, Schweißen, Kaschieren oder Siegeln, Umspritzen oder weitere in dieser Schrift genannte Verbindungstechniken denkbar. Damit eine möglichst gute Verbindung mit dem Griffkörper aus Papierwerkstoff entsteht sind in dieser Schrift entsprechende Verfahren genannt.

Eine universelle Schnittstellengestaltung lässt dabei insbesondere einen einfachen Modellwechsel zu, sodass eine Verbindungseinheit mit Anwendungseinheit für verschiedene Griffe genutzt werden kann. Die verschiedenen Griffe können wiederum mit derselben Verbindungseinheit kombiniert werden.

Bei einer Ausgestaltung des Körperpflegeprodukts als Rasierer besteht der Griffkörper vorzugsweise aus Papierwerkstoff, Holz, Bambus oder Folie aus nachhaltigem material bzw. Kunststoffkomponente. Bevorzugt beträgt eine Anzahl an Lagen des Griffkörpers im Endprodukt von 1 bis 10 Lagen, vorzugsweise von 1 bis 5 Lagen, welche eine Schicht bilden. Vorzugsweise besteht der Griffkörper aus genau einer Schicht. Die Anzahl an Lagen hängt insbesondere von der gewünschten Endstärke des Griffkörpers ab. Es können viele dünne Lagen oder wenige dickere Lagen realisiert werden. Die Lagen werden vorzugsweise verbunden. Durch das Realisieren des Körpers in mehreren Lagen ergeben sich Stabilitätsvorteile gegenüber einem Körper aus einer oder weniger Lagen. Eine Materialstärke des Griffkörpers beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Ferner kann ein Material des Griffkörpers behandelt sein. Beispielsweise kann der Griffkörper eine Lackierung und/oder Bedruckung und/oder eine wasserabweisende Beschichtung und/oder eine ein- oder beidseitig laminierte Folie aus Kunststoffkomponente aufweisen oder aus einem Gemisch von Papierfaser und Kunststoffkomponente hergestellt sein. Der Griffkörper mit dem weiteren Verbindungselement besteht insbesondere aus einem Zuschnitt zum Falten. Der Griffkörper bildet im montierten bzw. verbundenen Zustand insbesondere einen dreieckigen Querschnitt aus. Bevorzugt sind dazu zumindest zwei Schenkel des dreieckigen Querschnitts im Endprodukt mindestens teilweise doppellagig ausgebildet. Zumindest eine, insbesondere beide, der Doppellagen sind verbunden, insbesondere geklebt, jedoch insbesondere zumindest die äußere Doppellage. Die Faltungen und Rillungen des Griffkörpers sind insbesondere einerseits so gestaltet, dass einerseits der eigentliche Griff geformt wird, und andererseits das eine Verbindungselement fixiert wird. Der Griffkörper verjüngt sich in Richtung zum freien, unteren Ende. Der Griffkörper bildet mindestens abschnittsweise eine hohle Pyramide mit 3-eckigem Querschnitt. Eine Stabilität des Griffkörpers wird insbesondere durch die Faltung erlangt. Die Fixierung des Verbindungselements an dem Griffkörper bzw. dem weiteren Verbindungselement erfolgt insbesondere durch Formschluss. Alternativ oder zusätzlich wäre jedoch auch eine Fixierung durch Klebung denkbar. Es können auch weitere in dieser Schrift genannte Verbindungsverfahren eingesetzt werden.

Bei einer Ausgestaltung des Körperpflegeprodukts als Rasierer ist das Verbindungselement der Verbindungseinheit insbesondere voluminös, d.h. eher weniger flächig gestaltet. Das Verbindungselement kann dabei sowohl fachwerkartig, d.h. mit Leerräumen im Inneren oder aus einem Vollmaterial gebildet sein. Bevorzugt ist insbesondere eine fachwerkartige Ausgestaltung des Verbindungselements, um den Materialeinsatz tief zu halten. Vorzugsweise besteht das Verbindungselement aus einer Kunststoffkomponente, insbesondere aus einer Hartkomponente. Alternativ sind jedoch auch andere, nachhaltige Materialien wie beispielsweise Holz oder nachhaltige Kunststoffkomponente denkbar. Eine Materialisierung des Verbindungselements ist insbesondere derart, dass die Schnittstelle zu dem Klingenkopf einweg oder mehrweg funktioniert. Vorzugsweise ist ein Material des Verbindungselements derart, dass dieses einweg oder mehrweg ist. Ferner kann die Materialisierung und/oder das Verbindungselement das Entfernen/Abnehmen des Messerkopfes zur Trennung in verschiedene Abfallströme für Entsorgung, Recycling, Kompostierung oder Wiederverwendung umfassen. Vorzugsweise wird das Verbindungselement im montierten Zustand von dem Griffkörper auf drei Flächen mindestens teilweise umschlungen. Das Verbindungselement ist dabei insbesondere dazu vorgesehen, den Griffkörper von innen zu stützen und den Griffkörper mit dem Klingenkopf zu verbinden, damit dieser nicht verdrückt werden oder versehentlich getrennt werden (z. B. während des Gebrauchs) kann. Das Verbindungselement weist insbesondere mehrere Anlageflächen für den Griffkörper auf. Eine erste Anlagefläche ist auf der oberen Seite angeordnet. Auf dieser Seite weist das Verbindungselement insbesondere eine Einfahrnut und einen Rast-Kamm zu einer Verbindung mit dem Griffkörper auf. Die erste Anlagefläche weist insbesondere eine Umfangsgröße, bei der Ausnehmungen nicht abgezogen sind, von 500 mm² bis 850 mm², vorzugsweise von 600 mm² bis 750 mm² auf. Eine zweite und dritte Anlagefläche sind insbesondere symmetrisch zur Grifflängsachse geformt. Die zweite und dritte Anlagefläche laufen insbesondere aufeinander zu bzw. stehen in einem Winkel zueinander. Die zweite und dritte Anlagefläche können mit Ausnehmungen versehen sein und liegen in einem Winkel von 25° bis 75°, vorzugsweise von 35° bis 55° zu der ersten Anlagefläche, wobei die Winkel identisch aber gegenüberliegend sind. Die zweite und dritte Anlagefläche weisen jeweils insbesondere eine Umfangsgröße, bei der Ausnehmungen nicht abgezogen sind, von 100 mm² bis 180 mm², vorzugsweise von 110 mm² bis 150 mm², auf. Das Verbindungselement ist insbesondere dazu vorgesehen, während einer Montage in die Ausnehmung des Griffkörpers eingefahren und eingerastet zu werden. Der Griffkörper hält, wenn montiert und fixiert, das Verbindungselement und damit die Anwendungseinheit. Das Verbindungselement und der Griffkörper bzw. das weitere Verbindungselement haben in einer Ausgestaltungsvariante keine Materialverbindung, sie liegen nur aneinander an bzw. es gibt einen Formschluss. Es wäre jedoch auch denkbar, dass zusätzlich eine Klebung, Schweißung vorgesehen ist. Es können weiter in dieser Schrift genannte Verbindungsverfahren verwendet werden.

Es ist möglich, dass der Griffkörper über Ausnehmungen verfügt, welche zur mechanischen Verbindung mittels Formschluss dienen. Diese Ausnehmungen können dazu dienen haptische Elemente, beispielsweise aus einer Kunststoffkomponente, am Rasierer zu bilden. Diese wird vorzugsweise im vorderen Bereich des Griffkörpers im Bereich der Anlageflächen oben, und/oder unten und/oder seitlich gebildet.

Der Klingenkopf wird insbesondere über eine Standardschnittstelle an dem Verbindungselement bzw. dem Grundkörper der Anwendungseinheit montiert. Das Verbindungselement ist insbesondere einteilig mit dem Grundkörper der Anwendungseinheit ausgebildet.

Die Herstellung und/oder Montage eines entsprechenden Körperpflegeprodukts, welches insbesondere als Rasierer ausgebildet ist, erfolgt insbesondere durch Erstellen eines Zuschnitts für den Griffkörper, insbesondere durch Stanzen und Rillen, und anschließendes Falten und Verbinden, bzw. Fixieren, insbesondere Kleben, Siegeln, Schweißen, des Griffkörpers. Daraufhin kann die Anwendungseinheit mit dem Verbindungselement durch Einstecken in den Griffkörper an dem Griffkörper montiert bzw. eingeschnappt werden. Hierzu wird das Verbindungselement in den Griffkörper eingefahren und ggf. verrastet. Der Klingenkopf kann anschließend montiert oder bereits vorab mit dem Verbindungselement bzw. dem Grundkörper der Anwendungseinheit montiert sein.

Eine alternative Montage könnte auch derart gestaltet sein, dass der Zuschnitt für den Griffkörper, insbesondere durch Stanzen und Rillen, bereitgestellt wird. Anschließend wird das Verbindungselement an dem Zuschnitt des Griffkörpers mittels bereits in dieser Schrift erwähnten Verbindungsverfahren fixiert und darauffolgend der Zuschnitt des Griffkörpers zu einer Ausbildung des Griffkörpers gefaltet und fixiert. Der Klingenkopf kann anschließend montiert oder bereits vorab mit dem Verbindungselement bzw. dem Grundkörper der Anwendungseinheit montiert sein.

Alternativ wäre auch denkbar, dass das Verbindungselement, anstelle, dass dieses in den Griffkörper eingefahren wird, an den Griffkörper angespritzt wird. Ferner kann eine Demontagemöglichkeit mittels Abzugslasche bestehen. Es kann insbesondere eine Abzugslasche an dem Griffkörper vorgesehen sein, damit der Griffkörper geöffnet und das Verbindungselement und/oder der Grundkörper der Anwendungseinheit entfernt und die Teile separat entsorgt werden können. Ein einfaches Trennen, wie beispielsweise Brechen, Reißen, Schneiden oder dergleichen, ohne Hilfsmittel am Griffkörper entlang der Griff-Längsachse ist ebenfalls möglich.

Vorzugsweise weist die Griffeinheit, insbesondere der Griffkörper Verformungen auf. Ziel der Verformungen ist insbesondere ein Verbessern des Haltens, der Ergonomie und/oder zu einer verbesserten Stabilität des Griffkörpers. Vorzugsweise weist der Griffkörper vier Zonen oder Bereiche auf, welche jeweils separat oder kombiniert Verformungen aufweisen können. Beispielsweise können in einer ersten Zone, und zwar in der Schnittstelle zu der Anwendungseinheit, Verformungen des Griffkörpers vorgesehen sein. So sind Verformungen beispielsweise in der Schnittstelle zu einem Interdentalbürstenkopf der Anwendungseinheit oder an einem Fixierungsort eines Borstenfelds der Anwendungseinheit denkbar. In einem anderen Beispiel werden Verformungen an der Verbindungseinheit oder der Griffeinheit eines als Rasierer ausgebildeten Körperpflegeprodukts (z. B. eines Klingenrasierers, eines Dermaplaning-Rasierers usw.) vorgenommen. Weitere mögliche Zonen sind eine zweite Zone im Halsbereich, eine dritte Zone im Griffbereich und eine vierte Zone im Endbereich. Bei einer flachen Ausgestaltung des Griffkörpers oder einer Zone des Griffkörpers kann insbesondere eine hohe Flexibilität erreicht werden, während durch Verformungen jeweils eine Stabilität erhöht werden kann. Der Papierwerkstoff kann generell leicht gebogen werden. Es können insbesondere gezielt flexible Bereiche des Griffkörpers ausgebildet werden. Dabei kann ein flexibler Teil frei von Verformungen sein oder nur Verformungen aufweisen, die die Flexibilität unterstützen. Verstärkungen in Form von Verformungen können dann entsprechend erst nach dem Bereich, der die Flexibilität ermöglicht, vorgesehen werden. So sind beispielsweise Querrillen zur Stärkung der Flexibilität möglich.

Es sind verschiedene, einem Fachmann als sinnvoll erscheinende Verformungen denkbar. So ist beispielsweise denkbar, dass ein zylindrischer Griffkörper nachträglich verformt wird. Der Griffkörper wird dabei insbesondere zumindest partiell oder gesamtheitlich komprimiert. In einer Ausgestaltung kann insbesondere die Außenfläche des zylindrischen Griffkörpers großflächig verformt werden. Hierdurch kann der Griffkörper mehr freiform-artig gestaltet werden und kommt weg von der ursprünglichen, zylindrischen Form. Es kann insbesondere ein komprimierter Griffkörper geschaffen werden, mit geringerer Querschnittsfläche an definierten Stellen. So kann beispielsweise aus einem Griffkörper mit einem runden Querschnitt ein Griffkörper mit flachgedrücktem Querschnitt allenfalls kombiniert mit runden Querschnitten geschaffen werden. Für ein Komprimieren oder Verdrücken des Griffkörpers sind verschiedene Ausrichtungen und Positionen denkbar. So kann der Griffkörper insbesondere rundherum in Umfangsrichtung um den Griffkörper verformt werden. Alternativ oder zusätzlich wäre auch lediglich eine einseitige Verformung denkbar, wie beispielsweise durch Verdrücken von nur einer Seite des Grundkörpers, während eine zweite Seite rund bleibt. Zum Verformen wird dabei insbesondere der Teil des Griffkörpers, der rund bleibt, in eine entsprechende Haltestruktur eingelegt. Alternativ oder zusätzlich wäre auch ein zweiseitiges Verdrücken denkbar. Der Griffkörper wird dabei von zwei Seiten verdrückt, die in Umfangsrichtung um 180° entgegengesetzt zueinander ausgerichtet sind. Alternativ oder zusätzlich wäre auch ein dreiseitiges Verdrücken denkbar. Der Griffkörper wird dabei von drei Seiten verdrückt, wobei regelmäßige oder unregelmäßige dreieckige oder dreiecksartige Querschnitt erzeugt werden können. Alternativ oder zusätzlich wäre auch ein vierseitiges oder x-seitiges Verdrücken des Griffkörpers denkbar. Beispielhafte Anwendungen für entsprechende Verformungen sind beispielsweise die Ausbildung eines Daumengriffs, die Ausbildung einer Austrittsgeometrie für eine eingedrehte Bürste der Anwendungseinheit oder das generelle Runden von Schnittflächen an dem Griffkörper. Die Austrittsgeometrie für einen Bürstenkopf der Anwendungseinheit kann beispielsweise durch das Verdrücken des Kopfbereichs zu einem Konus, insbesondere kegelartig oder in Dreiecken zulaufend, oder durch das einfache Runden von Kanten eines zylindrischen Griffkörpers geschaffen werden, sodass der Übergang zur Anwendungseinheit weniger eckig und markant ist. Durch das Verpressen der Schnittkanten können die Kanten weniger scharf gemacht werden.

In einer Ausgestaltung können an dem Griffkörper Haltestrukturen, insbesondere durch Eindrücken, und/oder Oberflächenstrukturen geformt werden. Dies erfolgt insbesondere durch eine partielle Verformung des Griffkörpers. Die partielle Verformung kann dabei auch mit einer großflächigen Verformung kombiniert werden, insbesondere da die Werkzeuge für die Ausführung der großflächigen Verformung auch Oberflächenstrukturen beinhalten können. Vorzugsweise dienen die partiellen Verformungen zu einer Erzeugung einer Oberflächenstruktur. Mögliche Formen für Oberflächenstrukturen sind dabei Haltepunkte, beispielsweise in Form von vorstehenden Noppen, oder erhabene oder versenkte Rillen.

Die beiden beschriebenen Ausgestaltungen von Verformungen (partiell oder großflächig) können dabei einzeln oder in Kombination angewendet werden. Konkrete Beispiele von Verformungen für zylindrische Griffkörper, die insbesondere auch kombiniert werden können, sind beispielsweise die Ausbildung einer Taillierung. So kann der Griffkörper insbesondere beispielsweise in der dritten Zone tailliert ausgebildet sein. Alternativ oder zusätzlich kann eine Verdickung in der Mitte mit jeweils dünn auslaufenden Enden vorgesehen sein. Dabei können beispielsweise die erste, zweite und vierte Zone, insbesondere durch Verformung, schlank ausgebildet sein, während die dritte Zone weniger verformt ist. Die Verdickung in der Mitte dient dabei insbesondere der besseren Greifbarkeit. So kann die Verdickung beispielsweise als Daumengriff oder Haltegeometrie des Griffkörpers dienen. Alternativ oder zusätzlich wäre auch denkbar, dass der Kopfbereich des Griffkörpers, insbesondere die erste Zone, konisch zulaufend gestaltet wird, insbesondere bei einer Ausgestaltung des Körperpflegeprodukts als Interdentalbürste. Alternativ oder zusätzlich wäre auch denkbar, dass die erste Zone dünner gestaltet ist. Alternativ oder zusätzlich wäre auch denkbar, dass der Endbereich, insbesondere die vierte Zone, dünner gestaltet ist, wobei der Griffkörper insbesondere gegen sein freies Ende, welches der Anwendungseinheit entgegengesetzt ist, ausläuft.

Alternativ oder zusätzlich wäre auch denkbar, dass Ausstanzungen zu einer Verbreitung des Griffkörpers vorgesehen sind. So kann der Griffkörper in der dritten Zone beispielsweise eine Ausstanzung aufweisen und gegenüber den restlichen Griffkörper breiter gestaltet ist. Alternativ oder zusätzlich wäre auch denkbar, dass beide Enden des Griffkörpers zulaufen. So kann insbesondere die erste und vierte Zone zulaufend gestaltet sein. Dabei ist insbesondere das freie Ende der vierten Zone breiter als das Ende bei der Anwendungseinheit.

Eine Verformung des Griffkörpers erfolgt zumindest bei einer Ausgestaltung des Körperpflegeprodukts als Interdentalbürste insbesondere nach einem Fixieren der Anwendungseinheit an der Griffeinheit.

Ferner können auch flache Griffkörper vorteilhaft verformt werden. In einer Ausgestaltung kann ein flacher Griffkörper vorteilhaft durch Verformung mit partielle Strukturen auf der Oberfläche versehen werden. Die Verformungen können insbesondere dazu genutzt werden, eine Ergonomie am Griff zu erhöhen, Haltestrukturen für eine Anwendung zu schaffen und/oder den Griffkörper zu stabilisieren. Die Strukturen bilden insbesondere jeweiliges auf einer Seite eine Senke und auf der anderen eine Erhebung aus. Dabei wäre auch denkbar, dass mehrere Strukturelemente unterschiedliche Richtungsorientierungen, insbesondere der Senkung bzw. Hebung, aufweisen. Die Strukturelemente sind nicht zwingend alle gleich orientiert bzw. weisen nicht zwingend auf der gleichen Seite die Hebung auf. Es wäre jedoch auch eine Ausgestaltung denkbar, in welcher alle Strukturelemente in dieselbe Richtung Erhebungen aufweisen. Alternativ wäre auch eine Ausgestaltung denkbar, in welcher die Strukturelemente sich jeweils abwechselnd zur Vorder- und Rückseite hin erheben. Alternativ oder zusätzlich wäre auch eine Längsorientierung der Strukturelemente denkbar, wie beispielsweise in Richtung der Längsachse des Körperpflegeprodukts, senkrecht zur Längsachse des Körperpflegeprodukts oder in variablen Winkeln. Bei einer Auslegung der Strukturelemente muss jeweils berücksichtigt werden, dass die Strukturelemente eine Stabilität fördern sollen. Damit die Belastung der Anwendungseinheit nicht zum Knicken aufgrund der Struktur führt, müssen die Strukturelemente jeweils auf die Anwendungseinheit abgestimmt sein. Alternativ oder zusätzlich wäre auch denkbar, dass mittels Verformung ein Schriftzug ausgeführt wird. Der Schriftzug kann in den Griffkörper eingedrückt sein, sodass der Schriftzug geprägt anstatt gedruckt wird. Der Griffkörper kann dabei nur durch Modifikation des Werkzeugs des Prägens verändert werden, wobei eine restliche Produktion unverändert bleibt.

Der Griffkörper kann dabei bei der Verformung verpresst und damit effektiv komprimiert werden. Ferner können zudem Strukturierungen vorgesehen sein, wie beispielsweise Aufrauhungen oder Laserungen.

Es sind verschiedene Verformungen für flache Griffkörper denkbar. Beispielsweise kann eine Verformung der ersten und zweiten Zone, insbesondere im Bereich eines eingelegten Reinigungselementträgers erfolgen. Die Verformung passiert dabei insbesondere derart, dass der Reinigungselementträger an und/oder in dem Griffkörper plastisch verformt wird. Ferner kann der Griffkörper geschwungen verformt werden. So kann beispielsweise die erste Zone flach ausgeführt sein, die zweite Zone geschwungen gegen hinten ausgebildet sein, die dritte Zone geschwungen gegen vorne ausgebildet sein und die vierte Zone zulaufend ausgebildet sein. Des Weiteren kann die Verformung gezielt Vertiefungen ausbilden. So kann beispielsweise in der ersten und/oder zweiten Zone zumindest eine Vertiefung bzw. Erhebung vorgesehen sein, die sich beispielsweise bei einem Flosser im Bereich der Arme bis zum Ende der Arme erstreckt, um ein Knicken direkt nach den Strukturen zu vermeiden. Alternativ oder zusätzlich kann in der dritten Zone eine Vertiefung bzw. Erhebung vorgesehen sein. Alternativ oder zusätzlich kann auch in der vierten Zone eine Verpressung erfolgen, wobei der Endbereich zu einer Ausbildung eines Zahnstochers verformt, insbesondere verdrückt wird.

Bei flachen Griffkörpern kann eine Verformung des Griffkörpers insbesondere nach einem Fixieren der Anwendungseinheit an der Griffeinheit erfolgen. Alternativ kann die Verformung beim Fixieren der Anwendungseinheit erfolgen. So kann die Verformung beispielsweise bei einem Siegeln erfolgen, wie beispielsweise bei Interdentalbürsten. Hierbei wird insbesondere der Papierwerkstoff rundherum verformt. Die Verformung kann dabei zusätzlich für die Fixierung der Anwendungseinheit genutzt werden. Ferner wäre auch eine Verformung im Spritzgusswerkzeug, beispielsweise bei Flossern, denkbar. Die Verformung erfolgt dabei während dem Spritzgießen und/oder beim Einlegen ins Spritzguss-Werkzeug. Alternativ wäre auch das Formen der Rohlinge für den Griffkörper vor dem Fixieren der Anwendungseinheit denkbar.

Es sind verschiedene Mittel zur Verbesserung einer Verbindung zwischen der Anwendungseinheit und der Griffeinheit denkbar. So kann beispielsweise bei eingedrehten Bürsten eine Verbesserung der Fixierung durch Verformen des Reinigungselementträgers erreicht werden. Das Verformen ist insbesondere für eingesiegelte oder umspritzte eingedrehte Bürsten nutzbar. Damit der Draht des Reinigungselementträgers nicht aus dem Griff gedreht werden kann, ist vorzugsweise eine Verformung in dem Reinigungselementträger vorgesehen. So kann der Draht nicht so gut in Längsrichtung aus dem Griffkörper oder dem Verbindungselement gezogen werden. Es soll insbesondere eine Geometrie geschaffen werden, die aus der Beanspruchungsrichtung ragt, damit der Halt verbessert wird. Es soll insbesondere eine formschlüssige Verbindung geschaffen werden. Für einen optimalen Halt sollte eine Abweichung des Reinigungselementträgers von der Längsachse von 0,5 mm bis 5 mm, vorzugsweise von 1 mm bis 3 mm, betragen. Dabei sind verschiedene Formen eines Endes des Reinigungselementträgers denkbar. Der Reinigungselementträger kann am Ende des Drahts einen Knick von 20° bis 90° aufweisen. Der Reinigungselementträger kann in einem mittleren Teil des Fixierungsbereichs eine Delle aufweisen. Ferner kann der Reinigungselementträger am Ende des Drahts einen Haken ausbilden, insbesondere mit einer 180° Biegung.

Ferner kann eine verbesserte Fixierung der Bürsten durch eine verbesserte Verbindung der verschiedenen Lagen und Schichten erreicht werden. Es kann beispielsweise eine Kombination aus Siegeln und Klebstoff angewendet werden. So kann insbesondere Hotmelt zum Verstärken angewendet werden. Des Weiteren kann gezielt eine Fixierung der Bürste durch Klebstoff im Bereich der Verformungen erreicht werden. Das Verbinden des Papierwerkstoffs mittels Siegeln bringt eine Auszugskraft der Interdentalbürste von ca. 20 N. Mit dem Einsatz von Klebstoff im Bereich der Verformungen der Interdentalbürste kann die Auszugskraft wesentlich, insbesondere bis zu einem Drahtriss des Reinigungselementträgers, verbessert werden. Als Klebstoffe können natürlicher Klebstoff oder Hotmelt zum Einsatz kommen. Ferner kann der Klebstoff partiell zusätzlich zum Siegellack oder nur direkt auf dem Draht angewendet werden.

Bei flachen Griffkörpern sind insbesondere verschiedene Herstellungsvarianten denkbar. Vorzugsweise wird zu einer Herstellung des Griffkörpers Papier in Lagen geschichtet. Das Papier wird dabei mit Siegellack bereitgestellt. Eine Fixierung der Anwendungseinheit, insbesondere einer Interdentalbürste erfolgt dabei zwischen den Lagen bzw. Schichten. Es sind insbesondere zwei Lagen Papier auf jeder Seite der Anwendungseinheit vorgesehen. Anschließend werden alle Lagen miteinander versiegelt. Dazu werden die Papierbögen gestapelt und mit der Anwendungseinheit gerichtet. Anschließend erfolgt ein Siegeln und Pressen. Daraufhin wird die Griffeinheit gestanzt. Zudem kann eine Vorbehandlung des Papier- oder Holzwerkstoffs erfolgen. Beispielsweise können Beschriftungen oder Strukturen durch Lasern eingebracht werden. Alternativ oder zusätzlich kann ein Färben der Griffeinheit beispielsweise durch in Farbe Tauchen oder durch Bedrucken erfolgen. Alternativ oder zusätzlich können durch Aufrauen oder Ritzen Haltestrukturen geschaffen werden, welche einen Oberflächen-Grip verbessern. Alternativ oder zusätzlich kann ein Beduften erfolgen. Ferner kann eine Nachbehandlung insbesondere des Griffkörpers erfolgen. Beispielsweise kann der Griffkörper fertig ausgestanzt werden. Dabei wäre auch denkbar, dass die Griffkörper lediglich zu Bögen aus mehreren Griffkörpern verbunden ausgestanzt werden. Die Körperpflegeprodukte können dabei noch verbunden und aufgereiht bleiben, indem sie nicht zu 100% ausgestanzt werden, damit der Kunde einzelne Körperpflegeprodukte abreißen kann. Ferner kann eine beschriebene Verformung als Nachbehandlung erfolgen. Ferner können teilweise auch die als Vorbehandlung aufgeführten Prozesse als Nachbehandlungen durchgeführt werden.

Des Weiteren wäre denkbar, dass das Körperpflegeprodukt angespritzte Elemente aufweist. Das angespritzte Element kann dabei zur Fixierung von anderen Bestandteilen, wie beispielsweise einer Interdentalbürste oder einer Zahnseide, dienen oder direkt ein funktionales Teil, wie beispielsweise Noppen zum Halten des Griffkörpers oder Zungenelemente, ausbilden. Das Zungenreinigerelement kann dabei von einer Zungenreinigerkante bei einem Holz- oder Papiergriff oder von Noppen zur Zungenreinigung gebildet sein.

Ferner sind verschiedene, einem Fachmann als sinnvoll erscheinende Varianten zu einer Fixierung der Anwendungseinheit an der Griffeinheit mittels der Verbindungseinheit denkbar. In einer Ausgestaltung kann eine Fixierung mittels Nieten und Bördeln, insbesondere einem Bördelrand, erfolgen. Zu einer Fixierung mittels Nieten werden insbesondere Löcher in dem Kopfbereich des Griffkörpers erstellt. Hierbei werden insbesondere Stanzen mit einer dach-förmigen Ausnehmung und/oder mit einer in Umfangsrichtung gewellten Schneidkante genutzt. Die Stanze ist dabei insbesondere außen am Loch höher als innen. Die Stanze ist dabei insbesondere analog zu der Stanze eines Büro-Lochers. Beim Stanzen wird das ausgestanzte Material insbesondere von außen nach innen durchgedrückt. Die Form der Stanze ist dabei insbesondere wichtig in Bezug auf die Rissbildung bei Holzwerkstoffen. Alternativ wäre auch denkbar, dass eine Fixierung mittels Nieten und/oder Bördelrand erfolgt, wobei kein Durchgangsloch in dem Griffkörper vorgesehen ist. Der Griffkörper weist dafür in einem Verbindungsbereich insbesondere eine Vertiefung auf, in welche das zumindest eine Niet der Verbindungseinheit eingreift. Zu einer Verbindung wird das zumindest eine Niet erwärmt und auf den Griffkörper montiert bzw. gedrückt. Das Niet verformt sich dabei in die Vertiefung hinein. Das Niet wird zum Widerhaken. Parallel wird der Rand der Verbindungseinheit, insbesondere des Verbindungselements, gebördelt. Im Zusammenspiel von Bördelrand und verdrücktem Niet halten die Teile aneinander. Vorteil ist hier insbesondere, dass kein Loch im Griff benötigt wird, was insbesondere bei Holz-Griffkörpern weniger Risse und weniger Brechen bedeutet.

Das Bördeln ist ferner eine weitere Möglichkeit, die Schnittkanten des Papierwerkstoffs abzudecken oder zum Schutz des Benutzers vor einer möglicherweise scharfen Schnittkante von Papiermaterial.

Das Körperpflegeprodukt, weistzumindest eine Anwendungseinheit, mit zumindest einer Griffeinheit auf, welche zumindest einen materiellen Griffkörper aufweist, der zumindest teilweise, insbesondere zumindest zu einem Großteil, aus einem Papierwerkstoff besteht, und mit einer Verbindungseinheit, über welche die Anwendungseinheit mit der Griffeinheit verbunden ist.

Es wird vorgeschlagen, dass die Anwendungseinheit zumindest teilweise einstückig mit der Griffeinheit ausgebildet ist. Die Anwendungseinheit und die Griffeinheit sind vorzugsweise einteilig ausgebildet. Die Anwendungseinheit besteht bevorzugt zumindest zu einem Großteil aus einem Papierwerkstoff. Die Anwendungseinheit besteht beispielhaft vollständig aus einem Papierwerkstoff. Vorzugsweise besteht die Anwendungseinheit und die Griffeinheit aus demselben Material. Alternativ wäre auch denkbar, dass die Anwendungseinheit und die Griffeinheit zumindest teilweise, insbesondere vollständig aus einem Holzwerkstoff bestehen. Bevorzugt ist ein flächiges, nachhaltiges Material, wie insbesondere Holz, bevorzugt Holzfurnier, z.B. aus Birke, Buche, Eiche oder dergleichen, oder Bambus. Ferner wird vorgeschlagen, dass die Anwendungseinheit einstückig mit der Griffeinheit ausgebildet ist, wobei die Anwendungseinheit zumindest teilweise, insbesondere zumindest zu einem Großteil, aus einem Papierwerkstoff besteht.

Des Weiteren wird vorgeschlagen, dass der materielle Griffkörper der Griffeinheit in einem Querschnitt senkrecht zu einer Haupterstreckungsrichtung in eine polygonale oder prismatische Form gefaltet ist. Solche Formen können auch abgeschnittene Versionen oder einen Kegelstumpf enthalten. Für die Griffgestaltung können Papierschichten mehrfach geführt sein, wie beispielsweise doppelt. Dies bringt insbesondere mehr Stabilität. Es müssen jedoch nicht alle Seiten mehrfach ausgeführt sein, es können auch nur gewisse Seiten mehrfach ausgeführt sein. Eine Verbindung der Lagen kann mittels Klebstoff oder mittels einer Steckverbindung erfolgen.

Es wird ferner vorgeschlagen, dass der materielle Griffkörper der Griffeinheit zumindest zwei Laschen aufweist, wobei der materielle Griffkörper über die Laschen lösbar in der polygonalen oder prismatischen Form gehalten ist. Vorzugsweise wird über die Laschen eine Doppellage des Griffkörpers ausgebildet. Vorzugsweise ist die Doppellage über eine Steckverbindung verbunden. Bevorzugt weist der Griffkörper eine Rückwand und eine Innenrückwand auf, wobei die Laschen in der Rückwand und der Innenrückwand angeordnet sind. Bevorzugt ist die Lasche der Rückwand dazu vorgesehen, durch die Lasche bzw. durch eine Stanzung der Lasche der Innenrückwand hindurch zu greifen. Insbesondere wird die größere Lasche der Rückwand durch die Lasche bzw. durch die Stanzung der Lasche der Innenrückwand hindurchgesteckt, sodass die Teile ineinander halten. Bevorzugt sind die Laschen jeweils durch bogenförmige Stanzungen und/oder Schlitzungen hergestellt.

Ferner ist ein Verfahren zur Herstellung des Körperpflegeprodukts beschrieben. Es wird vorgeschlagen, dass in einem Bereitstellungsschritt die Griffeinheit mit dem weiteren Verbindungselement der Verbindungseinheit bereitgestellt wird und in einem Verbindungsschritt die Anwendungseinheit über das Verbindungselement der Verbindungseinheit mittels Umspritzen mit der Griffeinheit verbunden wird. Vorzugsweise wird zu einem Umspritzen insbesondere ein Griffkörper der Griffeinheit in eine Kavität eines Spitzgusswerkzeugs zur Herstellung des Verbindungselements und/oder der Anwendungseinheit eingelegt. Die Kavität kann insbesondere für einzelne Griffkörper oder für ein bogenweises Einlegen des Griffkörpers ausgelegt sein. Ein Werkzeug für einzelne Griffkörper bringt insbesondere eine komplizierte Formgebung mit mehr Geometrie mit sich, die den Griffkörper in Position hält. Dabei ist insbesondere ein Halten des Griffkörpers in einem Bogenbereich, an der Seite an verschiedenen Positionen und im Endbereich gegenüberliegend zum Zahnseidefaden durch das Werkzeug erforderlich. Bei einem Werkzeug zum bogenweisen Einlegen mehrerer Griffkörper benötigt das Werkzeug insbesondere Haltegeometrien zum Halten im Bogenbereich der Griffkörper und zum Halten in Bereich der späteren Endbereiche gegenüberliegend zum Zahnseidefaden. Ein Papierwerkstoff des Griffkörpers muss insbesondere fest in der Kavität gehalten sein und darf sich durch den Spritzdruck nicht verschieben. Das Werkzeug weist daher insbesondere zum Abdichten der Kavität gegenüber dem Papierwerkstoff im Bereich der Arme des Griffkörpers eine einlaufende Geometrie auf, durch welche das Material des Griffkörpers beim Einlegen und Schließen mit Vorspann leicht verdrückt wird. Beim "Verdrücken" beim Einlegen mittels Vorspann kann allenfalls eine benötigte runde Kante erreicht werden, ohne weiteren Zusatzschritt.

Für Produkte mit einem Griffkörper in nicht flacher Form kann ein Umspritzen insbesondere derart erfolgen, dass ein flacher, nicht vorgeformter Zuschnitt in das Spritzgusswerkzeug eingelegt und bei der Schließung des Spritzgusswerkzeugs geformt wird. Alternativ wäre auch denkbar, dass der Zuschnitt bereits vorgeformt eingelegt wird.

Das Spritzgussverfahren erfolgt insbesondere mittels eines Heißkanal-Angusssystems oder mittels eines Kaltkanal-Angusssystems. Beim Kaltkanal-Angusssystem führt eine Kanalausnehmung von der Nadel zum Flosser, welche während dem Spritzgussprozess mit der Kunststoffkomponente zum Kaltkanalanguss gefüllt wird und so die Kavitäten bedient. Ein entstehender Kaltkanalanguss bleibt folglich am Körperpflegeprodukt, wenn das Körperpflegeprodukt aus dem Werkzeug entfernt wird. Für den Anspritzpunkt am Produkt sind verschiedene, einem Fachmann als sinnvoll erscheinende Positionen denkbar. Bevorzugt ist insbesondere eine Position beim Faden bzw. in der Nähe des Fadens. Die Temperatur der Schmelze beträgt für die Verarbeitung insbesondere von 150°C bis 290°C, vorzugsweise 190°C bis 250°C. Der Zahnseidefaden, insbesondere die Zahnseide, besteht vorzugsweise aus Polyamid (PA) und weist einen Schmelzpunkt von rund 220°C auf. Das Kunststoffmaterial des Verbindungselements ist vorzugsweise ein Polypropylen (PP) mit einem Schmelzpunkt von rund 170°C. Polyamid hat daher einen höheren Schmelzpunkt als Polypropylen. Bei dem Spritzgussprozess herrschen insbesondere Drücke von 600 bar bis 1500 bar, vorzugsweise von 800 bar bis 1300 bar.

Des Weiteren wird vorgeschlagen, dass in dem Bereitstellungschritt mehrere Griffeinheiten zur Herstellung mehrerer Körperpflegeprodukte zusammenhängend aus zumindest einem Papierbogen bereitgestellt werden. Das Spritzgusswerkzeug ist dabei insbesondere zu einer Aufnahme des gesamten Papierbogens vorgesehen. Dadurch kann insbesondere eine vorteilhaft gute Abdichtung ermöglicht werden. Es kann insbesondere ein Verrutschen einzelner Griffkörper vermieden werden. Ferner kann ein einfaches Handling ermöglicht werden.

Es wird ferner vorgeschlagen, dass in einem auf den Verbindungsschritt folgenden Trennschritt die Griffeinheiten voneinander getrennt werden. Nach einem Umspritzen kann der Papierbogen insbesondere aus dem Spritzgusswerkzeug entfernt und gestanzt werden. Ein Stanzen kann nach der Umspritzung inline oder offline d.h. direkt verknüpft oder nicht verknüpft erfolgen. Ein Stanzen umfasst insbesondere die folgenden Schritte. In einem ersten Schritt wird der Zahnseidefaden, insbesondere die Zahnseide abgestanzt und die Zahnseidenfadenenden ansengt. Das Trennen zwischen Körperpflegeprodukten und an den Enden erfolgt insbesondere mit einem Stanzmesser. Alternativ wäre auch denkbar, dass ein Trennen durch Abbrennen bzw. Ansengen und Nicht-Schneiden erfolgt. Das Ansengen der Zahnseidenfadenenden erfolgt insbesondere mittels Wärme berührungslos. Die Wärmeerzeugung erfolgt dabei insbesondere mittels Heißluft oder mittels der Abwärme eines geheizten Stabs. Durch das Ansengen bildet sich eine kugelartige Struktur am Ende der Zahnseide, welche dem Rückhalt des Zahnseidefadens hilft. Der Zahnseidefaden wird daher weniger aus dem Grundkörper ausgerissen. Die kugelartige Struktur bettet sich insbesondere zwischen dem Verbindungselement und dem Griffkörper ein. Dadurch steht die kugelartige Struktur nicht vor und stört in der Anwendung nicht. Die Temperaturen zum Ansengen betragen insbesondere von 200°C bis 280°C, vorzugsweise 220°C bis 260°C. Zum Ansengen sind die Körperpflegeprodukte insbesondere noch im Bogen gehalten, um ein einfacheres Handling und damit eine genauere Positionierung zu ermöglichen. Anschließend wird in einem weiteren Schritt ein Anguss entfernt. Es erfolgt insbesondere ein Abstanzen des Kunststoff-Anguss-Systems. Ferner kann eine Anguss-Nachbearbeitung, beispielsweise durch eine Wärmebehandlung, erfolgen. Der Anguss wird insbesondere möglichst spät entfernt, da er das ganze Konstrukt zusammenhält. In einem weiteren Schritt wird der Griffkörper fertig ausgestanzt. Dabei kann der gesamte Griffkörper ausgestanzt werden oder lediglich noch verbleibende Haltepunkte ausgestanzt werden.

Es wird weiter vorgeschlagen, dass in dem Bereitstellungsschritt ein zusammenhängender Zahnseidefaden, insbesondere eine Zahnseide, für mehrere Anwendungseinheiten bereitgestellt und in ein Spritzgusswerkzeug eingelegt wird. In dem Bereitstellungsschritt wird insbesondere der Griffkörper und der Zahnseidefaden bereitgestellt und in das Spritzgusswerkzeug eingelegt. Der Abstand zwischen Zahnseidefaden und Griffkörper beträgt insbesondere von 0,2 mm bis 3 mm, vorzugsweise von 0,35 mm bis 0,8 mm. Die Anzahl Griffkörper nebeneinander in dem Spritzgusswerkzeug beträgt insbesondere von 2 bis 20, vorzugsweise von 4 bis 12. Die Länge des eingezogenen Zahnseidefadens über die Körperpflegeprodukte, insbesondere Flosser, hinweg beträgt insbesondere von 100 mm bis 800 mm, vorzugsweise von 140 mm bis 500 mm. Der Zahnseidefaden erstreckt sich dabei insbesondere über mehrere Flosser hinweg inkl. Stücke zwischen den Flossern und am Ende. Ein Teil der Länge wird insbesondere lediglich zum Halten des Zahnseidefadens während dem Spritzgießen und vorherigem/anschließendem Bewegen benötigt. In dem Spitzgusswerkzeug ist der Zahnseidefaden insbesondere in einer Rille gehalten und/oder geführt. Ein Halten des Zahnseidefadens erfolgt grundsätzlich an den Enden, insbesondere außerhalb des Werkzeugs, der Zahnseidefaden ist in dem Werkzeug gespannt aufgenommen.

In jedem der beschriebenen Aspekte oder Ausführungsformen umfasst die vorliegende Offenbarung ein Körperpflegeprodukt, insbesondere ein Rasiermesser oder ein Produkt, das zumindest eine Anwendungseinheit und zumindest eine Griffeinheit aufweist. Die zumindest eine Griffeinheit umfasst zumindest einen Griffkörper. Der zumindest eine Griffkörper besteht zumindest teilweise aus einem Papiermaterial. Die Verbindungseinheit stellt die Verbindung zwischen der Anwendungseinheit und der Griffeinheit her, oder anders gesagt, die Anwendungseinheit ist über die Verbindungseinheit mit der Griffeinheit verbunden.

In jedem der beschriebenen Aspekte oder Ausführungsformen weist die Verbindungseinheit zumindest ein Verbindungselement auf. Das zumindest eine Verbindungselement der Verbindungseinheit ist dazu vorgesehen, in ein weiteres Verbindungselement einzugreifen, das mit der zumindest einen Griffeinheit verbunden ist. Das Verbindungselement der Verbindungseinheit besteht zumindest teilweise aus einem Polymer, wie beispielsweise einem Kunststoff, einem Biokunststoff, einem Biomaterial, einem recycelten Kunststoff oder Kombinationen davon. Solche Polymermaterialien können sowohl neue Polymere (z. B. neue Kunststoffe, die recycelt werden können, neue Biokunststoffe, neue Biomaterialien usw.) als auch gemischte Polymere (z. B. gemischte neue und recycelte Kunststoffe) umfassen.

In jedem der beschriebenen Aspekte oder Ausführungsformen umfasst die vorliegende Offenbarung ein Körperpflegeprodukt, insbesondere einen Rasierer oder ein Dermaplaningprodukt, mit zumindest einer Anwendungseinheit und zumindest einer Griffeinheit. Die mindestens eine Griffeinheit umfasst zumindest einen Griffkörper. Die zumindest eine Griffeinheit, einschließlich des zumindest einen Griffkörpers, besteht zumindest teilweise aus einem Material bestehend aus Holz oder Bambus. Das Körperpflegeprodukt, wie beispielsweise ein Rasierer oder ein Dermaplaningprodukt, umfasst eine Verbindungseinheit zur Verbindung der Anwendungseinheit mit der Griffeinheit. Anders ausgedrückt, die Anwendungseinheit ist über die Verbindungseinheit mit der Griffeinheit verbunden.

In jedem der beschriebenen Aspekte oder Ausführungsformen weist die Verbindungseinheit mindestens ein Verbindungselement auf, das mit mindestens einem weiteren Verbindungselement, insbesondere einem Griffverbindungselement, in Eingriff gebracht werden kann, das mit der mindestens einen Griffeinheit verbunden ist. Das Verbindungselement der Verbindungseinheit kann zumindest teilweise, insbesondere zumindest zu einem großen Teil, aus einem Polymer, insbesondere aus einem Kunststoff, einem Biokunststoff, einem Biomaterial, einem recycelten Kunststoff oder Kombinationen davon, bestehen. Solche Polymermaterialien können sowohl neue Polymere (z. B. neue Kunststoffe, die recycelt werden können, neue Biokunststoffe, neue Biomaterialien usw.) als auch gemischte Polymere (z. B. gemischte neue und recycelte Kunststoffe) umfassen.

In jedem der beschriebenen Aspekte oder Ausführungsformen umfasst das Körperpflegeprodukt, wie beispielsweise ein Rasierer oder ein Dermaplaning-Produkt, ein Verbindungselement der Verbindungseinheit, das zumindest teilweise einstückig mit der Anwendungseinheit ausgebildet sein kann.

In jedem der beschriebenen Aspekte oder Ausführungsformen umfasst das Körperpflegeprodukt, wie beispielsweise ein Rasierer oder ein Dermaplaning-Produkt, ein weiteres Verbindungselement, das zumindest teilweise einstückig mit der zumindest einen Griffeinheit ausgebildet sein kann.

In jedem der beschriebenen Aspekte oder Ausführungsformen umfasst das Körperpflegeprodukt, wie beispielsweise ein Rasierer oder ein Dermaplaning-Produkt, ein Verbindungselement der Verbindungseinheit, das zumindest teilweise mit dem weiteren Verbindungselement, insbesondere Griffverbindungselement, stoffschlüssig verbunden sein kann. Das weitere Verbindungselement kann zumindest teilweise aus einem Papiermaterial bestehen.

In jedem der beschriebenen Aspekte oder Ausführungsformen kann das Körperpflegeprodukt, wie beispielsweise ein Rasierer oder ein Dermaplaning-Produkt, ein weiteres Verbindungselement, das zumindest teilweise einstückig mit der zumindest einen Griffeinheit ausgebildet sein kann, enthalten, das mit der mindestens einen Griffeinheit umspritzt ist.

In jedem der beschriebenen Aspekte oder Ausführungsformen kann das Körperpflegeprodukt, wie beispielsweise ein Rasierer oder ein Dermaplaning-Produkt, ein Verbindungselement der Verbindungseinheit umfassen, das aus einem harten Kunststoff, Biokunststoff, Biomaterial, recyceltem Kunststoff oder Kombinationen davon hergestellt ist. Solche Polymermaterialien können sowohl neue Polymere (z. B. neue Kunststoffe, die recycelt werden können, neue Biokunststoffe, neue Biomaterialien usw.) als auch gemischte Polymere (z. B. gemischte neue und recycelte Kunststoffe) umfassen.

In jedem der beschriebenen Aspekte oder Ausführungsformen kann das Körperpflegeprodukt, wie beispielsweise ein Rasierer oder ein Dermaplaning-Produkt, ein Verbindungselement der Verbindungseinheit umfassen, das zumindest teilweise formschlüssig mit dem weiteren Verbindungselement, insbesondere Griffverbindungselement, verbunden ist. Das weitere Verbindungselement, insbesondere Griffverbindungselement, kann zumindest teilweise aus dem Papiermaterial bestehen.

In jedem der beschriebenen Aspekte oder Ausführungsformen kann das Körperpflegeprodukt, wie beispielsweise ein Rasierer oder ein Dermaplaning-Produkt, eine Anwendungseinheit mit mindestens einem Klingenkopf umfassen.

In jedem der beschriebenen Aspekte oder Ausführungsformen kann das Körperpflegeprodukt, wie beispielsweise ein Rasierer oder ein Dermaplaning-Produkt, ein Verfahren zur Herstellung des Körperpflegeprodukts umfassen, wobei ein solches Verfahren die Bereitstellung einer Vielzahl von Griffeinheiten umfasst. Die mehreren Griffeinheiten können jeweils mit mindestens einem Griffverbindungselement versehen sein. In einem Verbindungsschritt wird eine Anwendungseinheit mit jeder der mehreren Griffeinheiten verbunden. Jede der Anwendungseinheiten wird an einer Verbindungseinheit befestigt. Jede Anwendungseinheit ist durch Umspritzen mit einer Verbindungseinheit verbunden.

In jedem der beschriebenen Aspekte oder Ausführungsformen kann das Körperpflegeprodukt, wie beispielsweise ein Rasierer oder ein Dermaplaning-Produkt, ein Verfahren zur Herstellung des Körperpflegeprodukts umfassen, wobei ein solches Verfahren die Bereitstellung einer Vielzahl von Griffeinheiten zur Herstellung einer Vielzahl von Körperpflegeprodukten umfasst. Die Vielzahl von Griffeinheiten wird zusammenhängend aus mindestens einem Papierbogen bereitgestellt.

In jedem der beschriebenen Aspekte oder Ausführungsformen kann das Körperpflegeprodukt, wie beispielsweise ein Rasierer oder ein Dermaplaning-Produkt, ein Verfahren zur Herstellung des Körperpflegeprodukts umfassen, wobei ein solches Verfahren die Bereitstellung einer Vielzahl von Griffeinheiten umfasst, die in einem Trennungsschritt voneinander getrennt werden.

Der Trennungsschritt, bei dem die Vielzahl von Griffeinheiten aus einem Papierbogen voneinander getrennt werden, erfolgt insbesondere nach dem Verbindungsschritt.

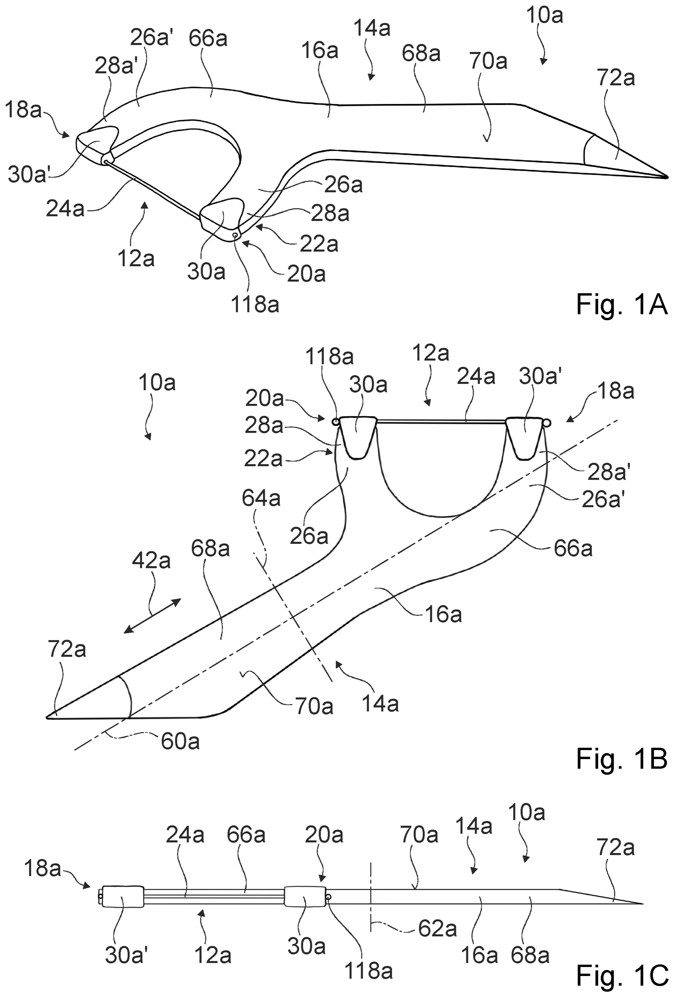

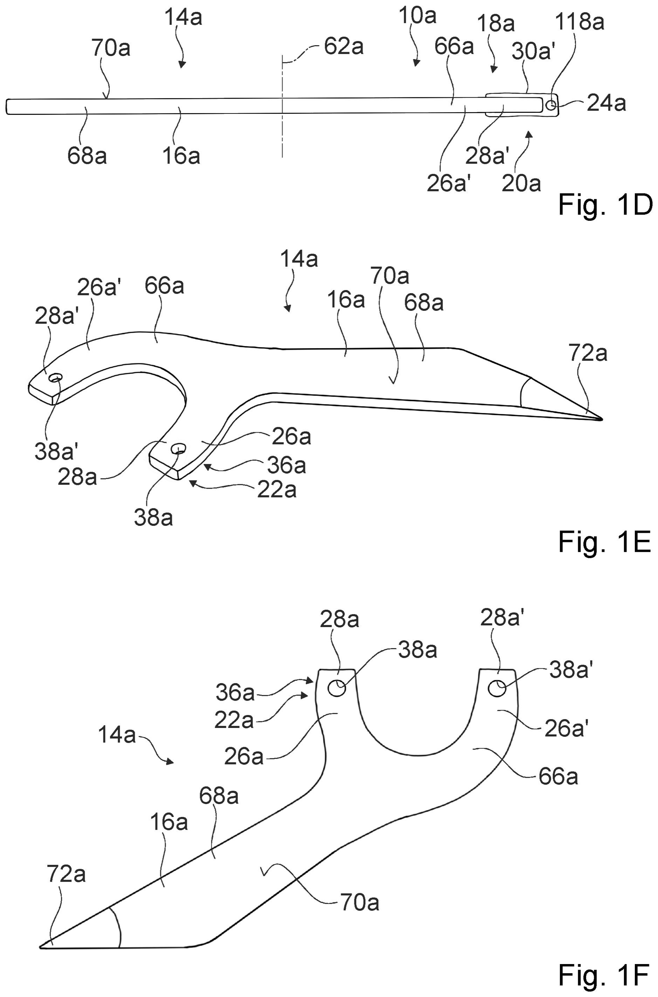

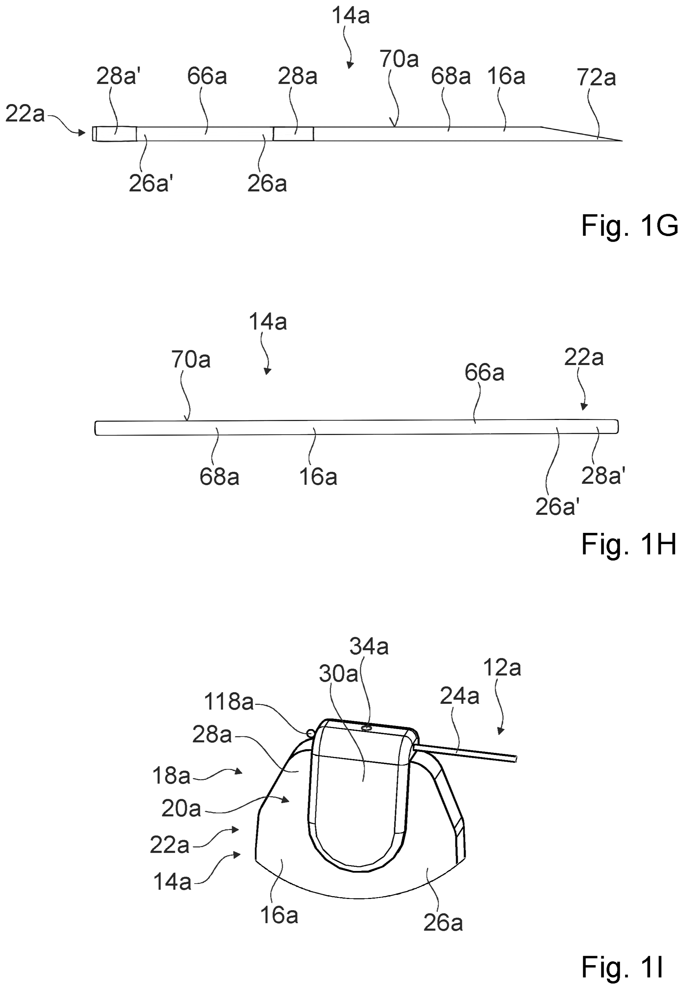

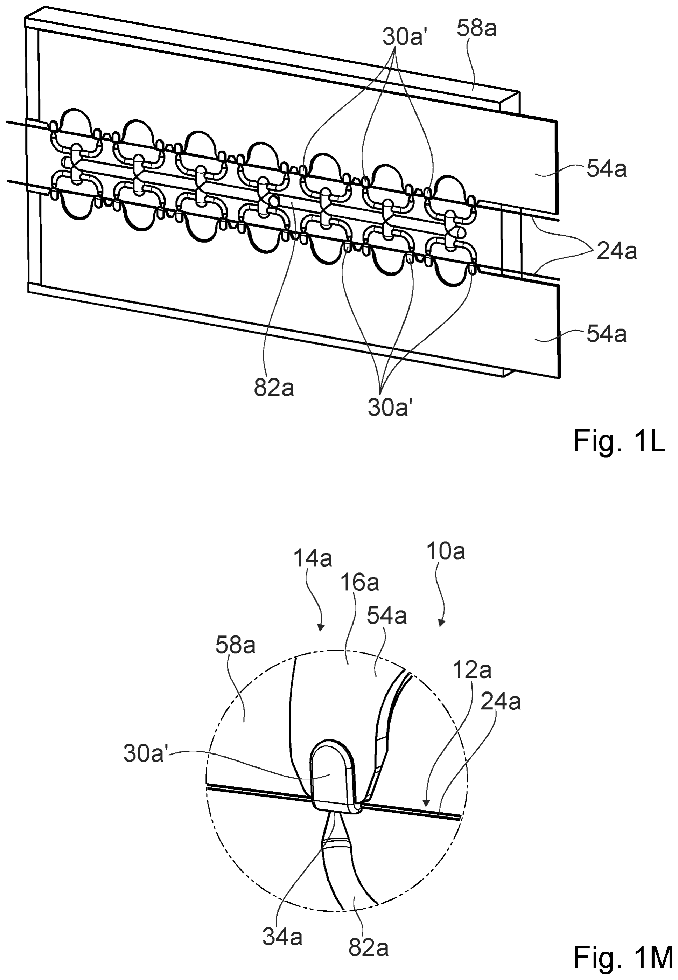

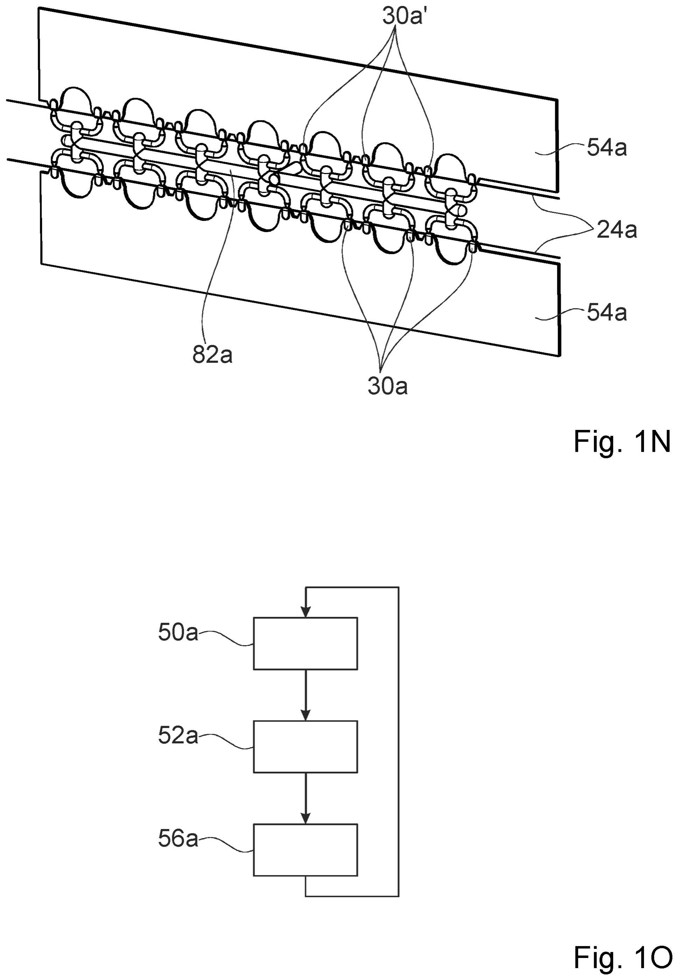

In jedem der beschriebenen Aspekte oder Ausführungsformen kann das Körperpflegeprodukt, wie beispielsweise ein Rasierer oder ein Dermaplaning-Produkt, ein Verfahren zur Herstellung des Körperpflegeprodukts umfassen. Figur 1O des ersten Ausführungsbeispiels zeigt ein schematisches Flussdiagramm eines Verfahrens zur Herstellung des Körperpflegeprodukts, insbesondere auch einschließlich eines Rasiermessers oder eines Dermaplaning-Produkts. Das Verfahren umfasst einen Bereitstellungsschritt. In dem Bereitstellungsschritt wird mindestens eine Griffeinheit mit mindestens einem weiteren Verbindungselement, insbesondere dem bereits genannten weiteren Verbindungselement der Verbindungseinheit, versehen. In dem Bereitstellungsschritt werden mehrere Griffeinheiten, die jeweils einen Griffkörper enthalten, zusammenhängend aus mindestens einem Bogen (z. B. Papier, Holz, Bambus usw.) bereitgestellt, wobei der Bogen eine oder mehrere Schichten umfassen kann, um mehrere Körperpflegeprodukte, wie beispielsweise Rasierer oder Dermaplaning-Produkt, herzustellen. Bei der Bereitstellung werden eine Vielzahl von Griffeinheiten (beispielsweise zwischen zwei und zwanzig Griffeinheiten, vorzugsweise zwischen zehn und zwanzig Griffeinheiten oder besonders bevorzugt vierzehn oder sechzehn Griffeinheiten), wobei jede Griffeinheit einen Griffkörper aufweist, zusammenhängend bereitgestellt. In einigen Ausführungsformen wird der Bogen auf zwei identische Bögen, insbesondere Teilbögen, aufgeteilt. Der Bogen wird in eine Spritzgussform eingelegt. Die Spritzgussform weist eine Vielzahl von Kavitäten auf. Die Anzahl der Kavitäten ist mindestens so groß wie die Anzahl der Griffeinheiten in einem bestimmten Materialbogen.

Der Bogen wird so in die Spritzgussform eingelegt, dass sich jede der Griffeinheiten in einer eigenen Kavität der Spritzgussform befindet.

An den Bereitstellungsschritt schließt sich ein Verbindungsschritt an. In dem Verbindungsschritt wird die Anwendungseinheit, insbesondere durch die Verbindungseinheit, bevorzugt über diese, mit der Griffeinheit verbunden. Die Verbindungseinheit umfasst mindestens ein Verbindungselement, das in ein weiteres Verbindungselement, insbesondere ebenfalls der Verbindungseinheit, eingreift. Der Verbindungsschritt kann das Umspritzen der Verbindungseinheit, an der die Anwendungseinheit befestigt ist, mit der Griffeinheit umfassen. Das Umspritzen wird in einem Spritzgussverfahren durchgeführt und umfasst daher eine Spritzgussmaschine. Das Spritzgussverfahren erfolgt mittels eines Kaltkanal-Angusssystems. Beim Kaltkanal-Angusssystem führt ein Kaltkanalanguss von der Nadel zu den Verbindungselementen. Das Angusssystem bleibt folglich am Körperpflegeprodukt, wenn das Körperpflegeprodukt, wie beispielsweise ein Rasierer oder ein Dermaplaning-Produkt, aus dem Spritzgusswerkzeug entfernt wird. Für den Anspritzpunkt am Körperpflegeprodukt, wie beispielsweise ein Rasierer oder ein Dermaplaning-Produkt, sind verschiedene, einem Fachmann als sinnvoll erscheinende Positionen denkbar. Die Temperatur der Schmelze beträgt für die Verarbeitung insbesondere von 150°C bis 290°C, vorzugsweise 190°C bis 250°C. Das Kunststoffmaterial des Verbindungselements ist vorzugsweise ein Polypropylen (PP) mit einem Schmelzpunkt von rund 170°C. Polyamid hat daher einen höheren Schmelzpunkt als Polypropylen. Bei dem Spritzgussprozess herrschen insbesondere Drücke von 600 bar bis 1500 bar, vorzugsweise von 800 bar bis 1300 bar.

Auf den Verbindungsschritt folgt ein Trennschritt. In dem auf den Verbindungsschritt folgenden Trennschritt werden die Griffeinheiten voneinander getrennt. Nach einem Umspritzen werden die Papierbögen aus dem Spritzgusswerkzeug entfernt und gestanzt, geschnitten oder geschlitzt. Nach dem Umspritzen kann das Stanzen, Schneiden oder Schlitzen inline oder offline (z. B. direkt verkettet oder nicht verkettet) erfolgen. Die Trennung zwischen den Körperpflegeprodukten, wie beispielsweise Rasierern oder Dermaplaning-Produkten, kann mit einem Stanzmesser und auch mit Wärme erfolgen. Die Wärme wird insbesondere mittels Heißluft erzeugt. Die Temperaturen für die Erwärmung liegen insbesondere zwischen 200°C und 280°C, vorzugsweise zwischen 220°C und 260°C. Zum Erhitzen werden die Körperpflegeprodukte, wie beispielsweise Rasierer oder Dermaplaning-Produkte, insbesondere noch in einem oder mehreren Bögen zusammengehalten, um eine leichtere Handhabung und damit eine genauere Positionierung zu ermöglichen. In einem weiteren Schritt wird dann der Anguss entfernt. Der Kaltkanalanguss wird insbesondere abgestanzt. Weiterhin kann der Anguss nachbearbeitet werden, beispielsweise durch eine Wärmebehandlung. Insbesondere wird der Anguss so spät wie möglich entfernt, da er die gesamte Struktur zusammenhält. In einem weiteren Schritt wird der Griffkörper ausgestanzt.

In jedem der hier beschriebenen Aspekte oder Ausführungsformen kann das Körperpflegeprodukt, wie beispielsweise ein Rasierer oder ein Dermaplaning-Produkt, eine Verbindungseinheit für ein Rasiermesser oder einen Klingenkopf umfassen. Die Verbindungseinheit kann einen Grundkörper mit einem Verbindungselement umfassen. Das Verbindungselement kann mindestens eine Eintrittsrille aufweisen. Das Verbindungselement kann einen Rastkamm aufweisen. Das Verbindungselement kann eine erste Kontaktfläche aufweisen. Das Verbindungselement kann eine zweite Kontaktfläche aufweisen. Das Verbindungselement kann eine dritte Kontaktfläche aufweisen. Das Verbindungselement kann ein formschlüssiges Verriegelungselement enthalten. Das Verbindungselement kann mindestens eines der folgenden Elemente umfassen: einen Rastkamm, mindestens eine Eintrittsrille, eine erste Kontaktfläche, eine zweite Kontaktfläche, eine dritte Kontaktfläche und/oder ein Formschlusselement.

In jedem der hier beschriebenen Aspekte oder Ausführungsformen kann das Körperpflegeprodukt, wie beispielsweise ein Rasierer oder ein Dermaplaning-Produkt, eine Verbindungseinheit umfassen, die zwischen zwei Eintrittsrillen und vier Eintrittsrillen umfassen kann.

In jedem der beschriebenen Aspekte oder Ausführungsformen kann das Körperpflegeprodukt, wie beispielsweise ein Rasierer oder ein Dermaplaning-Produkt, eine Verbindungseinheit mit einer ersten Kontaktfläche, einer zweiten Kontaktfläche und einer dritten Kontaktfläche umfassen, die eine polygonale oder prismatische Struktur im Grundkörper der Verbindungseinheit bilden.

In jedem der beschriebenen Aspekte oder Ausführungsformen kann das Körperpflegeprodukt, wie beispielsweise ein Rasierer oder ein Dermaplaning-Produkt, eine Verbindungseinheit mit einem Grundkörper umfassen. Die Verbindungseinheit, einschließlich des Grundkörpers, kann aus Papier, Holz, Gras (z. B. Bambus), nachhaltigem, biologisch abbaubarem, kompostierbarem, wiederverwertbarem, recyceltem und/oder bioplastischem Material bestehen. Solche Polymermaterialien können sowohl neue (z. B. neue Kunststoffe, die recycelt werden können, neue Biokunststoffe, neue Biomaterialien usw.) als auch gemischte Polymere (z. B. gemischte neue und recycelte Kunststoffe) umfassen.

In jedem der beschriebenen Aspekte oder Ausführungsformen kann das Körperpflegeprodukt, wie beispielsweise ein Rasierer oder ein Dermaplaning-Produkt, eine Verbindungseinheit mit einem Grundkörper umfassen, der eine oder mehrere Schichten enthält.

In jedem der beschriebenen Aspekte oder Ausführungsformen kann das Körperpflegeprodukt, wie beispielsweise ein Rasierer oder ein Dermaplaning-Produkt, eine Verbindungseinheit mit einem Grundkörper enthalten, der eine harte Komponente und/oder eine weiche Komponente umfasst.

In jedem der beschriebenen Aspekte oder Ausführungsformen kann das Körperpflegeprodukt, wie beispielsweise ein Rasierer oder ein Dermaplaning-Produkt, eine Verbindungseinheit umfassen. Die Verbindungseinheit kann ein Verbindungselement umfassen. Das Verbindungselement kann mindestens einen Vorsprung aufweisen. Das Verbindungselement kann mindestens eine Aufnahmenut aufweisen. Das Verbindungselement kann mindestens einen Vorsprung und eine Aufnahmenut aufweisen. Das Verbindungselement kann einen Klingenträger enthalten.

In jedem der beschriebenen Aspekte oder Ausführungsformen kann das Körperpflegeprodukt, wie beispielsweise ein Rasierer oder ein Dermaplaning-Produkt, eine Verbindungseinheit mit einem Verbindungselement umfassen. Das Verbindungselement kann mindestens einen Vorsprung aufweisen. Das mindestens eine Verbindungselement kann zwischen zwei und drei Vorsprüngen umfassen.

In jedem der beschriebenen Aspekte oder Ausführungsformen kann das Körperpflegeprodukt, wie beispielsweise ein Rasierer oder ein Dermaplaning-Produkt, eine Verbindungseinheit mit einem Verbindungselement enthalten. Das Verbindungselement kann mindestens einen Vorsprung aufweisen. Der mindestens eine Vorsprung kann mindestens eine Niete umfassen.

In jedem der beschriebenen Aspekte oder Ausführungsformen kann das Körperpflegeprodukt, wie beispielsweise ein Rasierer oder ein Dermaplaning-Produkt, eine Verbindungseinheit umfassen. Die Verbindungseinheit kann ein Verbindungselement umfassen. Das Verbindungselement kann mindestens einen Vorsprung aufweisen. Der mindestens eine Vorsprung kann einen kreisförmigen Querschnitt aufweisen.

In jedem der beschriebenen Aspekte oder Ausführungsformen kann das Körperpflegeprodukt, wie beispielsweise ein Rasierer oder ein Dermaplaning-Produkt, eine Verbindungseinheit umfassen. Die Verbindungseinheit kann ein Verbindungselement umfassen. Das Verbindungselement kann mindestens einen Vorsprung aufweisen. Der mindestens eine Vorsprung kann einen ersten Vorsprung umfassen. Der erste Vorsprung kann eine längliche Struktur aufweisen.

In jedem der beschriebenen Aspekte oder Ausführungsformen kann das Körperpflegeprodukt, wie beispielsweise ein Rasierer oder ein Dermaplaning-Produkt, eine Verbindungseinheit umfassen. Die Verbindungseinheit kann ein Verbindungselement umfassen. Das Verbindungselement kann mindestens einen Vorsprung aufweisen. Der mindestens eine Vorsprung kann einen ersten Vorsprung umfassen, der größer ist als ein zweiter Vorsprung des mindestens einen Vorsprungs.

In jedem der beschriebenen Aspekte oder Ausführungsformen kann das Körperpflegeprodukt, wie beispielsweise ein Rasierer oder ein Dermaplaning-Produkt, eine Verbindungseinheit aus Papier, Holz, Gras (z. B. Bambus), nachhaltigem, biologisch abbaubarem, kompostierbarem, wiederverwertbarem, recyceltem und/oder Biokunststoffmaterial enthalten. Solche Polymermaterialien können sowohl neue (z. B. neue Kunststoffe, die recycelbar sind, neue Biokunststoffe, neue Biomaterialien usw.) als auch gemischte Polymere (z. B. gemischte neue und recycelte Kunststoffe) umfassen.

In jedem der beschriebenen Aspekte oder Ausführungsformen kann das Körperpflegeprodukt, wie beispielsweise ein Rasierer oder ein Dermaplaning-Produkt, eine Verbindungseinheit mit einer oder mehreren Schichten enthalten.

In jedem der beschriebenen Aspekte oder Ausführungsformen kann das Körperpflegeprodukt, wie beispielsweise ein Rasierer oder ein Dermaplaning-Produkt, eine Verbindungseinheit mit einer harten Komponente und/oder einer weichen Komponente umfassen. Die Verbindungseinheit kann eine harte Komponente aufweisen. Die Verbindungseinheit kann eine weiche Komponente umfassen, die an der harten Komponente befestigt ist. Die Verbindungseinheit kann mehrere Schichten umfassen, wobei die erste Schicht eine harte Komponente und eine zweite Schicht eine weiche Komponente ist. Die erste Schicht und die zweite Schicht können durch Kleben, Formen, Sprühen, Schweißen, Ultraschall, Wärme und/oder Kombinationen davon usw. aneinander befestigt werden.

In jedem der beschriebenen Aspekte oder Ausführungsformen kann das Körperpflegeprodukt, wie beispielsweise ein Rasierer oder ein Dermaplaning-Produkt, einen Griffkörper aufweisen. Der Griffkörper umfasst einen Kopfbereich. Der Kopfbereich kann eine Kante aufweisen. Der Kopfbereich kann einstückig oder einteilig mit dem weiteren Verbindungselement, insbesondere Griffverbindungselement, der Verbindungseinheit ausgebildet sein. Das weitere Verbindungselement kann eine Aussparung aufweisen. Das weitere Verbindungselement, insbesondere Griffverbindungselement, kann einen Aufnahmebereich aufweisen. Das weitere Verbindungselement kann eine formschlüssige Kontur aufweisen. Das weitere Verbindungselement kann mindestens ein Formschlusselement aufweisen. Das weitere Verbindungselement kann mindestens eine Ausnehmung, einen Aufnahmebereich, eine formschlüssige Kontur, mindestens eine Griffmulde und mindestens ein Formschlusselement aufweisen. Der Griffkörper weist einen Mittelbereich auf. Der Griffkörper weist einen Endbereich auf.

In jedem der beschriebenen Aspekte oder Ausführungsformen kann das Körperpflegeprodukt, wie beispielsweise ein Rasierer oder ein Dermaplaning-Produkt, einen Griffkörper aufweisen. Der Griffkörper weist eine Rille auf, die im Allgemeinen entlang einer Längsachse verläuft. Die Rille kann eine Breite entlang der Breitenachse aufweisen. Die Rille kann eine Höhe (z. B. oder Tiefe) entlang der Höhenachse aufweisen. Die Nut kann eine dreidimensionale Fläche in einem Querschnitt entlang der Ebene umfassen, die durch eine Kombination von zwei Achsen gebildet wird, z. B. der Breitenachse und der Längsachse, der Höhenachse und der Breitenachse, der Längsachse und der Höhenachse. Die Rille kann ein Volumen umfassen.

In jedem der beschriebenen Aspekte oder Ausführungsformen kann das Körperpflegeprodukt, wie beispielsweise ein Rasierer oder ein Dermaplaning-Produkt, einen Griffkörper aufweisen. Der Griffkörper kann im montierten Zustand einen Aufnahmebereich im Kopfbereich aufweisen.

In jedem der beschriebenen Aspekte oder Ausführungsformen kann das Körperpflegeprodukt, wie beispielsweise ein Rasierer oder ein Dermaplaning-Produkt, einen Griffkörper aufweisen. Der Griffkörper kann eine erste Seitenwand, eine zweite Seitenwand und eine innere Seitenwand aufweisen. Die zweite Seitenwand kann im montierten Zustand an der inneren Seitenwand befestigt sein.

In jedem der beschriebenen Aspekte oder Ausführungsformen kann das Körperpflegeprodukt, wie beispielsweise ein Rasierer oder ein Dermaplaning-Produkt, einen Griffkörper umfassen. Der Griffkörper kann im montierten Zustand eine polygonale oder prismatische Struktur bilden. Diese polygonale oder prismatische Form kann einen Kegelstumpf umfassen oder abgestumpft sein, kann eine oder mehrere Rundungen, eine Fase und/oder eine Verrundung umfassen. Der Griffkörper kann eine Querschnittsform aufweisen, die ebenfalls polygonal ist, wie z. B. ein Viereck, ein Trapez, ein Quadrat, ein Rechteck, ein Dreieck, Kegelstümpfe oder Abschnitte davon, und kann eine oder mehrere Rundungen, Abschrägungen und/oder Ausrundungen aufweisen. Der Griffkörper kann einen Spalt aufweisen, wobei eine Projektion des Griffkörpers durch den Spalt solche Strukturen (z. B. polygonal und/oder prismatisch) bildet.

In jedem der beschriebenen Aspekte oder Ausführungsformen kann das Körperpflegeprodukt, wie beispielsweise ein Rasierer oder ein Dermaplaning-Produkt, einen Griffkörper aufweisen. Der Griffkörper kann einen Kopfbereich aufweisen. Der Kopfbereich kann einen Verbindungsbereich aufweisen. Der Verbindungsbereich kann proximal zum Rand des Kopfbereichs liegen. Der Verbindungsbereich kann einstückig oder einteilig mit dem weiteren Verbindungselement, insbesondere das Griffverbindungselement, ausgebildet sein und/oder das weitere Verbindungselement, insbesondere Griffverbindungselement, ausbilden. Das weitere Verbindungselement kann mindestens eine Griffaussparung aufweisen. Das weitere Verbindungselement kann eine formschlüssige Kontur aufweisen. Das weitere Verbindungselement kann mindestens eine von mindestens einer Griffmulde und einer formschlüssigen Kontur aufweisen.

In jedem der beschriebenen Aspekte oder Ausführungsformen kann das Körperpflegeprodukt, wie beispielsweise ein Rasierer oder ein Dermaplaning-Produkt, einen Griffkörper aus Papier, Holz, Gras (z. B. Bambus), nachhaltigem, biologisch abbaubarem, kompostierbarem, wiederverwertbarem, recyceltem und/oder Biokunststoffmaterial aufweisen. Solche Polymermaterialien können sowohl neue (z. B. neue Kunststoffe, die wiederverwertet werden können, neue Biokunststoffe, neue Biomaterialien usw.) als auch gemischte Polymere (z. B. gemischte neue und wiederverwertete Kunststoffe) umfassen.Das Körperpflegeprodukt soll hierbei nicht auf die oben beschriebenen Anwendungen und Ausführungsformen beschränkt sein.

Insbesondere kann das Körperpflegeprodukt zu einer Erfüllung einer hierin beschriebenen Funktionsweise eine von einer hierin genannten Anzahl von einzelnen Elementen, Bauteilen und Einheiten abweichende Anzahl und/oder eine beliebige sinnvolle Kombination derselben aufweisen. Zudem sollen bei den in dieser Offenbarung angegebenen Wertebereichen auch innerhalb der genannten Grenzen liegende Werte als offenbart und als beliebig einsetzbar gelten.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

Die Begriffe "im Wesentlichen", "im Allgemeinen" und/oder "ungefähr" werden hier in dem Bewusstsein verwendet, dass im Rahmen der vorliegenden Offenbarung kleine Abweichungen in den Abmessungen möglich sind. Solche kleinen Abweichungen können Abweichungen aufgrund von Fertigungstoleranzen und/oder Ausdehnung/Kontraktion und/oder Abnutzung von Teilen, die wechselnden Bedingungen (z.B. Druck, Kraft, Temperatur usw.) ausgesetzt sind, bis zu und einschließlich einer Abweichung von 10 % des Nennmaßes umfassen.

Während die Prinzipien der Offenbarung im Vorhergehenden in Verbindung mit spezifischen Vorrichtungen und Verfahren beschrieben wurden, soll klar verstanden werden, dass diese Beschreibung nur beispielhaft und nicht als Einschränkung des Umfangs der Offenbarung erfolgt. Spezifische Details werden in der obigen Beschreibung angegeben, um ein umfassendes Verständnis der Ausführungsformen zu ermöglichen. Es versteht sich jedoch, dass die Ausführungsformen auch ohne diese spezifischen Details ausgeführt werden können.

Es wird darauf hingewiesen, dass die Ausführungsformen als ein Prozess beschrieben werden können, der in Form eines Flussdiagramms, eines Ablaufdiagramms, eines Blockdiagramms usw. dargestellt wird. Obwohl jede dieser Strukturen die Operationen als einen sequentiellen Prozess beschreiben kann, können viele der Operationen parallel oder gleichzeitig ausgeführt werden. Darüber hinaus kann die Reihenfolge der Vorgänge umgestellt werden. Ein Prozess kann einer Methode, einer Funktion, einer Prozedur, einer Subroutine, einem Unterprogramm usw. entsprechen.

Die Singularformen "ein, eine" und "der, die, das" beziehen sich auf einen oder mehrere, sofern der Kontext nicht eindeutig etwas anderes vorschreibt. Zum Beispiel schließt der Begriff "mit einem Exemplar" ein Exemplar oder mehrere Exemplare ein und wird als gleichwertig mit der Formulierung "mit mindestens einem Exemplar" angesehen. Der Begriff "oder" bezieht sich auf ein einzelnes Element der genannten alternativen Elemente oder auf eine Kombination von zwei oder mehr Elementen, sofern aus dem Kontext nicht eindeutig etwas anderes hervorgeht. Wie hier verwendet, bedeutet "umfasst" "schließt ein". So bedeutet "umfasst A oder B" "einschließlich A oder B oder A und B", ohne zusätzliche Elemente auszuschließen.

Es wird darauf hingewiesen, dass in der vorliegenden Beschreibung und den Zeichnungen (deren Inhalt durch Verweis in diese Offenbarung aufgenommen wird) verschiedene Verbindungen zwischen den Elementen dargelegt sind. Es wird darauf hingewiesen, dass diese Verbindungen allgemein sind und, sofern nicht anders angegeben, direkt oder indirekt sein können und dass diese Spezifizierung in dieser Hinsicht nicht als einschränkend zu verstehen ist. Jede Bezugnahme auf angebracht, fixiert, verbunden oder Ähnliches kann permanente, abnehmbare, temporäre, teilweise, vollständige und/oder jede andere mögliche Befestigungsoption umfassen.

Kein Element, keine Komponente und kein Verfahrensschritt in der vorliegenden Offenbarung ist dazu bestimmt, der Öffentlichkeit zur Verfügung gestellt zu werden, unabhängig davon, ob das Element, die Komponente oder der Verfahrensschritt in den Ansprüchen ausdrücklich erwähnt wird. Kein Anspruchselement in dieser Offenbarung ist gemäß den Bestimmungen von 35 U.S.C. 112(f) auszulegen, es sei denn, das Element wird ausdrücklich unter Verwendung der Formulierung "Mittel für" erwähnt. Wie hierin verwendet, sollen die Begriffe "umfassen", "enthaltend" oder jede weitere Variation davon eine nicht-exklusive Einbeziehung abdecken, so dass ein Prozess, ein Verfahren, ein Artikel oder eine Vorrichtung, die eine Liste von Elementen umfasst, nicht nur diese Elemente enthält, sondern auch weitere Elemente enthalten kann, die nicht ausdrücklich aufgeführt sind oder zu einem solchen Prozess, Verfahren, Artikel oder solchen Vorrichtung gehören.

Während verschiedene erfinderische Aspekte, Konzepte und Merkmale der Offenbarungen hier beschrieben und illustriert sein können, dass sie in Kombination in den beispielhaften Ausführungsbeispielen verkörpert sind, können diese verschiedenen Aspekte, Konzepte und Merkmale in vielen alternativen Ausführungsformen verwendet werden, entweder einzeln oder in verschiedenen Kombinationen und Unterkombinationen davon. Sofern hier nicht ausdrücklich ausgeschlossen, fallen alle derartigen Kombinationen und Unterkombinationen in den Anwendungsbereich der vorliegenden Anmeldung. Auch wenn hier verschiedene alternative Ausführungsformen zu den verschiedenen Aspekten, Konzepten und Merkmalen der Offenbarungen beschrieben werden - wie z. B. alternative Materialien, Strukturen, Konfigurationen, Verfahren, Vorrichtungen und Komponenten usw. -, sind diese Beschreibungen nicht als vollständige oder erschöpfende Auflistung verfügbarer alternativer Ausführungsformen gedacht, unabhängig davon, ob diese bereits bekannt sind oder später entwickelt werden. Fachleute können ohne Weiteres einen oder mehrere der erfinderischen Aspekte, Konzepte oder Merkmale in zusätzliche Ausführungsformen und Verwendungen im Rahmen der vorliegenden Anmeldung übernehmen, selbst wenn solche Ausführungsformen hier nicht ausdrücklich offenbart sind. Zum Beispiel können in den beispielhaften Ausführungsformen, die oben im Abschnitt "Vorteile der Erfindung" der vorliegenden Spezifikation beschrieben sind, Elemente als einzelne Einheiten beschrieben und als unabhängig voneinander dargestellt werden, um die Beschreibung zu erleichtern. In alternativen Ausführungsformen können solche Elemente als kombinierte Elemente konfiguriert sein. Es wird ferner darauf hingewiesen, dass hier verschiedene Verfahrens- oder Prozessschritte für Ausführungsformen der vorliegenden Offenbarung beschrieben werden. Die Beschreibung kann Verfahrens- und/oder Prozessschritte in einer bestimmten Abfolge darstellen. Soweit das Verfahren oder der Prozess jedoch nicht auf der hierin dargelegten speziellen Reihenfolge der Schritte beruht, sollte das Verfahren oder der Prozess nicht auf die beschriebene spezielle Reihenfolge der beschriebenen Schritte beschränkt sein. Wie ein Fachmann weiß, sind auch andere Schrittfolgen denkbar. Daher sollte die in der Beschreibung angegebene Reihenfolge der Schritte nicht als Einschränkung verstanden werden.

### Zeichnungen

Weitere Vorteile ergeben sich aus der folgenden Zeichnungsbeschreibung. In den Zeichnungen sind zwei Ausführungsbeispiele der Erfindung sowie weitere Ausführungsbeispiele dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1A: ein Körperpflegeprodukt mit einer Griffeinheit, mit einer Anwendungseinheit und mit einer Verbindungseinheit in einer schematischen 3D-Ansicht von vorne,
- Fig. 1B: das Körperpflegeprodukt mit der Griffeinheit, der Anwendungseinheit und der Verbindungseinheit in einer schematischen Vorderansicht,
- Fig. 1C: das Körperpflegeprodukt mit der Griffeinheit, der Anwendungseinheit und der Verbindungseinheit in einer schematischen Seitenansicht,
- Fig. 1D: das Körperpflegeprodukt mit der Griffeinheit, der Anwendungseinheit und der Verbindungseinheit in einer schematischen Seitenansicht,
- Fig. 1E: die Griffeinheit des Körperpflegeprodukts in einer schematischen 3D-Ansicht von vorne,
- Fig. 1F: die Griffeinheit des Körperpflegeprodukts in einer schematischen Vorderansicht,
- Fig. 1G: die Griffeinheit des Körperpflegeprodukts in einer schematischen Seitenansicht,
- Fig. 1H: die Griffeinheit des Körperpflegeprodukts in einer schematischen Seitenansicht,
- Fig. 1I: einen Teilausschnitt der Verbindungseinheit des Körperpflegeprodukts in einer schematischen 3D-Ansicht von vorne,
- Fig. 1J: ein Spritzgusswerkzeug zur Herstellung des Körperpflegeprodukts in einer schematischen 3D-Ansicht von vorne,
- Fig. 1K: das Spritzgusswerkzeug zur Herstellung des Körperpflegeprodukts, mit zwei eingelegten Papierbögen sowie zwei eingelegten Zahnseidefäden vor einem Spritzgussprozess in einer schematischen 3D-Ansicht von vorne,
- Fig. 1L: das Spritzgusswerkzeug zur Herstellung des Körperpflegeprodukts, mit den zwei eingelegten Papierbögen sowie den zwei eingelegten Zahnseidefäden nach einem Spritzgussprozess in einer schematischen 3D-Ansicht von vorne,
- Fig. 1M: einen Teilausschnitt der Verbindungseinheit des Körperpflegeprodukts in dem Spritzgusswerkzeug, mit einem Teil eines Kaltkanalangusses in einer schematischen 3D-Ansicht von vorne,
- Fig. 1N: die zwei Papierbögen, die zwei Zahnseidefäden, mehrere Verbindungselemente mehrerer Verbindungseinheiten und einem Kaltkanalanguss des Spritzgusswerkzeugs nach einem Spritzgussprozess in einer schematischen 3D-Ansicht von vorne,
- Fig. 1O: ein schematisches Ablaufdiagramm eines Verfahrens zu einer Herstellung des Körperpflegeprodukts,
- Fig. 2: ein Spritzgusswerkzeug zur Herstellung des erfindungsgemäßen Körperpflegeprodukts, mit mehreren in dem Spritzgusswerkzeug eingelegten Griffkörpern, mit zwei in dem Spritzgusswerkzeug eingelegten Zahnseidefäden nach einem Spritzgussprozess in einer schematischen 3D-Ansicht von vorne,
- Fig. 3: eine Griffeinheit eines alternativen Körperpflegeprodukts in einer schematischen Vorderansicht,
- Fig. 4: eine Griffeinheit eines weiteren alternativen Körperpflegeprodukts in einer schematischen Vorderansicht,
- Fig. 5: ein weiteres alternatives Körperpflegeprodukt mit einer Griffeinheit, mit einer Anwendungseinheit und mit einer Verbindungseinheit in einer schematischen Vorderansicht,
- Fig. 6: ein weiteres alternatives Körperpflegeprodukt mit einer Griffeinheit, mit einer Anwendungseinheit und mit einer Verbindungseinheit in einer schematischen Vorderansicht,
- Fig. 7: ein weiteres alternatives Körperpflegeprodukt mit einer Griffeinheit, mit einer Anwendungseinheit und mit einer Verbindungseinheit in einer schematischen Vorderansicht,
- Fig. 8A: eine Griffeinheit eines weiteren alternativen Körperpflegeprodukts in einem ungefalteten Zustand in einer schematischen Vorderansicht,
- Fig. 8B: die Griffeinheit des weiteren alternativen Körperpflegeprodukts in einem gefalteten Zustand in einer schematischen 3D-Ansicht von hinten,
- Fig. 8C: einen Grundkörper einer Anwendungseinheit und ein Verbindungselement einer Verbindungseinheit des weiteren alternativen Körperpflegeprodukts in einer schematischen 3D-Ansicht von vorne,
- Fig. 8D: den Grundkörper der Anwendungseinheit und das Verbindungselement der Verbindungseinheit des weiteren alternativen Körperpflegeprodukts in einer schematischen Unteransicht,
- Fig. 8E: einen Teilausschnitt des weiteren alternativen Körperpflegeprodukts mit der Griffeinheit, mit der Anwendungseinheit, ohne ein Borstenplättchen, und mit der Verbindungseinheit in einer schematischen 3D-Ansicht von vorne,
- Fig. 8F: einen Teilausschnitt des weiteren alternativen Körperpflegeprodukts mit der Griffeinheit, mit der Anwendungseinheit, ohne ein Borstenplättchen, und mit der Verbindungseinheit in einer schematischen 3D-Ansicht von hinten,
- Fig. 8G: das weitere alternative Körperpflegeprodukt mit der Griffeinheit, mit der Anwendungseinheit, und mit der Verbindungseinheit in einer schematischen 3D-Ansicht von vorne,
- Fig. 9A: eine Griffeinheit eines weiteren alternativen erfindungsgemäßen Körperpflegeprodukts in einem ungefalteten Zustand in einer schematischen Vorderansicht,
- Fig. 9B: einen Grundkörper einer Anwendungseinheit und ein Verbindungselement einer Verbindungseinheit des weiteren alternativen erfindungsgemäßen Körperpflegeprodukts in einer schematischen 3D-Ansicht von vorne,
- Fig. 9C: den Grundkörper der Anwendungseinheit und das Verbindungselement der Verbindungseinheit des weiteren alternativen erfindungsgemäßen Körperpflegeprodukts in einer schematischen 3D-Ansicht von hinten,
- Fig. 9D: das weitere alternative erfindungsgemäße Körperpflegeprodukt mit der Griffeinheit, mit der Anwendungseinheit, und mit der Verbindungseinheit in einer schematischen 3D-Ansicht von vorne,
- Fig. 9E: das weitere alternative erfindungsgemäße Körperpflegeprodukt mit der Griffeinheit, mit der Anwendungseinheit, und mit der Verbindungseinheit in einer schematischen 3D-Ansicht von hinten,
- Fig. 10A: ein weiteres alternatives Körperpflegeprodukt mit einer Griffeinheit, mit einer Anwendungseinheit und mit einer Verbindungseinheit in einer schematischen Rückansicht,
- Fig. 10B: das weitere alternative Körperpflegeprodukt mit einer Griffeinheit, mit einer Anwendungseinheit und mit einer Verbindungseinheit in einer schematischen 3D-Ansicht,
- Fig. 10C: das weitere alternative Körperpflegeprodukt mit einer Griffeinheit, mit einer Anwendungseinheit und mit einer Verbindungseinheit in einer schematischen Seitenansicht,
- Fig. 11: ein weiteres alternatives Körperpflegeprodukt mit einer Griffeinheit, mit einer Anwendungseinheit und mit einer Verbindungseinheit in einer schematischen 3D-Ansicht,
- Fig. 12A: ein weiteres alternatives Körperpflegeprodukt mit einer Griffeinheit, mit einer Anwendungseinheit und mit einer Verbindungseinheit in einer schematischen 3D-Ansicht von vorne,
- Fig. 12B: das weitere alternative Körperpflegeprodukt mit der Griffeinheit, der Anwendungseinheit und der Verbindungseinheit in einer schematischen Vorderansicht,
- Fig. 12C: das weitere alternative Körperpflegeprodukt mit der Griffeinheit, der Anwendungseinheit und der Verbindungseinheit in einer schematischen Querschnittsdarstellung, gemäß Linie C-C aus Fig. 12B,
- Fig. 13: ein weiteres alternatives Körperpflegeprodukt mit einer Griffeinheit, mit einer Anwendungseinheit und mit einer Verbindungseinheit in einer schematischen 3D-Ansicht von vorne,
- Fig. 14: ein weiteres alternatives Körperpflegeprodukt mit einer Griffeinheit, mit einer Anwendungseinheit und mit einer Verbindungseinheit in einer schematischen 3D-Ansicht von vorne,
- Fig. 15A: ein weiteres alternatives Körperpflegeprodukt mit einer Griffeinheit, mit einer Anwendungseinheit und mit einer Verbindungseinheit in einer schematischen 3D-Ansicht von vorne,
- Fig. 15B: das weitere alternative Körperpflegeprodukt mit der Griffeinheit, der Anwendungseinheit und der Verbindungseinheit in einer schematischen Querschnittsdarstellung, gemäß Linie B-B aus Fig. 15A,
- Fig. 16A: ein weiteres alternatives Körperpflegeprodukt mit einer Griffeinheit, mit einer Anwendungseinheit und mit einer Verbindungseinheit in einer schematischen 3D-Ansicht von vorne,
- Fig. 16B: das weitere alternative Körperpflegeprodukt mit der Griffeinheit, der Anwendungseinheit und der Verbindungseinheit in einer schematischen Querschnittsdarstellung, gemäß Linie B-B aus Fig. 16A,
- Fig. 16C: die Anwendungseinheit des weiteren alternativen Körperpflegeprodukts mit einer ersten Ausführung eines Reinigungselementträgers in einer schematischen Draufsicht,
- Fig. 16D: die Anwendungseinheit des weiteren alternativen Körperpflegeprodukts mit einer zweiten Ausführung eines Reinigungselementträgers in einer schematischen Draufsicht,
- Fig. 16E: die Anwendungseinheit des weiteren alternativen Körperpflegeprodukts mit einer dritten Ausführung eines Reinigungselementträgers in einer schematischen Draufsicht,
- Fig. 17A: eine Griffeinheit eines weiteren alternativen Körperpflegeprodukts in einer schematischen 3D-Ansicht von vorne,
- Fig. 17B: eine Anwendungseinheit und die Griffeinheit des weiteren alternativen Körperpflegeprodukts in einer schematischen 3D-Ansicht von vorne,
- Fig. 17C: die Anwendungseinheit und die Griffeinheit des weiteren alternativen Körperpflegeprodukts in einer schematischen Vorderansicht,
- Fig. 17D: das weitere alternative Körperpflegeprodukt mit der Griffeinheit, der Anwendungseinheit und der Verbindungseinheit in einer schematischen Vorderansicht,
- Fig. 17E: das weitere alternative Körperpflegeprodukt mit der Griffeinheit, der Anwendungseinheit und der Verbindungseinheit in einer schematischen 3D-Ansicht von vorne,
- Fig. 18A: eine Griffeinheit und eine Anwendungseinheit eines weiteren alternativen Körperpflegeprodukts in nicht montierten Zustand in einer Vorderansicht,
- Fig. 18B: die Griffeinheit und die Anwendungseinheit des weiteren alternativen Körperpflegeprodukts in nicht montierten Zustand in einer 3D-Ansicht von vorne,
- Fig. 18C: das weitere alternative Körperpflegeprodukt mit der Griffeinheit, der Anwendungseinheit und der Verbindungseinheit in einer schematischen Vorderansicht während einer Montage,
- Fig. 18D: das weitere alternative Körperpflegeprodukt mit der Griffeinheit, der Anwendungseinheit und der Verbindungseinheit in einer schematischen 3D-Ansicht von vorne während einer Montage,
- Fig. 18E: das weitere alternative Körperpflegeprodukt mit der Griffeinheit, der Anwendungseinheit und der Verbindungseinheit in einer schematischen Querschnittsdarstellung während einer Montage, , gemäß Linie E-E aus Fig. 18C,
- Fig. 18F: das weitere alternative Körperpflegeprodukt mit der Griffeinheit, der Anwendungseinheit und der Verbindungseinheit in einer schematischen Vorderansicht in einem Gebrauchszustand,
- Fig. 18G: das weitere alternative Körperpflegeprodukt mit der Griffeinheit, der Anwendungseinheit und der Verbindungseinheit in einer schematischen 3D-Ansicht von vorne in einem Gebrauchszustand,
- Fig. 18H: das weitere alternative Körperpflegeprodukt mit der Griffeinheit, der Anwendungseinheit und der Verbindungseinheit in einer schematischen Querschnittsdarstellung in einem Gebrauchszustand, gemäß Linie H-H aus Fig. 18F,
- Fig. 19A: ein weiteres alternatives Körperpflegeprodukt mit einer Griffeinheit und mit einer Anwendungseinheit in einer schematischen 3D-Ansicht von vorne,
- Fig. 19B: das weitere alternative Körperpflegeprodukt mit der Griffeinheit und der Anwendungseinheit in einer schematischen 3D-Ansicht von hinten,
- Fig. 19C: das weitere alternative Körperpflegeprodukt mit der Griffeinheit und der Anwendungseinheit in einer Vorderansicht,
- Fig. 19D: das weitere alternative Körperpflegeprodukt mit der Griffeinheit und der Anwendungseinheit in einer Rückansicht,
- Fig. 19E: das weitere alternative Körperpflegeprodukt mit der Griffeinheit und der Anwendungseinheit in einer Längsschnittdarstellung,
- Fig. 20A: ein weiteres alternatives Körperpflegeprodukt mit einer Griffeinheit und mit einer Anwendungseinheit in einer schematischen 3D-Ansicht von vorne,
- Fig. 20B: das weitere alternative Körperpflegeprodukt mit der Griffeinheit und der Anwendungseinheit in einer schematischen 3D-Ansicht von hinten,
- Fig. 20C: das weitere alternative Körperpflegeprodukt mit der Griffeinheit und der Anwendungseinheit in einer Vorderansicht,
- Fig. 20D: das weitere alternative Körperpflegeprodukt mit der Griffeinheit und der Anwendungseinheit in einer Rückansicht,
- Fig. 20E: das weitere alternative Körperpflegeprodukt mit der Griffeinheit und der Anwendungseinheit in einer Längsschnittdarstellung,
- Fig. 21A: ein weiteres alternatives Körperpflegeprodukt mit einer Griffeinheit, mit einer Anwendungseinheit und mit einer Verbindungseinheit in einer schematischen 3D-Ansicht von vorne,
- Fig. 21B: das weitere alternative Körperpflegeprodukt mit der Griffeinheit, mit der Anwendungseinheit und mit der Verbindungseinheit in einer schematischen 3D-Ansicht von hinten,
- Fig. 21C: das weitere alternative Körperpflegeprodukt mit der Griffeinheit, mit der Anwendungseinheit und mit der Verbindungseinheit in einer Vorderansicht,
- Fig. 21D: das weitere alternative Körperpflegeprodukt mit der Griffeinheit, mit der Anwendungseinheit und mit der Verbindungseinheit in einer Rückansicht,
- Fig. 21E: das weitere alternative Körperpflegeprodukt mit der Griffeinheit, mit der Anwendungseinheit und mit der Verbindungseinheit in einer Längsschnittdarstellung,
- Fig. 22A: ein weiteres alternatives Körperpflegeprodukt mit einer Griffeinheit, mit einer Anwendungseinheit und mit einer Verbindungseinheit in einer schematischen 3D-Ansicht von hinten,
- Fig. 22B: das weitere alternative Körperpflegeprodukt mit der Griffeinheit, mit der Anwendungseinheit und mit der Verbindungseinheit in einer schematischen 3D-Ansicht von hinten,
- Fig. 22C: das weitere alternative Körperpflegeprodukt mit der Griffeinheit, mit der Anwendungseinheit und mit der Verbindungseinheit in einer Längsschnittdarstellung,
- Fig. 23A: ein weiteres alternatives Körperpflegeprodukt mit einer Griffeinheit und mit einer Anwendungseinheit in einem ungefalteten Zustand in einer schematischen Vorderansicht,
- Fig. 23B: das weitere alternative Körperpflegeprodukt mit der Griffeinheit und mit der Anwendungseinheit in einem gefalteten Zustand in einer schematischen Rückansicht,
- Fig. 23C: das weitere alternative Körperpflegeprodukt mit der Griffeinheit und mit der Anwendungseinheit in einem gefalteten Zustand in einer schematischen 3D-Ansicht von vorne,
- Fig. 24A: ein weiteres alternatives Körperpflegeprodukt mit einer Griffeinheit und mit einer Anwendungseinheit in einem ungefalteten Zustand in einer schematischen Vorderansicht,
- Fig. 24B: das weitere alternative Körperpflegeprodukt mit der Griffeinheit und mit der Anwendungseinheit in einem gefalteten Zustand in einer schematischen Rückansicht,
- Fig. 24C: das weitere alternative Körperpflegeprodukt mit der Griffeinheit und mit der Anwendungseinheit in einem gefalteten Zustand in einer schematischen Längsschnittdarstellung,
- Fig. 25A: ein weiteres alternatives Körperpflegeprodukt mit einer Griffeinheit und mit einer Anwendungseinheit in einem ungefalteten Zustand in einer schematischen Vorderansicht,
- Fig. 25B: das weitere alternative Körperpflegeprodukt mit der Griffeinheit und mit der Anwendungseinheit in einem gefalteten Zustand in einer schematischen Rückansicht,
- Fig. 25C: das weitere alternative Körperpflegeprodukt mit der Griffeinheit und mit der Anwendungseinheit in einem gefalteten Zustand in einer schematischen 3D-Ansicht von vorne,
- Fig. 25D: das weitere alternative Körperpflegeprodukt mit der Griffeinheit und mit der Anwendungseinheit in einem gefalteten Zustand in einer schematischen Längsschnittdarstellung,
- Fig. 26A: ein weiteres alternatives Körperpflegeprodukt mit einer Griffeinheit und mit einer Anwendungseinheit in einem ungefalteten Zustand in einer schematischen Vorderansicht,
- Fig. 26B: das weitere alternative Körperpflegeprodukt mit der Griffeinheit und mit der Anwendungseinheit in einem gefalteten Zustand in einer schematischen Rückansicht,
- Fig. 26C: das weitere alternative Körperpflegeprodukt mit der Griffeinheit und mit der Anwendungseinheit in einem gefalteten Zustand in einer schematischen 3D-Ansicht von vorne,
- Fig. 26D: das weitere alternative Körperpflegeprodukt mit der Griffeinheit und mit der Anwendungseinheit in einem ersten teilweise zusammengelegten Transportzustand in einer schematischen Vorderansicht,
- Fig. 26E: das weitere alternative Körperpflegeprodukt mit der Griffeinheit und mit der Anwendungseinheit in einem zweiten vollständig zusammengelegten Transportzustand in einer schematischen Vorderansicht,
- Fig. 27A: ein weiteres alternatives erfindungsgemäßes Körperpflegeprodukt mit einer Griffeinheit, mit einer Anwendungseinheit und mit einer Verbindungseinheit in einer schematischen Explosionsdarstellung in einer schematischen 3D-Ansicht,
- Fig. 27B: das weitere alternative erfindungsgemäße Körperpflegeprodukt mit der Griffeinheit, der Anwendungseinheit und der Verbindungseinheit in einer schematischen 3D-Ansicht von vorne,
- Fig. 27C: das weitere alternative erfindungsgemäße Körperpflegeprodukt mit der Griffeinheit, der Anwendungseinheit und der Verbindungseinheit in einer schematischen Rückansicht,
- Fig. 27D: das weitere alternative erfindungsgemäße Körperpflegeprodukt mit der Griffeinheit, der Anwendungseinheit und der Verbindungseinheit in einer schematischen Draufsicht,
- Fig. 27E: das weitere alternative erfindungsgemäße Körperpflegeprodukt mit der Griffeinheit, der Anwendungseinheit, der Verbindungseinheit und mit einem Klingenschutz in einer schematischen Vorderansicht,
- Fig. 27F: der Klingenschutz des weiteren alternativen erfindungsgemäßen Körperpflegeprodukts in einer schematischen 3D-Ansicht,
- Fig. 28A: ein weiteres alternatives erfindungsgemäßes Körperpflegeprodukt mit einer Griffeinheit, mit einer Anwendungseinheit und mit einer Verbindungseinheit in einer schematischen Explosionsdarstellung in einer schematischen 3D-Ansicht,
- Fig. 28B: das weitere alternative erfindungsgemäße Körperpflegeprodukt mit der Griffeinheit, der Anwendungseinheit, der Verbindungseinheit und mit einem Klingenschutz in einer schematischen Vorderansicht,
- Fig. 28C: der Klingenschutz des weiteren alternativen erfindungsgemäßen Körperpflegeprodukts in einer schematischen 3D-Ansicht,
- Fig. 29A: ein weiteres alternatives erfindungsgemäßes Körperpflegeprodukt mit einer Griffeinheit, einer Anwendungseinheit, einer Verbindungseinheit und mit einem Klingenschutz in einer schematischen 3D-Ansicht,
- Fig. 29B: der Klingenschutz des weiteren alternativen erfindungsgemäßen Körperpflegeprodukts in einer schematischen 3D-Ansicht,
- Fig. 30A: eine Griffeinheit eines weiteren alternativen Körperpflegeprodukts in einer schematischen 3D-Ansicht von vorne,
- Fig. 30B: die Griffeinheit des weiteren alternativen Körperpflegeprodukts in einer schematischen Vorderansicht,
- Fig. 30C: eine Anwendungseinheit des weiteren alternativen Körperpflegeprodukts in einer schematischen 3D-Ansicht von vorne,
- Fig. 30D: die Anwendungseinheit des weiteren alternativen Körperpflegeprodukts in einer schematischen Vorderansicht,
- Fig. 30E: die Anwendungseinheit des weiteren alternativen Körperpflegeprodukts in einer schematischen Querschnittdarstellung, gemäß Linie E-E aus Fig. 30D,
- Fig. 30F: das weitere alternative Körperpflegeprodukt mit der Griffeinheit, mit der Anwendungseinheit und mit der Verbindungseinheit in einer schematischen 3D-Ansicht von vorne,
- Fig. 30G: das weitere alternative Körperpflegeprodukt mit der Griffeinheit, mit der Anwendungseinheit und mit der Verbindungseinheit in einer schematischen Vorderansicht,
- Fig. 30H: das weitere alternative Körperpflegeprodukt mit der Griffeinheit, mit der Anwendungseinheit und mit der Verbindungseinheit in einer schematischen Längsschnittdarstellung, gemäß Linie B-B aus Fig. 30G,
- Fig. 31A: ein weiteres alternatives Körperpflegeprodukt mit einer Griffeinheit, einer Anwendungseinheit und einer Verbindungseinheit in einer schematischen 3D-Ansicht von vorne,
- Fig. 31B: das weitere alternative Körperpflegeprodukt mit der Griffeinheit, der Anwendungseinheit und der Verbindungseinheit in einer schematischen 3D-Ansicht von hinten,
- Fig. 31C: das weitere alternative Körperpflegeprodukt mit der Griffeinheit, der Anwendungseinheit und der Verbindungseinheit in einer schematischen Seitenansicht,
- Fig. 31D: das weitere alternative Körperpflegeprodukt mit der Griffeinheit, der Anwendungseinheit und der Verbindungseinheit in einer schematischen Vorderansicht,
- Fig. 31E: das weitere alternative Körperpflegeprodukt mit der Griffeinheit, der Anwendungseinheit und der Verbindungseinheit in einer schematischen Rückansicht,
- Fig. 31F: das weitere alternative Körperpflegeprodukt mit der Griffeinheit, der Anwendungseinheit und der Verbindungseinheit in einer schematischen ersten Querschnittsdarstellung, gemäß Linie I-I aus Fig. 31E,
- Fig. 31G: das weitere alternative Körperpflegeprodukt mit der Griffeinheit, der Anwendungseinheit und der Verbindungseinheit in einer schematischen zweiten Querschnittsdarstellung, gemäß Linie H-H aus Fig. 31E,
- Fig. 31H: das weitere alternative Körperpflegeprodukt mit der Griffeinheit, der Anwendungseinheit und der Verbindungseinheit in einer schematischen dritten Querschnittsdarstellung, gemäß Linie J-J aus Fig. 31E und
- Fig. 311: das weitere alternative Körperpflegeprodukt mit der Griffeinheit, der Anwendungseinheit und der Verbindungseinheit in einer schematischen ersten Längsschnittdarstellung, gemäß Linie A-A aus Fig. 31E.

### Beschreibung der Ausführungsbeispiele

Im Folgenden wird auf die Figuren 1A bis 1O Bezug genommen, welche unterschiedliche Ansichten und Fertigungsstufen eines Körperpflegeprodukts 10a zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 1A zeigt ein Körperpflegeprodukt 10a in einer schematischen perspektivischen Darstellung. Das Körperpflegeprodukt 10a ist von einem Mundhygienemittel gebildet. Das Körperpflegeprodukt 10a ist im vorliegenden Fall als ein Flosser ausgebildet.

Das Körperpflegeprodukt 10a weist eine Anwendungseinheit 12a auf. Ferner weist das Körperpflegeprodukt 10a eine Griffeinheit 14a auf, welche einen materiellen Griffkörper 16a aufweist. Des Weiteren weist das Körperpflegeprodukt 10a eine Verbindungseinheit 18a auf, welche die Anwendungseinheit 12a mit der Griffeinheit 14a verbindet.

Das Körperpflegeprodukt 10a weist eine Längsachse 60a, eine Höhenachse 62a und eine Breitenachse 64a auf. Die Längsachse 60a ist parallel zu einer Haupterstreckungsrichtung 42a des Körperpflegeprodukts 10a angeordnet. Ist das Körperpflegeprodukt 10a auf eine ebene Oberfläche gelegt, sodass die Längsachse 60a parallel zu der Oberfläche angeordnet ist, ist die Höhenachse 62a senkrecht zu der Längsachse 60a und senkrecht zu der Oberfläche und der Breitenachse 64a angeordnet. Die Breitenachse 64a ist senkrecht zu der Längsachse 60a und senkrecht zu der Höhenachse 62a angeordnet. Im vorliegenden Fall weist das Körperpflegeprodukt 10a eine Länge, insbesondere parallel zu der Längsachse 60a von 40 mm bis 100 mm, vorzugsweise von 60 mm bis 90 mm auf.

Die Anwendungseinheit 12a bildet einen Flosserkopf des Körperpflegeprodukts 10a. Die Anwendungseinheit 12a weist zumindest einen Zahnseidefaden 24a auf. Der Zahnseidefaden 24a ist von einer Zahnseide gebildet. Im vorliegenden Fall ist die Anwendungseinheit 12a als ein Zahnseidefaden ausgebildet. Der Zahnseidefaden 24a bildet eine Verbindung mit der Verbindungseinheit 18a.

Die Griffeinheit 14a ist zu einem Greifen durch den Bediener vorgesehen. Die Griffeinheit 14a weist den materiellen Griffkörper 16a auf. Der materielle Griffkörper 16a der Griffeinheit 14a weist einen Kopfbereich 66a auf. Ferner weist der materielle Griffkörper 16a der Griffeinheit 14a einen Griffbereich 68a auf. Der Kopfbereich 66a ist zu einer Anbindung der Anwendungseinheit 12a vorgesehen. Die Griffeinheit 14a weist zumindest eine Grifffläche 70a auf, welche eine Oberfläche des materiellen Griffkörpers 16a ausbildet. Die Grifffläche 70a erstreckt sich über den Griffbereich 68a des materiellen Griffkörpers 16a. Die Grifffläche 70a ist von einer Oberfläche des Griffbereichs 68a des Griffkörpers 16a gebildet. In einem mittleren oder hinteren Bereich der Grifffläche 70a könnte insbesondere ein Schriftzug und/oder ein Logo angeordnet sein. Der materielle Griffkörper 16a weist zu der Anwendungseinheit 12a hin zumindest zwei Arme 26a, 26a' auf. Der Kopfbereich 66a ist als U-förmige Geometrie mit zwei Armen 26a, 26a' ausgebildet. Der Griffbereich 68a des Griffkörpers 16a verläuft schräg zu dem Kopfbereich 66a. Der Griffbereich 68a des Griffkörpers 16a verläuft schräg zu einer Haupterstreckungsrichtung des Zahnseidefadens 24a. Der materielle Griffkörper 16a weist in einem Endzustand eine flache Grundform auf, welche sich zu der Anwendungseinheit 12a hin in die zwei Arme 26a, 26a' aufteilt. Die Arme 26a, 26a' bilden jeweils Schenkel aus.

Eine Breite der Arme 26a, 26a' beträgt, wenigstens 4 mm, insbesondere wenigstens 5 mm, vorzugsweise wenigstens 6 mm, besonders bevorzugt wenigstens 8 mm. Eine dünnste Stelle der Arme 26a, 26a' ist im Bereich gegen das freie Ende der Arme 26a, 26a'. Ein Verhältnis der Dicke des Papierwerkstoffs des Griffkörpers 16a zu Breite der Arme 26a, 26a' beträgt von 1:3 bis 1:7, vorzugsweise von 1:3.5 bis 1:5. Der Abstand der Arme 26a, 26a' beträgt von 10 mm bis 25 mm, vorzugsweise von 12 mm bis 20 mm. Dieser Abstand ist gleichbedeutend mit der freien Länge des Zahnseidefadens 24a bzw. der Zahnseide.

Der materielle Griffkörper 16a besteht zumindest zu einem Großteil aus einem Papierwerkstoff. Der materielle Griffkörper 16a besteht beispielhaft vollständig aus einem Papierwerkstoff. Der materielle Griffkörper 16a der Griffeinheit 14a kann zumindest eine Schicht aus einem Papierwerkstoff aufweisen. Die Schicht kann dreidimensional geformt ausgebildet sein. Der materielle Griffkörper 16a weist von 1 bis 10 Lagen, vorzugsweise von 1 bis 5 Lagen, auf. Die Lagen bilden eine Schicht. Die Anzahl der Lagen hängt insbesondere von der gewünschten Endstärke bzw. Stabilität des materiellen Griffkörpers 16a ab. Es können insbesondere viele dünne Lagen oder wenige dicke Lagen realisiert werden. Die Lagen werden vorzugsweise verbunden. Durch das Realisieren des materiellen Griffkörpers 16a in mehreren Lagen ergeben sich Stabilitätsvorteile gegenüber einem Körper aus einer oder weniger Lagen. Der materielle Griffkörper 16a weist beispielhaft genau drei Lagen auf, die eine Schicht bilden. Der Papierwerkstoff weist insbesondere eine Materialstärke von 0,8 mm bis 2,5 mm, vorzugsweise von 1 mm bis 1,8 mm, auf. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm. Der Griffkörper 16a weist ferner eine im Wesentlichen konstante Materialstärke auf.

Ferner bildet der Griffkörper 16a auf einer der Anwendungseinheit 12a abgewandten Seite eine Zahnstocherspitze 72a aus. Die Zahnstocherspitze 72a ist durch partielles Verpressen des Griffkörpers 16a hergestellt. Der Griffbereich 68a läuft auf einer dem Kopfbereich 66a abgewandten Seite zu einer Spitze hin spitz aus. Die Spitze ist zu der Spitze hin verpresst, sodass eine zulaufende Geometrie mit einer Spitze geschaffen wird, welche die Zahnstocherspitze 72a ausbildet. Alternativ wäre auch denkbar, dass die Zahnstocherspitze 72a durch Schneiden, Fräsen oder Umspritzen mit Hartkomponente hergestellt wird. Durch das Verpressen kann jedoch eine verbesserte Stabilität erreicht werden.

Das Körperpflegeprodukt 10a weist ferner die Verbindungseinheit 18a auf. Die Verbindungseinheit 18a weist ein mit der Anwendungseinheit 12a verbundenes Verbindungselement 20a und ein mit der Griffeinheit 14a verbundenes weiteres Verbindungselement 22a auf. Das Verbindungselement 20a und das weitere Verbindungselement 22a sind korrespondierend ausgebildet. Ferner ist das Verbindungselement 20a der Verbindungseinheit 18a einstückig mit der Anwendungseinheit 12a ausgebildet. Das Verbindungselement 20a bildet insbesondere einen Teil der Anwendungseinheit 12a. Das weitere Verbindungselement 22a der Verbindungseinheit 18a ist zumindest teilweise einstückig mit der Griffeinheit 14a ausgebildet. Das weitere Verbindungselement 22a der Verbindungseinheit 18a ist einstückig mit dem Griffkörper 16a ausgebildet. Das weitere Verbindungselement 22a der Verbindungseinheit 18a ist einteilig mit dem Griffkörper 16a ausgebildet. Das weitere Verbindungselement 22a der Verbindungseinheit 18a bildet daher einen Teil des Griffkörpers 16a. Das weitere Verbindungselement 22a der Verbindungseinheit 18a besteht daher ebenfalls zu einem Großteil, insbesondere vollständig, aus einem Papierwerkstoff.

Das Verbindungselement 20a der Verbindungseinheit 18a besteht zu einem Großteil aus einem Polymer, insbesondere aus einem Kunststoff. Das Verbindungselement 20a der Verbindungseinheit 18a besteht aus einem Hartkunststoff. Das Verbindungselement 20a besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22a ist in einem Endbereich des Griffkörpers 16a ausgebildet. Die Arme 26a, 26a' des Griffkörpers 16a bilden in ihren Endbereichen das weitere Verbindungselement 22a aus, an welchem die Anwendungseinheit 12a fixiert ist. Das weitere Verbindungselement 22a bildet an den Enden der Arme 26a, 26a' zwei Verbindungsbereiche 28a, 28a' aus. An jedem der Arme 26a, 26a' ist jeweils ein Verbindungsbereich 28a, 28a' ausgebildet.

Das Verbindungselement 20a der Verbindungseinheit 18a ist zumindest teilweise stoffschlüssig mit dem weiteren Verbindungselement 22a der Verbindungseinheit 18a verbunden. Das Verbindungselement 20a der Verbindungseinheit 18a ist zumindest teilweise formschlüssig mit dem weiteren Verbindungselement 22a der Verbindungseinheit 18a verbunden. Das weitere Verbindungselement 22a der Verbindungseinheit 18a ist mit dem Verbindungselement 20a der Verbindungseinheit 18a umspritzt. Ferner ist der Zahnseidefaden 24a der Anwendungseinheit 12a von dem Verbindungselement 20a der Verbindungseinheit 18a umspritzt. Das Verbindungselement 20a der Verbindungseinheit 18a weist zumindest eine Kappe 30a, 30a' auf, welche das weitere Verbindungselement 22a der Verbindungseinheit 18a übergreift. Das Verbindungselement 20a der Verbindungseinheit 18a weist zwei Kappen 30a, 30a' auf, welche jeweils einen der Arme 26a, 26a' in einem Bereich des weiteren Verbindungselements 22a übergreifen. Die Kappen 30a, 30a' erstrecken sich jeweils klammerartig um die Arme 26a, 26a'. Die Kappen 30a, 30a' des Verbindungselements 20a erstrecken sich jeweils klammerartig von der Zahnseidefadenseite her über die Arme 26a, 26a'. Die Kappen 30a, 30a' des Verbindungselements 20a weisen in einer Ebene senkrecht zu einer Richtung des Zahnseidefadens 24a jeweils einen U-förmigen Querschnitt auf. Der Zahnseidefaden 24a ist dabei von den Kappen 30a, 30a' des Verbindungselements 20a umspritzt. Das Verbindungselement 20a verbindet den Zahnseidefaden 24a mit den Armen 26a, 26a' des Griffkörpers 16a. Der Zahnseidefaden 24a liegt nicht am Griffkörper 16a an. Zwischen dem Zahnseidefaden 24a und dem Griffkörper 16a besteht ein Abstand von 0,2 mm bis 3 mm, vorzugsweise von 0,35 mm bis 0,8 mm. Ein Kunststoff des Verbindungselements 20a muss um den Zahnseidefaden 24a der Anwendungseinheit 12a fließen, um den benötigten Ausreißkräften standzuhalten.

Das Verbindungselement 20a ist in einem Spritzgussverfahren hergestellt. Das Verbindungselement 20a weist zumindest einen Anspritzpunkt 34a auf, welcher an den Kappen 30a, 30a' angeordnet ist. Das Verbindungselement 20a weist zwei Anspritzpunkte 34a auf, welche jeweils an einer der Kappen 30a, 30a' angeordnet sind. Die Anspritzpunkte 34a des Spritzgussverfahrens sind in einem Nahbereich des Zahnseidefadens 24a, insbesondere in einem Nahbereich eines Verbindungspunkts zwischen dem Zahnseidefaden 24a und der jeweiligen Kappe 30a, 30a', angeordnet.

Das weitere Verbindungselement 22a der Verbindungseinheit 18a weist zumindest eine Formschlusskontur 36a auf, welche dazu vorgesehen ist einen Formschluss mit dem Verbindungselement 20a auszubilden. Das weitere Verbindungselement 22a weist an beiden Armen 26a, 26a jeweils eine Formschlusskontur 36a auf. Die Formschlusskontur 36a ist derart gestaltet, dass keine Rotation des Verbindungselements 20a möglich ist. Die Formschlusskontur 36a ist in den Verbindungsbereichen 28a, 28a' angeordnet. Die Formschlusskontur 36a des weiteren Verbindungselements 22a ist zu einer Verdrehsicherung des Verbindungselements 20a vorgesehen. Die Formschlusskontur 36a des weiteren Verbindungselements 22a weist zumindest eine Durchgangsausnehmung 38a, 38a' auf. Die Formschlusskontur 36a des weiteren Verbindungselements 22a weist zwei Durchgangsausnehmungen 38a, 38a' auf, wobei jeweils eine Durchgangsausnehmung 38a, 38a' in jeweils einem der Arme 26a, 26a' angeordnet ist. Die Formschlusskontur 36a bildet sich durch die Durchgangsausnehmung 38a, 38a' sowie die Außenkontur der Arme 26a, 26a' aus. Das Verbindungselement 20a erstreckt sich jeweils durch die Durchgangsausnehmungen 38a, 38a'. Die Kappen 30a, 30a' erstrecken sich jeweils durch die Durchgangsausnehmungen 38a, 38a'. Die zumindest eine Durchgangsausnehmung 38a, 38a' ist beispielhaft von einem runden Loch gebildet. Es wäre jedoch auch eine andere, einem Fachmann als sinnvoll erscheinende Ausgestaltung denkbar, wie beispielsweise als länglicher Schlitz, quadratisches oder rechteckiges Loch oder dergleichen. Der Durchmesser der Durchgangsausnehmungen 38a, 38a' beträgt jeweils von 1 mm bis 5 mm, vorzugsweise von 2 mm bis 4 mm. Der Abstand zu einem Rand des Griffkörpers 16a, d.h. eine Rest-Wandstärke pro Seite, beträgt insbesondere von 1 mm bis 4 mm.

Grundsätzlich kann das weiteren Verbindungselement 22a auch ohne die Durchgangsausnehmungen 38a, 38a' realisiert werden. Der Kunststoff des Verbindungselements 20a haftet insbesondere auch ohne die Durchgangsausnehmungen 38a, 38a' ausreichend an dem Material des weiteren Verbindungselements 22a. Bei einem Einsatz von Holz für die Griffeinheit 14a kann der Griffkörper 16a ferner im Bereich der Durchgangsausnehmungen 38a, 38a' brechen.

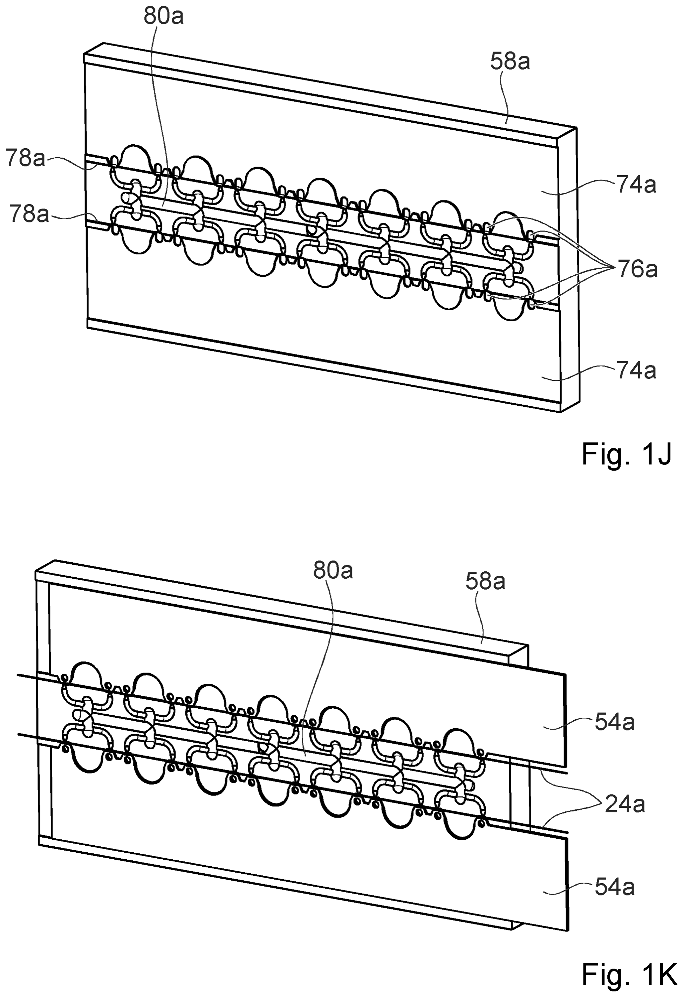

Figur 1J zeigt ein Spritzgusswerkzeug 58a zur Herstellung des Körperpflegeprodukts 10a. In der Figur 1J ist insbesondere lediglich eine Formhälfte des Spritzgusswerkzeugs 58a gezeigt. Das Spritzgusswerkzeug 58a weist auf jeder Formhälfte Kavitäten 74a auf, welche jeweils zu einer Aufnahme eines Papierbogens 54a vorgesehen sind. Die Arme 26a, 26a' des Griffkörpers 16a werden in dem Spritzgusswerkzeug 58a teilweise anliegend an die Kavitätenwand der Kavitäten 74a des Papierbogens 54a gestaltet, sodass in diesen dichtenden Bereichen keine Freistellung besteht. Die Arme 26a, 26a' müssen insbesondere abdichten, damit das Kunststoffmaterial beim Einspritzen nicht ausläuft und eine Überspritzung bildet. Durch die Form und das Anliegen an den entsprechenden Kavitätenwänden verrutscht der Griffkörper 16a bzw. der gesamte Papierbogen 54a nicht. Die Griffkörper 16a werden mit den Armen 26a, 26a' in die entsprechende Ausnehmung des Spritzgusswerkzeugs 58a hinein gedrückt, insbesondere in Richtung des Zahnseidefadens 24a. Der Papierbogen 54a ist dafür in dem Kopfbereich 66a der Griffkörper 16a bereits gestanzt ausgebildet (vgl. Figur 1K und 1L). Des Weiteren weist das Spritzgusswerkzeug 58a zwei Kavitäten 78a auf, welche jeweils zu einer Aufnahme eines Zahnseidefadens 24a zur Ausbildung der Anwendungseinheit 12a vorgesehen sind. Ferner weist das Spritzgusswerkzeug 58a eine Vielzahl von an die Kavitäten 74a, 78a angrenzende Kavitäten 76a der Verbindungselemente 20a zur Ausbildung der Verbindungselemente 20a der Verbindungseinheit 18a auf. Zudem weist das Spritzgusswerkzeug 58a eine Kanalausnehmung 80a auf, welche einen Kaltkanalanguss 82a begrenzt, welches die Kavitäten 76a der Verbindungselemente 20a miteinander verbindet.

Figur 1O zeigt ein schematisches Ablaufdiagramm eines Verfahrens zu einer Herstellung des Körperpflegeprodukts 10a. Das Verfahren weist einen Bereitstellungsschritt 50a auf. In dem Bereitstellungsschritt 50a wird zumindest eine Griffeinheit 14a mit zumindest einem weiteren Verbindungselement 22a der Verbindungseinheit 18a bereitgestellt. In dem Bereitstellungsschritt 50a werden mehrere Griffeinheiten 14a, insbesondere mehrere Griffkörper 16a der Griffeinheit 14a, zur Herstellung mehrerer Körperpflegeprodukte 10a zusammenhängend aus zumindest einem Papierbogen 54a bereitgestellt. In dem Bereitstellungsschritt 50a werden vierzehn Griffeinheiten 14a, insbesondere vierzehn Griffkörper 16a der Griffeinheit 14a, zur Herstellung mehrerer Körperpflegeprodukte 10a zusammenhängend aufgeteilt auf zwei identische Papierbögen 54a bereitgestellt. Die Papierbögen 54a werden dabei in das Spritzgusswerkzeug 58a eingelegt. Die Papierbögen 54a werden in die Kavitäten 74a eingelegt. Ferner wird in dem Bereitstellungsschritt 50a zumindest ein zusammenhängender Zahnseidefaden 24a für mehrere Anwendungseinheiten 12a bereitgestellt und in das Spritzgusswerkzeug 58a eingelegt. In dem Bereitstellungsschritt 50a werden zwei lange Zahnseidefäden 24a für insgesamt zwei mal sieben Anwendungseinheiten 12a bereitgestellt und jeweils in das Spritzgusswerkzeug 58a eingelegt. Die Zahnseidefäden 24a werden in die Kavitäten 78a eingelegt (vgl. Figur 1K).

Auf den Bereitstellungsschritt 50a folgt ein Verbindungsschritt 52a. In dem Verbindungsschritt 52a wird die Anwendungseinheit 12a über das Verbindungselement 20a der Verbindungseinheit 18a mittels Umspritzen mit der Griffeinheit 14a verbunden. Das Umspritzen erfolgt in einem Spritzgussverfahren. Das Spritzgussverfahren erfolgt mittels eines Kaltkanal-Angusssystems. Beim Kaltkanal-Angusssystem führt ein Kaltkanalanguss 82a von der Nadel zu den Verbindungselementen 20a. Das AngussSystem bleibt folglich am Körperpflegeprodukt 10a, wenn das Körperpflegeprodukt 10a aus dem Spritzgusswerkzeug 58a entfernt wird. Für den Anspritzpunkt 34a am Körperpflegeprodukt 10a sind verschiedene, einem Fachmann als sinnvoll erscheinende Positionen denkbar. Die Anspritzpunkte 34a liegen beispielhaft auf einer Oberseite in der Nähe des Zahnseidefadens 24a. Die Temperatur der Schmelze beträgt für die Verarbeitung insbesondere von 150°C bis 290°C, vorzugsweise 190°C bis 250°C. Der Zahnseidefaden 24a, insbesondere die Zahnseide, besteht vorzugsweise aus Polyamid (PA) und weist einen Schmelzpunkt von rund 220°C auf. Das Kunststoffmaterial des Verbindungselements 20a ist vorzugsweise ein Polypropylen (PP) mit einem Schmelzpunkt von rund 170°C. Polyamid hat daher einen höheren Schmelzpunkt als Polypropylen. Bei dem Spritzgussprozess herrschen insbesondere Drücke von 600 bar bis 1500 bar, vorzugsweise von 800 bar bis 1300 bar.

Auf den Verbindungsschritt 52a folgt ein Trennschritt 56a. In dem auf den Verbindungsschritt 52a folgenden Trennschritt 56a werden die Griffeinheiten 14a voneinander getrennt. Nach einem Umspritzen werden die Papierbögen 54a aus dem Spritzgusswerkzeug 58a entfernt und gestanzt. Ein Stanzen kann nach der Umspritzung inline oder offline, d.h. direkt verknüpft oder nicht verknüpft erfolgen. Ein Stanzen umfasst insbesondere die folgenden Schritte: In einem ersten Schritt werden die Zahnseidefäden 24a abgestanzt und die Zahnseidefadenenden ansengt. Das Trennen zwischen Körperpflegeprodukten 10a und an den Enden erfolgt insbesondere mit einem Stanzmesser. Das Ansengen der Zahnseidefadenenden erfolgt insbesondere mittels Wärme berührungslos. Die Wärmeerzeugung erfolgt dabei insbesondere mittels Heißluft. Durch das Ansengen bildet sich eine kugelartige Struktur 118a am Ende des Zahnseidefadens 24a. Der Zahnseidefaden 24a wird daher weniger aus dem Verbindungselement 20a der Verbindungseinheit 18a ausgerissen. Die kugelartige Struktur 118a bettet sich insbesondere zwischen dem Verbindungselement 20a und dem Griffkörper 16a ein. Dadurch minimiert sich die Größe der kugelartigen Struktur 118a und sie stört in der Anwendung nicht. Die Temperaturen zum Ansengen betragen insbesondere von 200°C bis 280°C, vorzugsweise 220°C bis 260°C. Zum Ansengen sind die Körperpflegeprodukte 10a insbesondere noch in den Papierbögen 54a gehalten, um ein einfacheres Handling und damit eine genauere Positionierung zu ermöglichen. Anschließend wird in einem weiteren Schritt ein Anguss entfernt. Es erfolgt ein Abstanzen des Kaltkanalangusses 82a. Ferner kann eine Anguss-Nachbearbeitung, beispielsweise durch eine Wärmebehandlung, erfolgen. Der Anguss wird insbesondere möglichst spät entfernt, da er das ganze Konstrukt zusammenhält. In einem weiteren Schritt wird der Griffkörper 16a fertig ausgestanzt.

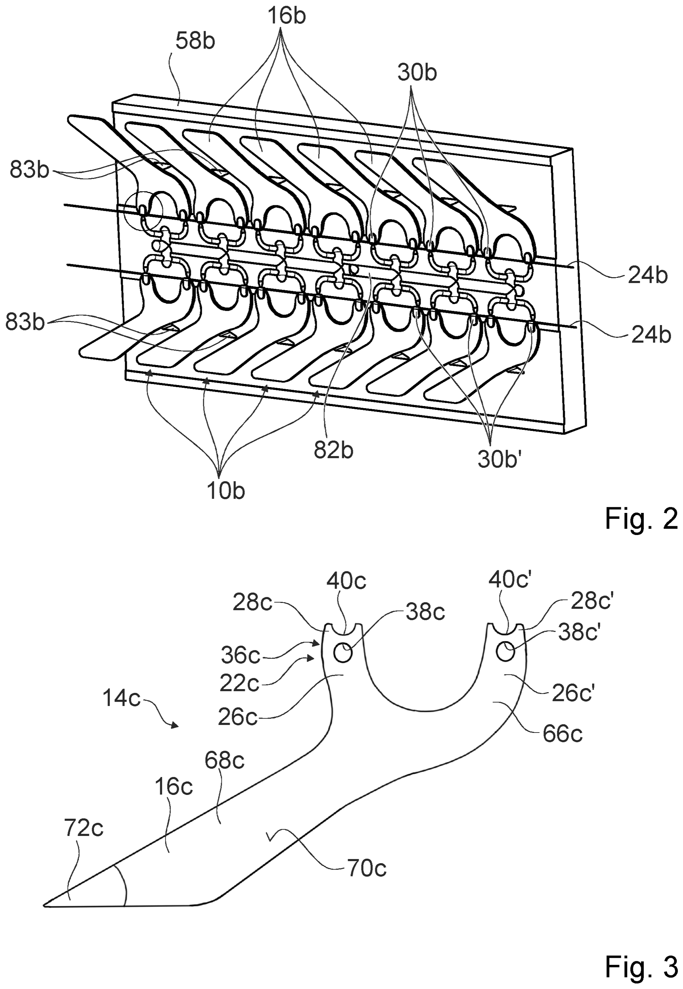

In den Figuren 2 bis 31 sind dreißig weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1A bis 1O, verwiesen werden kann. Zur Unterscheidung der Ausführungsbeispiele ist der Buchstabe a in den Bezugszeichen des Ausführungsbeispiels der Figuren 1A bis 1O durch die Buchstaben b bis ee in den Bezugszeichen der Ausführungsbeispiele der Figuren 2 bis 31 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1A bis 1O, verwiesen werden.

Im Folgenden wird auf eine Reihe von Ausführungsformen von Körperpflegeprodukten mit den Bezeichnungen "a" bis "ee" Bezug genommen, so dass auf jede Ausführungsform ohne diese Buchstabenbezeichnung und nur mit der Referenznummer Bezug genommen werden kann (z. B. umfasst das Körperpflegeprodukt 10 die Körperpflegeprodukte 10a bis 10ee). Jede dieser Ausführungsformen kann die in der Zusammenfassung beschriebenen Merkmale aufweisen. Das Körperpflegeprodukt 10 hat eine Anwendungseinheit 12. Ferner weist das Körperpflegeprodukt 10 eine Griffeinheit 14 auf, die einen materiellen Griffkörper 16 aufweist. Des Weiteren weist das Körperpflegeprodukt 10 eine Verbindungseinheit 18 auf, die die Anwendungseinheit 12 mit der Griffeinheit 14 verbindet.

Das Körperpflegeprodukt 10 weist eine Längsachse 60, eine Höhenachse 62 und eine Breitenachse 64 auf. Die Längsachse 60 ist parallel zu einer Haupterstreckungsrichtung 42 des Körperpflegeprodukts 10 angeordnet. Wenn das Körperpflegeprodukt 10 auf eine ebene Fläche gelegt wird, so dass die Längsachse 60 parallel zur Fläche angeordnet ist, ist die Höhenachse 62 senkrecht zur Längsachse 60 und senkrecht zur Fläche und zur Breitenachse 64 angeordnet. Die Breitenachse 64 ist senkrecht zur Längsachse 60 und senkrecht zur Höhenachse 62 angeordnet. Im vorliegenden Fall weist das Körperpflegeprodukt 10 eine Länge auf, insbesondere parallel zur Längsachse 60.

In ähnlicher Weise werden Verfahren zur Herstellung beschrieben, die im Allgemeinen für jede der mit "a" bis "ee" bezeichneten Ausführungsformen gelten.

Figur 2 zeigt ein Spritzgusswerkzeug 58b zur Herstellung von Körperpflegeprodukten 10b. In der Figur 2 ist insbesondere lediglich eine Formhälfte des Spritzgusswerkzeugs 58b gezeigt. Das Spritzgusswerkzeug 58b weist auf jeder Formhälfte Kavitäten 74b auf, welche jeweils zu einer Aufnahme mehrerer, einzelner Griffkörper 16b vorgesehen sind. Das Spritzgusswerkzeug 58b für einzelne Griffkörper 16b bringt insbesondere eine komplizierte Formgebung mit mehr Geometrie mit sich, die die Griffkörper 16b in Position halten. In den Kavitäten 74b sind dazu Fortsätze 83b angeordnet, welche die Griffkörper 16b in Position halten. Die Fortsätze 83b sind beispielhaft von dreieckigen Fortsätzen gebildet, welche die Griffkörper 16b jeweils in einem Griffbereich 68b abstützen. Anstelle der Fortsätze 83b wäre es auch möglich eine dem Griffkörper 16b entsprechende volle Kontur/Kavität auszugestalten, in welche der Griffkörper 16b einsetzbar ist und welche den Griffkörper 16b komplett umfasst. Ferner wären insbesondere weitere Halteelemente zu einem Abstützen der Griffkörper 16b sinnvoll. Es wäre insbesondere ein Halten der Griffkörper 16b in einem Bogenbereich, an der Seite an verschiedenen Positionen und im Endbereich gegenüberliegend zu einem Zahnseidefaden 24b durch das Spritzgusswerkzeug 58b sinnvoll. Des Weiteren weist das Spritzgusswerkzeug 58b zwei Kavitäten 78b auf, welche jeweils zu einer Aufnahme eines Zahnseidefadens 24b zur Ausbildung der Anwendungseinheit 12b vorgesehen sind. Ferner weist das Spritzgusswerkzeug 58b eine Vielzahl von an die Kavitäten 74b, 78b angrenzenden Kavitäten 76b der Verbindungselemente 20b zur Ausbildung von Verbindungselementen 20b einer Verbindungseinheit 18b auf. Zudem weist das Spritzgusswerkzeug 58b eine Kanalausnehmung 80b auf, welche einen Kaltkanalanguss 82b begrenzt, welches die Kavitäten 76b der Verbindungselemente 20b miteinander verbindet.

Die Figur 3 zeigt eine Griffeinheit 14c und ein weiteres Verbindungselement 22c einer Verbindungseinheit 18c eines Körperpflegeprodukts 10c in einer schematischen Vorderansicht. Das Körperpflegeprodukt 10c ist von einem Mundhygienemittel gebildet. Das Körperpflegeprodukt 10c ist im vorliegenden Fall als ein Flosser ausgebildet.

Das Körperpflegeprodukt 10c weist eine Anwendungseinheit 12c auf. Ferner weist das Körperpflegeprodukt 10c die Griffeinheit 14c auf, welche einen materiellen Griffkörper 16c aufweist. Des Weiteren weist das Körperpflegeprodukt 10c eine Verbindungseinheit 18c auf, welche die Anwendungseinheit 12c mit der Griffeinheit 14c verbindet.

Die Griffeinheit 14c ist zu einem Greifen durch den Bediener vorgesehen. Die Griffeinheit 14c weist den materiellen Griffkörper 16c auf. Der materielle Griffkörper 16c der Griffeinheit 14c weist einen Kopfbereich 66c auf. Ferner weist der materielle Griffkörper 16c der Griffeinheit 14c einen Griffbereich 68c auf. Der Kopfbereich 66c ist zu einer Anbindung der Anwendungseinheit 12c vorgesehen. Der materielle Griffkörper 16c weist zu der Anwendungseinheit 12c hin zumindest zwei Arme 26c, 26c' auf. Der Kopfbereich 66c ist als U-förmige Geometrie mit zwei Armen 26c, 26c' ausgebildet.

Der materielle Griffkörper 16c besteht zumindest zu einem Großteil aus einem Papierwerkstoff. Der materielle Griffkörper 16c besteht beispielhaft vollständig aus einem Papierwerkstoff.

Das Körperpflegeprodukt 10c weist ferner die Verbindungseinheit 18c auf. Die Verbindungseinheit 18c weist ein mit der Anwendungseinheit 12c verbundenes Verbindungselement 20c und ein mit der Griffeinheit 14c verbundenes weiteres Verbindungselement 22c auf. Das weitere Verbindungselement 22c der Verbindungseinheit 18c ist einteilig mit dem Griffkörper 16c ausgebildet. Das weitere Verbindungselement 22c der Verbindungseinheit 18c bildet daher einen Teil des Griffkörpers 16c. Das weitere Verbindungselement 22c der Verbindungseinheit 18c besteht daher ebenfalls zu einem Großteil, insbesondere vollständig, aus einem Papierwerkstoff.

Das weitere Verbindungselement 22c ist in einem Endbereich des Griffkörpers 16c ausgebildet. Die Arme 26c, 26c' des Griffkörpers 16c bilden in ihren Endbereichen das weitere Verbindungselement 22c aus, an welchem die Anwendungseinheit 12c fixiert ist. Das weitere Verbindungselement 22c bildet an den Enden der Arme 26c, 26c' zwei Verbindungsbereiche 28c, 28c' aus. An jedem der Arme 26c, 26c' ist jeweils ein Verbindungsbereich 28c, 28c' ausgebildet.

Das weitere Verbindungselement 22c der Verbindungseinheit 18c weist zumindest eine Formschlusskontur 36c auf, welche dazu vorgesehen ist, einen Formschluss mit dem Verbindungselement 20c auszubilden. Das weitere Verbindungselement 22c weist an beiden Armen 26c, 26c' jeweils eine Formschlusskontur 36c auf. Die Formschlusskontur 36c ist derart gestaltet, dass keine Rotation des Verbindungselements 20c möglich ist. Die Formschlusskontur 36c ist in den Verbindungsbereichen 28c, 28c' angeordnet. Die Formschlusskontur 36c des weiteren Verbindungselements 22c ist zu einer Verdrehsicherung des Verbindungselements 20c vorgesehen. Die Formschlusskontur 36c des weiteren Verbindungselements 22c weist zumindest eine Durchgangsausnehmung 38c, 38c' auf. Die Formschlusskontur 36c des weiteren Verbindungselements 22c weist zwei Durchgangsausnehmungen 38c, 38c' auf, wobei jeweils eine Durchgangsausnehmung 38c, 38c' in jeweils einem der Arme 26c, 26c' angeordnet ist. Die Formschlusskontur 36c bildet sich durch die Durchgangsausnehmung 38c, 38c' sowie die Außenkontur der Arme 26c, 26c' aus. Das Verbindungselement 20c erstreckt sich jeweils durch die Durchgangsausnehmungen 38c, 38c'. Kappen 30c, 30c' des Verbindungselements 20c erstrecken sich jeweils durch die Durchgangsausnehmungen 38c, 38c'. Die zumindest eine Durchgangsausnehmung 38c, 38c' ist beispielhaft von einem runden Loch gebildet.

Ferner weist die Formschlusskontur 36c des weiteren Verbindungselements 22c zumindest eine Einkerbung 40c, 40c' auf, welche von dem Verbindungselement 20c hinterfüllt ist. Die Formschlusskontur 36c des weiteren Verbindungselements 22c weist zwei Einkerbungen 40c, 40c' auf, wobei jeweils eine Einkerbung 40c, 40c' jeweils an einem der Arme 26c, 26c' angeordnet ist. Die Einkerbungen 40c, 40c' sind jeweils oberhalb der Durchgangsausnehmungen 38c, 38c' angeordnet. Die Einkerbungen 40c, 40c' sind an einem oberen Ende der Arme 26c, 26c' angeordnet. Das Verbindungselement 20c erstreckt sich jeweils in die Einkerbungen 40c, 40c'. Die Kappen des Verbindungselements 20c erstrecken sich jeweils in die Einkerbungen 40c, 40c'. Die Einkerbungen 40c, 40c' sind beispielhaft von einem halbrunden Loch gebildet. Die Einkerbungen 40c, 40c' weisen bevorzugt eine Breite von 1 mm bis 5 mm, vorzugsweise von 2 mm bis 4 mm auf. Die Tiefe der Einkerbungen 40c, 40c' entspricht bevorzugt maximal 1 mm bis 3 mm, vorzugsweise von 1.2 mm bis 2 mm. Die Einkerbungen 40c, 40c' der Formschlusskontur 36c sind zu einer Drehvermeidung vorgesehen.

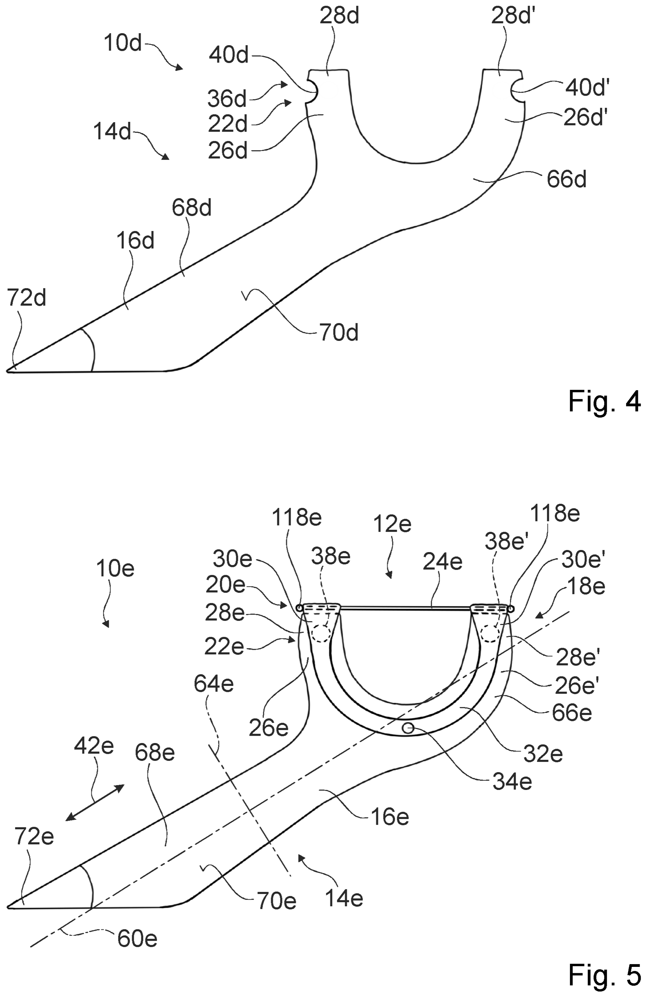

Die Figur 4 zeigt eine Griffeinheit 14d und ein weiteres Verbindungselement 22d einer Verbindungseinheit 18d eines Körperpflegeprodukts 10d in einer schematischen Vorderansicht. Das Körperpflegeprodukt 10d ist von einem Mundhygienemittel gebildet. Das Körperpflegeprodukt 10d ist im vorliegenden Fall als ein Flosser ausgebildet.

Das Körperpflegeprodukt 10d weist eine Anwendungseinheit 12d auf. Ferner weist das Körperpflegeprodukt 10d die Griffeinheit 14d auf, welche einen materiellen Griffkörper 16d aufweist. Des Weiteren weist das Körperpflegeprodukt 10d eine Verbindungseinheit 18d auf, welche die Anwendungseinheit 12d mit der Griffeinheit 14d verbindet.

Die Griffeinheit 14d ist zu einem Greifen durch den Bediener vorgesehen. Die Griffeinheit 14d weist den materiellen Griffkörper 16d auf. Der materielle Griffkörper 16d der Griffeinheit 14d weist einen Kopfbereich 66d auf. Ferner weist der materielle Griffkörper 16d der Griffeinheit 14d einen Griffbereich 68d auf. Der Kopfbereich 66d ist zu einer Anbindung der Anwendungseinheit 12d vorgesehen. Der materielle Griffkörper 16d weist zu der Anwendungseinheit 12d hin zumindest zwei Arme 26d, 26d' auf. Der Kopfbereich 66d ist als U-förmige Geometrie mit zwei Armen 26d, 26d' ausgebildet.

Der materielle Griffkörper 16d besteht zumindest zu einem Großteil aus einem Papierwerkstoff. Der materielle Griffkörper 16d besteht beispielhaft vollständig aus einem Papierwerkstoff.

Das Körperpflegeprodukt 10d weist ferner die Verbindungseinheit 18d auf. Die Verbindungseinheit 18d weist ein mit der Anwendungseinheit 12d verbundenes Verbindungselement 20d und ein mit der Griffeinheit 14d verbundenes weiteres Verbindungselement 22d auf. Das weitere Verbindungselement 22d der Verbindungseinheit 18d ist einteilig mit dem Griffkörper 16d ausgebildet. Das weitere Verbindungselement 22d der Verbindungseinheit 18d bildet daher einen Teil des Griffkörpers 16d. Das weitere Verbindungselement 22d der Verbindungseinheit 18d besteht daher ebenfalls zu einem Großteil, insbesondere vollständig, aus einem Papierwerkstoff.

Das weitere Verbindungselement 22d ist in einem Endbereich des Griffkörpers 16d ausgebildet. Die Arme 26d, 26d' des Griffkörpers 16d bilden in ihren Endbereichen das weitere Verbindungselement 22d aus, an welchem die Anwendungseinheit 12d fixiert ist. Das weitere Verbindungselement 22d bildet an den Enden der Arme 26d, 26d' zwei Verbindungsbereiche 28d, 28d' aus. An jedem der Arme 26d, 26d' ist jeweils ein Verbindungsbereich 28d, 28d' ausgebildet.

Das weitere Verbindungselement 22d der Verbindungseinheit 18d weist zumindest eine Formschlusskontur 36d auf, welche dazu vorgesehen ist, einen Formschluss mit dem Verbindungselement 20d auszubilden. Das weitere Verbindungselement 22d weist an beiden Armen 26d, 26d' jeweils eine Formschlusskontur 36d auf. Die Formschlusskontur 36d ist derart gestaltet, dass keine Rotation des Verbindungselements 20d möglich ist. Die Formschlusskontur 36d ist in den Verbindungsbereichen 28d, 28d' angeordnet. Die Formschlusskontur 36d des weiteren Verbindungselements 22d ist zu einer Verdrehsicherung des Verbindungselements 20d vorgesehen. Die Formschlusskontur 36d des weiteren Verbindungselements 22d weist zumindest eine Einkerbung 40d, 40d' auf, welche von dem Verbindungselement hinterfüllt ist. Die Formschlusskontur 36d des weiteren Verbindungselements 22d weist zwei Einkerbungen 40d, 40d' auf, wobei jeweils eine Einkerbung 40d, 40d' jeweils an einem der Arme 26d, 26d' angeordnet ist. Die Einkerbungen 40d, 40d' sind jeweils auf einander abgewandten Außenseiten der Arme 26d, 26d' angeordnet. Die Einkerbungen 40d, 40d' sind seitlich an einem oberen Ende der Arme 26d, 26d' angeordnet. Das Verbindungselement erstreckt sich jeweils in die Einkerbungen 40d, 40d'. Die Kappen des Verbindungselements 20d erstrecken sich jeweils in die Einkerbungen 40d, 40d'. Die Einkerbungen 40d, 40d' sind beispielhaft von einem halbrunden Loch gebildet. Die Einkerbungen 40d, 40d' weisen bevorzugt eine Breite von 1 mm bis 5 mm, vorzugsweise von 2 mm bis 4 mm auf. Die Tiefe der Einkerbungen 40d, 40d' entspricht bevorzugt maximal 1 mm bis 3 mm, vorzugsweise von 1,2 mm bis 2 mm. Die Einkerbungen 40d, 40d' der Formschlusskontur 36d sind zu einer Drehvermeidung vorgesehen.

Die Figur 5 zeigt ein Körperpflegeprodukt 10e in einer schematischen Vorderansicht. Das Körperpflegeprodukt 10e ist von einem Mundhygienemittel gebildet. Das Körperpflegeprodukt 10e ist im vorliegenden Fall als ein Flosser ausgebildet.

Das Körperpflegeprodukt 10e weist eine Anwendungseinheit 12e auf. Ferner weist das Körperpflegeprodukt 10e eine Griffeinheit 14e auf, welche einen materiellen Griffkörper 16e aufweist. Des Weiteren weist das Körperpflegeprodukt 10e eine Verbindungseinheit 18e auf, welche die Anwendungseinheit 12e mit der Griffeinheit 14e verbindet.

Die Anwendungseinheit 12e bildet einen Flosserkopf des Körperpflegeprodukts 10e. Die Anwendungseinheit 12e weist zumindest ein Zahnseidefaden 24e auf. Der Zahnseidefaden 24e ist von einer Zahnseide gebildet. Im vorliegenden Fall ist die Anwendungseinheit 12e als ein Zahnseidefaden ausgebildet. Der Zahnseidefaden 24e bildet eine Verbindung mit der Verbindungseinheit 18e.

Die Griffeinheit 14e ist zu einem Greifen durch den Bediener vorgesehen. Die Griffeinheit 14e weist den materiellen Griffkörper 16e auf. Der materielle Griffkörper 16e der Griffeinheit 14e weist einen Kopfbereich 66e auf. Ferner weist der materielle Griffkörper 16e der Griffeinheit 14e einen Griffbereich 68e auf. Der Kopfbereich 66e ist zu einer Anbindung der Anwendungseinheit 12e vorgesehen. Der materielle Griffkörper 16e weist zu der Anwendungseinheit 12e hin zumindest zwei Arme 26e, 26e' auf. Der Kopfbereich 66e ist als U-förmige Geometrie mit zwei Armen 26e, 26e' ausgebildet.

Der materielle Griffkörper 16e besteht zumindest zu einem Großteil aus einem Papierwerkstoff. Der materielle Griffkörper 16e besteht beispielhaft vollständig aus einem Papierwerkstoff.

Das Körperpflegeprodukt 10e weist ferner die Verbindungseinheit 18e auf. Die Verbindungseinheit 18e weist ein mit der Anwendungseinheit 12e verbundenes Verbindungselement 20e und ein mit der Griffeinheit 14e verbundenes weiteres Verbindungselement 22e auf. Das Verbindungselement 20e und das weitere Verbindungselement 22e sind korrespondierend ausgebildet. Ferner ist das Verbindungselement 20e der Verbindungseinheit 18e einstückig mit der Anwendungseinheit 12e ausgebildet. Das Verbindungselement 20e bildet insbesondere einen Teil der Anwendungseinheit 12e. Das weitere Verbindungselement 22e der Verbindungseinheit 18e ist zumindest teilweise einstückig mit der Griffeinheit 14e ausgebildet. Das weitere Verbindungselement 22e der Verbindungseinheit 18e ist einstückig mit dem Griffkörper 16e ausgebildet. Das weitere Verbindungselement 22e der Verbindungseinheit 18e ist einteilig mit dem Griffkörper 16e ausgebildet. Das weitere Verbindungselement 22e der Verbindungseinheit 18e bildet daher einen Teil des Griffkörpers 16e. Das weitere Verbindungselement 22e der Verbindungseinheit 18e besteht daher ebenfalls zu einem Großteil, insbesondere vollständig, aus einem Papierwerkstoff.

Das weitere Verbindungselement 22e ist in einem Endbereich des Griffkörpers 16e ausgebildet. Die Arme 26e, 26e' des Griffkörpers 16e bilden in ihren Endbereichen das weitere Verbindungselement 22e aus, an welchem die Anwendungseinheit 12e fixiert ist. Das weitere Verbindungselement 22e bildet an den Enden der Arme 26e, 26e' zwei Verbindungsbereiche 28e, 28d' aus. An jedem der Arme 26e, 26e' ist jeweils ein Verbindungsbereich 28e, 28e' ausgebildet.

Das Verbindungselement 20e der Verbindungseinheit 18e ist zumindest teilweise stoffschlüssig mit dem weiteren Verbindungselement 22e der Verbindungseinheit 18e verbunden. Das Verbindungselement 20e der Verbindungseinheit 18e ist zumindest teilweise formschlüssig mit dem weiteren Verbindungselement 22e der Verbindungseinheit 18e verbunden. Das weitere Verbindungselement 22e der Verbindungseinheit 18e ist mit dem Verbindungselement 20e der Verbindungseinheit 18e umspritzt. Ferner ist der Zahnseidefaden 24e der Anwendungseinheit 12e von dem Verbindungselement 20e der Verbindungseinheit 18e umspritzt. Das Verbindungselement 20e der Verbindungseinheit 18e weist zwei Kappen 30e, 30e' auf, welche jeweils einen der Arme 26e, 26e' in einem Bereich des weiteren Verbindungselements 22e übergreifen. Die Kappen 30e, 30e' erstrecken sich jeweils klammerartig um die Arme 26e, 26e'. Die Kappen 30e, 30e' des Verbindungselements 20e erstrecken sich jeweils klammerartig von der Zahnseidefadenseite her über die Arme 26e, 26e'. Die Kappen 30e, 30e' des Verbindungselements 20e weisen in einer Ebene senkrecht zu einer Richtung des Filaments 24e 10ejeweils einen U-förmigen Querschnitt auf. Der Zahnseidefaden 24e ist dabei von den Kappen 30e, 30e' des Verbindungselements 20e umspritzt. Das Verbindungselement 20e verbindet den Zahnseidefaden 24e mit den Armen 26e, 26e' des Griffkörpers 16e. Der Zahnseidefaden 24e liegt nicht am Griffkörper 16e an.

Das Verbindungselement 20e weist ferner einen Verbindungsbügel 32e auf, welcher die zwei Kappen 30e, 30e' miteinander verbindet. Der Verbindungsbügel 32e ist einteilig mit den Kappen 30e, 30e' ausgebildet. Der Verbindungsbügel 32e erstreckt sich über den Griffkörper 16e. Der Verbindungsbügel 32e folgt auf der Vorderseite dem U-förmigen Verlauf des Griffkörpers 16e in einem der Anwendungseinheit 12e zugewandten Endbereich. Bevorzugt ist der Verbindungsbügel 32e auf den Griffkörper 16e in einem Spritzgussverfahren aufgespritzt. Der Verbindungsbügel 32e ist dazu vorgesehen, eine Stabilität des Griffkörpers 16e zu unterstützen. Das Material des Verbindungsbügels 32e ist auf den Griffkörper 16e aufgebracht und über die Arme 26e, 26e' zum Ende der Arme 26e, 26e' geführt. Der Verbindungsbügel 32e weist eine kreisbogenförmige Erstreckung auf.

Das Verbindungselement 20e ist in einem Spritzgussverfahren hergestellt. Das Verbindungselement 20e weist zumindest einen Anspritzpunkt 34e auf, welcher an dem Verbindungsbügel 32e angeordnet ist. Der Anspritzpunkt 34e ist an dem Verbindungsbügel 32e zwischen der ersten Kappe 30e und der zweiten Kappe 30d' angeordnet. Der Anspritzpunkt 34e ist an einem Tiefpunkt des Verbindungsbügels 32e des U-förmigen Verlaufs des Griffkörpers 16e angeordnet. Der Anspritzpunkt 34e ist vorzugsweise so angeordnet, dass er zu beiden Kappen 30e, 30e' denselben Abstand aufweist bzw. dass der Verbindungsbügel 32e zwischen dem Anspritzpunkt 34e und der jeweiligen Kappe 30e, 30e' denselben Abstand aufweist.

Das weitere Verbindungselement 22e der Verbindungseinheit 18e weist zumindest eine Formschlusskontur 36e auf, welche dazu vorgesehen ist, einen Formschluss mit dem Verbindungselement 20e auszubilden. Das weitere Verbindungselement 22e weist an beiden Armen 26e, 26d' jeweils eine Formschlusskontur 36e auf. Die Formschlusskontur 36e ist derart gestaltet, dass keine Rotation des Verbindungselements 20e möglich ist. Die Formschlusskontur 36e ist in den Verbindungsbereichen 28e, 28e' angeordnet. Die Formschlusskontur 36e des weiteren Verbindungselements 22e ist zu einer Verdrehsicherung des Verbindungselements 20e vorgesehen. Die Formschlusskontur 36e des weiteren Verbindungselements 22e weist zumindest eine Durchgangsausnehmung 38e, 38e' auf. Die Formschlusskontur 36e des weiteren Verbindungselements 22e weist zwei Durchgangsausnehmungen 38e, 38e' auf, wobei jeweils eine Durchgangsausnehmung 38e, 38e' in jeweils einem der Arme 26e, 26e' angeordnet ist. Die Formschlusskontur 36e bildet sich durch die Durchgangsausnehmung 38e, 38e' sowie die Außenkontur der Arme 26e, 26e' aus. Das Verbindungselement 20e erstreckt sich jeweils durch die Durchgangsausnehmungen 38e, 38e'. Die Kappen 30e, 30e' erstrecken sich jeweils durch die Durchgangsausnehmungen 38e, 38e'. Die zumindest eine Durchgangsausnehmung 38e, 38e' ist beispielhaft von einem runden Loch gebildet.

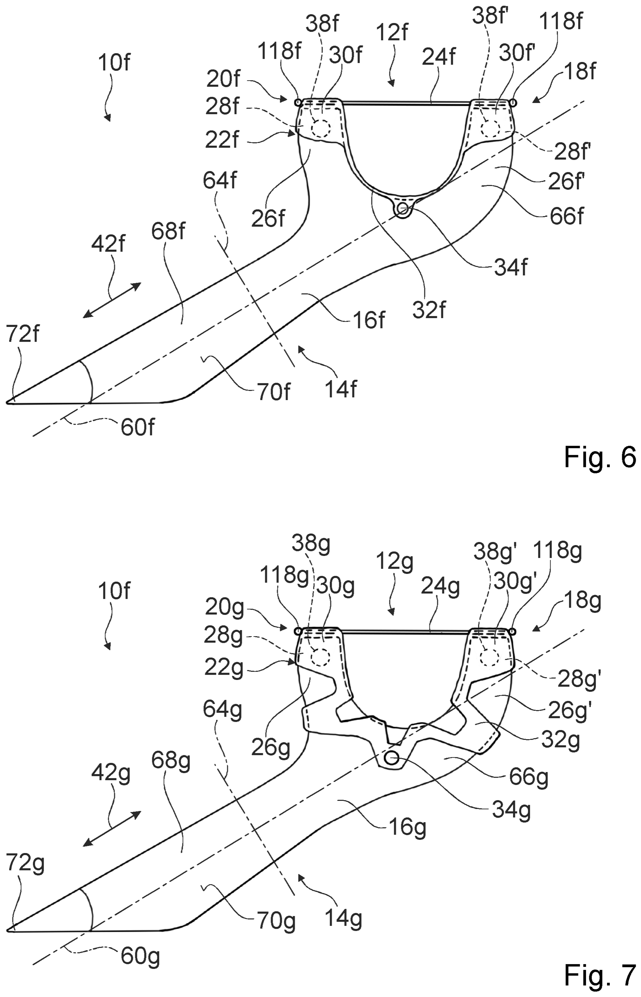

Die Figur 6 zeigt ein Körperpflegeprodukt 10f in einer schematischen Vorderansicht. Das Körperpflegeprodukt 10f ist von einem Mundhygienemittel gebildet. Das Körperpflegeprodukt 10f ist im vorliegenden Fall als ein Flosser ausgebildet.

Das Körperpflegeprodukt 10f weist eine Anwendungseinheit 12f auf. Ferner weist das Körperpflegeprodukt 10f eine Griffeinheit 14f auf, welche einen materiellen Griffkörper 16f aufweist. Des Weiteren weist das Körperpflegeprodukt 10f eine Verbindungseinheit 18f auf, welche die Anwendungseinheit 12f mit der Griffeinheit 14f verbindet.

Die Anwendungseinheit 12f bildet einen Flosserkopf des Körperpflegeprodukts 10f. Die Anwendungseinheit 12f weist zumindest ein Zahnseidefaden 24f auf. Der Zahnseidefaden 24f ist von einer Zahnseide gebildet. Im vorliegenden Fall ist die Anwendungseinheit 12f als ein Zahnseidefaden ausgebildet. Der Zahnseidefaden 24f bildet eine Verbindung mit der Verbindungseinheit 18f.

Die Griffeinheit 14f ist zu einem Greifen durch den Bediener vorgesehen. Die Griffeinheit 14f weist den materiellen Griffkörper 16f auf. Der materielle Griffkörper 16f der Griffeinheit 14f weist einen Kopfbereich 66f auf. Ferner weist der materielle Griffkörper 16f der Griffeinheit 14f einen Griffbereich 68f auf. Der Kopfbereich 66f ist zu einer Anbindung der Anwendungseinheit 12f vorgesehen. Der materielle Griffkörper 16f weist zu der Anwendungseinheit 12f hin zumindest zwei Arme 26f, 26f' auf. Der Kopfbereich 66f ist als U-förmige Geometrie mit zwei Armen 26f, 26f' ausgebildet.

Der materielle Griffkörper 16f besteht zumindest zu einem Großteil aus einem Papierwerkstoff. Der materielle Griffkörper 16f besteht beispielhaft vollständig aus einem Papierwerkstoff.

Das Körperpflegeprodukt 10f weist ferner die Verbindungseinheit 18f auf. Die Verbindungseinheit 18f weist ein mit der Anwendungseinheit 12f verbundenes Verbindungselement 20f und ein mit der Griffeinheit 14f verbundenes weiteres Verbindungselement 22f auf. Das Verbindungselement 20f und das weitere Verbindungselement 22f sind korrespondierend ausgebildet. Ferner ist das Verbindungselement 20f der Verbindungseinheit 18f einstückig mit der Anwendungseinheit 12f ausgebildet. Das Verbindungselement 20f bildet insbesondere einen Teil der Anwendungseinheit 12f. Das weitere Verbindungselement 22f der Verbindungseinheit 18f ist zumindest teilweise einstückig mit der Griffeinheit 14f ausgebildet. Das weitere Verbindungselement 22f der Verbindungseinheit 18f ist einstückig mit dem Griffkörper 16f ausgebildet. Das weitere Verbindungselement 22f der Verbindungseinheit 18f ist einteilig mit dem Griffkörper 16f ausgebildet. Das weitere Verbindungselement 22f der Verbindungseinheit 18f bildet daher einen Teil des Griffkörpers 16f. Das weitere Verbindungselement 22f der Verbindungseinheit 18f besteht daher ebenfalls zu einem Großteil, insbesondere vollständig, aus einem Papierwerkstoff.

Das weitere Verbindungselement 22f ist in einem Endbereich des Griffkörpers 16f ausgebildet. Die Arme 26f, 26f' des Griffkörpers 16f bilden in ihren Endbereichen das weitere Verbindungselement 22f aus, an welchem die Anwendungseinheit 12f fixiert ist. Das weitere Verbindungselement 22f bildet an den Enden der Arme 26f, 26f' zwei Verbindungsbereiche 28f, 28f' aus. An jedem der Arme 26f, 26f' ist jeweils ein Verbindungsbereich 28f, 28f' ausgebildet.

Das Verbindungselement 20f der Verbindungseinheit 18f ist zumindest teilweise stoffschlüssig mit dem weiteren Verbindungselement 22f der Verbindungseinheit 18f verbunden. Das Verbindungselement 20f der Verbindungseinheit 18f ist zumindest teilweise formschlüssig mit dem weiteren Verbindungselement 22f der Verbindungseinheit 18f verbunden. Das weitere Verbindungselement 22f der Verbindungseinheit 18f ist mit dem Verbindungselement 20f der Verbindungseinheit 18f umspritzt. Ferner ist der Zahnseidefaden 24f der Anwendungseinheit 12f von dem Verbindungselement 20f der Verbindungseinheit 18f umspritzt. Das Verbindungselement 20f der Verbindungseinheit 18f weist zwei Kappen 30f, 30f' auf, welche jeweils einen der Arme 26f, 26f' in einem Bereich des weiteren Verbindungselements 22f übergreifen. Die Kappen 30f, 30f' erstrecken sich jeweils klammerartig um die Arme 26f, 26f'. Die Kappen 30f, 30f' des Verbindungselements 20f erstrecken sich jeweils klammerartig von der Zahnseidenfadenseite her über die Arm 26f, 26f'. Die Kappen 30f, 30f' des Verbindungselements 20f weisen in einer Ebene senkrecht zu einer Richtung des Zahnseidefadens 24f jeweils einen U-förmigen Querschnitt auf. Der Zahnseidefaden 24f ist dabei von den Kappen 30f, 30f' des Verbindungselements 20f umspritzt. Das Verbindungselement 20f verbindet den Zahnseidefaden 24f mit den Armen 26f, 26f' des Griffkörpers 16f. Der Zahnseidefaden 24f liegt nicht am Griffkörper 16f an.

Das Verbindungselement 20f weist ferner einen Verbindungsbügel 32f auf, welcher die zwei Kappen 30f, 30f' miteinander verbindet. Der Verbindungsbügel 32f ist einteilig mit den Kappen 30f, 30f' ausgebildet. Der Verbindungsbügel 32f erstreckt sich über den Griffkörper 16f. Der Verbindungsbügel 32f folgt dem U-förmigen Verlauf des Griffkörpers 16f in einem der Anwendungseinheit 12f zugewandten Endbereich. Der Verbindungsbügel 32f überdeckt eine Stanzkante des Griffkörpers 16f auf einer Innenseite der Arme 26f, 26f' und dient als Schutz. Das Material des Verbindungsbügels 32f ist hierzu auf der schmalen Kante im Bogen zwischen den Armen 26f, 26f' geführt und überdeckt eine scharfe Kante des Griffkörpers 16f. Bevorzugt ist der Verbindungsbügel 32f auf den Griffkörper 16f in einem Spritzgussverfahren aufgespritzt. Das Material des Verbindungsbügels 32f ist auf den Griffkörper 16f aufgebracht und über die Arme 26f, 26f' zum Ende der Arme 26f, 26f' geführt. Der Verbindungsbügel 32f weist eine kreisbogenförmige Erstreckung auf.

Das Verbindungselement 20f ist in einem Spritzgussverfahren hergestellt. Das Verbindungselement 20f weist zumindest einen Anspritzpunkt 34f auf, welcher an dem Verbindungsbügel 32f angeordnet ist. Der Anspritzpunkt 34f ist an dem Verbindungsbügel 32f zwischen der ersten Kappe 30f und der zweiten Kappe 30f' angeordnet. Der Anspritzpunkt 34f ist an einem Tiefpunkt des Verbindungsbügels 32f des U-förmigen Verlaufs des Griffkörpers 16f angeordnet. Der Anspritzpunkt 34f ist vorzugsweise so angeordnet, dass er zu beiden Kappen 30f, 30f' denselben Abstand aufweist bzw. dass der Verbindungsbügel 32f zwischen dem Anspritzpunkt 34f und der jeweiligen Kappe 30f, 30f' denselben Abstand aufweist.

Das weitere Verbindungselement 22f der Verbindungseinheit 18f weist zumindest eine Formschlusskontur 36f auf, welche dazu vorgesehen ist, einen Formschluss mit dem Verbindungselement 20f auszubilden. Das weitere Verbindungselement 22f weist an beiden Armen 26f, 26f' jeweils eine Formschlusskontur 36f auf. Die Formschlusskontur 36f ist derart gestaltet, dass keine Rotation des Verbindungselements 20f möglich ist. Die Formschlusskontur 36f ist in den Verbindungsbereichen 28f, 28f' angeordnet. Die Formschlusskontur 36f des weiteren Verbindungselements 22f ist zu einer Verdrehsicherung des Verbindungselements 20f vorgesehen. Die Formschlusskontur 36f des weiteren Verbindungselements 22f weist zumindest eine Durchgangsausnehmung 38f, 38d' auf. Die Formschlusskontur 36f des weiteren Verbindungselements 22f weist zwei Durchgangsausnehmungen 38f, 38f' auf, wobei jeweils eine Durchgangsausnehmung 38f, 38f' in jeweils einem der Arme 26f, 26f' angeordnet ist. Die Formschlusskontur 36f bildet sich durch die Durchgangsausnehmung 38f, 38f' sowie die Außenkontur der Arme 26f, 26f' aus. Das Verbindungselement 20f erstreckt sich jeweils durch die Durchgangsausnehmungen 38f, 38f'. Die Kappen 30f, 30f' erstrecken sich jeweils durch die Durchgangsausnehmungen 38f, 38f'. Die zumindest eine Durchgangsausnehmung 38f, 38f' ist beispielhaft von einem runden Loch gebildet.

Die Figur 7 zeigt ein Körperpflegeprodukt 10g in einer schematischen Vorderansicht. Das Körperpflegeprodukt 10g ist von einem Mundhygienemittel gebildet. Das Körperpflegeprodukt 10g ist im vorliegenden Fall als ein Flosser ausgebildet.

Das Körperpflegeprodukt 10g weist eine Anwendungseinheit 12g auf. Ferner weist das Körperpflegeprodukt 10g eine Griffeinheit 14g auf, welche einen materiellen Griffkörper 16g aufweist. Des Weiteren weist das Körperpflegeprodukt 10g eine Verbindungseinheit 18g auf, welche die Anwendungseinheit 12g mit der Griffeinheit 14g verbindet.

Die Anwendungseinheit 12g bildet einen Flosserkopf des Körperpflegeprodukts 10g. Die Anwendungseinheit 12g weist zumindest einen Zahnseidefaden 24g auf. Der Zahnseidefaden 24g ist von einer Zahnseide gebildet. Im vorliegenden Fall ist die Anwendungseinheit 12g als ein Zahnseidefaden ausgebildet. Der Zahnseidefaden 24g bildet eine Verbindung mit der Verbindungseinheit 18g.

Die Griffeinheit 14g ist zu einem Greifen durch den Bediener vorgesehen. Die Griffeinheit 14g weist den materiellen Griffkörper 16g auf. Der materielle Griffkörper 16g der Griffeinheit 14g weist einen Kopfbereich 66g auf. Ferner weist der materielle Griffkörper 16g der Griffeinheit 14g einen Griffbereich 68g auf. Der Kopfbereich 66g ist zu einer Anbindung der Anwendungseinheit 12g vorgesehen. Der materielle Griffkörper 16g weist zu der Anwendungseinheit 12g hin zumindest zwei Arme 26g, 26g' auf. Der Kopfbereich 66g ist als U-förmige Geometrie mit zwei Armen 26g, 26g' ausgebildet.

Der materielle Griffkörper 16g besteht zumindest zu einem Großteil aus einem Papierwerkstoff. Der materielle Griffkörper 16g besteht beispielhaft vollständig aus einem Papierwerkstoff.

Das Körperpflegeprodukt 10g weist ferner die Verbindungseinheit 18g auf. Die Verbindungseinheit 18g weist ein mit der Anwendungseinheit 12g verbundenes Verbindungselement 20g und ein mit der Griffeinheit 14g verbundenes weiteres Verbindungselement 22g auf. Das Verbindungselement 20g und das weitere Verbindungselement 22g sind korrespondierend ausgebildet. Ferner ist das Verbindungselement 20g der Verbindungseinheit 18g einstückig mit der Anwendungseinheit 12g ausgebildet. Das Verbindungselement 20g bildet insbesondere einen Teil der Anwendungseinheit 12g. Das weitere Verbindungselement 22g der Verbindungseinheit 18g ist zumindest teilweise einstückig mit der Griffeinheit 14g ausgebildet. Das weitere Verbindungselement 22g der Verbindungseinheit 18g ist einstückig mit dem Griffkörper 16g ausgebildet. Das weitere Verbindungselement 22g der Verbindungseinheit 18g ist einteilig mit dem Griffkörper 16g ausgebildet. Das weitere Verbindungselement 22g der Verbindungseinheit 18g bildet daher einen Teil des Griffkörpers 16g. Das weitere Verbindungselement 22g der Verbindungseinheit 18g besteht daher ebenfalls zu einem Großteil, insbesondere vollständig, aus einem Papierwerkstoff.

Das weitere Verbindungselement 22g ist in einem Endbereich des Griffkörpers 16g ausgebildet. Die Arme 26g, 26g' des Griffkörpers 16g bilden in ihren Endbereichen das weitere Verbindungselement 22g aus, an welchem die Anwendungseinheit 12g fixiert ist. Das weitere Verbindungselement 22g bildet an den Enden der Arme 26g, 26e' zwei Verbindungsbereiche 28g, 28g' aus. An jedem der Arme 26g, 26g' ist jeweils ein Verbindungsbereich 28g, 28g' ausgebildet.

Das Verbindungselement 20g der Verbindungseinheit 18g ist zumindest teilweise stoffschlüssig mit dem weiteren Verbindungselement 22g der Verbindungseinheit 18g verbunden. Das Verbindungselement 20g der Verbindungseinheit 18g ist zumindest teilweise formschlüssig mit dem weiteren Verbindungselement 22g der Verbindungseinheit 18g verbunden. Das weitere Verbindungselement 22g der Verbindungseinheit 18g ist mit dem Verbindungselement 20g der Verbindungseinheit 18g umspritzt. Ferner ist der Zahnseidefaden 24g der Anwendungseinheit 12g von dem Verbindungselement 20g der Verbindungseinheit 18g umspritzt. Das Verbindungselement 20g der Verbindungseinheit 18g weist zwei Kappen 30g, 30g' auf, welche jeweils einen der Arme 26g, 26g' in einem Bereich des weiteren Verbindungselements 22g übergreifen. Die Kappen 30g, 30g' erstrecken sich jeweils klammerartig um die Arme 26g, 26g'. Die Kappen 30g, 30g' des Verbindungselements 20g erstrecken sich jeweils klammerartig von der Zahnseidefadenseite her über die Arme 26g, 26g'. Die Kappen 30g, 30g' des Verbindungselements 20g weisen in einer Ebene senkrecht zu einer 10gRichtung des Zahnseidefadens 24g jeweils einen U-förmigen Querschnitt auf. Der Zahnseidefaden 24g ist dabei von den Kappen 30g, 30g' des Verbindungselements 20g umspritzt. Das Verbindungselement 20g verbindet den Zahnseidefaden 24g mit den Armen 26g, 26g' des Griffkörpers 16g. Der Zahnseidefaden 24g liegt nicht am Griffkörper 16g an.

Das Verbindungselement 20g weist ferner einen Verbindungsbügel 32g auf, welcher die zwei Kappen 30g, 30g' miteinander verbindet. Der Verbindungsbügel 32g ist einteilig mit den Kappen 30g, 30g' ausgebildet. Der Verbindungsbügel 32g erstreckt sich über den Griffkörper 16g. Der Verbindungsbügel 32g folgt dem U-förmigen Verlauf des Griffkörpers 16g in einem der Anwendungseinheit 12g zugewandten Endbereich. Der Verbindungsbügel 32g überdeckt teilweise eine Stanzkante des Griffkörpers 16g auf einer Innenseite sowie einer Außenseite der Arme 26g, 26g' und dient als Schutz. Der Verbindungsbügel 32g erstreckt sich insbesondere in einem Zick-Zack-Muster über die Arme 26g, 26g'. Die Arme 26g, 26g' werden somit umschlungen, der Verbindungsbügel 32g breitet sich ab dem Anspritzpunkt 34g auf der Vorderseite wie auch der Rückseite aus und liegt über den inneren wie den äußeren Kanten des Griffkörpers 16g. Der Verbindungsbügel 32g ist als ein Bumper ausgebildet, welcher in der Anwendung das Zahnfleisch eines Benutzers von einer Verletzung an der Kante des Griffkörpers 16g schützt. Bevorzugt ist der Verbindungsbügel 32g auf den Griffkörper 16g in einem Spritzgussverfahren aufgespritzt. Das Material des Verbindungsbügels 32g ist auf den Griffkörper 16g aufgebracht und über die Arme 26g, 26g' zum Ende der Arme 26g, 26g' geführt. Der Verbindungsbügel 32g weist eine kreisbogenförmige Erstreckung auf.

Das Verbindungselement 20g ist in einem Spritzgussverfahren hergestellt. Das Verbindungselement 20g weist zumindest einen Anspritzpunkt 34g auf, welcher an dem Verbindungsbügel 32g angeordnet ist. Der Anspritzpunkt 34g ist an dem Verbindungsbügel 32g zwischen der ersten Kappe 30g und der zweiten Kappe 30g' angeordnet. Der Anspritzpunkt 34g ist an einem Tiefpunkt des Verbindungsbügels 32g des U-förmigen Verlaufs des Griffkörpers 16g angeordnet. Der Anspritzpunkt 34g ist vorzugsweise so angeordnet, dass er zu beiden Kappen 30g, 30g' denselben Abstand aufweist bzw. dass der Verbindungsbügel 32g zwischen dem Anspritzpunkt 34g und der jeweiligen Kappe 30g, 30g' denselben Abstand aufweist.

Das weitere Verbindungselement 22g der Verbindungseinheit 18g weist zumindest eine Formschlusskontur 36g auf, welche dazu vorgesehen ist, einen Formschluss mit dem Verbindungselement 20g auszubilden. Das weitere Verbindungselement 22g weist an beiden Armen 26g, 26g' jeweils eine Formschlusskontur 36g auf. Die Formschlusskontur 36g ist derart gestaltet, dass keine Rotation des Verbindungselements 20g möglich ist. Die Formschlusskontur 36g ist in den Verbindungsbereichen 28g, 28g' angeordnet. Die Formschlusskontur 36g des weiteren Verbindungselements 22g ist zu einer Verdrehsicherung des Verbindungselements 20g vorgesehen. Die Formschlusskontur 36g des weiteren Verbindungselements 22g weist zumindest eine Durchgangsausnehmung 38g, 38g' auf. Die Formschlusskontur 36g des weiteren Verbindungselements 22g weist zwei Durchgangsausnehmungen 38g, 38g' auf, wobei jeweils eine Durchgangsausnehmung 38g, 38g' in jeweils einem der Arme 26g, 26g' angeordnet ist. Die Formschlusskontur 36g bildet sich durch die Durchgangsausnehmung 38g, 38g' sowie die Außenkontur der Arme 26g, 26g' aus. Das Verbindungselement 20g erstreckt sich jeweils durch die Durchgangsausnehmungen 38g, 38g'. Die Kappen 30g, 30g' erstrecken sich jeweils durch die Durchgangsausnehmungen 38g, 38g'. Die zumindest eine Durchgangsausnehmung 38g, 38g' ist beispielhaft von einem runden Loch gebildet. Der Verbindungsbügel 32g mit seiner Zick-Zack Ausgestaltung um die Arme 26g, 26g' unterstützt den Formschluss bzw. unterstützt, dass keine Rotation ermöglicht wird, da er aufgrund seiner Ausgestaltung die Kappen 30g, 30g' stabilisiert.

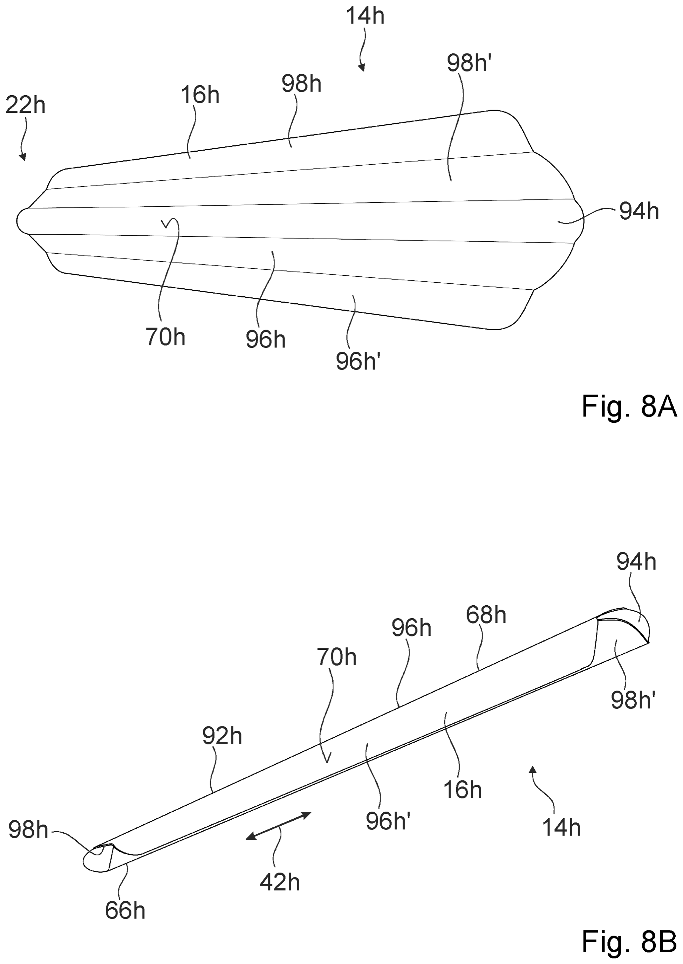

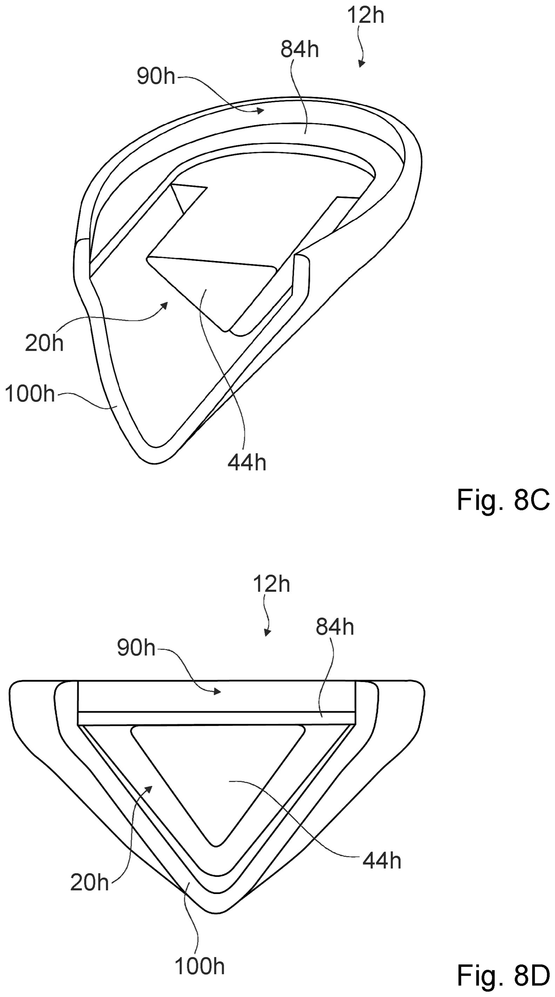

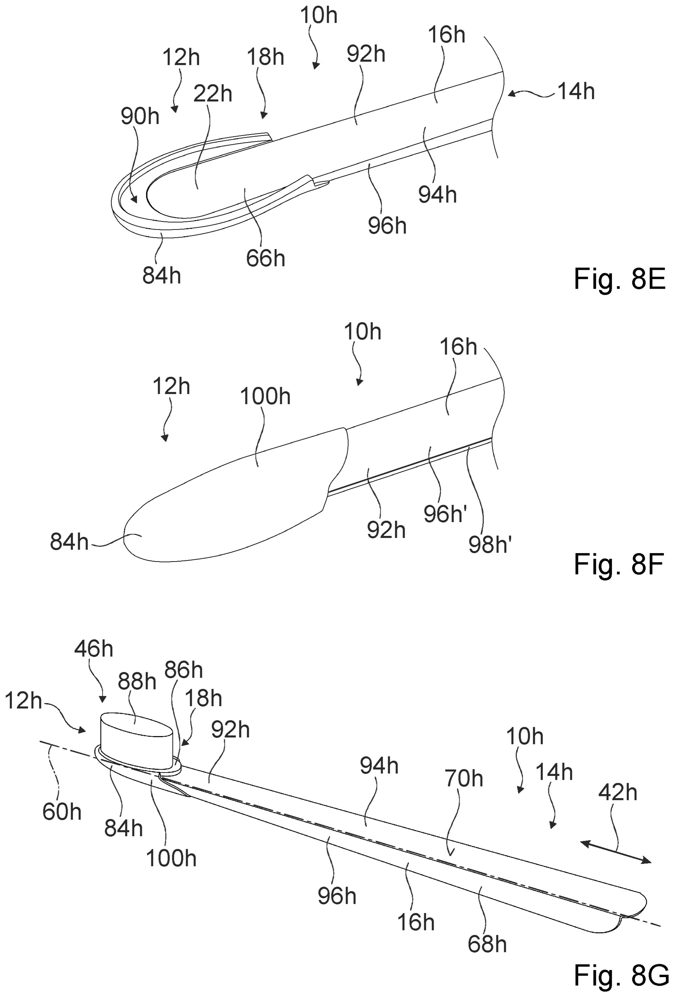

Im Folgenden wird auf die Figuren 8A bis 8G Bezug genommen, welche unterschiedliche Ansichten und Fertigungsstufen des Körperpflegeprodukts 10h zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 8G zeigt das fertige Körperpflegeprodukt 10h. Die Figur 8A und Figur 8B zeigen eine Griffeinheit 14h eines Körperpflegeprodukts 10h. Das Körperpflegeprodukt 10h ist von einem Mundhygienemittel gebildet. Das Körperpflegeprodukt 10h ist im vorliegenden Fall als eine Zahnbürste ausgebildet.

Das Körperpflegeprodukt 10h weist eine Anwendungseinheit 12h auf. Ferner weist das Körperpflegeprodukt 10h die Griffeinheit 14h auf, welche einen materiellen Griffkörper 16h aufweist. Des Weiteren weist das Körperpflegeprodukt 10h eine Verbindungseinheit 18h auf, welche die Anwendungseinheit 12h mit der Griffeinheit 14h verbindet.

Das Körperpflegeprodukt 10h weist eine Längsachse 60h, eine Höhenachse und eine Breitenachse auf. Die Längsachse 60h ist parallel zu einer Haupterstreckungsrichtung 42h des Körperpflegeprodukts 10h angeordnet. Ist das Körperpflegeprodukt 10h mit einer Rückseite auf eine ebene Oberfläche gelegt, sodass die Längsachse 60h parallel zu der Oberfläche angeordnet ist, ist die Höhenachse senkrecht zu der Längsachse 60h und senkrecht zu der Oberfläche und der Breitenachse angeordnet. Die Breitenachse ist senkrecht zu der Längsachse 60h und senkrecht zu der Höhenachse angeordnet.

Die Anwendungseinheit 12h weist einen Bürstenkopf 46h auf. Die Anwendungseinheit 12h ist von einem Bürstenkopf 46h gebildet. Im vorliegenden Fall ist die Anwendungseinheit 12h als ein Zahnbürstenkopf ausgebildet. Die Anwendungseinheit 12h weist einen Grundkörper 84h auf. Der Grundkörper 84h bildet eine Verbindung mit der Verbindungseinheit 18h. Der Grundkörper 84h ist einteilig mit einem Verbindungselement 20h der Verbindungseinheit 18h ausgebildet. Die Anwendungseinheit 12h weist ferner ein Borstenplättchen 86h mit mehreren Borsten 88h auf. Die Borsten 88h sind der Übersichtlichkeit halber als ein Volumenkörper dargestellt. Der Grundkörper 84h der Anwendungseinheit 12h weist einen Aufnahmebereich 90h zu einer Aufnahme des Borstenplättchens 86h auf. Eine Verbindung zwischen dem Borstenplättchen 86h und dem Grundkörper 84h erfolgt durch Kleben, Schweißen, Rasten und/oder Nieten. Allenfalls ergibt sich parallel noch die Verbindung zur Griffeinheit 14h im Bereich der Vorderseite des Griffkörpers 16h. Dabei kann beispielsweise die Verbindung zu dem Griffkörper 16h gesichert werden.

Die Griffeinheit 14h ist zu einem Greifen durch den Bediener vorgesehen. Die Griffeinheit 14h weist den materiellen Griffkörper 16h auf. Der materielle Griffkörper 16h der Griffeinheit 14h weist einen Kopfbereich 66h auf. Ferner weist der materielle Griffkörper 16h der Griffeinheit 14h einen Griffbereich 68h und einen zwischen dem Griffbereich 68h und dem Kopfbereich 66h angeordneten Halsbereich 92h auf. Der Kopfbereich 66h ist zu einer Anbindung der Anwendungseinheit 12h vorgesehen. Die Griffeinheit 14h weist zumindest eine Grifffläche 70h auf, welche eine Oberfläche des materiellen Griffkörpers 16h ausbildet. Der Griffkörper 16h wird aus dem ungefalteten Zustand, abgebildet in Fig. 8A, zu einem dreidimensionalen Körper gefaltet, abgebildet in Figur 8B. Der Griffkörper 16h weist in einem gefalteten Zustand einen dreieckigen Querschnitt auf, welcher sich aus drei Seiten des Griffkörpers 16h zusammensetzt. Der Griffkörper 16h ist in einem gefalteten Zustand hohl ausgebildet. Der Zuschnitt des Griffkörpers 16h besteht insbesondere aus einem Papierbogen, welcher aus zumindest einer, insbesondere genau einer Schicht besteht. Der Griffkörper 16h weist von 1 bis 10 Lagen, vorzugsweise von 1 bis 5 Lagen auf. Der materielle Griffkörper 16h weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16h ab. Es können insbesondere viele dünne Lagen oder wenige dicke Lagen realisiert werden. Die Lagen werden vorzugsweise verbunden. Durch das Realisieren des materiellen Griffkörpers16h in mehreren Lagen ergeben sich Stabilitätsvorteile gegenüber einem Körper aus einer oder weniger Lagen. Der Griffkörper 16h weist eine Vorderwand 94h und zwei Seitenwände 96h, 96h' auf. Der Griffkörper 16h ist aus einem Zuschnitt hergestellt. Die beiden Seitenwände 96h, 96h' zusammen mit den zwei Seiteninnenwänden 98h, 98h' bilden im Endprodukt eine Doppellage aus. Der Zuschnitt des Griffkörpers 16h besteht daher insbesondere aus fünf Seiten, und zwar der Vorderwand 94h, den zwei Seitenwänden 96h, 96h' und zwei Seiteninnenwänden 98h, 98h'. Zumindest eine, insbesondere beide, der Doppellagen sind geklebt. Die beiden Schichten der Seitenwände 96h, 96h' und die jeweiligen Seiteninnenwände 98h, 98h' sind daher miteinander verklebt. Der Griffkörper 16h ist in Längsrichtung konisch gestaltet. Im gefalteten Zustand ist der Griffkörper 16h auf der Bürstenkopf-Seite offen, damit später das Verbindungselement 20h eingefahren werden kann. Beispielhaft ist der Griffkörper 16h auch an einem unteren, freien Ende offen gestaltet. Die Vorderwand 94h des Griffkörpers 16h ist länger als die beiden Seitenwände 96h, 96h' und die jeweiligen Seiteninnenwände 98h, 98h'. Es bildet sich insbesondere ein Verlauf von einer Vorderseite des freien Endes hin zu den Seitenflächen aus, welche insbesondere zurückspringen. Die Längserstreckung des Griffkörpers 16h reduziert sich zur hinteren Faltkante hin. Ferner ist der Griffkörper 16h und/oder das weitere Verbindungselement 22h zu der Anwendungseinheit 12h hin offen gestaltet. Dabei ist die Vorderseite des Griffkörpers 16h länger als die Seiten, sodass sich eine Einführgeometrie für das Verbindungselement 20h ausbildet. Eine Körperstabilität des Griffkörpers 16h wird durch die Faltung bzw. durch das dadurch entstehende Fachwerk im Querschnitt sowie die Doppellagigkeit erreicht. Ein Winkel zwischen der Vorderwand 94h und den Seitenwänden 96h, 96h' mit den jeweiligen Seiteninnenwänden 98h, 98h' des Griffkörper 16h ist in einem gefalteten Zustand links und rechts symmetrisch, insbesondere zwischen 45° und 85°, vorzugsweise zwischen 55° und 75°. Zwischen den Seitenwänden 96h, 96h' mit den jeweiligen Seiteninnenwänden 98h, 98h' des Griffkörpers 16h beträgt der Winkel insbesondere zwischen 30° und 70°, vorzugsweise zwischen 40° und 60°. Die Länge des Griffkörpers 16h beträgt über alles von 130 mm bis 210 mm, vorzugsweise von 180 mm bis 200 mm. Die Breite des Griffkörpers 16h beträgt am freien Ende von 10 mm bis 22 mm, vorzugsweise von 12 mm bis 19 mm, und im Bereich der Anwendungseinheit 12h von 5 mm bis 13 mm, vorzugsweise von 7 mm bis 11 mm. Die Höhe des Griffkörpers 16h beträgt am freien Ende insbesondere von 10 mm bis 20 mm, vorzugsweise von 13 mm bis 17 mm, und in einem Bereich der Anwendungseinheit 12h von 3 mm bis 9 mm, vorzugsweise von 4 mm bis 7 mm.

In Fig. 8A ist ein Zuschnitt des Papierwerkstoffs für die Griffeinheit 14h gezeigt. Beim Falten um die Faltachsen werden die Teilschichten der Vorderwand 94h, der zwei Seitenwände 96h, 96h' und der zwei Seiteninnenwände 98h, 98h' gegeneinander gefaltet, sodass diese einen 3D-Körper bilden. Es bildet sich ein dreieckiger Querschnitt aus. Der materielle Griffkörper 16h bildet im montierten Zustand mindestens abschnittsweise eine hohle Pyramide mit 3-eckigem Querschnitt aus.

Der materielle Griffkörper 16h besteht zumindest zu einem Großteil aus einem Papierwerkstoff. Der materielle Griffkörper 16h besteht vollständig aus einem Papierwerkstoff. Der materielle Griffkörper 16h der Griffeinheit 14h weist zumindest eine Schicht aus einem Papierwerkstoff auf, welche dreidimensional geformt ausgebildet ist. Der Zuschnitt des materiellen Griffkörpers 16h besteht aus genau einer Schicht aus einem Papierwerkstoff.

Das Körperpflegeprodukt 10h weist ferner die Verbindungseinheit 18h auf. Die Verbindungseinheit 18h weist ein mit der Anwendungseinheit 12h verbundenes Verbindungselement 20h und ein mit der Griffeinheit 14h verbundenes weiteres Verbindungselement 22h auf. Das Verbindungselement 20h und das weitere Verbindungselement 22h sind korrespondierend ausgebildet. Ferner ist das Verbindungselement 20h der Verbindungseinheit 18h einstückig mit dem Grundkörper 84h der Anwendungseinheit 12h ausgebildet. Das Verbindungselement 20h bildet insbesondere einen Teil der Anwendungseinheit 12h. Das weitere Verbindungselement 22h der Verbindungseinheit 18h ist zumindest teilweise einstückig mit der Griffeinheit 14h ausgebildet. Das weitere Verbindungselement 22h der Verbindungseinheit 18h ist einstückig mit dem Griffkörper 16h ausgebildet. Das weitere Verbindungselement 22h der Verbindungseinheit 18h ist einteilig mit dem Griffkörper 16h ausgebildet. Das weitere Verbindungselement 22h der Verbindungseinheit 18h bildet daher einen Teil des Griffkörpers 16h. Das weitere Verbindungselement 22h der Verbindungseinheit 18h besteht daher ebenfalls zu einem Großteil, insbesondere vollständig, aus einem Papierwerkstoff. Das weitere Verbindungselement 22h ist in einem Endbereich des Griffkörpers 16h ausgebildet.

Das weitere Verbindungselement 22h ist in einem Querschnitt senkrecht zu einer Haupterstreckungsrichtung 42h in eine polygonale Form gefaltet, welche einen Aufnahmebereich begrenzt. Das weitere Verbindungselement 22h weist einen offenen, dreieckigen Querschnitt auf.

Das Verbindungselement 20h der Verbindungseinheit 18h ist zumindest teilweise formschlüssig mit dem weiteren Verbindungselement 22h der Verbindungseinheit 18h verbunden. Das Verbindungselement 20h weist einen Kernfortsatz 44h auf, welcher dazu vorgesehen ist, in den Aufnahmebereich des weiteren Verbindungselements 22h einzugreifen. Der Grundkörper 84h der Anwendungseinheit 12h ist von einem Schuh gebildet, welcher dazu vorgesehen ist, auf ein Ende des Griffkörpers 16h aufgeschoben zu werden. Der Kernfortsatz 44h dient als Stützgeometrie im Inneren. Der Kernfortsatz 44h folgt dem Querschnitt innen im Griffkörper 16h. Der Kernfortsatz 44h ist von einem Zylinder mit einer dreieckigen Grundseite gebildet. Der Kernfortsatz 44h ist einseitig freigestellt, damit der Griffkörper 16h eingefahren werden kann. Der Kernfortsatz 44h ist kürzer als eine den Kernfortsatz 44h teilweise umgreifende Hülle 100h des Grundkörpers 84h gestaltet. Die Hülle 100h des Grundkörpers 84h liegt außen an dem Griffkörper 16h in einem Bereich des weiteren Verbindungselements 22h an. Der Griffkörper 16h ist in einem montierten Zustand zwischen der Hülle 100h und dem Kernfortsatz 44h geklemmt. Zusätzlich kann der Kernfortsatz 44h in dem Griffkörper 16h verrastet und/oder verklebt sein, insbesondere mit einem Hinterschnitt. Ferner kann der Griffkörper 16h zwischen dem Kernfortsatz 44h und dem Borstenplättchen 86h geklemmt und/oder verklebt werden.

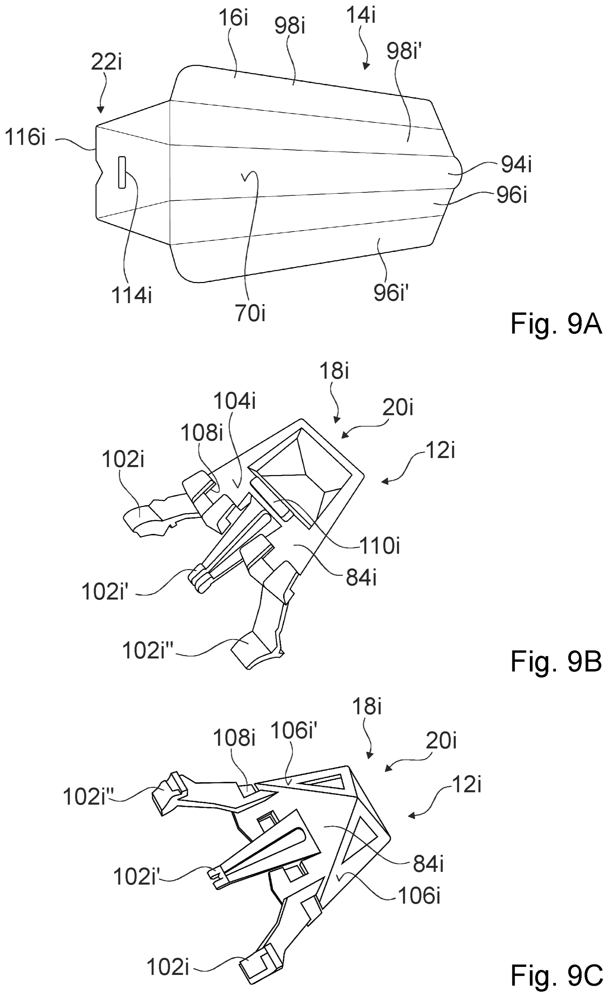

Im Folgenden wird auf die Figuren 9A bis 9E Bezug genommen, welche unterschiedliche Ansichten und Fertigungsstufen des Körperpflegeprodukts 10i zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 9A zeigt eine Griffeinheit 14i eines Körperpflegeprodukts 10i in einem flachen, ungefalteten Zustand. Das Körperpflegeprodukt 10i ist im vorliegenden Fall als ein Rasierer ausgebildet.

Das Körperpflegeprodukt 10i weist eine Anwendungseinheit 12i auf. Ferner weist das Körperpflegeprodukt 10i eine Griffeinheit 14i auf, welche einen materiellen Griffkörper 16i aufweist. Des Weiteren weist das Körperpflegeprodukt 10i eine Verbindungseinheit 18i auf, welche die Anwendungseinheit 12i mit der Griffeinheit 14i verbindet.

Die Anwendungseinheit 12i bildet einen Rasierkopf des Körperpflegeprodukts 10i. Die Anwendungseinheit 12i weist insbesondere einen als Klingenträger ausgebildeten Grundkörper 84i auf. Der Grundkörper 84i der Anwendungseinheit 12i ist vollständig aus einer Hartkomponente ausgebildet. Es wäre jedoch auch denkbar, dass der Grundkörper 84i der Anwendungseinheit 12i aus einer Hartkomponente und einer Weichkomponente gebildet ist. Der Grundkörper 84i der Anwendungseinheit 12i bildet einen statischen Klingenträger aus, welcher zu einer beweglichen, insbesondere schwenkbaren Aufnahme eines Klingenkopfes 48i vorgesehen ist. Die Anwendungseinheit 12i weist den Klingenkopf 48i auf. Die Anwendungseinheit 12i weist den an dem Grundkörper 84i angeordneten Klingenkopf 48i auf. Der Grundkörper 84i weist drei Gelenkarme 102i, 102i', 102i" auf, welche zu einer schwenkbaren Aufnahme des Klingenkopfes 48i vorgesehen sind. Der Klingenkopf 48i kann insbesondere auswechselbar mit dem Grundkörper 84i verbunden sein.

Die Griffeinheit 14i ist zu einem Greifen durch den Bediener vorgesehen. Die Griffeinheit 14i weist den materiellen Griffkörper 16i auf. Der materielle Griffkörper 16i der Griffeinheit 14i weist einen Kopfbereich 66i auf. Ferner weist der materielle Griffkörper 16i der Griffeinheit 14i einen Griffbereich 68i auf. Der Kopfbereich 66i ist zu einer Anbindung der Anwendungseinheit 12i vorgesehen. Die Griffeinheit 14i weist zumindest eine Grifffläche 70i auf, welche eine Oberfläche des materiellen Griffkörpers 16i ausbildet. Der gesamte Griffkörper 16i ist in der Draufsicht in einem gefalteten Zustand insbesondere teilweise Y-förmig oder T-förmig ausgebildet. Der Griffkörper 16i ist dreidimensional gefaltet, um die geknickte Form auszubilden.

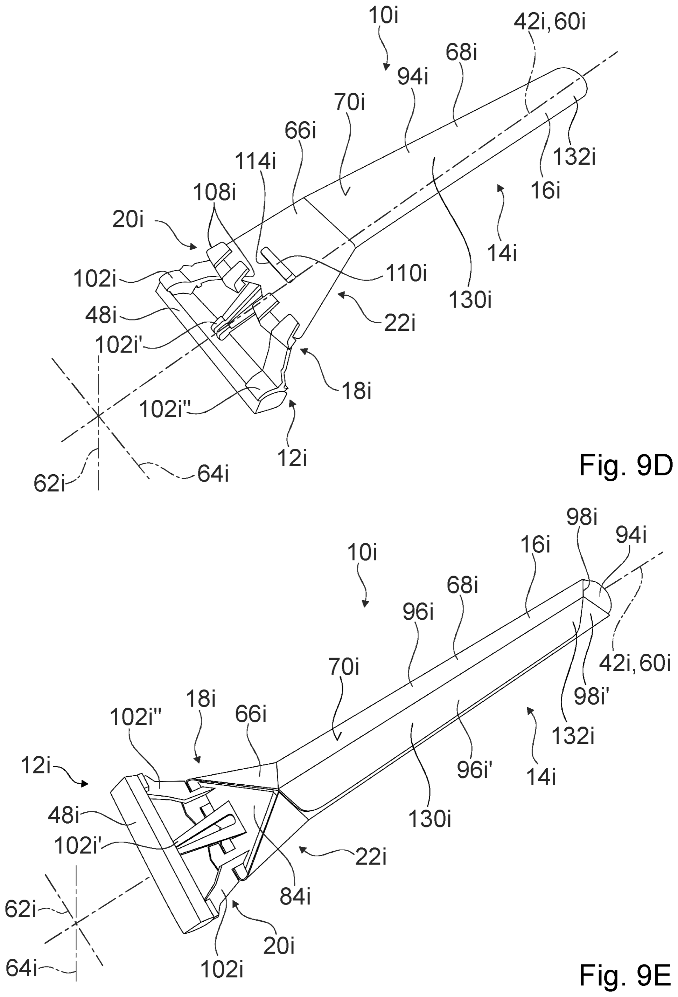

Der Griffkörper 16i wird aus dem ungefalteten Zustand, abgebildet in Fig. 9A, zu einem dreidimensionalen Körper gefaltet, abgebildet in Figur 9D und 9E. Der Griffkörper 16i weist in einem gefalteten Zustand einen dreieckigen Querschnitt auf, welcher sich aus drei Seiten des Griffkörpers 16i zusammensetzt. Der Griffkörper 16i ist in einem gefalteten Zustand hohl ausgebildet. Der Zuschnitt des Griffkörpers 16i besteht insbesondere aus einem Papierbogen, welcher aus zumindest einer, insbesondere genau einer Schicht besteht. Der Griffkörper 16i weist von 1 bis 10 Lagen, vorzugsweise von 1 bis 5 Lagen auf, welche eine Schicht bilden. Die Lagen bilden eine Schicht. Die Anzahl der Lagen hängt insbesondere von der gewünschten Endstärke bzw. Stabilität des Griffkörpers 16i ab. Es können insbesondere viele dünne Lagen oder wenige dicke Lagen realisiert werden. Die Lagen werden vorzugsweise verbunden. Durch das Realisieren des Griffkörpers 16i in mehreren Lagen ergeben sich Stabilitätsvorteile gegenüber einem Körper aus einer oder weniger Lagen. Der Griffkörper 16i weist eine Vorderwand 94i und zwei Seitenwände 96i, 96i' auf. Der Griffkörper 16i ist aus einem Zuschnitt hergestellt. Die beiden Seitenwände 96i, 96h' zusammen mit den zwei Seiteninnenwänden 98i, 98i' bilden im Endprodukt eine Doppellage aus. Der Zuschnitt des Griffkörpers 16i besteht daher insbesondere aus fünf Seiten, und zwar der Vorderwand 94i, den zwei Seitenwänden 96i, 96i' und zwei Seiteninnenwänden 98i, 98i'. Zumindest eine, insbesondere beide, der Doppellagen sind geklebt. Die beiden Schichten der Seitenwände 96i, 96i' und die jeweiligen Seiteninnenwände 98i, 98i' sind daher miteinander verklebt. Der Griffkörper 16i ist in Längsrichtung konisch gestaltet, wobei eine Breite des Griffkörpers 16i zu der Anwendungseinheit 12i hin zunimmt. Im gefalteten Zustand ist der Griffkörper 16i auf der der Anwendungseinheit 12i zugewandten Seite offen, damit später das Verbindungselement 20i eingefahren werden kann. Beispielhaft ist der Griffkörper 16i auch an einem unteren, freien Ende offen gestaltet. Die Vorderwand 94i des Griffkörpers 16i ist länger als die beiden Seitenwände 96i, 96i' und die jeweiligen Seiteninnenwände 98i, 98i' und knickt zu der Anwendungseinheit 12i hin ab. Ferner knicken auch die Seitenwände 96i, 96i' bzw. die Seiteninnenwände 98i, 98i' zu der Anwendungseinheit 12i hin ab. Die Seitenwände 96i, 96i' öffnen sich zu der Anwendungseinheit 12i hin und sind in einem Bereich des weiteren Verbindungselements 22i lediglich einlagig. Eine Körperstabilität des Griffkörpers 16i wird durch die Faltung bzw. durch das dadurch entstehende Fachwerk im Querschnitt erreicht.

Der materielle Griffkörper 16i besteht zumindest zu einem Großteil aus einem Papierwerkstoff. Der materielle Griffkörper 16i besteht vollständig aus einem Papierwerkstoff. Der materielle Griffkörper 16i der Griffeinheit 14i weist zumindest eine Schicht aus einem Papierwerkstoff auf, welche dreidimensional geformt ausgebildet ist. Der Zuschnitt des materiellen Griffkörpers 16i besteht aus genau einer Schicht aus einem Papierwerkstoff, es wäre jedoch auch ein mehrschichtiger Aufbau denkbar. Eine Materialstärke des Griffkörpers 16i beträgt insbesondere von 0,3 mm bis 1,5 mm, vorzugsweise 0,4 mm bis 0,7 mm. Eine einzelne Lage weist insbesondere ein Flächengewicht von 300 g/m² bis 500 g/m², vorzugsweise 350 g/m² bis 450 g/m² auf. Die Materialstärke der einzelnen Lage beträgt insbesondere von 0,25 mm bis 0,65 mm, vorzugsweise von 0,35 mm bis 0,5 mm.

In anderen Ausführungsformen besteht der Griffkörper 16i aus anderen Materialien wie Holz oder Gras (z. B. Bambus) oder anderen nachhaltigen, biologisch abbaubaren, biologisch erneuerbaren und/oder recycelten Materialien, einschließlich Biokunststoffen und recycelten Kunststoffen sowie Kombinationen davon usw. Bei den Polymeren kann es sich sowohl um neue Kunststoffe (z. B. recycelbare neue Kunststoffe, neue Biokunststoffe, neue Biomaterialien usw.) als auch um gemischte Polymere (z. B. gemischte neue und recycelte Kunststoffe) handeln.

Das Körperpflegeprodukt 10i weist ferner die Verbindungseinheit 18i auf. Die Verbindungseinheit 18i weist ein mit der Anwendungseinheit 12i verbundenes Verbindungselement 20i und ein mit der Griffeinheit 14i verbundenes weiteres Verbindungselement 22i, insbesondere Griffverbindungselement, auf. Das Verbindungselement 20i und das weitere Verbindungselement 22i sind korrespondierend ausgebildet. Ferner ist das Verbindungselement 20i der Verbindungseinheit 18i beispielhaft einstückig mit dem Grundkörper 84i der Anwendungseinheit 12i ausgebildet. Es wäre jedoch auch eine andere, einem Fachmann als sinnvoll erscheinende Ausgestaltung der Verbindungseinheit denkbar. Das Verbindungselement 20i bildet insbesondere einen Teil der Anwendungseinheit 12i. Das weitere Verbindungselement 22i der Verbindungseinheit 18i ist zumindest teilweise einstückig mit der Griffeinheit 14i ausgebildet. Das weitere Verbindungselement 22i der Verbindungseinheit 18i ist einstückig mit dem Griffkörper 16i ausgebildet. Das weitere Verbindungselement 22i der Verbindungseinheit 18i ist einteilig mit dem Griffkörper 16i ausgebildet. Das weitere Verbindungselement 22i der Verbindungseinheit 18i bildet daher einen Teil des Griffkörpers 16i. Das weitere Verbindungselement 22i der Verbindungseinheit 18i besteht daher ebenfalls zu einem Großteil, insbesondere vollständig, aus einem Papierwerkstoff. Das weitere Verbindungselement 22i ist in einem Endbereich des Griffkörpers 16i ausgebildet.

Das weitere Verbindungselement 22i ist in einem Querschnitt senkrecht zu einer Haupterstreckungsrichtung 42i in eine polygonale Form gefaltet, welche einen Aufnahmebereich begrenzt. Das weitere Verbindungselement 22i weist den offenen, dreieckigen Querschnitt auf.

Das Verbindungselement 20i der Verbindungseinheit 18i ist zumindest teilweise formschlüssig mit dem weiteren Verbindungselement 22i der Verbindungseinheit 18i verbunden. Es sind dazu insbesondere mehrere Verankerungspunkte zwischen dem Verbindungselement 20i und dem Griffkörper 16i bzw. dem weiteren Verbindungselement 22i vorgesehen. Die Fixierung des Verbindungselements 20i an dem Griffkörper 16i erfolgt durch Formschluss. Alternativ oder zusätzlich wäre jedoch auch eine Fixierung durch Klebung denkbar.

Das Verbindungselement 20i der Verbindungseinheit 18i ist voluminös gestaltet. Das Verbindungselement 20i ist fachwerkartig mit Leerräumen im Inneren ausgestaltet. Das Verbindungselement 20i wird in einem montierten Zustand von dem Griffkörper 16i auf drei Flächen umschlungen. Das Verbindungselement 20i ist dabei dazu vorgesehen, den Griffkörper 16i von innen zu stützen und den Griffkörper 16i mit dem Klingenkopf 48i zu verbinden, damit dieser nicht verdrückt werden kann. Das Verbindungselement 20i weist mehrere Anlageflächen 104i, 106i, 106i' für den Griffkörper 16i auf. Das Verbindungselement 20i weist drei Anlageflächen 104i, 106i, 106i' für den Griffkörper 16i auf. Eine erste Anlagefläche 104i ist auf der oberen Seite angeordnet. Auf dieser Seite weist das Verbindungselement 20i eine Einfahrnut 108i und einen Rastkamm 110i zu einer Verbindung mit dem Griffkörper 16i auf. Der Griffkörper 16i wird zu einer Verbindung mit der Anwendungseinheit 12i mit einer vorderen Kante 116i des weiteren Verbindungselements 22i in die Einfahrnut 108i eingeschoben, bis eine Ausnehmung 114i des weiteren Verbindungselements 22i mit dem Rastkamm 110i verrastet. Die erste Anlagefläche 104i weist eine Umfangsgröße, bei der Ausnehmungen nicht abgezogen sind, von 500 mm² bis 850 mm², vorzugsweise von 600 mm² bis 750 mm², auf. Eine zweite und dritte Anlagefläche 106i, 106i' sind symmetrisch zur Grifflängsachse geformt. Die zweite und dritte Anlagefläche 106i, 106i' laufen insbesondere aufeinander zu. Die zweite und dritte Anlagefläche 106i, 106i' können mit Ausnehmungen versehen sein und liegen in einem Winkel von 25° bis 75°, vorzugsweise von 35° bis 55° zu der ersten Anlagefläche 104i auf der Rückseite des Verbindungselements 20i, wobei die Winkel identisch aber gegenüberliegend sind. Die zweite und dritte Anlagefläche 106i, 106i' weisen jeweils eine Umfangsgröße, bei der Ausnehmungen nicht abgezogen sind, von 100 mm² bis 180 mm², vorzugsweise von 110 mm² bis 150 mm², auf. Das Verbindungselement 20i ist dazu vorgesehen, während einer Montage in die Ausnehmung des Griffkörpers 16i eingefahren und eingerastet zu werden. Der Griffkörper 16i hält, wenn montiert und fixiert, das Verbindungselement 20i und damit die Anwendungseinheit 12i. Das Verbindungselement 20i und der Griffkörper 16i haben keine Materialverbindung. Es wäre jedoch auch denkbar, dass zusätzlich eine Klebung vorgesehen ist.

Die Griffeinheit 14i ist dazu bestimmt, von dem Benutzer ergriffen zu werden. Die Griffeinheit 14i hat einen Griffkörper 16i, der dazu vorgesehen ist, von einem Benutzer ergriffen, gegriffen oder gehalten zu werden. Der Griffkörper 16i der Griffeinheit 14i weist einen Kopfbereich 66i auf. Darüber hinaus weist der Griffkörper 16i der Griffeinheit 14i einen Griffbereich 68i und einen Kopfbereich 66i auf. Der Kopfbereich 66i befindet sich an einem ersten (z. B. vorderen, oberen usw.) Ende der Griffeinheit 14i, das einem Endbereich 132i (z. B. hinteren, unteren Bereich usw.) gegenüberliegt. Ein mittlerer Bereich liegt neben dem Kopfbereich 66i. Ein mittlerer Bereich grenzt an den Endbereich 132i. Der Kopfbereich 66i ist für die Verbindung mit der Verbindungseinheit 18i vorgesehen (z. B. für den Eingriff mit dieser). Die Griffeinheit 14i weist mindestens eine Grifffläche 70i auf, die eine Oberfläche des Griffkörpers 16i bildet. Die Grifffläche 70i umfasst den mittleren Bereich 130i und kann auch den Endbereich 132i und den Kopfbereich 66i umfassen. Die Grifffläche 70i umfasst zumindest Teile des Griffbereichs 68i. So kann die Grifffläche 70i beispielsweise Erhebungen und/oder Vertiefungen im Griffbereich 68i aufweisen. In der Draufsicht ist der gesamte Griffkörper 16i vor und/oder in einem zusammengesetzten (z.B. gefalteten) Zustand insbesondere teilweise Y- oder T-förmig ausgebildet. Der Griffkörper 16i kann dreidimensional gefaltet sein, um die prismatische, polygonale und/oder gebogene Form zu bilden.

Der Griffkörper 16i befindet sich in einem zusammengebauten (z. B. gefalteten) Zustand oder Konfiguration, welche aus einem ungeformten (z. B. ungefalteten) Zustand oder Konfiguration (z. B. wenn der Griffkörper 16i im Allgemeinen eben und in Form eines Rohlings ist) wie beispielhaft in der Fig. 9A dargestellt, zu einem dreidimensionalen Körper geformt wird, wie in den beispielhaften Fig. 9D und 9E dargestellt. In einigen Ausführungsformen konfiguriert der Hersteller oder Verkäufer den Griffkörper 16i in einem zusammengebauten Zustand. In einigen Ausführungsformen konfiguriert der Benutzer den Griff von einem ungefalteten Zustand in den zusammengesetzten (z. B. gefalteten) Zustand. In einem zusammengebauten (z.B. gefalteten) Zustand hat der Griffkörper 16i (z. B. im Querschnitt entlang der Längsachse 60i, also auch unter Berücksichtigung und in Richtung der Höhenachse 62i und der Breitenachse 64i) einen dreieckigen Querschnitt, der aus drei Seiten des Griffkörpers 16i besteht. Im montierten (z. B. gefalteten) Zustand ist der Griffkörper 16i hohl. Während in den beispielhaften FIG. 9D-9E eine dreieckige Querschnittsform dargestellt ist, fallen auch andere Querschnittsformen in den Anwendungsbereich der vorliegenden Offenbarung, einschließlich polygonaler, prismatischer, kegelstumpfförmiger Formen und deren Abrundungen, Abschrägungen und/oder Verrundungen, gekrümmte Abschnitte, Kombinationen davon usw.

Der Rohling der Griffeinheit 14i, einschließlich des Griffkörpers 16i, besteht insbesondere aus einer Schicht (z.B. einer Materialbahn, wie Papier, oder auch einer Schicht aus Holz, Gras (z.B. Bambus) etc.), die aus mindestens einer, insbesondere genau einer, Lage besteht. Der Griffkörper 16i hat 1 bis 10 Lagen, vorzugsweise 1 bis 5 Lagen, die eine Schicht bilden. Die Lagen bilden eine Schicht. Die Anzahl der Lagen hängt insbesondere von der gewünschten Enddicke bzw. Stabilität des Griffkörpers 16i ab. Insbesondere können viele dünne Lagen oder wenige dicke Lagen realisiert werden. In einigen Ausführungsformen wechseln sich, bezogen auf benachbarte Lagen, eine dünne Lage und eine dicke Lage ab. Die Lagen werden vorzugsweise durch Kleben, Hitze, Schweißen, Formen, Kombinationen davon usw. miteinander verbunden. Durch die Realisierung des Griffkörpers 16i in mehreren Lagen ergeben sich Stabilitätsvorteile gegenüber einem Körper, der aus einer oder wenigen Lagen besteht.

Der Griffkörper 16i kann einen einzigen Rohling umfassen und als solcher aus einem einzigen Rohling hergestellt werden. Die beiden Seitenwände 96i, 96i' bilden zusammen mit mindestens einer der beiden Seiteninnenwände 98i, 98i' in der zusammengebauten Konfiguration eine Doppelschicht (Hinweis: Die Vorderwand 94i soll nicht durch den Zusammenbau verdoppelt werden). In einigen Ausführungsformen ist nur eine von zwei Seitenwänden 96i oder 96i' und/oder Seiteninnenwänden 98i, 98i' vorgesehen, so dass die Griffeinheit 14i in einer zusammengebauten Konfiguration nur eine Seite aufweist, die eine Doppelschicht ist. Der Rohling (z.B. Bogen) des Griffkörpers 16i im ungeformten (z.B. ungefalteten) Zustand kann daher insbesondere fünf Seiten aufweisen und sogar daraus bestehen, nämlich die Vorderwand 94i, die beiden Seitenwände 96i, 96i' und die beiden Seiteninnenwände 98i, 98i'. Diese Ausgestaltung ist jedoch nicht limitierend. Mindestens eine, insbesondere beide, der Doppellagen sind verklebt oder enthalten einen ablösbaren Klebstoff. Mindestens eine der beiden Schichten der Seitenwände 96i, 96i' und der jeweiligen Seiteninnenwände 98i, 98i' sind also (z. B. dauerhaft oder vorübergehend) miteinander verklebt. In einigen Ausführungsformen wird die Seiteninnenwand 98i an die Seitenwand 96i geklebt und die Seiteninnenwand 98i' an die Seitenwand 96i' geklebt, wenn sie von einer im Allgemeinen flachen (z. B. ungefalteten) Konfiguration in eine zusammengesetzte (z. B. gefaltete) Konfiguration übergeht. In einer solchen zusammengesetzten (z. B. gefalteten) Konfiguration sind die Seiteninnenwand 98i und die Seitenwand 96i im Allgemeinen parallel, so dass eine Außenfläche der Seiteninnenwand 98i einer Innenfläche der Seitenwand 96i zugewandt und zumindest teilweise an ihr befestigt ist. In einer solchen zusammengesetzten (z. B. gefalteten) Konfiguration sind die Seiteninnenwand 98i' und die Seitenwand 96i' im Allgemeinen parallel, so dass eine Außenfläche der Seiteninnenwand 98i' einer Innenfläche der Seitenwand 96i' zugewandt und zumindest teilweise an ihr befestigt ist.

Der Griffkörper 16i hat in der Längsrichtung entlang der Längsachse 60i eine prismatische (z. B. pyramidenförmige, trapezförmige, konische und/oder kegelstumpfförmige oder eine Kombination daraus) oder polygonale Form, wobei die Breite (entlang der Breitenachse 64i) des Griffkörpers 16i zu dem Ende hin zunimmt, das zur Verbindung mit der Verbindungseinheit 18i konfiguriert ist. Im montierten (z.B. gefalteten) Zustand ist die Griffeinheit 14i einschließlich des Griffkörpers 16i auf der der Anwendungseinheit 12i zugewandten Seite offen, so dass die Verbindungseinheit 18i an den Griffkörper 16i (und damit die Anwendungseinheit 12i an die Griffeinheit 14i) montiert werden kann. Der Griffkörper 16i ist zum Beispiel auch an einem unteren, freien Ende offen. In einigen Ausführungsformen ist die Vorderwand 94i der Griffeinheit mit dem Griffkörper 16i länger als die beiden Seitenwände 96i, 96i' und die jeweiligen Seiteninnenwände 98i, 98i'. Die Seitenwände 96i, 96i', die zu dem Ende hin offen sind, das für den Eingriff mit der Verbindungseinheit 18i vorgesehen ist, können in einem Bereich des Griffverbindungselements 22i einlagig sein. In einigen Ausführungsformen kann das Falten der Griffeinheit 14i (z. B. des Griffkörpers 16i) die Stabilität oder Festigkeit der Griffeinheit 14i verbessern.

Der Griffkörper 16i kann aus einem Papiermaterial (z. B. Karton, Pappe usw.) bestehen, und in bestimmten Ausführungsformen kann er im Wesentlichen aus einem Papiermaterial bestehen. In einigen Ausführungsformen besteht der Griffkörper 16i vollständig aus einem Papiermaterial. In anderen Ausführungsformen besteht der Griffkörper 16i aus anderen Materialien wie Holz oder Gras (z. B. Bambus) oder anderen nachhaltigen, biologisch abbaubaren, biologisch erneuerbaren und/oder recycelten Materialien, einschließlich Biokunststoffen und recycelten Kunststoffen sowie Kombinationen davon usw. Zu den Polymermaterialien können sowohl neue Kunststoffe (z. B. neue Kunststoffe, die recycelt werden können, neue Biokunststoffe, neue Biomaterialien usw.) als auch gemischte Polymere (z. B. gemischte neue und recycelte Kunststoffe) gehören. Der Griffkörper 16i der Griffeinheit 14i hat mindestens eine Schicht aus einem Papiermaterial, das in einer dreidimensionalen Form (z. B. prismatisch, polygonal, einschließlich bogenförmiger Abschnitte, Rundungen, Abschrägungen, Verrundungen, Kombinationen davon usw.) ausgebildet sein kann. In einigen Ausführungsformen umfasst der Rohling des Griffkörpers 16i genau eine Materialschicht (z. B. ein Papier-, Holz- und/oder Grasmaterial). In einigen Ausführungsformen weist der Griffkörper 16i eine mehrschichtige Struktur auf. Eine Dicke des Griffkörpers 16i liegt insbesondere zwischen 0,3 mm und 1,5 mm, vorzugsweise zwischen 0,4 mm und 0,7 mm. Insbesondere hat eine Schicht ein Flächengewicht von 300 g/m² bis 500 g/m², vorzugsweise 350 g/m² bis 450 g/m². Die Dicke der einen oder mehreren Einzelschichten beträgt insbesondere 0,25 mm bis 0,65 mm, vorzugsweise 0,35 mm bis 0,5 mm.

Der Grundkörper 84i der Verbindungseinheit 18i kann in einer Ausführungsform vollständig aus einer harten Komponente gebildet sein. In einigen Ausführungsformen ist der Grundkörper 84i der Verbindungseinheit 18i jedoch aus einer Hartkomponente und einer Weichkomponente gebildet.

Der Grundkörper 84i der Verbindungseinheit 18i kann eine schwenkbare Verbindung, wie beispielsweise mittels eines Passeingriffs oder dergleichen, mit der Anwendungseinheit 12i einschließlich des Klingenkopfes 48i aufweisen. Der Grundkörper 84i weist drei Gelenkarme 102i, 102i', 102i" auf, die zur schwenkbaren Aufnahme des Klingenkopfes 48i vorgesehen sind. Insbesondere kann der Klingenkopf 48i (z.B. an der Anwendungseinheit 12i) über einen oder mehrere Gelenkarme 102i, 102i', 102i" austauschbar mit dem Grundkörper 84i der Verbindungseinheit 18i verbunden werden. Dementsprechend weist die Anwendungseinheit 12i Strukturen auf, die geeignet sind, mit dem einen oder den mehreren Gelenkarmen 102i, 102i', 102i" in Eingriff zu kommen. In einigen Ausführungsformen umfasst die Anwendungseinheit 12i Lagerflächen oder Stiftelemente, die in die äußeren Gelenkarme 102i, 102" eingreifen. In einigen Ausführungsformen umfasst die Anwendungseinheit 12i eine Aussparung oder eine Spurrille, die so konfiguriert ist, dass sie mit dem mittleren Gelenkarm 102i' in Eingriff kommt. Solche Merkmale an der Anwendungseinheit 12i können Bestandteil des Klingenkopfes 48i sein.

Die Verbindungseinheit 18i umfasst ein Verbindungselement 20i. In einigen Ausführungsformen ist das Verbindungselement 20i der Verbindungseinheit 18i einstückig mit dem Grundkörper 84i der Verbindungseinheit 18i ausgebildet. Insbesondere bildet das Verbindungselement 20i einen Teil der Verbindungseinheit 18i. In einigen Ausführungsformen ist das Verbindungselement 20i an der Verbindungseinheit 18i befestigt, beispielsweise an dem Grundkörper 84i der Verbindungseinheit 18i. In einigen Ausführungsformen umfasst das Verbindungselement 20i mehr als ein Verbindungselement 20i oder, anders ausgedrückt, mehr als eine Struktur, die für den Eingriff in ein wechselseitiges Merkmal, beispielsweise an der Griffeinheit 14i, geeignet ist.

Wie zumindest in FIG. 9B-9C gezeigt, kann das Verbindungselement 20i der Verbindungseinheit 18i eine oder mehrere der folgenden Strukturen umfassen: eine oder mehrere Einfahrnuten 108i (z. B. eine, zwei, drei oder vier Einfahrnuten 108i), einen oder mehrere Rastkämme 110i, die eine Verformung oder ein verdickter Bereich des Grundkörpers 84i sein können, wobei die Rastkämme 110i eine allgemein prismatische (z. B. eine allgemein prismatische (z. B. rechteckiges Prisma, Würfel) oder polygonale Gesamtform oder im Querschnitt, Oberflächen auf dem Grundkörper 84i wie eine erste Kontaktfläche 104i, eine zweite Kontaktfläche 106i und eine dritte Kontaktfläche 106i', ein voluminöses Merkmal (z. B. eine die dreidimensionale Struktur des Grundkörpers 84i betonende Verformung), die eine allgemein prismatische oder polygonale Gesamtform oder einen polygonalen Querschnitt aufweist, eine gitterartige Struktur, die ebenfalls die dreidimensionale Struktur des Grundkörpers 84i betont und eine allgemein prismatische oder polygonale Gesamtform oder einen polygonalen Querschnitt aufweist, Kombinationen davon usw.

Dementsprechend sind in einigen Ausführungsformen das Verbindungselement 20i und das Handgriff-Verbindungselement 22i so konfiguriert, dass sie jeweils zueinander passende Formschlusselemente sind (z. B. durch und zwischen der Eintrittsnut 108i und der Kante 116i und/oder der Ausnehmung 114i und dem Rastkamm 110i und/oder dem Aufnahmebereich 152i und der ersten Kontaktfläche 104i, der zweiten Kontaktfläche 106i und/oder der dritten Kontaktfläche 106i' usw.). Die Anwendungseinheit 12i bildet einen Scherkopf des Körperpflegemittels 10i. Insbesondere weist die Applikationseinheit 12i einen Klingenkopf 48i auf.

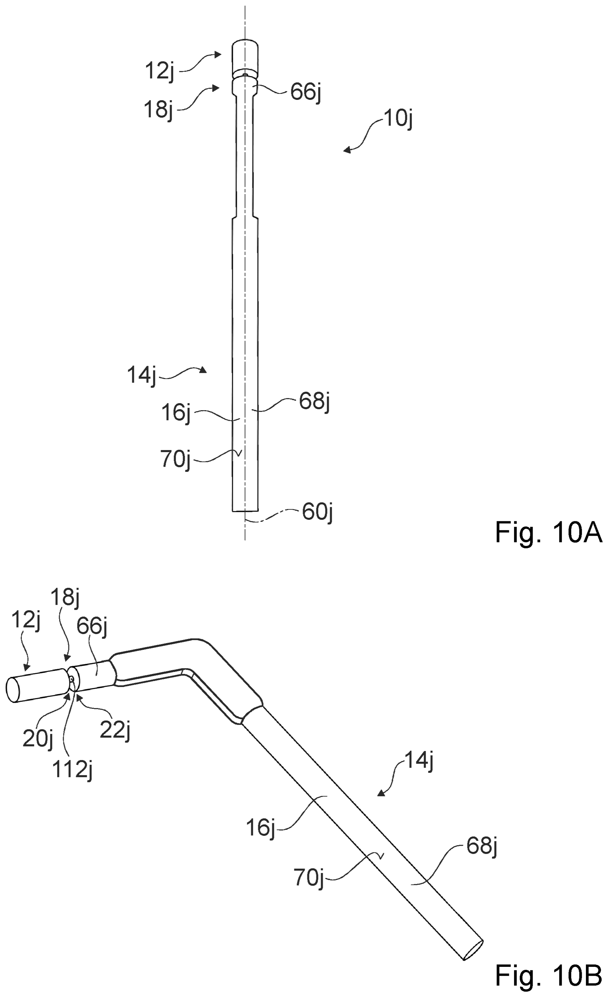

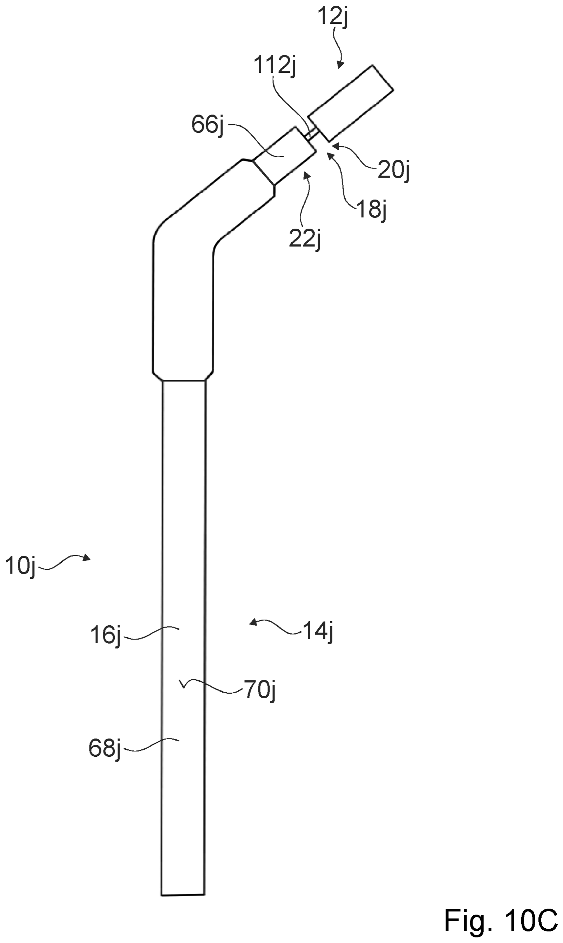

Im Folgenden wird auf die Figuren 10A bis 10C Bezug genommen, welche unterschiedliche Ansichten des Körperpflegeprodukts 10j zeigen. Aufgrund der unterschiedlichen Ansichten sind einige Elemente nicht in sämtlichen Figuren dargestellt und entsprechend nicht in sämtlichen Figuren mit Bezugszeichen versehen.

Die Figur 10B zeigt ein Körperpflegeprodukt 10j in einer schematischen perspektivischen Darstellung. Das Körperpflegeprodukt 10j ist von einem Mundhygienemittel gebildet. Das Körperpflegeprodukt 10j ist im vorliegenden Fall als eine Interdentalbürste ausgebildet.

Das Körperpflegeprodukt 10j weist eine Anwendungseinheit 12j auf. Ferner weist das Körperpflegeprodukt 10j eine Griffeinheit 14j auf, welche einen materiellen Griffkörper 16j aufweist. Des Weiteren weist das Körperpflegeprodukt 10j eine Verbindungseinheit 18j auf, welche die Anwendungseinheit 12j mit der Griffeinheit 14j verbindet.

Die Anwendungseinheit 12j bildet einen Interdentalbürstenkopf des Körperpflegeprodukts 10j. Die Anwendungseinheit 12j weist einen Bürstenkopf mit radial nach außenstehenden Borsten auf, welcher insbesondere von einer eingedrehten Bürste gebildet ist. Die Borsten sind der Übersichtlichkeit lediglich als Volumenkörper dargestellt. Ferner weist die Anwendungseinheit 12j einen Reinigungselementträger 112j auf.

Die Griffeinheit 14j ist zu einem Greifen durch den Bediener vorgesehen. Die Griffeinheit 14j weist den materiellen Griffkörper 16j auf. Der materielle Griffkörper 16j der Griffeinheit 14j weist einen Kopfbereich 66j auf. Ferner weist der materielle Griffkörper 16j der Griffeinheit 14j einen Griffbereich 68j auf. Der Kopfbereich 66j ist zu einer Anbindung der Anwendungseinheit 12j vorgesehen. Der materielle Griffkörper 16j besteht zumindest zu einem Großteil aus einem Papierwerkstoff. Der materielle Griffkörper 16j besteht beispielhaft vollständig aus einem Papierwerkstoff. Der materielle Griffkörper 16j besteht aus einem zylindrischen Papierkörper. Der materielle Griffkörper 16j der Griffeinheit 14j weist zumindest eine Schicht aus einem Papierwerkstoff auf, welche gerollt ausgebildet ist. Der materielle Griffkörper 16j weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Zwischen dem Kopfbereich 66j und dem Griffbereich 68j ist der Griffkörper 16j gewinkelt ausgebildet. Der Griffkörper 16j ist mit einem Biege-Radius von 1,5 cm bis 4,5 cm, vorzugsweise 2 cm bis 3,5 cm, abgewinkelt ausgebildet. Der Winkel zwischen dem Kopfbereich 66j und dem Griffbereich 68j beträgt insbesondere von 120° bis 160°, vorzugsweise 130° bis 150°. Die Länge des Kopfbereichs 66j nach der Krümmung beträgt insbesondere maximal 2 cm, vorzugsweise maximal 1 cm. Ein Durchmesser des Griffkörpers 16j beträgt insbesondere von 2,5 mm bis 5 mm, vorzugsweise 2.5 mm bis 4 mm. Bei einer Anwendung des Körperpflegeprodukts 10j in der Kosmetik wäre insbesondere auch denkbar, dass ein Durchmesser des Griffkörpers 16j von 2,5 mm bis 5 mm, vorzugsweise 3 mm bis 4 mm, beträgt. Der abgewinkelte Bereich des Griffkörpers 16j ist durch nachträgliches Drücken, insbesondere Verpressen stabilisiert. Der Griffkörper 16j ist in einem Bereich zwischen dem Kopfbereich 66j und dem Griffbereich 68j partiell verpresst, sodass der Griffkörper 16j in diesem Bereich einen annähernd rechteckigen Querschnitt aufweist. Insbesondere ist in dem Bereich eine Quererstreckung des Griffkörpers 16j verringert. Ein Biegen des abgewinkelten Bereichs des Griffkörpers 16j kann bei der Herstellung insbesondere durch Befeuchten, Benetzen, Dampf und/oder Wärme verbessert werden. Der abgewinkelte Bereich des Griffkörpers 16j ist flachgepresst, um eine mechanische Stabilität zu erhöhen. Die gedrückte Dicke des abgewinkelten Bereichs des Griffkörpers 16j beträgt insbesondere von 1,5 mm bis 3 mm, vorzugsweise von 1,7 mm bis 2,3 mm.

Die Anwendungseinheit 12j kann mittels einer Verbindungseinheit 18j mit der Griffeinheit 14j verbunden werden. Alternativ zu dem abgewinkelten Bereich des Griffkörpers 16j wäre auch denkbar, dass der Griffkörper 16j gerade ist und die Anwendungseinheit 12j mit der Verbindungseinheit 18j im Winkel angespritzt ist. Die Krümmung würde dabei durch das gespritzte Teil geschaffen.

Das Körperpflegeprodukt 10j weist ferner die Verbindungseinheit 18j auf. Die Verbindungseinheit 18j weist ein mit der Anwendungseinheit 12j verbundenes Verbindungselement 20j und ein mit der Griffeinheit 14j verbundenes weiteres Verbindungselement 22j auf. Das Verbindungselement 20j und das weitere Verbindungselement 22j sind korrespondierend ausgebildet. Ferner ist das Verbindungselement 20j der Verbindungseinheit 18j einstückig mit dem Reinigungselementträger 112j der Anwendungseinheit 12j ausgebildet. Das Verbindungselement 20j bildet insbesondere einen Teil der Anwendungseinheit 12j. Das weitere Verbindungselement 22j der Verbindungseinheit 18j ist zumindest teilweise einstückig mit der Griffeinheit 14j ausgebildet. Das weitere Verbindungselement 22j der Verbindungseinheit 18j ist einstückig mit dem Griffkörper 16j ausgebildet. Das weitere Verbindungselement 22j der Verbindungseinheit 18j ist einteilig mit dem Griffkörper 16j ausgebildet. Das weitere Verbindungselement 22j der Verbindungseinheit 18j bildet daher einen Teil des Griffkörpers 16j. Das weitere Verbindungselement 22j der Verbindungseinheit 18j besteht daher ebenfalls zu einem Großteil, insbesondere vollständig, aus einem Papierwerkstoff. Das weitere Verbindungselement 22j ist in einem Endbereich des Griffkörpers 16j ausgebildet. Das weitere Verbindungselement 22j ist in dem Kopfbereich 66j des Griffkörpers 16j ausgebildet.

Das Verbindungselement 20j der Verbindungseinheit 18j ist zumindest teilweise stoffschlüssig mit dem weiteren Verbindungselement 22j der Verbindungseinheit 18j verbunden. Das Verbindungselement 20j der Verbindungseinheit 18j ist zumindest teilweise formschlüssig mit dem weiteren Verbindungselement 22j der Verbindungseinheit 18j verbunden. Das weitere Verbindungselement 22j bildet eine Ausnehmung in dem Griffkörper 16j aus, in welche das Verbindungselement 20j eingesteckt und fixiert ist. Alternativ oder zusätzlich wäre auch denkbar, dass die Anwendungseinheit 12j über das Verbindungselement 20j an den Griffkörper 16j angespritzt ist.

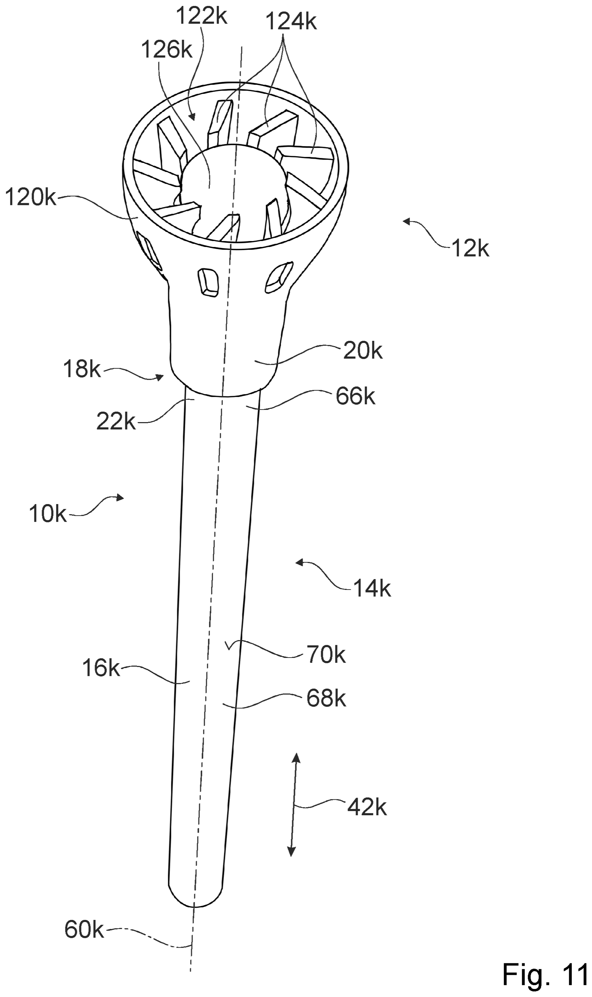

Die Figur 11 zeigt ein Körperpflegeprodukt 10k in einer schematischen perspektivischen Darstellung. Das Körperpflegeprodukt 10k ist von einem Mundhygienemittel gebildet. Das Körperpflegeprodukt 10k ist im vorliegenden Fall als Applikator für ein Whitening Produkt der Mundhygiene ausgebildet.

Das Körperpflegeprodukt 10k weist eine Anwendungseinheit 12k auf. Ferner weist das Körperpflegeprodukt 10k eine Griffeinheit 14k auf, welche einen materiellen Griffkörper 16k aufweist. Des Weiteren weist das Körperpflegeprodukt 10k eine Verbindungseinheit 18k auf, welche die Anwendungseinheit 12k mit der Griffeinheit 14k verbindet.

Die Anwendungseinheit 12k weist einen Träger 120k mit einer Vertiefung 122k und in dieser mit radial nach außenstehenden Lamellen 124k auf, welche im Zentrum eine Ausnehmung für eine Fluidkugel 126k bilden. Die Anwendungseinheit 12k weist ferner eine sich unter Speicheleinfluss öffnende Fluidkugel 126k mit einer Whitening Flüssigkeit auf. Die Fluidkugel 126k ist fest in dem Träger 120k aufgenommen. Der Träger 120k besteht zumindest teilweise aus einer Weichkomponente.

Die Griffeinheit 14k ist zu einem Greifen durch den Bediener vorgesehen. Die Griffeinheit 14k weist den materiellen Griffkörper 16k auf. Der materielle Griffkörper 16k der Griffeinheit 14k weist einen Kopfbereich 66k auf. Ferner weist der materielle Griffkörper 16k der Griffeinheit 14k einen Griffbereich 68k auf. Der Kopfbereich 66k ist zu einer Anbindung der Anwendungseinheit 12k vorgesehen. Der materielle Griffkörper 16k besteht zumindest zu einem Großteil aus einem Papierwerkstoff. Der materielle Griffkörper 16k besteht beispielhaft vollständig aus einem Papierwerkstoff. Der materielle Griffkörper 16k besteht aus einem zylindrischen Papierkörper. Der materielle Griffkörper 16k der Griffeinheit 14k weist zumindest eine Schicht aus einem Papierwerkstoff auf, welche gerollt ausgebildet ist. Der materielle Griffkörper 16k weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Die Anwendungseinheit 12k kann mittels einer Verbindungseinheit 18k mit der Griffeinheit 14k verbunden werden. Das Körperpflegeprodukt 10k weist ferner die Verbindungseinheit 18k auf. Die Verbindungseinheit 18k weist ein mit der Anwendungseinheit 12k verbundenes Verbindungselement 20k und ein mit der Griffeinheit 14k verbundenes weiteres Verbindungselement 22k auf. Das Verbindungselement 20k und das weitere Verbindungselement 22k sind korrespondierend ausgebildet. Ferner ist das Verbindungselement 20k der Verbindungseinheit 18k einstückig mit dem Träger der Anwendungseinheit 12k ausgebildet. Das Verbindungselement 20k bildet insbesondere einen Teil der Anwendungseinheit 12k. Das weitere Verbindungselement 22k der Verbindungseinheit 18k ist zumindest teilweise einstückig mit der Griffeinheit 14k ausgebildet. Das weitere Verbindungselement 22k der Verbindungseinheit 18k ist einstückig mit dem Griffkörper 16k ausgebildet. Das weitere Verbindungselement 22k der Verbindungseinheit 18i ist einteilig mit dem Griffkörper 16k ausgebildet. Das weitere Verbindungselement 22k der Verbindungseinheit 18k bildet daher einen Teil des Griffkörpers 16k. Das weitere Verbindungselement 22k der Verbindungseinheit 18k besteht daher ebenfalls zu einem Großteil, insbesondere vollständig, aus einem Papierwerkstoff. Das weitere Verbindungselement 22k ist in einem Endbereich des Griffkörpers 16k ausgebildet. Das weitere Verbindungselement 22k ist in dem Kopfbereich 66k des Griffkörpers 16k ausgebildet.

Das Verbindungselement 20k der Verbindungseinheit 18k ist zumindest teilweise stoffschlüssig mit dem weiteren Verbindungselement 22k der Verbindungseinheit 18k verbunden. Das Verbindungselement 20k der Verbindungseinheit 18k ist zumindest teilweise formschlüssig mit dem weiteren Verbindungselement 22k der Verbindungseinheit 18k verbunden. Die Anwendungseinheit 12k ist über das Verbindungselement 20k an den Griffkörper 16k angespritzt.

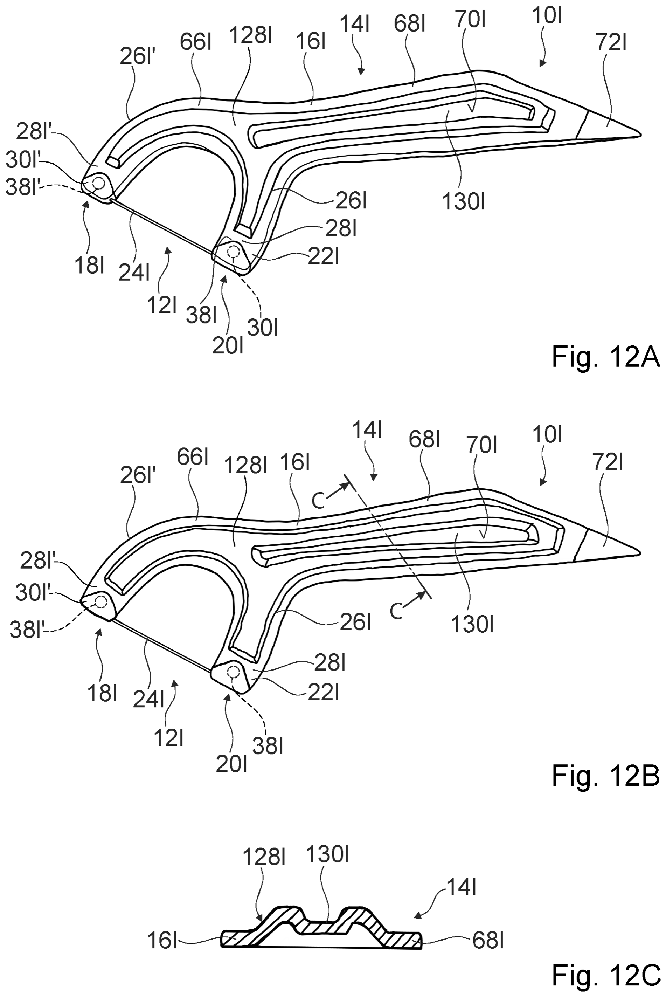

Die Figuren 12A bis 12C zeigen ein Körperpflegeprodukt 10l. Das Körperpflegeprodukt 10l ist von einem Mundhygienemittel gebildet. Das Körperpflegeprodukt 10l ist im vorliegenden Fall als ein Flosser ausgebildet.

Das Körperpflegeprodukt 10l weist eine Anwendungseinheit 12l auf. Ferner weist das Körperpflegeprodukt 10l eine Griffeinheit 14l auf, welche einen materiellen Griffkörper 16l aufweist. Des Weiteren weist das Körperpflegeprodukt 10l eine Verbindungseinheit 18l auf, welche die Anwendungseinheit 12l mit der Griffeinheit 14l verbindet.

Die Anwendungseinheit 12l bildet einen Flosserkopf des Körperpflegeprodukts 10l. Die Anwendungseinheit 12l weist zumindest einen Zahnseidefaden 24l auf. Der Zahnseidefaden 24l ist von einer Zahnseide gebildet. Im vorliegenden Fall ist die Anwendungseinheit 12l als ein Zahnseidefaden ausgebildet. Der Zahnseidefaden 24l bildet eine Verbindung mit der Verbindungseinheit 18l.

Die Griffeinheit 14l ist zu einem Greifen durch den Bediener vorgesehen. Die Griffeinheit 14l weist den materiellen Griffkörper 16l auf. Der materielle Griffkörper 16l der Griffeinheit 14l weist einen Kopfbereich 66l auf. Ferner weist der materielle Griffkörper 16l der Griffeinheit 14l einen Griffbereich 68l auf. Der Kopfbereich 66l ist zu einer Anbindung der Anwendungseinheit 12l vorgesehen. Der materielle Griffkörper 16l weist zu der Anwendungseinheit 12l hin zumindest zwei Arme 26l, 26l' auf. Der Kopfbereich 66l ist als U-förmige Geometrie mit zwei Armen 26l, 26l' ausgebildet.

Der materielle Griffkörper 16l besteht zumindest zu einem Großteil aus einem Papierwerkstoff. Der materielle Griffkörper 16l besteht beispielhaft vollständig aus einem Papierwerkstoff. Der materielle Griffkörper 16l der Griffeinheit 14l weist zumindest eine Schicht aus einem Papierwerkstoff auf. Die Schicht des materiellen Griffkörpers 16l wird geschnitten oder gestanzt.

Ferner ist die Schicht des Griffkörpers 16l verformt, bevorzugt tiefgezogen, insbesondere mittels Befeuchtung, Drucks und Wärme. Der materielle Griffkörper 16l weist eine Verformung 128l auf. Der Griffkörper 16l weist eine Prägung in Form einer Verformung 128l auf, welcher beabstandet zu einer Außenkante des Griffkörpers 16l einer Kontur des Griffkörpers 16l folgt. Die Verformung 128l weist ferner einen Mittelbereich 130l auf, welcher weniger tief verformt ist wie die Außenkontur der Verformung 128l. Hierdurch wird insbesondere beispielsweise eine Greifgeometrie erzeugt. Es kann insbesondere ein Körperpflegeprodukt 10l mit einer voluminösen und stabilen Griffeinheit 14l bereitgestellt werden.

Die Verformung 128l kann auf verschiedene Weisen erfolgen. Zum einen können die einzelnen Schichten vor dem Verbinden verformt werden, zum anderen können die Schichten nach dem Verbinden als Ganzes verformt werden. Beim Verformen vor dem Verbinden der Schichten ist es wichtig, dass die Außenkontur gut auf die Verformung 128l ausgerichtet ist. Damit soll erreicht werden, dass identische Produkte ohne Differenzen der Schichten an der Außenkontur entstehen, wenn die Schichten beim Verbinden bereits ausgestanzt sind. Zum anderen soll so sichergestellt werden, dass die Verformung immer am selben Ort ist, wenn die Produkte erst nach dem Verformen ausgestanzt werden. Beim Verformen nach dem Verbinden ist zu beachten, dass aufgrund der größeren Materialstärke durch mehr zu verformende Schichten der Verformungsprozess aufwändiger ist.

Das Körperpflegeprodukt 10l weist ferner die Verbindungseinheit 18I auf. Die Verbindungseinheit 18l weist ein mit der Anwendungseinheit 12l verbundenes Verbindungselement 20l und ein mit der Griffeinheit 14l verbundenes weiteres Verbindungselement 22l auf. Das Verbindungselement 20l und das weitere Verbindungselement 22l sind korrespondierend ausgebildet. Ferner ist das Verbindungselement 20l der Verbindungseinheit 18I einstückig mit der Anwendungseinheit 12I ausgebildet. Das Verbindungselement 20l bildet insbesondere einen Teil der Anwendungseinheit 12l. Das weitere Verbindungselement 22l der Verbindungseinheit 18l ist zumindest teilweise einstückig mit der Griffeinheit 14l ausgebildet. Das weitere Verbindungselement 22l der Verbindungseinheit 18l ist einstückig mit dem Griffkörper 16l ausgebildet. Das weitere Verbindungselement 22l der Verbindungseinheit 18l ist einteilig mit dem Griffkörper 16l ausgebildet. Das weitere Verbindungselement 22l der Verbindungseinheit 18l bildet daher einen Teil des Griffkörpers 16l. Das weitere Verbindungselement 22l der Verbindungseinheit 18I besteht daher ebenfalls zu einem Großteil, insbesondere vollständig, aus einem Papierwerkstoff.

Das weitere Verbindungselement 22l ist in einem Endbereich des Griffkörpers 16l ausgebildet. Die Arme 26l, 26l' des Griffkörpers 16l bilden in ihren Endbereichen das weitere Verbindungselement 22l aus, an welchem die Anwendungseinheit 12l fixiert ist. Das weitere Verbindungselement 22l bildet an den Enden der Arme 26l, 26l' zwei Verbindungsbereiche 28l, 28l' aus. An jedem der Arme 26l, 26l' ist jeweils ein Verbindungsbereich 28l, 28l' ausgebildet. Das weitere Verbindungselement 22l der Verbindungseinheit 18I weist zumindest eine Formschlusskontur 36l auf, welche dazu vorgesehen ist, einen Formschluss mit dem Verbindungselement 20l auszubilden. Das weitere Verbindungselement 22l weist an beiden Armen 26l, 26l' jeweils eine Formschlusskontur 36l auf. Die Formschlusskontur 36l ist in den Verbindungsbereichen 28l, 28l' angeordnet. Die Formschlusskontur 36l des weiteren Verbindungselements 22l weist zumindest eine Durchgangsausnehmung 38l, 38l' auf. Die Formschlusskontur 36l des weiteren Verbindungselements 22l weist zwei Durchgangsausnehmungen 38l, 38l' auf, wobei jeweils eine Durchgangsausnehmung 38l, 38l' in jeweils einem der Arme 26l, 26l' angeordnet ist.

Das Verbindungselement 20l der Verbindungseinheit 18l ist zumindest teilweise stoffschlüssig mit dem weiteren Verbindungselement 22l der Verbindungseinheit 18l verbunden. Das Verbindungselement 20l der Verbindungseinheit 18I ist zumindest teilweise formschlüssig mit dem weiteren Verbindungselement 22l der Verbindungseinheit 18I verbunden. Das weitere Verbindungselement 22l der Verbindungseinheit 18I ist teilweise mit dem Verbindungselement 20l der Verbindungseinheit 18I umspritzt.

Das Verbindungselement 20l der Verbindungseinheit 18I weist zumindest eine Kappe 30l, 30l' auf, welche das weitere Verbindungselement 22l der Verbindungseinheit 18l übergreift. Das Verbindungselement 20l der Verbindungseinheit 18I weist zwei Kappen 30l, 30l' auf, welche jeweils einen der Arme 26l, 26l' in einem Bereich des weiteren Verbindungselements 22l übergreifen. Die Kappen 30l, 30l' erstrecken sich jeweils klammerartig um die Arme 26l, 26l'. Die Kappen 30l, 30l' des Verbindungselements 20l erstrecken sich jeweils klammerartig von der Zahnseidefadenseite her über die Arme 26l, 26l'. Die Kappen 30l, 30l' des Verbindungselements 20l weisen in einer Ebene senkrecht zu einer Richtung des Zahnseidefadens 24l jeweils einen U-förmigen Querschnitt auf. Der Zahnseidefaden 24l ist dabei von den Kappen 30l, 30l' des Verbindungselements 20l umspritzt. Das Verbindungselement 20l verbindet den Zahnseidefaden 24I mit den Armen 26l, 26l' des Griffkörpers 16l. Der Zahnseidefaden 24l liegt nicht am Griffkörper 16l an. Zwischen dem Zahnseidefaden 24l und dem Griffkörper 16l besteht ein Abstand von 0,2 mm bis 3 mm, vorzugsweise von 0,35 mm bis 0,8 mm. Ein Kunststoff des Verbindungselements 20l muss um den Zahnseidefaden 24I der Anwendungseinheit 12l fließen, um den benötigten Ausreißkräften standzuhalten.

Das weitere Verbindungselement 22l der Verbindungseinheit 18I weist zumindest eine Formschlusskontur 36l auf, welche dazu vorgesehen ist, einen Formschluss mit dem Verbindungselement 20l auszubilden. Das weitere Verbindungselement 22l weist an beiden Armen 26l, 26l jeweils eine Formschlusskontur 36l auf. Die Formschlusskontur 36l ist in den Verbindungsbereichen 28l, 28l' angeordnet. Die Formschlusskontur 36l des weiteren Verbindungselements 22l ist zu einer Verdrehsicherung des Verbindungselements 20l vorgesehen. Die Formschlusskontur 36l des weiteren Verbindungselements 22l weist zumindest eine Durchgangsausnehmung 38l, 38l' auf. Die Formschlusskontur 36l des weiteren Verbindungselements 22l weist zwei Durchgangsausnehmungen 38l, 38l' auf, wobei jeweils eine Durchgangsausnehmung 38l, 38l' in jeweils einem der Arme 26l, 26l' angeordnet ist. Das Verbindungselement 20l erstreckt sich jeweils durch die Durchgangsausnehmungen 38l, 38l'. Die Kappen 30l, 30l' erstrecken sich jeweils durch die Durchgangsausnehmungen 38l, 38l'. Die zumindest eine Durchgangsausnehmung 38l, 38l' ist beispielhaft von einem runden Loch gebildet.

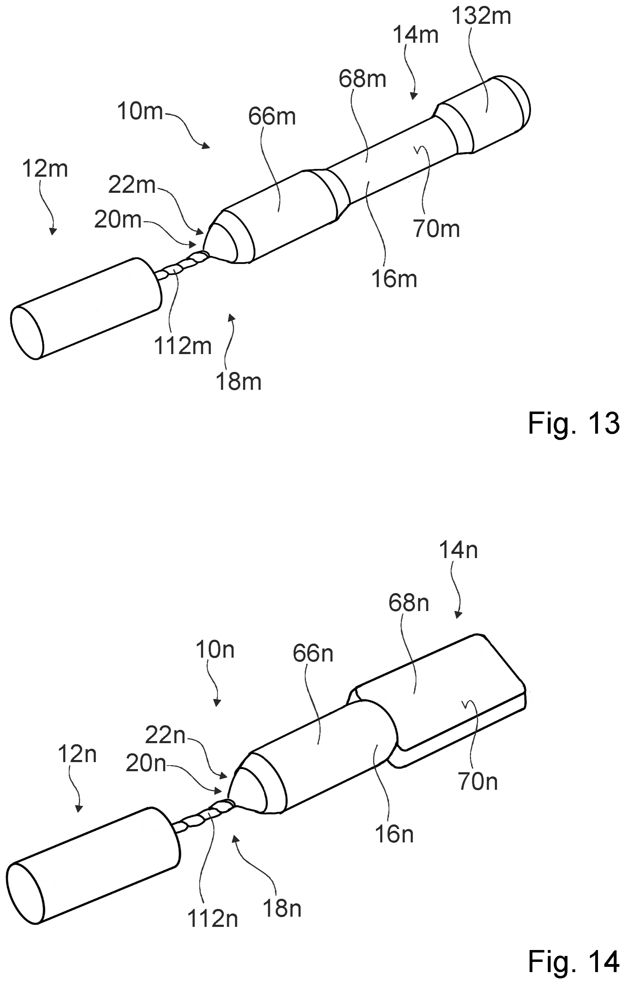

Die Figur 13 zeigt ein Körperpflegeprodukt 10m in einer schematischen perspektivischen Darstellung. Das Körperpflegeprodukt 10m ist von einem Mundhygienemittel gebildet. Das Körperpflegeprodukt 10m ist im vorliegenden Fall als eine Interdentalbürste ausgebildet.

Das Körperpflegeprodukt 10m weist eine Anwendungseinheit 12m auf. Ferner weist das Körperpflegeprodukt 10m eine Griffeinheit 14m auf, welche einen materiellen Griffkörper 16m aufweist. Des Weiteren weist das Körperpflegeprodukt 10m eine Verbindungseinheit 18m auf, welche die Anwendungseinheit 12m mit der Griffeinheit 14m verbindet.

Die Anwendungseinheit 12m bildet einen Interdentalbürstenkopf des Körperpflegeprodukts 10m. Die Anwendungseinheit 12m weist einen Bürstenkopf mit radial nach außenstehenden Borsten auf, welcher insbesondere von einer eingedrehten Bürste gebildet ist. Die Borsten sind der Übersichtlichkeit halber lediglich als Volumenkörper dargestellt. Ferner weist die Anwendungseinheit 12m einen Reinigungselementträger 112m auf.

Die Griffeinheit 14m ist zu einem Greifen durch den Bediener vorgesehen. Die Griffeinheit 14m weist den materiellen Griffkörper 16m auf. Der materielle Griffkörper 16m der Griffeinheit 14m weist einen Kopfbereich 66m auf. Ferner weist der materielle Griffkörper 16m der Griffeinheit 14m einen Griffbereich 68m auf. Des Weiteren weist der materielle Griffkörper 16m der Griffeinheit 14m an einem dem Kopfbereich abgewandten Ende einen Endbereich 132m auf. Der Kopfbereich 66m ist zu einer Anbindung der Anwendungseinheit 12m vorgesehen. Der materielle Griffkörper 16m besteht zumindest zu einem Großteil aus einem Papierwerkstoff. Der materielle Griffkörper 16m besteht beispielhaft vollständig aus einem Papierwerkstoff. Der materielle Griffkörper 16m besteht aus einem zylindrischen Papierkörper. Der materielle Griffkörper 16m der Griffeinheit 14m weist zumindest eine Schicht aus einem Papierwerkstoff auf, welche gerollt ausgebildet ist. Der materielle Griffkörper 16m weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Der Griffkörper 16m ist verformt. Der Griffbereich 68m des Griffkörpers 16m ist gegenüber dem Kopfbereich 66m und dem Endbereich 132m tailliert ausgebildet. Der Griffbereich 68m des Griffkörpers 16m ist durch nachträgliches Drücken, insbesondere Verpressen, tailliert. Der Griffkörper 16m wird ausgehend von einem Zylinder partiell umgeformt. Die Ausgangsform des Griffkörpers 16m ist daher insbesondere ein zylindrischer Griff. Der Griffkörper 16m kann dabei in einer Ausgangsform insbesondere einen größeren Durchmesser aufgrund der vorgesehenen Verformung aufweisen.

Die Anwendungseinheit 12m kann mittels einer Verbindungseinheit 18m mit der Griffeinheit 14m verbunden werden. Das Körperpflegeprodukt 10m weist ferner die Verbindungseinheit 18m auf. Die Verbindungseinheit 18m weist ein mit der Anwendungseinheit 12m verbundenes Verbindungselement 20m und ein mit der Griffeinheit 14m verbundenes weiteres Verbindungselement 22m auf. Das Verbindungselement 20m und das weitere Verbindungselement 22m sind korrespondierend ausgebildet. Ferner ist das Verbindungselement 20m der Verbindungseinheit 18m einstückig mit dem Reinigungselementträger 112m der Anwendungseinheit 12m ausgebildet. Das Verbindungselement 20m bildet insbesondere einen Teil der Anwendungseinheit 12m. Das weitere Verbindungselement 22m der Verbindungseinheit 18m ist zumindest teilweise einstückig mit der Griffeinheit 14m ausgebildet. Das weitere Verbindungselement 22m der Verbindungseinheit 18m ist einstückig mit dem Griffkörper 16m ausgebildet. Das weitere Verbindungselement 22m der Verbindungseinheit 18m ist einteilig mit dem Griffkörper 16m ausgebildet. Das weitere Verbindungselement 22m der Verbindungseinheit 18m bildet daher einen Teil des Griffkörpers 16m. Das weitere Verbindungselement 22m der Verbindungseinheit 18m besteht daher ebenfalls zu einem Großteil, insbesondere vollständig, aus einem Papierwerkstoff. Das weitere Verbindungselement 22m ist in einem Endbereich des Griffkörpers 16m ausgebildet. Das weitere Verbindungselement 22m ist in dem Kopfbereich 66m des Griffkörpers 16m ausgebildet.

Das Verbindungselement 20m der Verbindungseinheit 18m ist zumindest teilweise stoffschlüssig mit dem weiteren Verbindungselement 22m der Verbindungseinheit 18m verbunden. Das Verbindungselement 20m der Verbindungseinheit 18m ist zumindest teilweise formschlüssig mit dem weiteren Verbindungselement 22m der Verbindungseinheit 18m verbunden. Das weitere Verbindungselement 22m bildet eine Ausnehmung in dem Griffkörper 16m aus, in welche das Verbindungselement 20m eingesteckt und fixiert ist. Alternativ oder zusätzlich wäre auch denkbar, dass die Anwendungseinheit 12m über das Verbindungselement 20m an den Griffkörper 16m angespritzt ist.

Die Figur 14 zeigt ein Körperpflegeprodukt 10n in einer schematischen perspektivischen Darstellung. Das Körperpflegeprodukt 10n ist von einem Mundhygienemittel gebildet. Das Körperpflegeprodukt 10n ist im vorliegenden Fall als eine Interdentalbürste ausgebildet.

Das Körperpflegeprodukt 10n weist eine Anwendungseinheit 12n auf. Ferner weist das Körperpflegeprodukt 10n eine Griffeinheit 14n auf, welche einen materiellen Griffkörper 16n aufweist. Des Weiteren weist das Körperpflegeprodukt 10n eine Verbindungseinheit 18n auf, welche die Anwendungseinheit 12n mit der Griffeinheit 14n verbindet.

Die Anwendungseinheit 12n bildet einen Interdentalbürstenkopf des Körperpflegeprodukts 10n. Die Anwendungseinheit 12n weist einen Bürstenkopf mit radial nach außen stehenden Borsten auf, welcher insbesondere von einer eingedrehten Bürste gebildet ist. Die Borsten sind der Übersichtlichkeit halber lediglich als Volumenkörper dargestellt. Ferner weist die Anwendungseinheit 12n einen Reinigungselementträger 112n auf.

Die Griffeinheit 14n ist zu einem Greifen durch den Bediener vorgesehen. Die Griffeinheit 14n weist den materiellen Griffkörper 16n auf. Der materielle Griffkörper 16n der Griffeinheit 14n weist einen Kopfbereich 66n auf. Ferner weist der materielle Griffkörper 16n der Griffeinheit 14n einen Griffbereich 68n auf. Der Kopfbereich 66n ist zu einer Anbindung der Anwendungseinheit 12n vorgesehen. Der materielle Griffkörper 16n besteht zumindest zu einem Großteil aus einem Papierwerkstoff. Der materielle Griffkörper 16n besteht beispielhaft vollständig aus einem Papierwerkstoff. Der materielle Griffkörper 16n besteht aus einem zylindrischen Papierkörper. Der materielle Griffkörper 16n der Griffeinheit 14n weist zumindest eine Schicht aus einem Papierwerkstoff auf, welche gerollt ausgebildet ist. Der materielle Griffkörper 16n weist beispielhaft genau eine Schicht auf, es wäre jedoch auch ein mehrschichtiger Aufbau denkbar. Die Schicht aus dem Papierwerkstoff ist um eine definierte Rollachse aufgerollt.

Der Griffkörper 16n ist verformt. Der Griffbereich 68n des Griffkörpers 16n ist gegenüber dem Kopfbereich abgeflacht ausgebildet. Der Griffbereich 68n des Griffkörpers 16n ist durch nachträgliches Drücken, insbesondere Verpressen stabilisiert. Der Griffkörper 16n ist in dem Griffbereich 68n partiell verpresst, sodass der Griffbereich 68n einen annähernd rechteckigen Querschnitt und eine zumindest annähernd quaderförmige Grundform aufweist. Insbesondere ist in dem Griffbereich 68n eine Quererstreckung des Griffkörpers 16n verringert.

Die Anwendungseinheit 12n kann mittels einer Verbindungseinheit 18n mit der Griffeinheit 14n verbunden werden. Das Körperpflegeprodukt 10n weist ferner die Verbindungseinheit 18n auf. Die Verbindungseinheit 18n weist ein mit der Anwendungseinheit 12n verbundenes Verbindungselement 20n und ein mit der Griffeinheit 14n verbundenes weiteres Verbindungselement 22n auf. Das Verbindungselement 20n und das weitere Verbindungselement 22n sind korrespondierend ausgebildet. Ferner ist das Verbindungselement 20n der Verbindungseinheit 18n einstückig mit dem Reinigungselementträger 112n der Anwendungseinheit 12n ausgebildet. Das Verbindungselement 20n bildet insbesondere einen Teil der Anwendungseinheit 12n. Das weitere Verbindungselement 22n der Verbindungseinheit 18n ist zumindest teilweise einstückig mit der Griffeinheit 14n ausgebildet. Das weitere Verbindungselement 22n der Verbindungseinheit 18n ist einstückig mit dem Griffkörper 16n ausgebildet. Das weitere Verbindungselement 22n der Verbindungseinheit 18n ist einteilig mit dem Griffkörper 16n ausgebildet. Das weitere Verbindungselement 22n der Verbindungseinheit 18n bildet daher einen Teil des Griffkörpers 16n. Das weitere Verbindungselement 22n der Verbindungseinheit 18n besteht daher ebenfalls zu einem Großteil, insbesondere vollständig, aus einem Papierwerkstoff. Das weitere Verbindungselement 22n ist in einem Endbereich des Griffkörpers 16n ausgebildet. Das weitere Verbindungselement 22n ist in dem Kopfbereich 66n des Griffkörpers 16n ausgebildet.

Das Verbindungselement 20n der Verbindungseinheit 18n ist zumindest teilweise stoffschlüssig mit dem weiteren Verbindungselement 22n der Verbindungseinheit 18n verbunden. Das Verbindungselement 20n der Verbindungseinheit 18n ist zumindest teilweise formschlüssig mit dem weiteren Verbindungselement 22n der Verbindungseinheit 18n verbunden. Das weitere Verbindungselement 22n bildet eine Ausnehmung in dem Griffkörper 16n aus, in welche das Verbindungselement 20n eingesteckt und fixiert ist. Alternativ oder zusätzlich wäre auch denkbar, dass die Anwendungseinheit 12n über das Verbindungselement 20n an den Griffkörper 16n angespritzt ist.

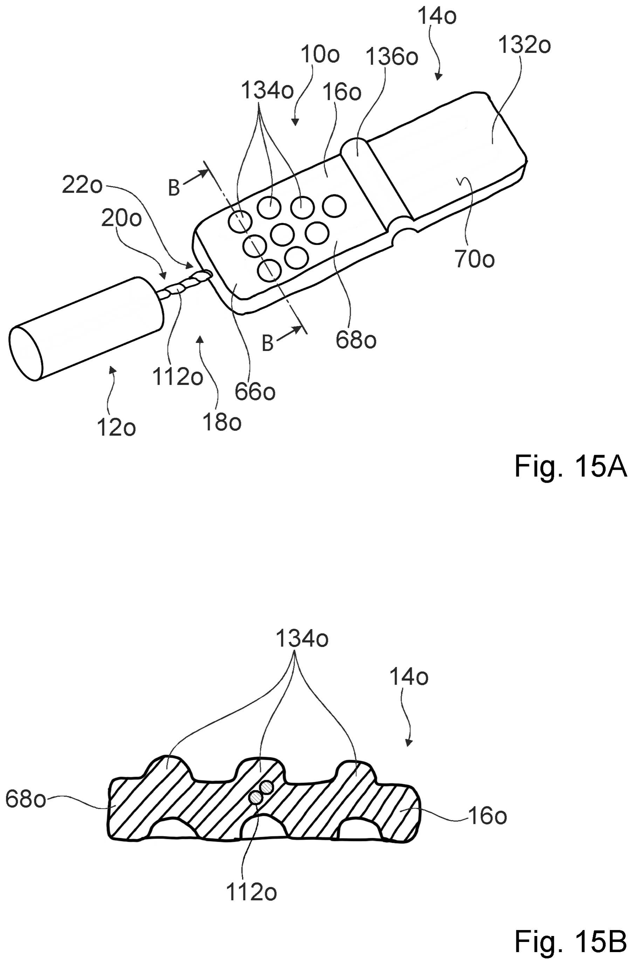

Die Figuren 15A und 15B zeigen ein Körperpflegeprodukt 10o in einer schematischen perspektivischen Darstellung. Das Körperpflegeprodukt 10o ist von einem Mundhygienemittel gebildet. Das Körperpflegeprodukt 10o ist im vorliegenden Fall als eine Interdentalbürste ausgebildet.

Das Körperpflegeprodukt 10o weist eine Anwendungseinheit 12o auf. Ferner weist das Körperpflegeprodukt 10o eine Griffeinheit 14o auf, welche einen materiellen Griffkörper 16o aufweist. Des Weiteren weist das Körperpflegeprodukt 10o eine Verbindungseinheit 18o auf, welche die Anwendungseinheit 12o mit der Griffeinheit 14o verbindet.

Die Anwendungseinheit 12o bildet einen Interdentalbürstenkopf des Körperpflegeprodukts 10o. Die Anwendungseinheit 12o weist einen Bürstenkopf mit radial nach außen stehenden Borsten auf, welcher insbesondere von einer eingedrehten Bürste gebildet ist. Die Borsten sind der Übersichtlichkeit halber lediglich als Volumenkörper dargestellt. Ferner weist die Anwendungseinheit 12o einen Reinigungselementträger 112o auf.

Die Griffeinheit 14o ist zu einem Greifen durch den Bediener vorgesehen. Die Griffeinheit 14o weist den materiellen Griffkörper 16o auf. Der materielle Griffkörper 16o der Griffeinheit 14o weist einen Kopfbereich 66o auf. Ferner weist der materielle Griffkörper 16o der Griffeinheit 14o einen Griffbereich 68o auf. Der Kopfbereich 66o ist zu einer Anbindung der Anwendungseinheit 12o vorgesehen. Der materielle Griffkörper 16o besteht zumindest zu einem Großteil aus einem Papierwerkstoff. Der materielle Griffkörper 16o besteht beispielhaft vollständig aus einem Papierwerkstoff. Der materielle Griffkörper 16o weist eine flache, längliche Grundform auf. Der materielle Griffkörper 16o der Griffeinheit 14o weist zumindest zwei Schichten aus einem Papierwerkstoff auf, die geschichtet miteinander verbunden sind. Der materielle Griffkörper 16o der Griffeinheit 14o weist beispielhaft genau zwei Schichten aus einem Papierwerkstoff auf. Vorzugsweise sind von 2 bis 6, vorzugsweise von 2 bis 4, Schichten vorgesehen. Bevorzugt sind die zumindest zwei Schichten senkrecht zu einer Haupterstreckungsebene der Schichten übereinander angeordnet und miteinander verbunden. Die Schichten sind im Wesentlichen identisch ausgebildet und bilden insbesondere gegenüberliegende Außenseiten des Körperpflegeprodukts 10o. Die Schichten sind beispielsweise mittels Kleben und/oder Pressen und/oder Schweißen und/oder Laminieren miteinander verbunden. Die Schichten werden insbesondere bei einer Herstellung des Körperpflegeprodukts 10o miteinander verbunden.

Der materielle Griffkörper 16o der Griffeinheit 14o weist einen Griffbereich 68o auf. Ferner weist der materielle Griffkörper 16o der Griffeinheit 14o einen Endbereich 132o auf. Der Griffbereich 68o ist zu einer Anbindung der Anwendungseinheit 12o vorgesehen.

Der Griffkörper 16o ist verformt. Der Griffbereich 68o des Griffkörpers 16o weist mehrere kugelförmige Verformungen 134o auf, welche auf einer Vorderseite des Griffbereichs 68o kuppelförmige Erhebungen ausbilden und auf einer Rückseite des Griffbereichs 68b halbkugelförmige Vertiefungen ausbilden. Ferner weist der Griffkörper 16o eine weitere Verformung 136o auf, welche zwischen dem Griffbereich 68o und dem Endbereich 132o angeordnet ist. Die Verformung 136o ist von einer länglichen Verformung gebildet, welche sich über die gesamte Breite, insbesondere Quererstreckung, des Griffkörpers 16o erstreckt. Die Verformung 136o bildet auf einer Vorderseite des Griffkörpers 16o eine kammförmige Erhebung aus, welche sich über die gesamte Breite, insbesondere Quererstreckung, des Griffkörpers 16o erstreckt. Ferner bildet die Verformung 136o auf der Rückseite des Griffkörpers 16o eine nutartige Vertiefung aus, welche sich über die gesamte Breite, insbesondere Quererstreckung, des Griffkörpers 16o erstreckt.

Die Anwendungseinheit 12o kann mittels einer Verbindungseinheit 18o mit der Griffeinheit 14o verbunden werden. Das Körperpflegeprodukt 10o weist ferner die Verbindungseinheit 18o auf. Die Verbindungseinheit 18o weist ein mit der Anwendungseinheit 12o verbundenes Verbindungselement 20o und ein mit der Griffeinheit 14o verbundenes weiteres Verbindungselement 22o auf. Das Verbindungselement 20o und das weitere Verbindungselement 22o sind korrespondierend ausgebildet. Ferner ist das Verbindungselement 20o der Verbindungseinheit 18o einstückig mit dem Reinigungselementträger 112o der Anwendungseinheit 12o ausgebildet. Das Verbindungselement 20o bildet insbesondere einen Teil der Anwendungseinheit 12o. Das Verbindungselement 20o ist von einem Ende des Reinigungselementträgers 112o gebildet. Das weitere Verbindungselement 22o der Verbindungseinheit 18o ist zumindest teilweise einstückig mit der Griffeinheit 14o ausgebildet. Das weitere Verbindungselement 22o der Verbindungseinheit 18o ist einstückig mit dem Griffkörper 16o ausgebildet. Das weitere Verbindungselement 22o der Verbindungseinheit 18o ist einteilig mit dem Griffkörper 16o ausgebildet. Das weitere Verbindungselement 22o der Verbindungseinheit 18o bildet daher einen Teil des Griffkörpers 16o. Das weitere Verbindungselement 22o der Verbindungseinheit 18o besteht daher ebenfalls zu einem Großteil, insbesondere vollständig, aus einem Papierwerkstoff. Das weitere Verbindungselement 22o ist in einem Endbereich des Griffkörpers 16o ausgebildet. Das weitere Verbindungselement 22o ist in dem Kopfbereich 66o des Griffkörpers 16o ausgebildet.

Das Verbindungselement 20o der Verbindungseinheit 18o ist zumindest teilweise stoffschlüssig mit dem weiteren Verbindungselement 22o der Verbindungseinheit 18o verbunden. Das Verbindungselement 20o der Verbindungseinheit 18o ist zumindest teilweise formschlüssig mit dem weiteren Verbindungselement 22o der Verbindungseinheit 18o verbunden. Das Verbindungselement 20o ist zwischen den zumindest zwei Schichten des materiellen Griffkörpers 16o an der Griffeinheit 14o angeordnet. Ferner ist der Reinigungselementträger 112o der Anwendungseinheit 12o zu einer teilweise formschlüssigen Verbindung mit der Griffeinheit 14o in dem Verbindungsabschnitt nicht weiter sichtbar gebogen ausgebildet. Ferner erstreckt sich der Reinigungselementträger 112o der Anwendungseinheit 12o im Bereich bis maximal zur Verformung 136o. Die Verformungen 134o können ein Halten des Drahts des Reinigungselementträger 22o verbessern, wenn sich Verformungen 134o und Draht berühren. Alternativ oder zusätzlich wäre auch denkbar, dass die Anwendungseinheit 12o über das Verbindungselement 20o an den Griffkörper 16o angespritzt ist.

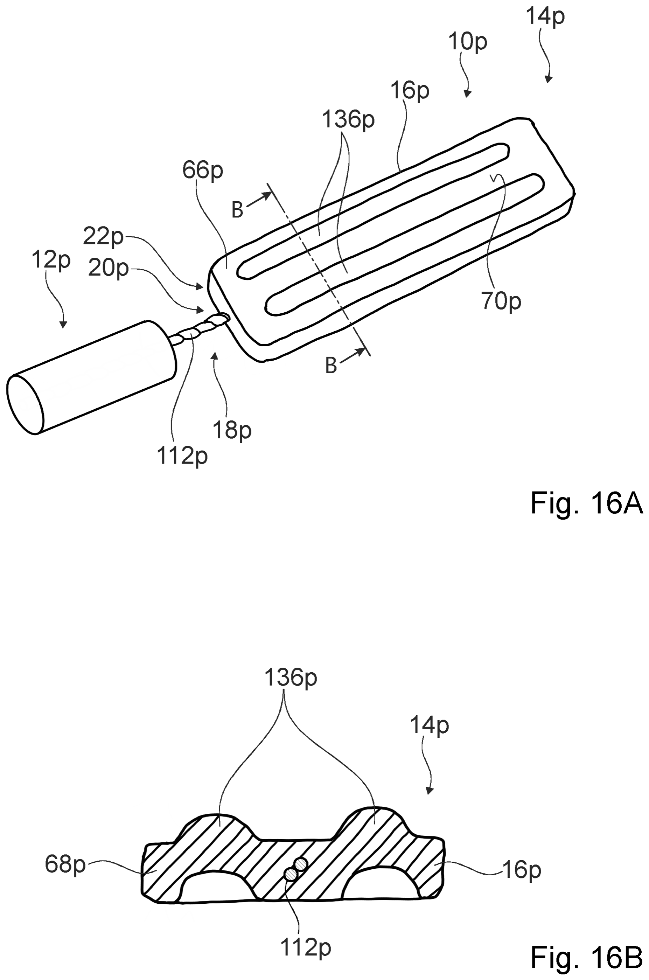

Die Figuren 16A und 16B zeigen ein Körperpflegeprodukt 10p in einer schematischen perspektivischen Darstellung. Das Körperpflegeprodukt 10p ist von einem Mundhygienemittel gebildet. Das Körperpflegeprodukt 10p ist im vorliegenden Fall als eine Interdentalbürste ausgebildet.

Das Körperpflegeprodukt 10p weist eine Anwendungseinheit 12p auf. Ferner weist das Körperpflegeprodukt 10p eine Griffeinheit 14p auf, welche einen materiellen Griffkörper 16p aufweist. Des Weiteren weist das Körperpflegeprodukt 10p eine Verbindungseinheit 18p auf, welche die Anwendungseinheit 12p mit der Griffeinheit 14p verbindet.

Die Anwendungseinheit 12p bildet einen Interdentalbürstenkopf des Körperpflegeprodukts 10p. Die Anwendungseinheit 12p weist einen Bürstenkopf mit radial nach außen stehenden Borsten auf, welcher insbesondere von einer eingedrehten Bürste gebildet ist. Die Borsten sind der Übersichtlichkeit halber lediglich als Volumenkörper dargestellt. Ferner weist die Anwendungseinheit 12p einen Reinigungselementträger 112p auf.

Die Griffeinheit 14p ist zu einem Greifen durch den Bediener vorgesehen. Die Griffeinheit 14p weist den materiellen Griffkörper 16p auf. Der materielle Griffkörper 16p der Griffeinheit 14p weist einen Kopfbereich 66p auf. Ferner weist der materielle Griffkörper 16p der Griffeinheit 14p einen Griffbereich 68p auf. Der Kopfbereich 66p ist zu einer Anbindung der Anwendungseinheit 12p vorgesehen. Der materielle Griffkörper 16p besteht zumindest zu einem Großteil aus einem Papierwerkstoff. Der materielle Griffkörper 16p besteht beispielhaft vollständig aus einem Papierwerkstoff. Der materielle Griffkörper 16p weist eine flache, längliche Grundform auf. Der materielle Griffkörper 16p der Griffeinheit 14p weist zumindest zwei Schichten aus einem Papierwerkstoff auf, die geschichtet miteinander verbunden sind. Der materielle Griffkörper 16p der Griffeinheit 14p weist beispielhaft genau zwei Schichten aus einem Papierwerkstoff auf. Vorzugsweise sind von 2 bis 6, vorzugsweise von 2 bis 4, Schichten vorgesehen. Bevorzugt sind die zumindest zwei Schichten senkrecht zu einer Haupterstreckungsebene der Schichten übereinander angeordnet und miteinander verbunden. Die Schichten sind im Wesentlichen identisch ausgebildet und bilden insbesondere gegenüberliegende Außenseiten des Körperpflegeprodukts 10p. Die Schichten sind beispielsweise mittels Kleben und/oder Pressen und/oder Schweißen und/oder Laminieren miteinander verbunden. Die Schichten werden insbesondere bei einer Herstellung des Körperpflegeprodukts 10p miteinander verbunden.

Der materielle Griffkörper 16p der Griffeinheit 14p weist einen Griffbereich 68p auf. Der Griffkörper 16p ist verformt. Der Griffbereich 68p des Griffkörpers 16p weist zwei längliche Verformungen 136p auf, welche sich in Längsrichtung über einen Großteil des Griffbereichs 68p erstrecken. Die Verformungen 136p sind von länglichen, parallel verlaufenden Verformungen gebildet. Die Verformungen 136p bilden jeweils auf einer Vorderseite des Griffkörpers 16p eine kammförmige Erhebung aus. Ferner bilden die Verformungen 136p auf der Rückseite des Griffkörpers 16p jeweils eine nutartige Vertiefung aus.

Die Anwendungseinheit 12p kann mittels einer Verbindungseinheit 18p mit der Griffeinheit 14p verbunden werden. Das Körperpflegeprodukt 10p weist ferner die Verbindungseinheit 18p auf. Die Verbindungseinheit 18p weist ein mit der Anwendungseinheit 12p verbundenes Verbindungselement 20p und ein mit der Griffeinheit 14p verbundenes weiteres Verbindungselement 22p auf. Das Verbindungselement 20p und das weitere Verbindungselement 22p sind korrespondierend ausgebildet. Ferner ist das Verbindungselement 20p der Verbindungseinheit 18p einstückig mit dem Reinigungselementträger 112p der Anwendungseinheit 12p ausgebildet. Das Verbindungselement 20p bildet insbesondere einen Teil der Anwendungseinheit 12p. Das Verbindungselement 20p ist von einem Ende des Reinigungselementträgers 112p gebildet. Das weitere Verbindungselement 22p der Verbindungseinheit 18p ist zumindest teilweise einstückig mit der Griffeinheit 14p ausgebildet. Das weitere Verbindungselement 22p der Verbindungseinheit 18p ist einstückig mit dem Griffkörper 16p ausgebildet. Das weitere Verbindungselement 22p der Verbindungseinheit 18p ist einteilig mit dem Griffkörper 16p ausgebildet. Das weitere Verbindungselement 22p der Verbindungseinheit 18p bildet daher einen Teil des Griffkörpers 16p. Das weitere Verbindungselement 22p der Verbindungseinheit 18p besteht daher ebenfalls zu einem Großteil, insbesondere vollständig, aus einem Papierwerkstoff. Das weitere Verbindungselement 22p ist in einem Endbereich des Griffkörpers 16p ausgebildet. Das weitere Verbindungselement 22p ist in dem Kopfbereich 66p des Griffkörpers 16p ausgebildet.

Das Verbindungselement 20p der Verbindungseinheit 18p ist zumindest teilweise stoffschlüssig mit dem weiteren Verbindungselement 22p der Verbindungseinheit 18p verbunden. Das Verbindungselement 20p der Verbindungseinheit 18p ist zumindest teilweise formschlüssig mit dem weiteren Verbindungselement 22p der Verbindungseinheit 18p verbunden. Das Verbindungselement 20p ist zwischen den zumindest zwei Schichten des materiellen Griffkörpers 16p an der Griffeinheit 14p angeordnet. Ferner ist der Reinigungselementträger 112p der Anwendungseinheit 12p zu einer teilweise formschlüssigen Verbindung mit der Griffeinheit 14p in dem Verbindungsabschnitt gebogen ausgebildet. Ferner erstreckt sich der Reinigungselementträger 112p der Anwendungseinheit 12p bis zu den Verformungen 136p. Die Verformungen 136p können ein Halten des Drahts des Reinigungselementträgers 112p verbessern, wenn sich Verformungen 136p und Draht berühren.

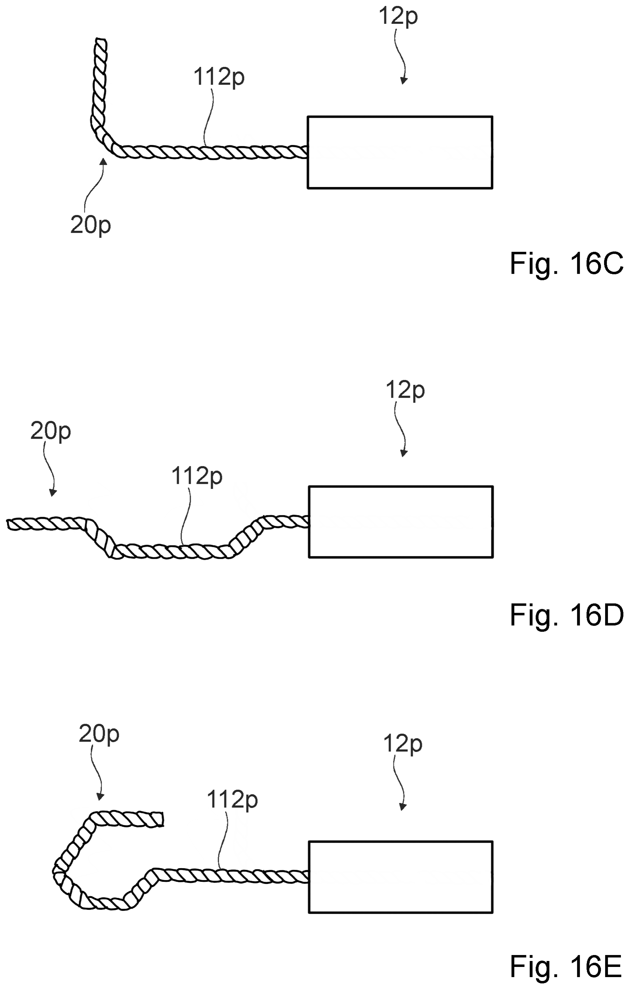

Der Reinigungselementträger 112p kann dabei an einem Ende auf verschiedene, einem Fachmann als sinnvoll erscheinende Arten gebogen sein. Das Biegen des Reinigungselementträgers 112p ist insbesondere für eingesiegelte oder umspritzte eingedrehte Bürsten nutzbar. Das Biegen dient insbesondere dazu, dass der Draht des Reinigungselementträgers 112p nicht aus dem Griffkörper 16p gedreht werden kann und der Draht des Reinigungselementträgers 112p nicht so gut in Längsrichtung aus dem Griffkörper 16p gezogen werden kann. Es ist insbesondere vorgesehen, dass eine Geometrie geschaffen wird, die aus der Beanspruchungsrichtung ragt, damit der Halt verbessert wird. Es soll insbesondere eine formschlüssige Verbindung geschaffen werden. Für einen optimalen Halt sollte eine Abweichung des Reinigungselementträgers 112p von der Längsachse von 0,5 mm bis 5 mm, vorzugsweise von 1 mm bis 3 mm, betragen. Dabei sind verschiedene Formen eines Endes des Reinigungselementträgers 112p denkbar. Der Reinigungselementträger 112p kann am Ende des Drahts einen Knick von 20° bis 90° aufweisen (Figur 16C). Der Reinigungselementträger 112p kann in einem mittleren Teil des Fixierungsbereichs eine Delle aufweisen (Figur 16D). Ferner kann der Reinigungselementträger 112p am Ende des Drahts einen Haken ausbilden, insbesondere mit einer 180° Biegung (Figur 16E).

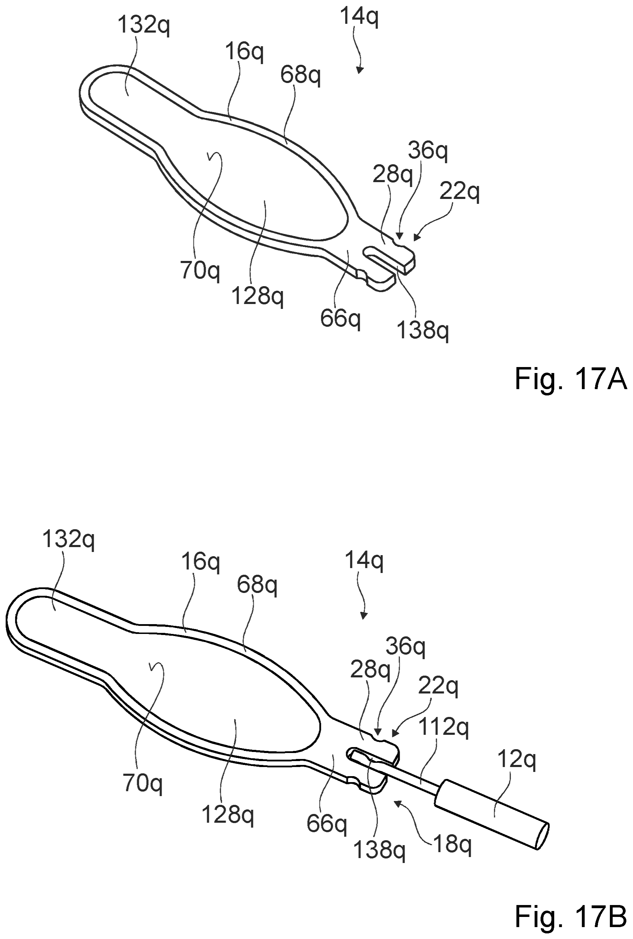

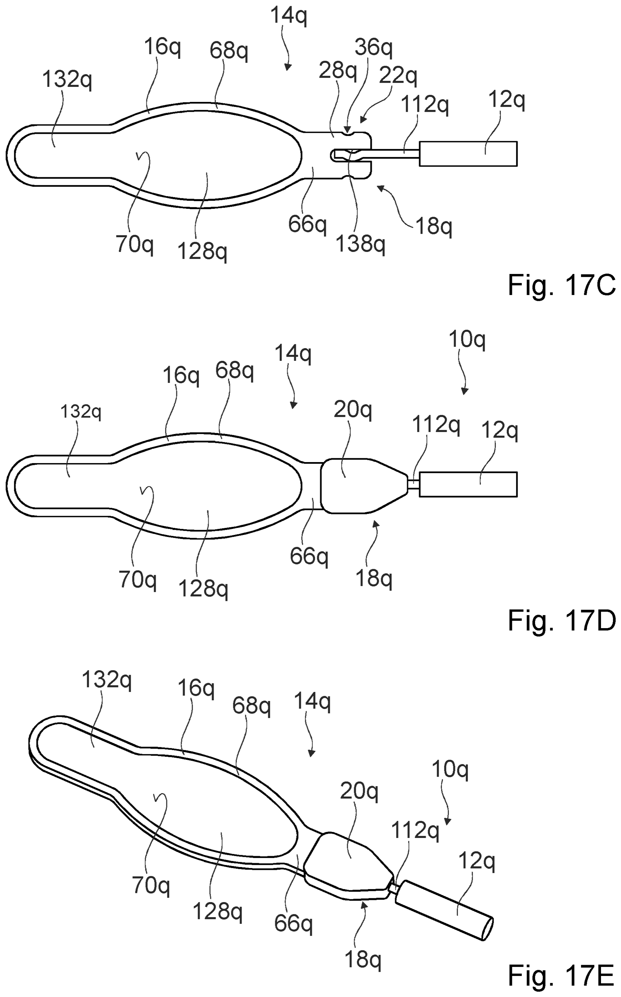

Die Figur 17E zeigt ein Körperpflegeprodukt 10q in einer schematischen perspektivischen Darstellung. Das Körperpflegeprodukt 10q ist von einem Mundhygienemittel gebildet. Das Körperpflegeprodukt 10q ist im vorliegenden Fall als eine Interdentalbürste ausgebildet. Die weiteren Figuren 17A bis 17D zeigen weitere Details zum Körperpflegeprodukt 10q.

Das Körperpflegeprodukt 10q weist eine Anwendungseinheit 12q auf. Ferner weist das Körperpflegeprodukt 10q eine Griffeinheit 14q auf, welche einen materiellen Griffkörper 16q aufweist. Des Weiteren weist das Körperpflegeprodukt 10q eine Verbindungseinheit 18q auf, welche die Anwendungseinheit 12q mit der Griffeinheit 14q verbindet.

Die Anwendungseinheit 12q bildet einen Interdentalbürstenkopf des Körperpflegeprodukts 10q. Die Anwendungseinheit 12q weist einen Bürstenkopf mit radial nach außen stehenden Borsten auf, welcher insbesondere von einer eingedrehten Bürste gebildet ist. Die Borsten sind der Übersichtlichkeit halber lediglich als Volumenkörper dargestellt. Ferner weist die Anwendungseinheit 12q einen Reinigungselementträger 112q auf. Der Reinigungselementträger 112q besteht aus zwei verdrillten Drähten, zwischen welchen Filamente als Borsten eingedreht sind.

Die Griffeinheit 14q ist zu einem Greifen durch den Bediener vorgesehen. Die Griffeinheit 14q weist den materiellen Griffkörper 16q auf. Der materielle Griffkörper 16q der Griffeinheit 14q weist einen Kopfbereich 66q auf. Ferner weist der materielle Griffkörper 16q der Griffeinheit 14q einen Griffbereich 68q auf. Der Kopfbereich 66q ist zu einer Anbindung der Anwendungseinheit 12q vorgesehen. Des Weiteren weist der materielle Griffkörper 16q der Griffeinheit 14q an einem dem Kopfbereich abgewandten Ende einen Endbereich 132q auf.

Der materielle Griffkörper 16q besteht zumindest zu einem Großteil aus einem Papierwerkstoff. Der materielle Griffkörper 16q besteht beispielhaft vollständig aus einem Papierwerkstoff. Der materielle Griffkörper 16q weist eine flache, längliche Grundform auf. Der materielle Griffkörper 16q der Griffeinheit 14q weist zumindest zwei Lagen aus einem Papierwerkstoff auf, die geschichtet miteinander verbunden sind. Der materielle Griffkörper 16q der Griffeinheit 14q weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10q. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10q miteinander verbunden.

Der materielle Griffkörper 16q der Griffeinheit 14q weist einen Griffbereich 68q auf. Ferner weist der materielle Griffkörper 16q der Griffeinheit 14q einen Endbereich 132q auf. Der Griffbereich 68q ist zu einer Anbindung der Anwendungseinheit 12q vorgesehen. Des Griffbereich 68q des Griffkörpers 16q weist eine ovale Form auf und ist gegenüber dem Endbereich 132q und dem Kopfbereich 66q verbreitert. Der Endbereich 132q und der Kopfbereich 66q weist jeweils eine rechteckige Grundform auf. Ein freies Ende des Endbereichs 132q ist abgerundet.

Ferner ist die Schicht des Griffkörpers 16q verformt, bevorzugt tiefgezogen, insbesondere mittels Befeuchtung, Drucks und Wärme. Der materielle Griffkörper 16q weist eine ovale Verformung 128q auf. Der Griffkörper 16q weist eine Prägung in Form einer Verformung 128q auf, welcher beabstandet zu einer Außenkante des Griffkörpers 16q einer Kontur des Griffkörpers 16q folgt. Die Verformung 128q erstreckt sich über den Griffbereich 68q und den Endbereich 132q. Hierdurch wird insbesondere beispielsweise eine Greifgeometrie erzeugt. Es kann insbesondere ein Körperpflegeprodukt 10q mit einer voluminösen und stabilen Griffeinheit 14q bereitgestellt werden.

Die Anwendungseinheit 12q kann mittels einer Verbindungseinheit 18q mit der Griffeinheit 14q verbunden werden. Das Körperpflegeprodukt 10q weist ferner die Verbindungseinheit 18q auf. Die Verbindungseinheit 18q weist ein mit der Anwendungseinheit 12q verbundenes Verbindungselement 20q und ein mit der Griffeinheit 14q verbundenes weiteres Verbindungselement 22q auf. Das Verbindungselement 20q und das weitere Verbindungselement 22q sind korrespondierend ausgebildet. Ferner ist das Verbindungselement 20q der Verbindungseinheit 18q einstückig mit der Anwendungseinheit 12q ausgebildet. Das Verbindungselement 20q bildet insbesondere einen Teil der Anwendungseinheit 12q. Das weitere Verbindungselement 22q der Verbindungseinheit 18q ist zumindest teilweise einstückig mit der Griffeinheit 14q ausgebildet. Das weitere Verbindungselement 22q der Verbindungseinheit 18q ist einstückig mit dem Griffkörper 16q ausgebildet. Das weitere Verbindungselement 22q der Verbindungseinheit 18q bildet daher einen Teil des Griffkörpers 16q. Das weitere Verbindungselement 22q der Verbindungseinheit 18q besteht daher ebenfalls zu einem Großteil, insbesondere vollständig, aus einem Papierwerkstoff.

Das Verbindungselement 20q der Verbindungseinheit 18q besteht zu einem Großteil aus einem Polymer, insbesondere aus einem Kunststoff. Das Verbindungselement 20q der Verbindungseinheit 18q besteht aus einem Hartkunststoff. Das Verbindungselement 20q besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22q ist in einem Endbereich des Griffkörpers 16q ausgebildet. Der Kopfbereich 66q des Griffkörpers 16q bildet in seinem Endbereich das weitere Verbindungselement 22q aus, an welchem die Anwendungseinheit 12q fixiert ist. Das weitere Verbindungselement 22q bildet an dem Ende des Kopfbereichs einen Verbindungsbereich 28q aus.

Das Verbindungselement 20q der Verbindungseinheit 18q ist zumindest teilweise stoffschlüssig mit dem weiteren Verbindungselement 22q der Verbindungseinheit 18q verbunden. Das Verbindungselement 20q der Verbindungseinheit 18q ist zumindest teilweise formschlüssig mit dem weiteren Verbindungselement 22q der Verbindungseinheit 18q verbunden. Das weitere Verbindungselement 22q der Verbindungseinheit 18q ist mit dem Verbindungselement 20q der Verbindungseinheit 18q umspritzt. Ferner ist der Reinigungselementträger 112q der Anwendungseinheit 12q von dem Verbindungselement 20q der Verbindungseinheit 18q umspritzt. Das Verbindungselement 20q der Verbindungseinheit 18q bildet eine Kappe 30q aus, welche das weitere Verbindungselement 22q der Verbindungseinheit 18q übergreift. Der Reinigungselementträger 112q ist dabei von der Kappe 30q des Verbindungselements 20q umspritzt. Das Verbindungselement 20q verbindet den Reinigungselementträger 112q mit dem Kopfbereich 66q des Griffkörpers 16q.

Das weitere Verbindungselement 22q der Verbindungseinheit 18q weist zumindest eine Formschlusskontur 36q auf, welche dazu vorgesehen ist, einen Formschluss mit dem Verbindungselement 20q auszubilden. Das weitere Verbindungselement 22q weist in dem Kopfbereich 66q eine Formschlusskontur 36q auf. Die Formschlusskontur 36q ist derart gestaltet, dass keine Rotation und insbesondere kein Abziehen des Verbindungselements 20q möglich ist. Die Formschlusskontur 36q des weiteren Verbindungselements 22q weist zwei gegenüberliegende Ausbuchtungen auf. Die Formschlusskontur 36q bildet Hinterschnitte für das Halten des Kunststoffmaterials des Verbindungselements 20q. Alternativ oder zusätzlich wäre auch denkbar, dass die Formschlusskontur 36q Ausnehmung außen auf der Umfangsgeometrie oder beispielsweise auch im Bereich eines Schlitzes 138q aufweist. Ferner weist der Griffkörper 16q in dem Kopfbereich 66q einen zu der Anwendungseinheit 12q hin geöffneten Schlitz 138q auf, welcher zu einer Aufnahme des Reinigungselementträgers 112q ausgebildet ist. Der Schlitz 138q ist von einer Ausnehmung gebildet, welche von einer der Vorder- zur Rückseite durchgehenden Stanzung gebildet ist. Der Schlitz 138q ist vollständig von dem Verbindungselement 20q umspritzt ausgebildet.

Das Verbindungselement 20q ist von einer Umspritzung gebildet. Bei einer Herstellung werden der Griffkörper 16q und die Anwendungseinheit 12q in ein Spritzgusswerkzeug eingelegt, wobei ein Schnittstellenbereich umspritzt wird. Die Umspritzung kann in einem Ein- oder Mehrkomponentenverfahren erfolgen. Eingesetzt werden können Hart- und/oder Weichkomponenten. Das Verbindungselement 20q besteht jedoch vorzugsweise aus einer Hartkomponente. Der Kunststoff des Verbindungselement 20q kann insbesondere zwischen verschiedenen Produktvarianten oder auch bei gleichen Produkten einen Farbunterschied zur Unterscheidung aufweisen. Insbesondere schaut der Kunststoff dazu aus dem Griffkörper 16q. So ist insbesondere eine Identifikation mehrerer Produkte nebeneinander möglich. Das Verbindungselements 20q kann zur Farbcodierung der Produkte genutzt werden. Interdentalbürsten sind insbesondere mit Farben codiert, welche die Größe widerspiegeln.

In einer alternativen Ausgestaltung kann der Griffkörper 16q anstatt des Schlitzes 138q ein Loch in Längsrichtung, insbesondere ein Sackloch, aufweisen. Dabei wird der Draht des Reinigungselementträgers 112q in das Sackloch eingeführt und anschließend das Sackloch mit Kunststoff gefüllt. Der Draht wird dabei umspritzt. Alternativ oder zusätzlich kann ferner in dem Endbereich 132q des Griffkörpers 16q eine Kappe angespritzt werden, sodass nicht nur das Loch gefüllt wird.

Ferner ist der Reinigungselementträger 22q der Anwendungseinheit 12q zu einer teilweise formschlüssigen Verbindung mit dem Verbindungselement 20q gebogen ausgebildet. Der Reinigungselementträger 22q weist in einem mittleren Teil des Fixierungsbereichs eine Delle auf.

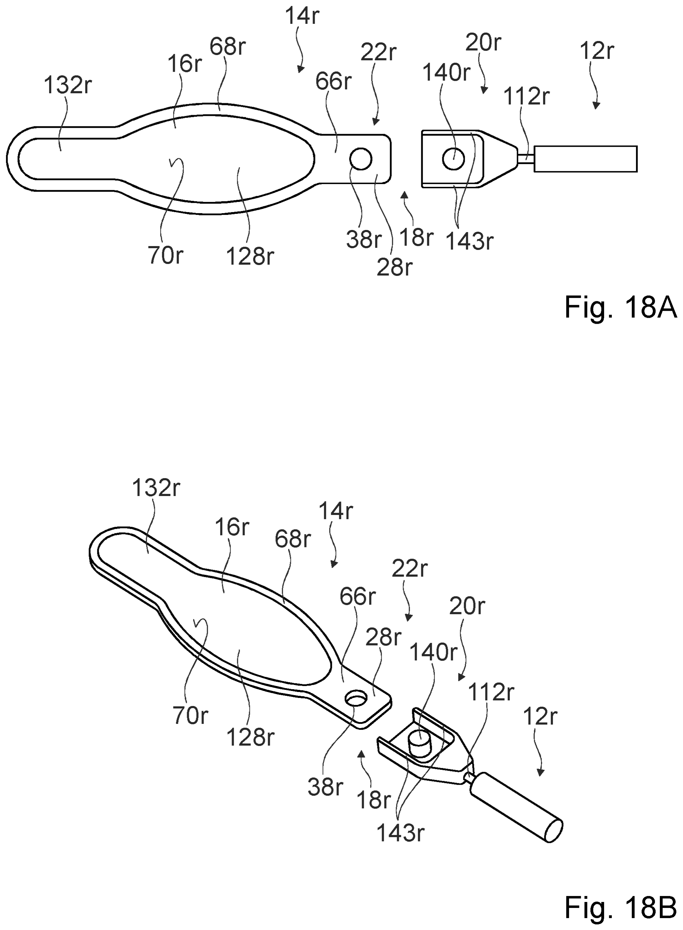

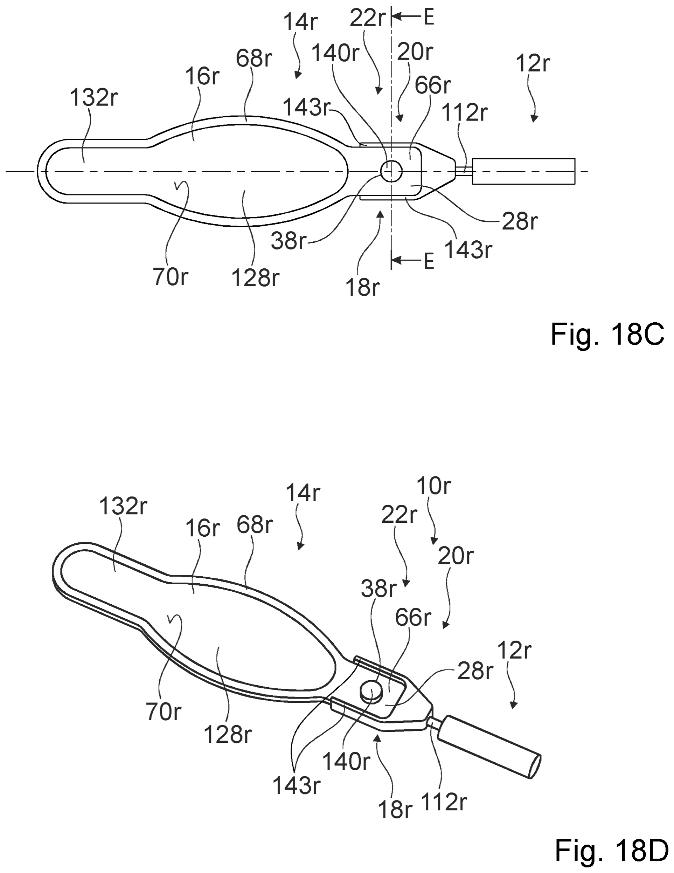

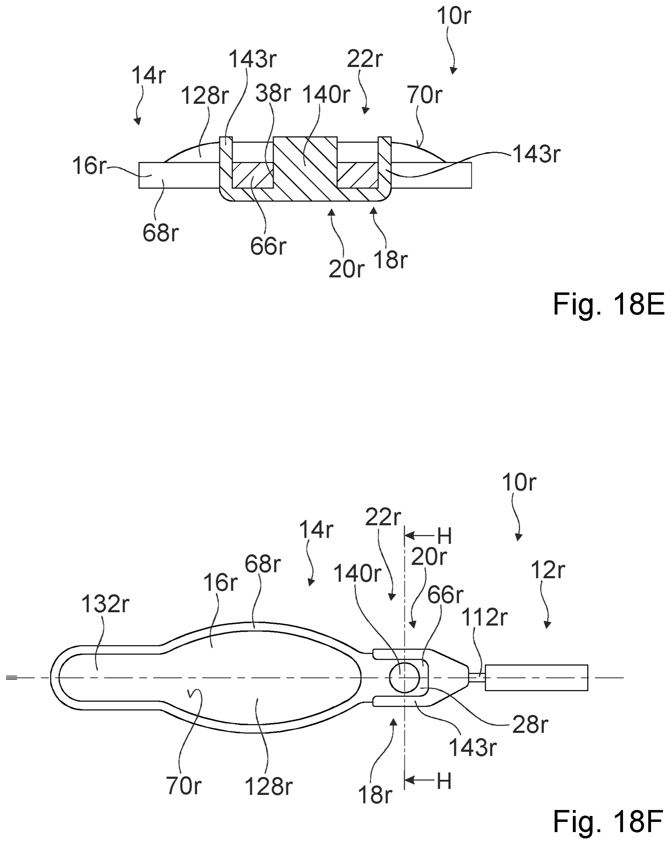

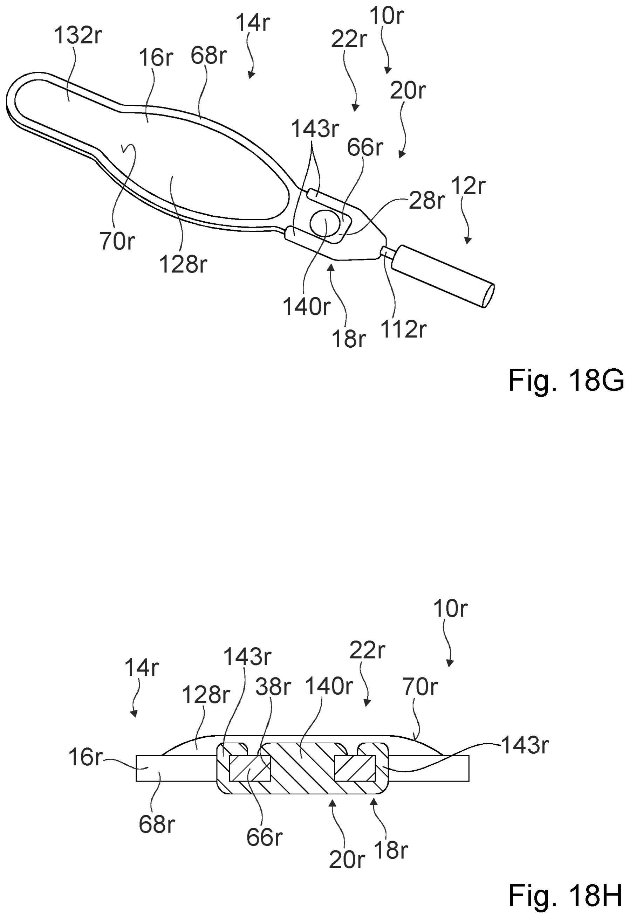

Die Figuren 18A bis 18H zeigen ein Körperpflegeprodukt 10r in verschiedenen Darstellungen. Das Körperpflegeprodukt 10r ist von einem Mundhygienemittel gebildet. Das Körperpflegeprodukt 10r ist im vorliegenden Fall als eine Interdentalbürste ausgebildet.

Das Körperpflegeprodukt 10r weist eine Anwendungseinheit 12r auf. Ferner weist das Körperpflegeprodukt 10r eine Griffeinheit 14r auf, welche einen materiellen Griffkörper 16r aufweist. Des Weiteren weist das Körperpflegeprodukt 10r eine Verbindungseinheit 18r auf, welche die Anwendungseinheit 12r mit der Griffeinheit 14r verbindet.

Die Anwendungseinheit 12r bildet einen Interdentalbürstenkopf des Körperpflegeprodukts 10r. Die Anwendungseinheit 12r weist einen Bürstenkopf mit radial nach außenstehenden Borsten auf, welcher insbesondere von einer eingedrehten Bürste gebildet ist. Die Borsten sind der Übersichtlichkeit lediglich als Volumenkörper dargestellt. Ferner weist die Anwendungseinheit 12r einen Reinigungselementträger 112r auf.

Die Griffeinheit 14r ist zu einem Greifen durch den Bediener vorgesehen. Die Griffeinheit 14r weist den materiellen Griffkörper 16r auf. Der materielle Griffkörper 16r der Griffeinheit 14r weist einen Kopfbereich 66r auf. Ferner weist der materielle Griffkörper 16r der Griffeinheit 14r einen Griffbereich 68r auf. Der Kopfbereich 66r ist zu einer Anbindung der Anwendungseinheit 12r vorgesehen. Des Weiteren weist der materielle Griffkörper 16r der Griffeinheit 14r an einem dem Kopfbereich abgewandten Ende einen Endbereich 132r auf.

Der materielle Griffkörper 16r besteht zumindest zu einem Großteil aus einem Papierwerkstoff. Der materielle Griffkörper 16r besteht beispielhaft vollständig aus einem Papierwerkstoff. Der materielle Griffkörper 16r weist eine flache, längliche Grundform auf. Der materielle Griffkörper 16r der Griffeinheit 14r weist zumindest zwei Lagen aus einem Papierwerkstoff auf, die geschichtet miteinander verbunden sind. Der materielle Griffkörper 16r der Griffeinheit 14r weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10r. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10r miteinander verbunden.

Für die Herstellung des materiellen Griffkörpers 16r wird fertiger Papierbogen bereitgestellt und anschließend wird der Griffkörper 16r ausgestanzt.

Der materielle Griffkörper 16r der Griffeinheit 14r weist einen Griffbereich 68r auf. Ferner weist der materielle Griffkörper 16r der Griffeinheit 14r einen Endbereich 132r auf. Der Griffbereich 68r ist zu einer Anbindung der Anwendungseinheit 12r vorgesehen. Der Griffbereich 68r des Griffkörpers 16r weist eine ovale Form auf und ist gegenüber dem Endbereich 132r und dem Kopfbereich 66r verbreitert. Der Endbereich 132r und der Kopfbereich 66r weist jeweils eine rechteckige Grundform auf. Ein freies Ende des Endbereichs 132r ist abgerundet.

Ferner ist die Schicht des Griffkörpers 16r verformt, bevorzugt tiefgezogen, insbesondere mittels Befeuchtung, Drucks und Wärme. Der materielle Griffkörper 16r weist eine ovale Verformung 128r auf. Der Griffkörper 16r weist eine Prägung in Form einer Verformung 128r auf, welcher beabstandet zu einer Außenkante des Griffkörpers 16r einer Kontur des Griffkörpers 16r folgt. Die Verformung 128r erstreckt sich über den Griffbereich 68r und den Endbereich 132r. Hierdurch wird insbesondere beispielsweise eine Greifgeometrie erzeugt. Es kann insbesondere ein Körperpflegeprodukt 10r mit einer voluminösen und stabilen Griffeinheit 14r bereitgestellt werden.

Die Anwendungseinheit 12r kann mittels einer Verbindungseinheit 18r mit der Griffeinheit 14r verbunden werden. Das Körperpflegeprodukt 10r weist ferner die Verbindungseinheit 18r auf. Die Verbindungseinheit 18r weist ein mit der Anwendungseinheit 12r verbundenes Verbindungselement 20r und ein mit der Griffeinheit 14r verbundenes weiteres Verbindungselement 22r auf. Das Verbindungselement 20r und das weitere Verbindungselement 22r sind korrespondierend ausgebildet. Ferner ist das Verbindungselement 20r der Verbindungseinheit 18r einstückig mit der Anwendungseinheit 12r ausgebildet. Das Verbindungselement 20r bildet insbesondere einen Teil der Anwendungseinheit 12r. Das weitere Verbindungselement 22r der Verbindungseinheit 18r ist zumindest teilweise einstückig mit der Griffeinheit 14r ausgebildet. Das weitere Verbindungselement 22r der Verbindungseinheit 18r ist einstückig mit dem Griffkörper 16r ausgebildet. Das weitere Verbindungselement 22r der Verbindungseinheit 18r bildet daher einen Teil des Griffkörpers 16r. Das weitere Verbindungselement 22r der Verbindungseinheit 18r besteht daher ebenfalls zu einem Großteil, insbesondere vollständig, aus einem Papierwerkstoff.

Das Verbindungselement 20r der Verbindungseinheit 18r besteht zu einem Großteil aus einem Polymer, insbesondere aus einem Kunststoff. Das Verbindungselement 20r der Verbindungseinheit 18r besteht aus einem Hartkunststoff. Das Verbindungselement 20r besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22r ist in einem Endbereich des Griffkörpers 16r ausgebildet. Der Kopfbereich 66r des Griffkörpers 16r bildet in seinem Endbereich das weitere Verbindungselement 22r aus, an welchem die Anwendungseinheit 12r fixiert ist. Das weitere Verbindungselement 22r bildet an dem Ende des Kopfbereichs 66r einen Verbindungsbereich 28r aus.

Das Verbindungselement 20r der Verbindungseinheit 18r ist zumindest teilweise stoffschlüssig mit dem weiteren Verbindungselement 22r der Verbindungseinheit 18r verbunden. Das Verbindungselement 20r der Verbindungseinheit 18r ist zumindest teilweise formschlüssig mit dem weiteren Verbindungselement 22r der Verbindungseinheit 18r verbunden. Das weitere Verbindungselement 22r der Verbindungseinheit 18r ist mit dem Verbindungselement 20r der Verbindungseinheit 18r umspritzt. Ferner ist der Reinigungselementträger 112r der Anwendungseinheit 12r von dem Verbindungselement 20r der Verbindungseinheit 18r umspritzt. Das Verbindungselement 20r der Verbindungseinheit 18r bildet eine Kappe 30r aus, welche das weitere Verbindungselement 22r der Verbindungseinheit 18r teilweise übergreift. Der Reinigungselementträger 112r ist dabei von der Kappe 30r des Verbindungselements 20r umspritzt. Das Verbindungselement 20r verbindet den Reinigungselementträger 112r mit dem Kopfbereich 66r des Griffkörpers 16r.

Der Reinigungselementträger 112r ist von dem Verbindungselement 20r umspritzt. Das Verbindungselement 20r besteht aus einem Kunststoff. Der eigentliche Schnittstellenteil des Verbindungselements 20r wird aus Kunststoff bereitgestellt, vorzugsweise aus einer Hartkomponente. Es wäre grundsätzlich auch denkbar, dass die Anwendungseinheit 12r ebenfalls aus Kunststoff besteht und direkt an das Verbindungselement 20r angespritzt ausgebildet ist. Das Verbindungselement 20r weist eine Auflagefläche zu einer Anlage an den Griffkörper 16r und ein auf der Auflagefläche angeordnetes Niet 140r auf. Das Niet 140r weist einen Durchmesser von 1,5 mm bis 4 mm, vorzugsweise von 2 mm bis 3 mm, auf. Ferner weist das Niet 140r eine Höhe von 2 mm bis 4,5 mm, vorzugsweise von 2,7 bis 3,7 mm, auf. Das Niet 140r ist dazu vorgesehen, sich durch eine Ausnehmung des weiteren Verbindungselements 22r zu erstrecken und dahinter verformt zu werden. Des Weiteren weist das Verbindungselement 20r einen Bördelrand 143r auf, welcher dazu vorgesehen ist, sich um zumindest eine Kante des Griffkörpers 16r zu erstrecken. Der Bördelrand 143r wird insbesondere nach einem Anbringen an den Griffkörper 16r plastisch, insbesondere durch Hitzeeinwirkung, verformt. Der Bördelrand 143r weist eine Höhe von 2 mm bis 4,5 mm, vorzugsweise von 2,7 bis 3,7 mm, auf. Ferner weist der Bördelrand 143r eine Breite von 0,5 mm bis 2 mm, vorzugsweise von 0,7 mm bis 1,5 mm auf. Eine Höhe des Bördelrands 143r ist derart gewählt, dass beim Verdrücken genügend Fläche entsteht, um den Griffkörper 16r zu übergreifen. Für die Höhe muss daher eine Körperdicke des Griffkörpers 16r berücksichtigt werden. Nach einem Verdrücken weist der Bördelrand 143r insbesondere eine Breite von 1,5 mm bis 4 mm, vorzugsweise von 1,7 mm bis 3 mm auf. Der Bördelrand 143r ist auf zumindest zwei Seiten des Kopfbereichs 66r des Griffkörpers 16r angeordnet. Der Bördelrand 143r ist vorzugsweise auf 3 Seiten des Kopfbereichs 66r des Griffkörpers 16r angeordnet.

Das weitere Verbindungselement 22r der Verbindungseinheit 18r weist zumindest eine Formschlusskontur 36r auf, welche dazu vorgesehen ist, einen Formschluss mit dem Verbindungselement 20r auszubilden. Das weitere Verbindungselement 22r weist in dem Kopfbereich 66r eine Formschlusskontur 36r auf. Die Formschlusskontur 36r ist derart gestaltet, dass keine Rotation und insbesondere kein Abziehen des Verbindungselements 20r möglich ist. Die Formschlusskontur 36r des weiteren Verbindungselements 22r weist eine Durchgangsausnehmung 38r in dem Kopfbereich 66r auf. Die Durchgangsausnehmung 38r dient zu einer Aufnahme des Niets 140r.

Bei einer Montage wird insbesondere der Griffkörper 16r zumindest mit dem weiteren Verbindungselement 22r in das bereits mit der Anwendungseinheit 12r verbundene Verbindungselement 20r eingelegt. Der Kopfbereich 66r des Griffkörpers 16r liegt dabei auf der Auflagefläche des Verbindungselements 20r auf, wobei das Niet 140r des Verbindungselements 20r in die Durchgangsausnehmung der Formschlusskontur 36r eingeführt wird. Der Bördelrand 143r liegt außen an dem Kopfbereich 66r des Griffkörpers 16r an und verhindert ein Umkippen. Anschließend erfolgt ein Umformverfahren. Bei dem Umformverfahren wird das Niet 140r und der Bördelrand 143r verdrückt. Das Verdrücken erfolgt mittels Wärme und Druck. Bevorzugt wird das Verbindungselement 20r vor dem Verdrücken erwärmt. Der Umformstempel wird insbesondere nicht gewärmt, wobei durch den kalten Stempel der Kunststoff schneller abkühlt. Hierdurch kann ein vorteilhaft schneller Zyklus ermöglicht werden.

Alternativ wäre auch denkbar, dass das weitere Verbindungselement 22r keine Durchgangsausnehmung aufweist und der Griffkörper 16r beispielsweise lediglich eine Vertiefung aufweist. Die Vertiefung kann dabei von einer Einpressung gebildet sein. Hierdurch könnte auf ein Stanzen des Griffkörpers 16r verzichtet werden, wodurch weniger Risse entstehen. Das Verbindungselement 20r könnte entsprechend ein Element aufweisen, welches in die Vertiefung gedrückt wird und die Vertiefung ausgefüllt.

Ferner ist der Reinigungselementträger 22r der Anwendungseinheit 12r zu einer teilweise formschlüssigen Verbindung mit dem Verbindungselement 20r gebogen ausgebildet. Der Reinigungselementträger 22r weist in einem mittleren Teil des Fixierungsbereichs eine Delle auf.

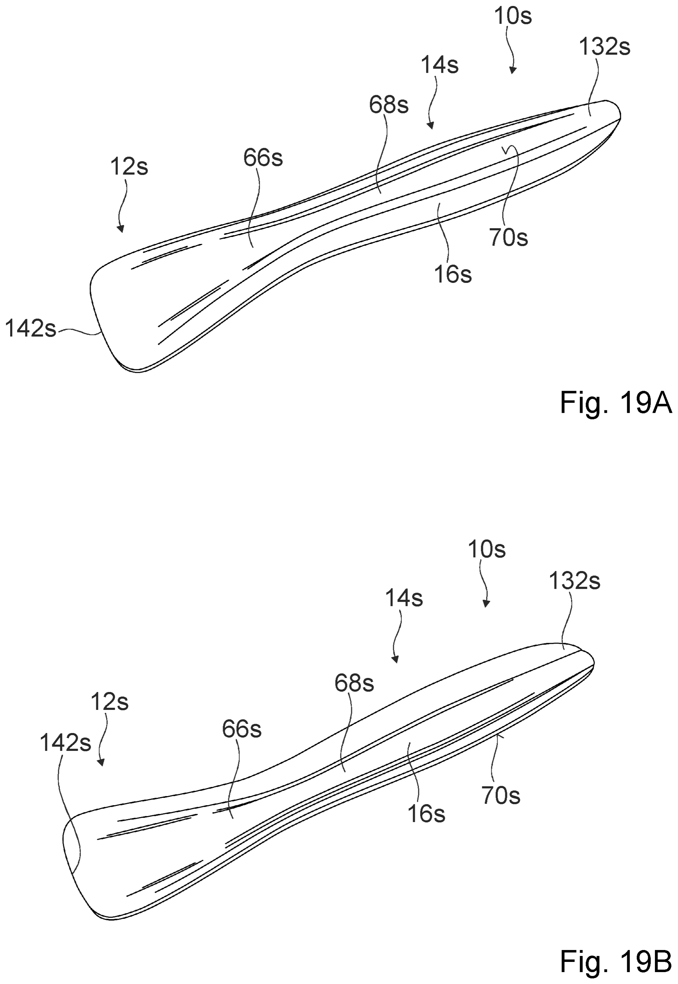

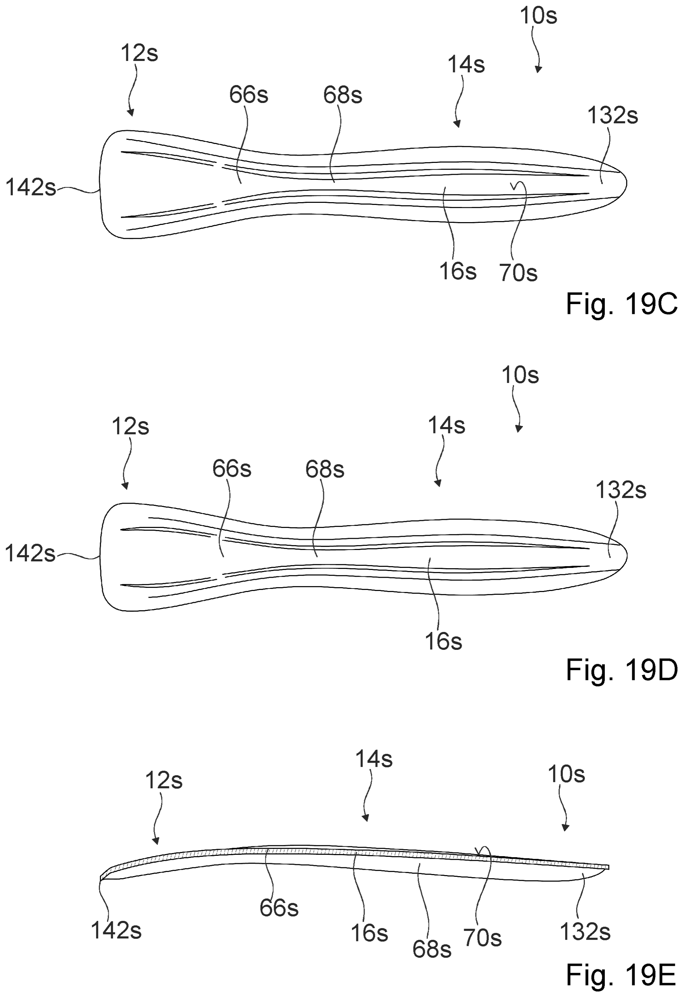

Die Figuren 19A bis 19E zeigen ein Körperpflegeprodukt 10s in verschiedenen Darstellungen. Das Körperpflegeprodukt 10s ist von einem Mundhygienemittel gebildet. Das Körperpflegeprodukt 10s ist im vorliegenden Fall als ein Zungenreiniger ausgebildet.

Das Körperpflegeprodukt 10s weist eine Anwendungseinheit 12s auf. Ferner weist das Körperpflegeprodukt 10s eine Griffeinheit 14s auf, welche einen materiellen Griffkörper 16s aufweist. Die Anwendungseinheit 12s und die Griffeinheit 14s sind einteilig ausgebildet.

Die Anwendungseinheit 12s bildet einen Zungenreinigerkopf des Körperpflegeprodukts 10s. Die Anwendungseinheit 12s weist eine Reinigungskante 142s auf, welche insbesondere zu einem Abziehen einer Oberfläche der Zunge vorgesehen ist. Die Reinigungskante 142s erstreckt sich insbesondere senkrecht zu einer Längsrichtung der Griffeinheit 14s. Ferner weist die Anwendungseinheit 12s eine trapezförmige Grundform auf, wobei die Reinigungskante 142s von einer längsten Kante des Trapezes gebildet ist. Des Weiteren ist die Anwendungseinheit 142s, insbesondere zu einer Stabilisierung, leicht gewölbt ausgebildet.

Die Griffeinheit 14s ist zu einem Greifen durch den Bediener vorgesehen. Die Griffeinheit 14s weist den materiellen Griffkörper 16s auf. Der materielle Griffkörper 16s der Griffeinheit 14s weist einen Kopfbereich 66s auf. Ferner weist der materielle Griffkörper 16s der Griffeinheit 14s einen Griffbereich 68s auf. Der Kopfbereich 66s ist zu einer Anbindung der Anwendungseinheit 12s vorgesehen. Des Weiteren weist der materielle Griffkörper 16s der Griffeinheit 14s an einem dem Kopfbereich abgewandten Ende einen Endbereich 132s auf. Der Endbereich 132s ist in einer Ebene abgerundet ausgebildet.

Der materielle Griffkörper 16s besteht zumindest zu einem Großteil aus einem Papierwerkstoff. Der materielle Griffkörper 16s besteht beispielhaft vollständig aus einem Papierwerkstoff. Der materielle Griffkörper 16s weist eine flache, längliche Grundform auf. Der materielle Griffkörper 16s der Griffeinheit 14s weist zumindest zwei Lagen aus einem Papierwerkstoff auf, die geschichtet miteinander verbunden sind. Der materielle Griffkörper 16s der Griffeinheit 14s weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10s. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10s miteinander verbunden.

Der materielle Griffkörper 16s der Griffeinheit 14s weist einen Griffbereich 68s auf. Ferner weist der materielle Griffkörper 16s der Griffeinheit 14s einen Endbereich 132s auf. Der Griffbereich 68s ist zu einer Anbindung der Anwendungseinheit 12s vorgesehen. Der Griffbereich 68s des Griffkörpers 16s weist eine ovale Form auf und ist gegenüber dem Endbereich 132s verbreitert. Ein freies Ende des Endbereichs 132s ist abgerundet.

Ferner ist die Schicht des Griffkörpers 16s verformt, bevorzugt tiefgezogen, insbesondere mittels Befeuchtung, Drucks und Wärme. Der materielle Griffkörper 16s weist eine dreidimensionale Verformung auf. Die Griffeinheit 14s weist zumindest eine Grifffläche 70s auf, welche eine Oberfläche des materiellen Griffkörpers 16s ausbildet. Die Grifffläche 70s verläuft auf einer Vorderseite von dem Kopfbereich 66s des Griffkörpers 16s bis zum unteren Endbereich 132s des Griffkörpers 16s an der Unterseite. Die Grifffläche 70s erstreckt sich über den Griffbereich 68s des materiellen Griffkörpers 16s. Die Grifffläche 70s bildet entlang einer Längsachse auf der Vorderseite eine teilweise bombierte bzw. teilweise konvexe Form aus. Die bombierte Form ist entlang der Längsachse auf einer Rückseite umgekehrt ausgebildet. Der Griffkörper 16s ist auf der Rückseite in einem Bereich der Grifffläche 70s teilweise konkav geformt. Der gesamte Griffkörper 16s ist in der Draufsicht insbesondere teilweise Y-förmig oder T-förmig ausgebildet. Insbesondere verbreitert sich der Griffkörper 16s zu der Anwendungseinheit 14s hin. Der Griffkörper 16s ist dreidimensional verformt, um die bombierte, konvexe Form auszubilden.

Die Anwendungseinheit 12s und die Griffeinheit 14s sind einstückig ausgebildet. Die Anwendungseinheit 12s und die Griffeinheit 14s sind einteilig ausgebildet. Die Anwendungseinheit 12s besteht zumindest zu einem Großteil aus einem Papierwerkstoff. Die Anwendungseinheit 12s besteht beispielhaft vollständig aus einem Papierwerkstoff.

Alternativ wäre auch denkbar, dass die Anwendungseinheit 12s und die Griffeinheit 14s zumindest teilweise, insbesondere vollständig aus einem Holzwerkstoff bestehen. Bevorzugt ist ein flächiges, nachhaltiges Material, wie insbesondere Holz, bevorzugt Holzfurnier, z.B. aus Birke, Buche, Eiche oder dergleichen, oder Bambus.

Das flächige Material der Anwendungseinheit 12s und der Griffeinheit 14s weist insbesondere einen Dicke zwischen 0,5 mm und 3,0 mm, vorzugsweise zwischen 1 mm und 2,5 mm, besonders bevorzugt zwischen 1,2 mm und 2,0 mm, auf. Die Form der Anwendungseinheit 12s und der Griffeinheit 14s ist vorzugsweise stapelbar, damit eine größere Anzahl optimal gelagert und auch verpackt werden kann. Nicht-Kantenbereiche, insbesondere Bereiche außerhalb des Bereichs der Reinigungskante 142s, können Verformungen enthalten, wie sie die anderen Teile auch haben.

Eine Herstellung des Körperpflegeprodukts 10s erfolgt insbesondere durch Bereitstellen eines flächigen Werkstoffs, beispielsweise bei Holz durch Abschälen. Anschließend wird das Körperpflegeprodukt 10s in der richtigen Form gestanzt. Weiter ist es möglich das gestanzte Teil zu schleifen, trowalisieren, entgraten, erhitzen, pressen, formen und/oder zerdrücken, um die Schnittkante zu entschärfen. Falls ein Teil umspritzt wird, kann das Pressen, Formen oder Zerdrücken direkt im Spritzgusswerkzeug passieren. Anschließend können falls erforderlich Löcher oder Hinterschnitte ausgestanzt werden. Zusätzlich können Additive wie Farbe, Öl, Geschmack oder dergleichen aufgebracht werden.

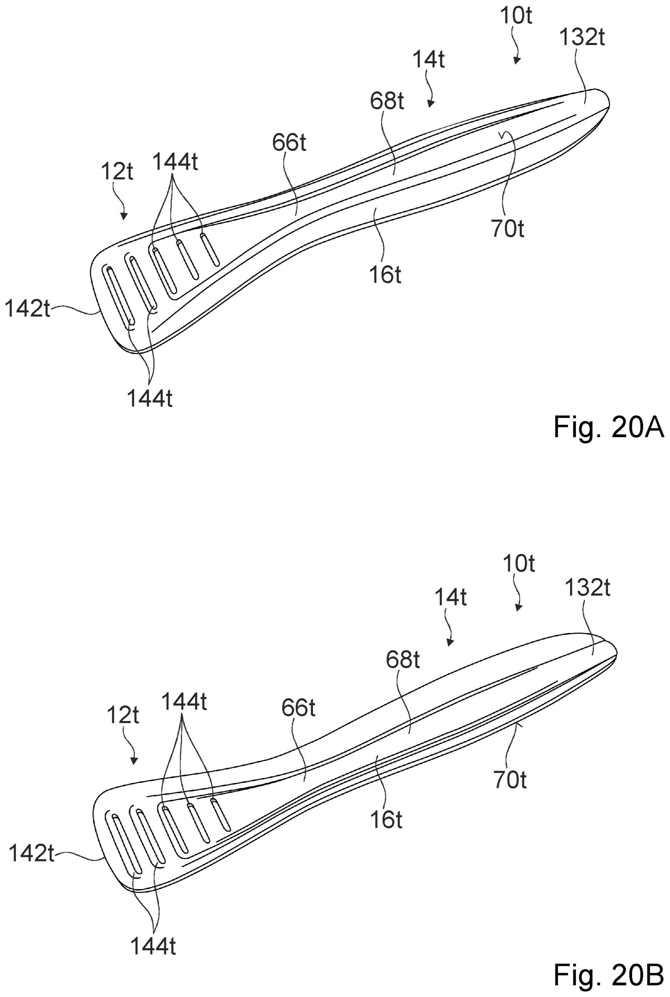

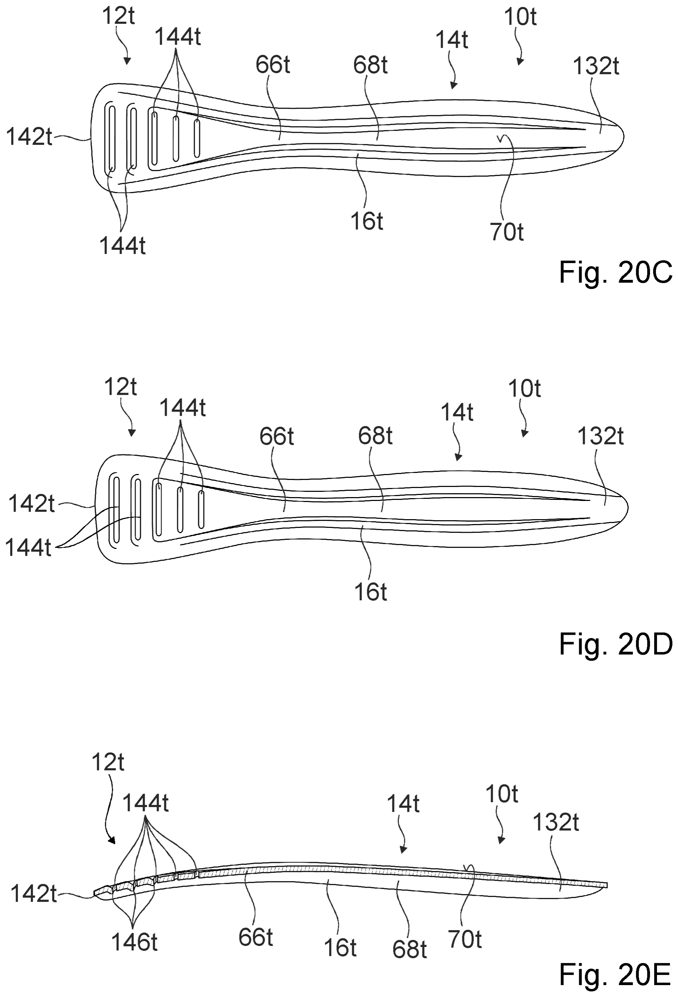

Die Figuren 20A bis 20E zeigen ein Körperpflegeprodukt 10t in verschiedenen Darstellungen. Das Körperpflegeprodukt 10t ist von einem Mundhygienemittel gebildet. Das Körperpflegeprodukt 10t ist im vorliegenden Fall als ein Zungenreiniger ausgebildet.

Das Körperpflegeprodukt 10t weist eine Anwendungseinheit 12t auf. Ferner weist das Körperpflegeprodukt 10t eine Griffeinheit 14t auf, welche einen materiellen Griffkörper 16t aufweist. Die Anwendungseinheit 12t und die Griffeinheit 14t sind einteilig ausgebildet.

Die Anwendungseinheit 12t bildet einen Zungenreinigerkopf des Körperpflegeprodukts 10t. Die Anwendungseinheit 12t weist eine Reinigungskante 142t auf, welche insbesondere zu einem Abziehen einer Oberfläche der Zunge vorgesehen ist. Die Reinigungskante 142t erstreckt sich insbesondere senkrecht zu einer Längsrichtung der Griffeinheit 14t. Ferner weist die Anwendungseinheit 12t eine trapezförmige Grundform auf, wobei die Reinigungskante 142t von einer längsten Kante des Trapezes gebildet ist. Des Weiteren ist die Anwendungseinheit 142t, insbesondere zu einer Stabilisierung, leicht gewölbt ausgebildet. Ferner weist die Anwendungseinheit 12t mehrere quer zu einer Längsrichtung verlaufende schlitzartige Ausnehmungen 144t auf. Die Ausnehmungen 144t erstrecken sich jeweils über einen Großteil einer Breite der Anwendungseinheit 12t in dem Bereich der jeweiligen Ausnehmung 144t. Die Anwendungseinheit 12t weist beispielhaft fünf Ausnehmungen 144t auf, deren Breite sich jeweils zu der Griffeinheit 14t hin verringert. Bei einem Teil der Ausnehmungen 144t sind werden die Kanten derart verformt, dass sie gegen die Zugrichtung vorstehen, damit mehrere Zusatzreinigungskanten 146t erreicht werden. Beispielhaft bilden die ersten drei Ausnehmungen 144t jeweils eine Zusatzreinigungskante 146t aus. Die Ausnehmungen 144t werden jeweils durch Ausstanzen hergestellt.

Die Griffeinheit 14t ist zu einem Greifen durch den Bediener vorgesehen. Die Griffeinheit 14t weist den materiellen Griffkörper 16t auf. Der materielle Griffkörper 16t der Griffeinheit 14t weist einen Kopfbereich 66t auf. Ferner weist der materielle Griffkörper 16t der Griffeinheit 14t einen Griffbereich 68t auf. Der Kopfbereich 66t ist zu einer Anbindung der Anwendungseinheit 12t vorgesehen. Des Weiteren weist der materielle Griffkörper 16t der Griffeinheit 14t an einem dem Kopfbereich abgewandten Ende einen Endbereich 132t auf. Der Endbereich 132t ist in einer Ebene abgerundet ausgebildet.

Der materielle Griffkörper 16t besteht zumindest zu einem Großteil aus einem Papierwerkstoff. Der materielle Griffkörper 16t besteht beispielhaft vollständig aus einem Papierwerkstoff. Der materielle Griffkörper 16t weist eine flache, längliche Grundform auf. Der materielle Griffkörper 16t der Griffeinheit 14t weist zumindest zwei Lagen aus einem Papierwerkstoff auf, die geschichtet miteinander verbunden sind. Der materielle Griffkörper 16t der Griffeinheit 14t weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10t. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10t miteinander verbunden.

Der materielle Griffkörper 16t der Griffeinheit 14t weist einen Griffbereich 68t auf. Ferner weist der materielle Griffkörper 16t der Griffeinheit 14t einen Endbereich 132t auf. Der Griffbereich 68t ist zu einer Anbindung der Anwendungseinheit 12t vorgesehen. Der Griffbereich 68t des Griffkörpers 16t weist eine ovale Form auf und ist gegenüber dem Endbereich 132t verbreitert. Ein freies Ende des Endbereichs 132t ist abgerundet.

Ferner ist die Schicht des Griffkörpers 16t verformt, bevorzugt tiefgezogen, insbesondere mittels Befeuchtung, Drucks und Wärme. Der materielle Griffkörper 16t weist eine dreidimensionale Verformung auf. Die Griffeinheit 14t weist zumindest eine Grifffläche 70t auf, welche eine Oberfläche des materiellen Griffkörpers 16t ausbildet. Die Grifffläche 70t verläuft auf einer Vorderseite von dem Kopfbereich 66t des Griffkörpers 16t bis zum unteren Endbereich 132t des Griffkörpers 16t an der Unterseite. Die Grifffläche 70t erstreckt sich über den Griffbereich 68t des materiellen Griffkörpers 16t. Die Grifffläche 70t bildet entlang einer Längsachse auf der Vorderseite eine teilweise bombierte bzw. teilweise konvexe Form aus. Die bombierte Form ist entlang der Längsachse auf einer Rückseite umgekehrt ausgebildet. Der Griffkörper 16t ist auf der Rückseite in einem Bereich der Grifffläche 70t teilweise konkav geformt. Der gesamte Griffkörper 16t ist in der Draufsicht insbesondere teilweise Y-förmig oder T-förmig ausgebildet. Insbesondere verbreitert sich der Griffkörper 16t zu der Anwendungseinheit 14t hin. Der Griffkörper 16t ist dreidimensional verformt, um die bombierte, konvexe Form auszubilden.

Die Anwendungseinheit 12t und die Griffeinheit 14t sind einstückig ausgebildet. Die Anwendungseinheit 12t und die Griffeinheit 14t sind einteilig ausgebildet. Die Anwendungseinheit 12t besteht zumindest zu einem Großteil aus einem Papierwerkstoff. Die Anwendungseinheit 12t besteht beispielhaft vollständig aus einem Papierwerkstoff.

Alternativ wäre auch denkbar, dass die Anwendungseinheit 12t und die Griffeinheit 14t zumindest teilweise, insbesondere vollständig aus einem Holzwerkstoff bestehen. Bevorzugt ist ein flächiges, nachhaltiges Material, wie insbesondere Holz, bevorzugt Holzfurnier, z.B. aus Birke, Buche, Eiche oder dergleichen, oder Bambus.

Das flächige Material der Anwendungseinheit 12t und der Griffeinheit 14t weist insbesondere einen Dicke zwischen 0,5 mm und 3,0 mm, vorzugsweise zwischen 1 mm und 2,5 mm, besonders bevorzugt zwischen 1,2 mm und 2,0 mm, auf. Die Form der Anwendungseinheit 12t und der Griffeinheit 14t ist vorzugsweise stapelbar, damit eine größere Anzahl optimal gelagert und auch verpackt werden kann. Nicht-Kantenbereiche, insbesondere Bereiche außerhalb des Bereichs der Reinigungskante 142t, können Verformungen enthalten, wie sie die anderen Teile auch haben.

Eine Herstellung des Körperpflegeprodukts 10t erfolgt insbesondere durch Bereitstellen eines flächigen Werkstoffs, beispielsweise bei Holz durch Abschälen. Anschließend wird das Körperpflegeprodukt 10t in der richtigen Form gestanzt. Weiter ist es möglich, das gestanzte Teil zu schleifen, trowalisieren, entgraten, erhitzen, pressen, formen und/oder zerdrücken, um die Schnittkante zu entschärfen. Falls ein Teil umspritzt wird, kann das Pressen, Formen oder Zerdrücken direkt im Spritzgusswerkzeug passieren. Anschließend werden die Ausnehmungen 144t ausgestanzt. Zusätzlich können Additive wie Farbe, Öl, Geschmack oder dergleichen aufgebracht werden.

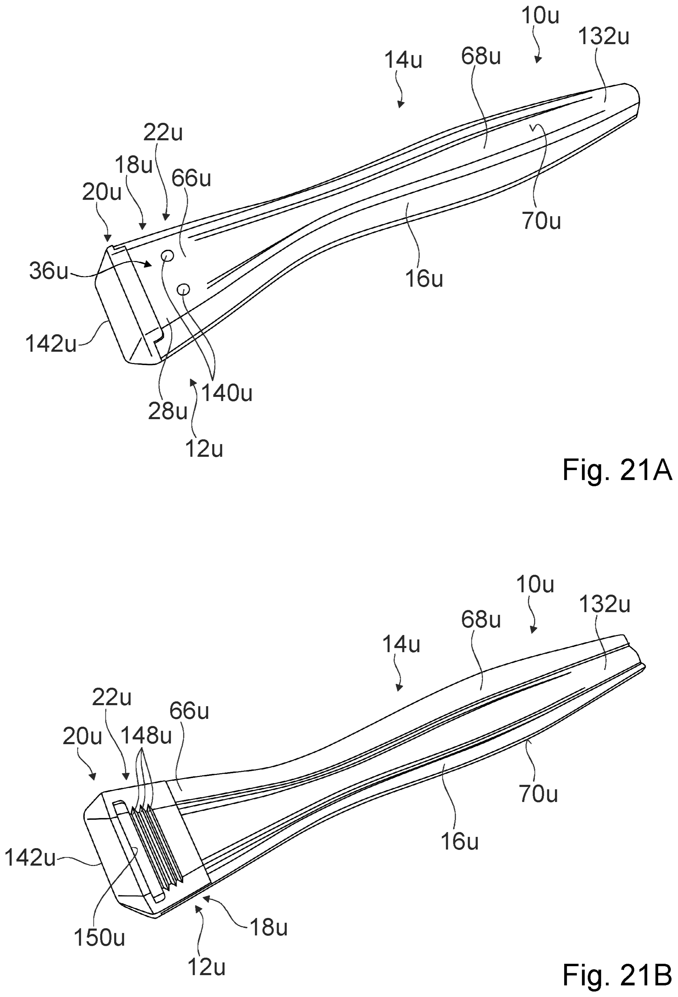

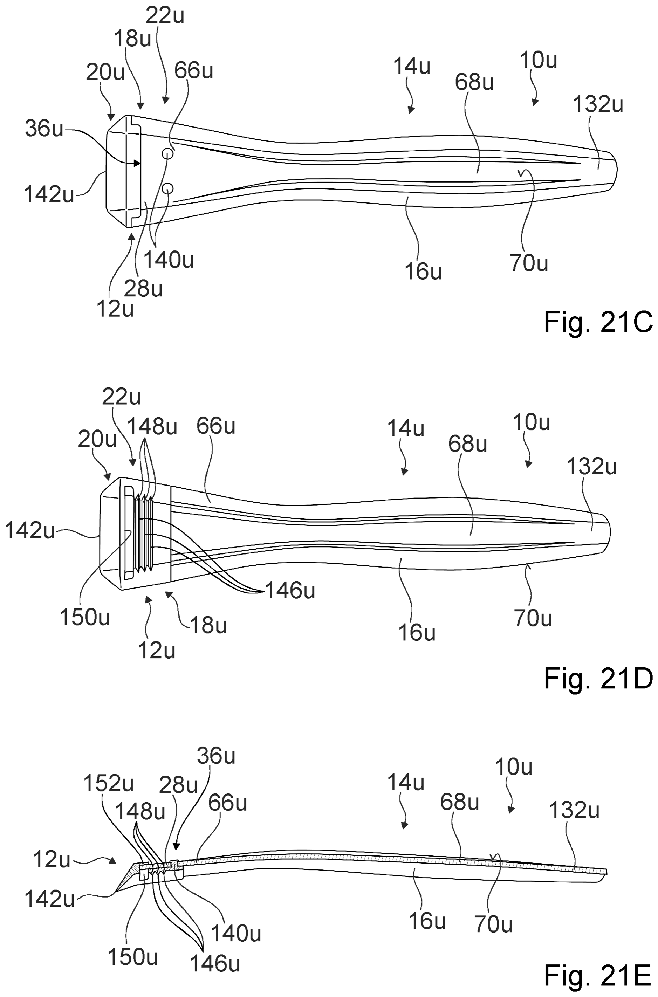

Die Figuren 21A bis 21E zeigen ein Körperpflegeprodukt 10u in verschiedenen Darstellungen. Das Körperpflegeprodukt 10u ist von einem Mundhygienemittel gebildet. Das Körperpflegeprodukt 10u ist im vorliegenden Fall als eine Zungenreiniger ausgebildet.

Das Körperpflegeprodukt 10u weist eine Anwendungseinheit 12u auf. Ferner weist das Körperpflegeprodukt 10u eine Griffeinheit 14u auf, welche einen materiellen Griffkörper 16u aufweist. Des Weiteren weist das Körperpflegeprodukt 10u eine Verbindungseinheit 18u auf, welche die Anwendungseinheit 12u mit der Griffeinheit 14u verbindet.

Die Anwendungseinheit 12u bildet einen Zungenreinigerkopf des Körperpflegeprodukts 10u. Die Anwendungseinheit 12u weist eine Reinigungskante 142u auf, welche insbesondere zu einem Abziehen einer Oberfläche der Zunge vorgesehen ist. Die Reinigungskante 142u erstreckt sich insbesondere senkrecht zu einer Längsrichtung der Griffeinheit 14u. Die Reinigungskante 142u bildet eine Schaberkante aus. Die Reinigungskante 142u ist beispielhaft glatt ausgebildet, die Reinigungskante 142u kann jedoch insbesondere glatt oder strukturiert sein. Ferner kann die Reinigungskante 142u oder Elemente neben der Reinigungskante 142u gespritzte Borsten oder Noppen beinhalten. Ferner weist die Anwendungseinheit 12u eine trapezförmige Grundform auf, wobei die Reinigungskante 142u von einer längsten Kante des Trapezes gebildet ist. Ferner weist die Anwendungseinheit 12u mehrere quer zu einer Längsrichtung verlaufende Stege 148u auf. Die Stege 148u erstrecken sich jeweils über einen Großteil einer Breite der Anwendungseinheit 12u. Die Anwendungseinheit 12u weist beispielhaft drei Stege 148u auf. Die Stege 148u bilden jeweils eine Zusatzreinigungskante 146u. Die Stege 148u laufen an einem freien Ende spitz zu. Die Stege 148u sind auf einer Unterseite der Anwendungseinheit 142u bzw. des Körperpflegeprodukts 10u angeordnet. Ferner ist zwischen der Reinigungskante 142u und den Stegen 148u eine schlitzartige Ausnehmung 150u angeordnet, welche sich quer zu der Längsrichtung der Griffeinheit 14u erstreckt.

Die Griffeinheit 14u ist zu einem Greifen durch den Bediener vorgesehen. Die Griffeinheit 14u weist den materiellen Griffkörper 16u auf. Der materielle Griffkörper 16u der Griffeinheit 14u weist einen Kopfbereich 66u auf. Ferner weist der materielle Griffkörper 16u der Griffeinheit 14u einen Griffbereich 68u auf. Der Kopfbereich 66u ist zu einer Anbindung der Anwendungseinheit 12u vorgesehen. Des Weiteren weist der materielle Griffkörper 16u der Griffeinheit 14u an einem dem Kopfbereich 66u abgewandten Ende einen Endbereich 132u auf.

Der materielle Griffkörper 16u besteht zumindest zu einem Großteil aus einem Papierwerkstoff. Der materielle Griffkörper 16u besteht beispielhaft vollständig aus einem Papierwerkstoff. Der materielle Griffkörper 16u weist eine flache, längliche Grundform auf. Der materielle Griffkörper 16u der Griffeinheit 14u weist zumindest zwei Lagen aus einem Papierwerkstoff auf, die geschichtet miteinander verbunden sind. Der materielle Griffkörper 16u der Griffeinheit 14u weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10u. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10u miteinander verbunden.

Der materielle Griffkörper 16u der Griffeinheit 14u weist einen Griffbereich 68u auf. Ferner weist der materielle Griffkörper 16u der Griffeinheit 14u einen Endbereich 132u auf. Der Griffbereich 68u ist zu einer Anbindung der Anwendungseinheit 12u vorgesehen. Der Griffbereich 68u des Griffkörpers 16u weist eine ovale Form auf und ist gegenüber dem Endbereich 132u verbreitert. Der Kopfbereich 66u weist eine trapezförmige Grundform auf.

Ferner ist die Schicht des Griffkörpers 16u verformt, bevorzugt tiefgezogen, insbesondere mittels Befeuchtung, Drucks und Wärme. Der materielle Griffkörper 16u weist eine dreidimensionale Verformung auf. Die Griffeinheit 14u weist zumindest eine Grifffläche 70u auf, welche eine Oberfläche des materiellen Griffkörpers 16u ausbildet. Die Grifffläche 70u verläuft auf einer Vorderseite von dem Kopfbereich 66u des Griffkörpers 16u bis zum unteren Endbereich 132u des Griffkörpers 16u an der Unterseite. Die Grifffläche 70u erstreckt sich über den Griffbereich 68u des materiellen Griffkörpers 16u. Die Grifffläche 70u bildet entlang einer Längsachse auf der Vorderseite eine teilweise bombierte bzw. teilweise konvexe Form aus. Die bombierte Form ist entlang der Längsachse auf einer Rückseite umgekehrt ausgebildet. Der Griffkörper 16u ist auf der Rückseite in einem Bereich der Grifffläche 70u teilweise konkav geformt. Der gesamte Griffkörper 16u ist in der Draufsicht insbesondere teilweise Y-förmig oder T-förmig ausgebildet. Insbesondere verbreitert sich der Griffkörper 16u zu der Anwendungseinheit 14u hin. Der Griffkörper 16u ist dreidimensional verformt, um die bombierte, konvexe Form auszubilden.

Ferner weist das Körperpflegeprodukt 10u die Verbindungseinheit 18u auf. Die Verbindungseinheit 18u ist zu einer formschlüssigen Verbindung mit dem materiellen Griffkörper 16u der Griffeinheit 14u vorgesehen.

Die Anwendungseinheit 12u kann mittels der Verbindungseinheit 18u mit der Griffeinheit 14u verbunden werden. Die Verbindungseinheit 18u weist ein mit der Anwendungseinheit 12u verbundenes Verbindungselement 20u und ein mit der Griffeinheit 14u verbundenes weiteres Verbindungselement 22u auf. Das Verbindungselement 20u und das weitere Verbindungselement 22u sind korrespondierend ausgebildet. Ferner ist das Verbindungselement 20u der Verbindungseinheit 18u einstückig mit der Anwendungseinheit 12u ausgebildet. Das Verbindungselement 20u bildet insbesondere einen Teil der Anwendungseinheit 12u. Das weitere Verbindungselement 22u der Verbindungseinheit 18u ist zumindest teilweise einstückig mit der Griffeinheit 14u ausgebildet. Das weitere Verbindungselement 22u der Verbindungseinheit 18u ist einstückig mit dem Griffkörper 16u ausgebildet. Das weitere Verbindungselement 22u der Verbindungseinheit 18u bildet daher einen Teil des Griffkörpers 16u. Das weitere Verbindungselement 22u der Verbindungseinheit 18u besteht daher ebenfalls zu einem Großteil, insbesondere vollständig, aus einem Papierwerkstoff.

Das Verbindungselement 20u der Verbindungseinheit 18u besteht zu einem Großteil aus einem Polymer, insbesondere aus einem Kunststoff. Das Verbindungselement 20u der Verbindungseinheit 18u besteht aus einem Hartkunststoff. Das Verbindungselement 20u besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22u ist in einem Endbereich des Griffkörpers 16u ausgebildet. Der Kopfbereich 66u des Griffkörpers 16u bildet in seinem Endbereich das weitere Verbindungselement 22u aus, an welchem die Anwendungseinheit 12u fixiert ist. Das weitere Verbindungselement 22u bildet an dem Ende des Kopfbereichs 66u einen Verbindungsbereich 28u aus.

Das Verbindungselement 20u der Verbindungseinheit 18u ist zumindest teilweise stoffschlüssig mit dem weiteren Verbindungselement 22u der Verbindungseinheit 18u verbunden. Das Verbindungselement 20u der Verbindungseinheit 18u ist zumindest teilweise formschlüssig mit dem weiteren Verbindungselement 22u der Verbindungseinheit 18u verbunden. Das Verbindungselement 20u und die Anwendungseinheit 12u sind einteilig, insbesondere in einem Spitzgussverfahren, hergestellt.

Ferner weist das Verbindungselement 20u zumindest eine Aufnahmenut 152u auf. Die Aufnahmenut 152u ist in einem Bereich zwischen der Reinigungskante 142u und den Stegen 148u angeordnet. Die Aufnahmenut 152u ist dazu vorgesehen, eine der Anwendungseinheit 12u zugewandte Vorderkante des materiellen Griffkörpers 16u der Griffeinheit 14u aufzunehmen. Die Aufnahmenut 152u ist zu einer klemmenden Aufnahme zumindest einer Kante des materiellen Griffkörpers 16u vorgesehen. Die Aufnahmenut 152u erstreckt sich im Wesentlichen senkrecht zu einer Längsachse der Griffeinheit 14u. Es ist denkbar, dass in der Aufnahmenut 152u beispielsweise Widerhaken vorgesehen sind, welche eine Klemmung verbessern. Die Aufnahmenut 152u ist zu einer Bereitstellung einer Klemmverbindung mit dem materiellen Griffkörper 16u vorgesehen. Die Aufnahmenut 152u ist dabei als eine U-förmige Nut ausgebildet, welche zu der Griffeinheit 14u hin geöffnet ist. Ferner grenzt die Aufnahmenut 152u an die Ausnehmung 150u an.

Das Verbindungselement 20u weist ferner eine Auflagefläche zu einer Anlage an den Griffkörper 16u und zwei auf der Auflagefläche angeordnete Nieten 140u auf. Die Nieten 140u weisen jeweils einen Durchmesser von 1,5 mm bis 4 mm, vorzugsweise von 2 mm bis 3 mm, auf. Ferner weisen die Nieten 140u jeweils eine Höhe von 2 mm bis 4,5 mm, vorzugsweise von 2,7 mm bis 3,7 mm, auf. Die Nieten 140u sind dazu vorgesehen, sich jeweils durch eine Durchgangsausnehmung des weiteren Verbindungselements 22u zu erstrecken und dahinter verformt zu werden.

Das weitere Verbindungselement 22u der Verbindungseinheit 18u weist zumindest eine Formschlusskontur 36u auf, welche dazu vorgesehen ist, einen Formschluss mit dem Verbindungselement 20u auszubilden. Die Formschlusskontur 36u des weiteren Verbindungselements 22u weist die Durchgangsausnehmungen in dem Kopfbereich 66u auf. Die Durchgangsausnehmungen dienen zu einer Aufnahme der Nieten 140u.

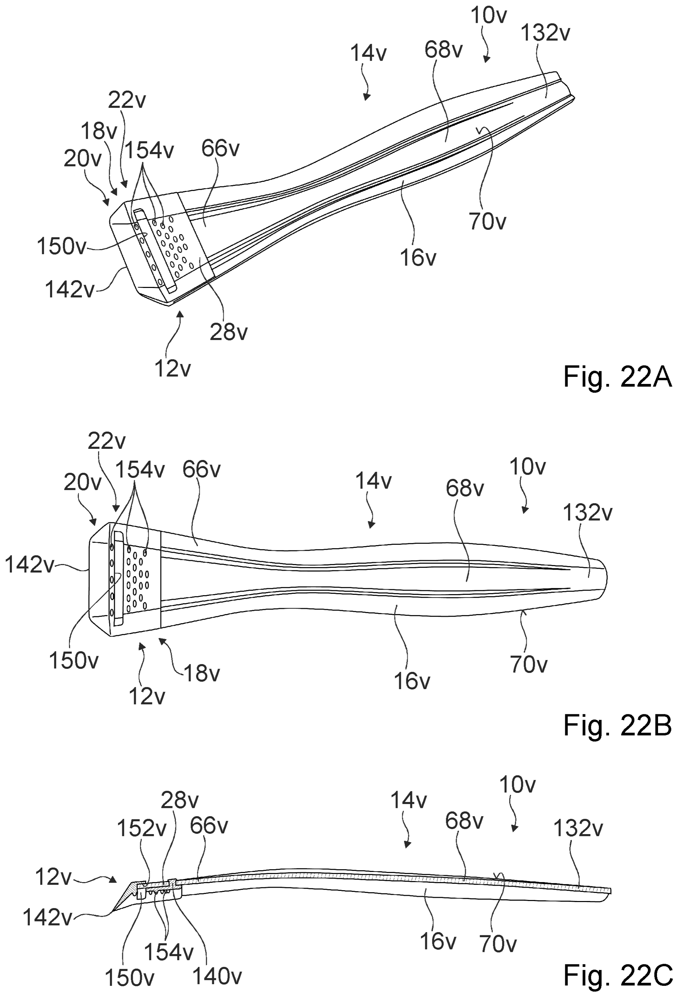

Die Figuren 22A bis 22C zeigen ein Körperpflegeprodukt 10v in einer schematischen perspektivischen Darstellung. Das Körperpflegeprodukt 10v ist von einem Mundhygienemittel gebildet. Das Körperpflegeprodukt 10v ist im vorliegenden Fall als eine Zungenreiniger ausgebildet.

Das Körperpflegeprodukt 10v weist eine Anwendungseinheit 12v auf. Ferner weist das Körperpflegeprodukt 10v eine Griffeinheit 14v auf, welche einen materiellen Griffkörper 16v aufweist. Des Weiteren weist das Körperpflegeprodukt 10v eine Verbindungseinheit 18v auf, welche die Anwendungseinheit 12v mit der Griffeinheit 14v verbindet.

Die Anwendungseinheit 12v bildet einen Zungenreinigerkopf des Körperpflegeprodukts 10v. Die Anwendungseinheit 12v weist eine Reinigungskante 142v auf, welche insbesondere zu einem Abziehen einer Oberfläche der Zunge vorgesehen ist. Die Reinigungskante 142v erstreckt sich insbesondere senkrecht zu einer Längsrichtung der Griffeinheit 14v. Die Reinigungskante 142v bildet eine Schaberkante aus. Die Reinigungskante 142v ist beispielhaft glatt ausgebildet, die Reinigungskante 142v kann jedoch insbesondere glatt oder strukturiert sein. Ferner kann die Reinigungskante 142v oder Elemente neben der Reinigungskante 142v gespritzte Borsten oder Noppen beinhalten. Ferner weist die Anwendungseinheit 12v eine trapezförmige Grundform auf, wobei die Reinigungskante 142v von einer längsten Kante des Trapezes gebildet ist. Ferner weist die Anwendungseinheit 12v mehrere Noppen 154v auf. Die Noppen 154v erstrecken sich über einen Großteil einer Breite der Anwendungseinheit 12v. Die Noppen 154v bilden zusätzliche Reinigungs- und/oder Massageelemente aus. Die Noppen 154v sind auf einer Unterseite der Anwendungseinheit 142v bzw. des Körperpflegeprodukts 10v angeordnet. Ferner ist zwischen der Reinigungskante 142v und den Noppen 154v eine schlitzartige Ausnehmung 150v angeordnet, welche sich quer zu der Längsrichtung der Griffeinheit 14v erstreckt.

Die Griffeinheit 14v ist zu einem Greifen durch den Bediener vorgesehen. Die Griffeinheit 14v weist den materiellen Griffkörper 16v auf. Der materielle Griffkörper 16v der Griffeinheit 14v weist einen Kopfbereich 66v auf. Ferner weist der materielle Griffkörper 16v der Griffeinheit 14v einen Griffbereich 68v auf. Der Kopfbereich 66v ist zu einer Anbindung der Anwendungseinheit 12v vorgesehen. Des Weiteren weist der materielle Griffkörper 16v der Griffeinheit 14v an einem dem Kopfbereich abgewandten Ende einen Endbereich 132v auf.

Der materielle Griffkörper 16v besteht zumindest zu einem Großteil aus einem Papierwerkstoff. Der materielle Griffkörper 16v besteht beispielhaft vollständig aus einem Papierwerkstoff. Der materielle Griffkörper 16v weist eine flache, längliche Grundform auf. Der materielle Griffkörper 16v der Griffeinheit 14v weist zumindest zwei Lagen aus einem Papierwerkstoff auf, die geschichtet miteinander verbunden sind. Der materielle Griffkörper 16v der Griffeinheit 14v weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10v. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10v miteinander verbunden.

Der materielle Griffkörper 16v der Griffeinheit 14v weist einen Griffbereich 68v auf. Ferner weist der materielle Griffkörper 16v der Griffeinheit 14v einen Endbereich 132v auf. Der Griffbereich 68v ist zu einer Anbindung der Anwendungseinheit 12v vorgesehen. Der Griffbereich 68v des Griffkörpers 16v weist eine ovale Form auf und ist gegenüber dem Endbereich 132v verbreitert. Der Kopfbereich 66v weist eine trapezförmige Grundform auf.

Ferner ist die Schicht des Griffkörpers 16v verformt, bevorzugt tiefgezogen, insbesondere mittels Befeuchtung, Drucks und Wärme. Der materielle Griffkörper 16v weist eine dreidimensionale Verformung auf. Die Griffeinheit 14v weist zumindest eine Grifffläche 70v auf, welche eine Oberfläche des materiellen Griffkörpers 16v ausbildet. Die Grifffläche 70v verläuft auf einer Vorderseite von dem Kopfbereich 66v des Griffkörpers 16v bis zum unteren Endbereich 132v des Griffkörpers 16v an der Unterseite. Die Grifffläche 70v erstreckt sich über den Griffbereich 68v des materiellen Griffkörpers 16v. Die Grifffläche 56v bildet entlang einer Längsachse auf der Vorderseite eine teilweise bombierte bzw. teilweise konvexe Form aus. Die bombierte Form ist entlang der Längsachse auf einer Rückseite umgekehrt ausgebildet. Der Griffkörper 16v ist auf der Rückseite in einem Bereich der Grifffläche 70v teilweise konkav geformt. Der gesamte Griffkörper 16v ist in der Draufsicht insbesondere teilweise Y-förmig oder T-förmig ausgebildet. Insbesondere verbreitert sich der Griffkörper 16v zu der Anwendungseinheit 14v hin. Der Griffkörper 16v ist dreidimensional verformt, um die bombierte, konvexe Form auszubilden.

Ferner weist das Körperpflegeprodukt 10v die Verbindungseinheit 18v auf. Die Verbindungseinheit 18v ist zu einer formschlüssigen Verbindung mit dem materiellen Griffkörper 16v der Griffeinheit 14v vorgesehen.

Die Anwendungseinheit 12v kann mittels der Verbindungseinheit 18v mit der Griffeinheit 14v verbunden werden. Die Verbindungseinheit 18v weist ein mit der Anwendungseinheit 12v verbundenes Verbindungselement 20v und ein mit der Griffeinheit 14v verbundenes weiteres Verbindungselement 22v auf. Das Verbindungselement 20v und das weitere Verbindungselement 22v sind korrespondierend ausgebildet. Ferner ist das Verbindungselement 20v der Verbindungseinheit 18v einstückig mit der Anwendungseinheit 12v ausgebildet. Das Verbindungselement 20v bildet insbesondere einen Teil der Anwendungseinheit 12v. Das weitere Verbindungselement 22v der Verbindungseinheit 18v ist zumindest teilweise einstückig mit der Griffeinheit 14v ausgebildet. Das weitere Verbindungselement 22v der Verbindungseinheit 18v ist einstückig mit dem Griffkörper 16v ausgebildet. Das weitere Verbindungselement 22v der Verbindungseinheit 18v bildet daher einen Teil des Griffkörpers 16v. Das weitere Verbindungselement 22v der Verbindungseinheit 18v besteht daher ebenfalls zu einem Großteil, insbesondere vollständig, aus einem Papierwerkstoff.

Das Verbindungselement 20v der Verbindungseinheit 18v besteht zu einem Großteil aus einem Polymer, insbesondere aus einem Kunststoff. Das Verbindungselement 20v der Verbindungseinheit 18v besteht aus einem Hartkunststoff. Das Verbindungselement 20v besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22v ist in einem Endbereich des Griffkörpers 16v ausgebildet. Der Kopfbereich 66v des Griffkörpers 16v bildet in seinem Endbereich das weitere Verbindungselement 22v aus, an welchem die Anwendungseinheit 12v fixiert ist. Das weitere Verbindungselement 22v bildet an dem Ende des Kopfbereichs 66v einen Verbindungsbereich 28v aus.

Das Verbindungselement 20v der Verbindungseinheit 18v ist zumindest teilweise stoffschlüssig mit dem weiteren Verbindungselement 22v der Verbindungseinheit 18v verbunden. Das Verbindungselement 20v der Verbindungseinheit 18v ist zumindest teilweise formschlüssig mit dem weiteren Verbindungselement 22v der Verbindungseinheit 18v verbunden. Das Verbindungselement 20v und die Anwendungseinheit 12v sind einteilig, insbesondere in einem Spitzgussverfahren, hergestellt.

Ferner weist das Verbindungselement 20v zumindest eine Aufnahmenut 152v auf. Die Aufnahmenut 152v ist in einem Bereich zwischen der Reinigungskante 142v und den Noppen 154v angeordnet. Die Aufnahmenut 152v ist dazu vorgesehen, eine der Anwendungseinheit 12v zugewandte Vorderkante des materiellen Griffkörpers 16v der Griffeinheit 14v aufzunehmen. Die Aufnahmenut 15v ist zu einer klemmenden Aufnahme zumindest einer Kante des materiellen Griffkörpers 16v vorgesehen. Die Aufnahmenut 152v erstreckt sich im Wesentlichen senkrecht zu einer Längsachse der Griffeinheit 14v. Es ist denkbar, dass in der Aufnahmenut 152v beispielsweise Widerhaken vorgesehen sind, welche eine Klemmung verbessern. Die Aufnahmenut 152v ist zu einer Bereitstellung einer Klemmverbindung mit dem materiellen Griffkörper 16v vorgesehen. Die Aufnahmenut 152v ist dabei als eine U-förmige Nut ausgebildet, welche zu der Griffeinheit 14v hin geöffnet ist. Ferner grenzt die Aufnahmenut 152v an die Ausnehmung 150v an.

Das Verbindungselement 20v weist ferner eine Auflagefläche zu einer Anlage an den Griffkörper 16v und zwei auf der Auflagefläche angeordnete Nieten 140v auf. Die Nieten 140v weisen jeweils einen Durchmesser von 1,5 mm bis 4 mm, vorzugsweise von 2 mm bis 3 mm, auf. Ferner weisen die Nieten 140v jeweils eine Höhe von 2 mm bis 4,5 mm, vorzugsweise von 2,7 mm bis 3,7 mm, auf. Die Nieten 140v sind dazu vorgesehen, sich jeweils durch eine Durchgangsausnehmung des weiteren Verbindungselements 22v zu erstrecken und dahinter verformt zu werden.

Das weitere Verbindungselement 22v der Verbindungseinheit 18v weist zumindest eine Formschlusskontur 36v auf, welche dazu vorgesehen ist, einen Formschluss mit dem Verbindungselement 20v auszubilden. Die Formschlusskontur 36v des weiteren Verbindungselements 22v weist die Durchgangsausnehmungen in dem Kopfbereich 66v auf. Die Durchgangsausnehmungen dienen zu einer Aufnahme der Nieten 140v.

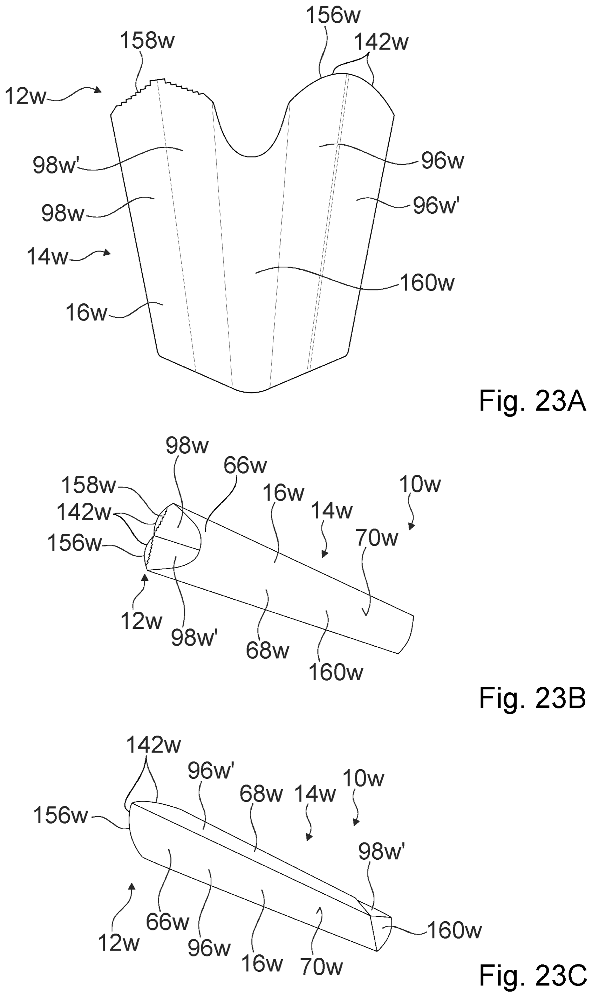

Die Figuren 23A bis 23C zeigen ein Körperpflegeprodukt 10w in verschiedenen Darstellungen. Das Körperpflegeprodukt 10w ist von einem Mundhygienemittel gebildet. Das Körperpflegeprodukt 10w ist im vorliegenden Fall als ein Zungenreiniger ausgebildet.

Das Körperpflegeprodukt 10w weist eine Anwendungseinheit 12w auf. Ferner weist das Körperpflegeprodukt 10w eine Griffeinheit 14w auf, welche einen materiellen Griffkörper 16w aufweist. Die Anwendungseinheit 12w und die Griffeinheit 14w sind einteilig ausgebildet.

Die Anwendungseinheit 12w bildet einen Zungenreinigerkopf des Körperpflegeprodukts 10w. Die Anwendungseinheit 12w weist zwei Reinigungskanten 142w auf, welche insbesondere zu einem Abziehen einer Oberfläche der Zunge vorgesehen sind. Die Reinigungskanten 142w erstrecken sich insbesondere quer zu einer Längsrichtung der Griffeinheit 14w. Ferner sind die Reinigungskanten 142w zueinander abgewinkelt. Die Reinigungskanten 142w bestehen jeweils aus zwei Schichten, insbesondere Papierschichten, wobei jeweils eine Schicht eine glatte Teilkante 156w und jeweils eine Schicht eine strukturierte Teilkante 158w ausbildet. Die strukturierten Teilkanten 158w der Reinigungskanten 142w weisen jeweils eine gezackte bzw. gestufte Struktur auf. Es sind daher insbesondere mehrere parallele Teilkanten 156w, 158w hintereinander angeordnet. Gewisse Teilkanten 156w, 158w können dabei weniger vorstehen. Im vorliegenden Ausführungsbeispiel sind die ersten Teilkanten 156w von außen die glatten Teilkanten, während die zweiten Teilkanten 158w von außen gezackt ausgebildet sind. Im Eingriff, das heißt während der Anwendung, kommt zuerst die glatte Teilkante 156w und danach die gezackte Teilkante 158w. Die Teilkanten 156w, 158w sind aus Papierschichten ausgebildet. Beim Montieren der Schichten kommen die Teilkanten 156w, 158w aufeinander zum Liegen, da die Flächen aufeinander liegen.

Die Griffeinheit 14w ist zu einem Greifen durch den Bediener vorgesehen. Die Griffeinheit 14w weist den materiellen Griffkörper 16w auf. Der materielle Griffkörper 16w der Griffeinheit 14w weist einen Kopfbereich 66w auf. Ferner weist der materielle Griffkörper 16w der Griffeinheit 14w einen Griffbereich 68w auf. Der Kopfbereich 66w ist zu einer Anbindung der Anwendungseinheit 12w vorgesehen. Die Griffeinheit 14w weist zumindest eine Grifffläche 70w auf, welche eine Oberfläche des materiellen Griffkörpers 16w ausbildet. Der Griffkörper 16w wird aus dem ungefalteten Zustand, abgebildet in Fig. 23A, zu einem dreidimensionalen Körper gefaltet, abgebildet in Figur 23B. Der Griffkörper 16w weist in einem gefalteten Zustand einen dreieckigen Querschnitt auf, welcher sich aus drei Seiten des Griffkörpers 16w zusammensetzt. Der Griffkörper 16w ist in einem gefalteten Zustand hohl ausgebildet. Der Zuschnitt des Griffkörpers 16w besteht insbesondere aus einem Papierbogen, welcher aus zumindest einer, insbesondere genau einer Schicht besteht. Der Griffkörper 16w weist von 1 bis 10 Lagen, vorzugsweise von 1 bis 5 Lagen auf. Der materielle Griffkörper 16w weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16w ab. Es können insbesondere viele dünne Lagen oder wenige dicke Lagen realisiert werden. Die Lagen werden vorzugsweise verbunden. Durch das Realisieren des materiellen Griffkörpers 16w in mehreren Lagen ergeben sich Stabilitätsvorteile gegenüber einem Körper aus einer oder weniger Lagen. Der Griffkörper 16w weist eine Rückwand 160w und zwei Seitenwände 96w, 96w' auf. Der Griffkörper 16w ist aus einem Zuschnitt hergestellt. Die beiden Seitenwände 96w, 96w' zusammen mit zwei Seiteninnenwänden 98w, 98w' bilden im Endprodukt eine Doppellage aus. Der Zuschnitt des Griffkörpers 16w besteht daher insbesondere aus fünf Seiten, und zwar der Rückwand 160w, den zwei Seitenwänden 96w, 96w' und zwei Seiteninnenwänden 98w, 98w'. Zumindest eine, insbesondere beide, der Doppellagen sind geklebt. Die beiden Schichten der Seitenwände 96w, 96w' und die jeweiligen Seiteninnenwände 98w, 98'w' sind daher miteinander verklebt. Der Griffkörper 16w ist in Längsrichtung konisch gestaltet. Im gefalteten Zustand ist der Griffkörper 16w auf der Seite der Anwendungseinheit 12w offen. Beispielhaft ist der Griffkörper 16w auch an einem unteren, freien Ende offen gestaltet. Die Rückwand 160w des Griffkörpers 16w ist kürzer als die beiden Seitenwände 96w, 96w' und die jeweiligen Seiteninnenwände 98w, 98w' und ist zu einer Unterseite konkav gerundet ausgebildet, damit die Reinigungskante 142w bei der Anwendung mit der Zunge in Kontakt kommen kann. Die beiden Seitenwände 96w, 96w' und die jeweiligen Seiteninnenwände 98w, 98w' laufen zu einer abgerundeten Spitze zusammen. Es bildet sich insbesondere ein Verlauf von den Seitenflächen des freien Endes hin zu der Rückseite aus, welche insbesondere zurückspringen. Eine Körperstabilität des Griffkörpers 16w wird durch die Faltung bzw. durch das dadurch entstehende Fachwerk im Querschnitt sowie die Doppellagigkeit erreicht. Ein Winkel zwischen der Rückwand 160w und den Seitenwänden 96w, 96w' mit den jeweiligen Seiteninnenwänden 98w, 98w' des Griffkörpers 16w ist in einem gefalteten Zustand links und rechts symmetrisch, insbesondere zwischen 45° und 85°, vorzugsweise zwischen 55° und 75°. Zwischen den Seitenwänden 96w, 96w' mit den jeweiligen Seiteninnenwänden 98w, 98w' des Griffkörpers 16w beträgt der Winkel insbesondere zwischen 30° und 70°, vorzugsweise zwischen 40° und 60°.

In Fig. 23A ist ein Zuschnitt des Papierwerkstoffs für die Griffeinheit 14w gezeigt. Beim Falten um die Faltachsen werden die Teilschichten der Rückwand 160w, der zwei Seitenwände 96w, 96w' und der zwei Seiteninnenwände 98w, 98w' gegeneinander gefaltet, sodass diese einen 3D-Körper bilden. Es bildet sich ein dreieckiger Querschnitt aus. Der materielle Griffkörper 16w bildet im montierten Zustand mindestens abschnittsweise eine hohle Pyramide mit 3-eckigem Querschnitt aus.

Der materielle Griffkörper 16w besteht zumindest zu einem Großteil aus einem Papierwerkstoff. Der materielle Griffkörper 16w besteht vollständig aus einem Papierwerkstoff. Der materielle Griffkörper 16w der Griffeinheit 14w weist zumindest eine Schicht aus einem Papierwerkstoff auf, welche dreidimensional geformt ausgebildet ist. Der Zuschnitt des materiellen Griffkörpers 16w besteht aus genau einer Schicht aus einem Papierwerkstoff.

Die Anwendungseinheit 12w und die Griffeinheit 14w sind einstückig ausgebildet. Die Anwendungseinheit 12w und die Griffeinheit 14w sind einteilig ausgebildet. Die Anwendungseinheit 12w besteht zumindest zu einem Großteil aus einem Papierwerkstoff. Die Anwendungseinheit 12w besteht beispielhaft vollständig aus einem Papierwerkstoff.

Die zwei Seitenwände 96w, 96w' sind einteilig mit den glatten Teilkanten 156w ausgebildet. Die zwei Seitenwände 96w, 96w' bilden die glatten Teilkanten 156w der Anwendungseinheit 12w aus. Die zwei Seiteninnenwände 98w, 98w' sind einteilig mit den strukturierten Teilkanten 158w ausgebildet. Die zwei Seiteninnenwände 98w, 98w' bilden die strukturierten Teilkanten 158w der Anwendungseinheit 12w aus.

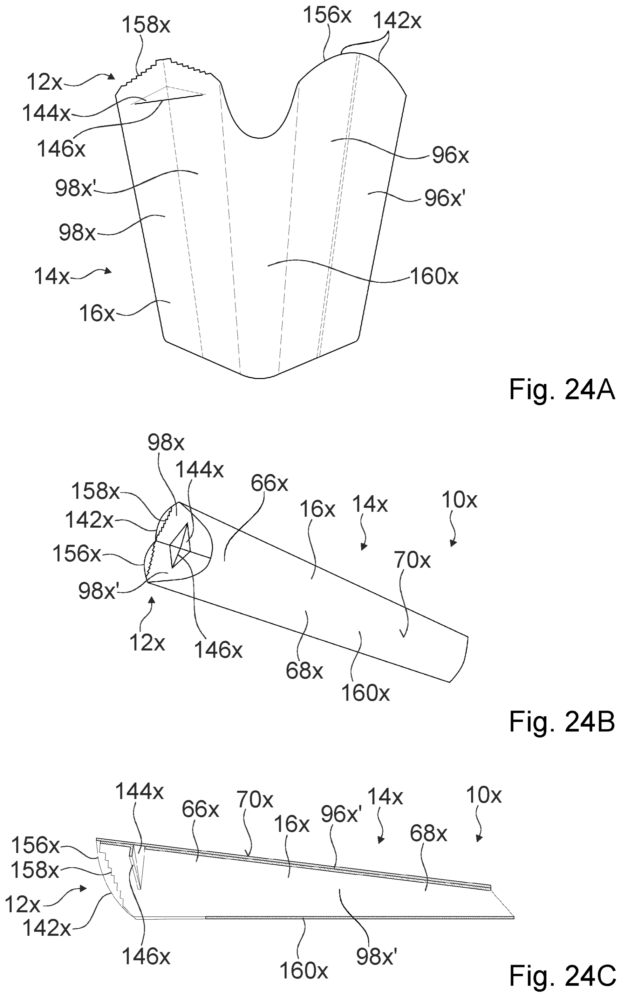

Die Figuren 24A bis 24C zeigen ein Körperpflegeprodukt 10x in verschiedenen Darstellungen. Das Körperpflegeprodukt 10x ist von einem Mundhygienemittel gebildet. Das Körperpflegeprodukt 10x ist im vorliegenden Fall als ein Zungenreiniger ausgebildet.

Das Körperpflegeprodukt 10x weist eine Anwendungseinheit 12x auf. Ferner weist das Körperpflegeprodukt 10x eine Griffeinheit 14x auf, welche einen materiellen Griffkörper 16x aufweist. Die Anwendungseinheit 12x und die Griffeinheit 14x sind einteilig ausgebildet.

Die Anwendungseinheit 12x bildet einen Zungenreinigerkopf des Körperpflegeprodukts 10x. Die Anwendungseinheit 12x weist zwei Reinigungskanten 142x auf, welcher insbesondere zu einem Abziehen einer Oberfläche der Zunge vorgesehen sind. Die Reinigungskanten 142x erstrecken sich insbesondere quer zu einer Längsrichtung der Griffeinheit 14x. Ferner sind die Reinigungskanten 142x zueinander abgewinkelt. Die Reinigungskanten 142x bestehen jeweils aus zwei Schichten, insbesondere Papierschichten, wobei jeweils eine Schicht eine glatte Teilkante 156x und jeweils eine Schicht eine strukturierte Teilkante 158x ausbildet. Die strukturierten Teilkanten 158x der Reinigungskanten weisen jeweils eine gezackte bzw. gestufte Struktur auf. Es sind daher insbesondere mehrere parallele Teilkanten 156x, 158x hintereinander angeordnet.

Gewisse Teilkanten 156w, 158w können dabei weniger vorstehen. Im vorliegenden Ausführungsbeispiel sind die ersten Teilkanten 156x von außen die glatten teilkanten, während die zweiten Teilkanten 158x von außen gezackt ausgebildet sind. Im Eingriff, das heißt während der Anwendung, kommt zuerst die glatte Teilkanten 156x und danach die gezackte Teilkante 158x. Die Teilkanten 156x, 158x sind aus Papierschichten ausgebildet. Beim Montieren der Schichten kommen die Teilkanten 156x, 158x aufeinander zum Liegen, da die Flächen aufeinander liegen. Ferner weist die Anwendungseinheit 12x eine quer zu einer Längsrichtung verlaufende schlitzartige Ausnehmung 144x auf. Die Ausnehmung 144x bildet eine Zusatzreinigungskante 146x aus. Die Ausnehmung 144x erstreckt sich über zwei Seiteninnenwände 98x, 98x' hinweg. Sie ist lediglich als Stanzkante in der jeweiligen Seiteninnenwand 98x, 98x' realisiert, durch das Falten bzw. das in den Winkel Stellen der Seiteninnenwände 98x, 98x' faltet sich das Element auf und es entsteht die Ausnehmung. Die Seiteninnenwände 98x, 98x' werden im Bereich der Ausnehmung 144x nach innen gestülpt, sodass die Zusatzreinigungskante 146x entsteht.

Die Griffeinheit 14x ist zu einem Greifen durch den Bediener vorgesehen. Die Griffeinheit 14x weist den materiellen Griffkörper 16x auf. Der materielle Griffkörper 16x der Griffeinheit 14x weist einen Kopfbereich 66x auf. Ferner weist der materielle Griffkörper 16x der Griffeinheit 14x einen Griffbereich 68x auf. Der Kopfbereich 66x ist zu einer Anbindung der Anwendungseinheit 12x vorgesehen. Die Griffeinheit 14x weist zumindest eine Grifffläche 70x auf, welche eine Oberfläche des materiellen Griffkörpers 16x ausbildet. Der Griffkörper 16x wird aus dem ungefalteten Zustand, abgebildet in Fig. 24A, zu einem dreidimensionalen Körper gefaltet, abgebildet in Figur 24B. Der Griffkörper 16x weist in einem gefalteten Zustand einen dreieckigen Querschnitt auf, welcher sich aus drei Seiten des Griffkörpers 16x zusammensetzt. Der Griffkörper 16x ist in einem gefalteten Zustand hohl ausgebildet. Der Zuschnitt des Griffkörpers 16x besteht insbesondere aus einem Papierbogen, welcher aus zumindest einer, insbesondere genau einer Schicht besteht. Der Griffkörper 16x weist von 1 bis 10 Lagen, vorzugsweise von 1 bis 5 Lagen auf. Der materielle Griffkörper 16x weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16x ab. Es können insbesondere viele dünne Lagen oder wenige dicke Lagen realisiert werden. Die Lagen werden vorzugsweise verbunden. Durch das Realisieren des materiellen Griffkörpers 16x in mehreren Lagen ergeben sich Stabilitätsvorteile gegenüber einem Körper aus einer oder weniger Lagen. Der Griffkörper 16x weist eine Rückwand 160x und zwei Seitenwände 96x, 96x' auf. Der Griffkörper 16x ist aus einem Zuschnitt hergestellt. Die beiden Seitenwände 96x, 96x' zusammen mit zwei Seiteninnenwänden 98x, 98x' bilden im Endprodukt eine Doppellage aus. Der Zuschnitt des Griffkörpers 16x besteht daher insbesondere aus fünf Seiten, und zwar der Rückwand 160x, den zwei Seitenwänden 96x, 96x' und zwei Seiteninnenwänden 98x, 98x'. Zumindest eine, insbesondere beide, der Doppellagen sind geklebt. Die beiden Schichten der Seitenwände 96x, 96x' und die jeweiligen Seiteninnenwände 98x, 98x' sind daher miteinander verklebt. Der Griffkörper 16x ist in Längsrichtung konisch gestaltet. Im gefalteten Zustand ist der Griffkörper 16x auf der Seite der Anwendungseinheit 12x offen. Beispielhaft ist der Griffkörper 16x auch an einem unteren, freien Ende offen gestaltet. Die Rückwand 160x des Griffkörpers 16x ist kürzer als die beiden Seitenwände 96x, 96x' und die jeweiligen Seiteninnenwände 98x, 98x' und ist zu einer Unterseite konkav gerundet ausgebildet, damit die Reinigungskante 142x bei der Anwendung mit der Zunge in Kontakt kommen kann. Die beiden Seitenwände 96x, 96x' und die jeweiligen Seiteninnenwände 98x, 98x' laufen zu einer abgerundeten Spitze zusammen. Es bildet sich insbesondere ein Verlauf von den Seitenflächen des freien Endes hin zu der Rückseite aus, welche insbesondere zurückspringen. Eine Körperstabilität des Griffkörpers 16x wird durch die Faltung bzw. durch das dadurch entstehende Fachwerk im Querschnitt sowie die Doppellagigkeit erreicht. Ein Winkel zwischen der Rückwand 160x und den Seitenwänden 96x, 96x' mit den jeweiligen Seiteninnenwänden 98x, 98x' des Griffkörper 16x ist in einem gefalteten Zustand links und rechts symmetrisch, insbesondere zwischen 45° und 85°, vorzugsweise zwischen 55° und 75°. Zwischen den Seitenwänden 96x, 96x' mit den jeweiligen Seiteninnenwänden 98x, 98x' des Griffkörpers 16x beträgt der Winkel insbesondere zwischen 30° und 70°, vorzugsweise zwischen 40° und 60°.

In Fig. 24A ist ein Zuschnitt des Papierwerkstoffs für die Griffeinheit 14x gezeigt. Beim Falten um die Faltachsen werden die Teilschichten der Rückwand 160x, der zwei Seitenwände 96x, 96x' und der zwei Seiteninnenwände 98x, 98x' gegeneinander gefaltet, sodass diese einen 3D-Körper bilden. Es bildet sich ein dreieckiger Querschnitt aus. Der materielle Griffkörper 16x bildet im montierten Zustand mindestens abschnittsweise eine hohle Pyramide mit 3-eckigem Querschnitt aus.

Der materielle Griffkörper 16x besteht zumindest zu einem Großteil aus einem Papierwerkstoff. Der materielle Griffkörper 16x besteht vollständig aus einem Papierwerkstoff. Der materielle Griffkörper 16x der Griffeinheit 14x weist zumindest eine Schicht aus einem Papierwerkstoff auf, welche dreidimensional geformt ausgebildet ist. Der Zuschnitt des materiellen Griffkörpers 16x besteht aus genau einer Schicht aus einem Papierwerkstoff.

Die Anwendungseinheit 12x und die Griffeinheit 14x sind einstückig ausgebildet. Die Anwendungseinheit 12x und die Griffeinheit 14x sind einteilig ausgebildet. Die Anwendungseinheit 12x besteht zumindest zu einem Großteil aus einem Papierwerkstoff. Die Anwendungseinheit 12x besteht beispielhaft vollständig aus einem Papierwerkstoff.

Die zwei Seitenwände 96x, 96x' sind einteilig mit den glatten Teilkanten 156x ausgebildet. Die zwei Seitenwände 96x, 96x' bilden die glatten Teilkanten 156x der Anwendungseinheit 12x aus. Die zwei Seiteninnenwände 98x, 98x' sind einteilig mit den strukturierten Teilkanten 158x ausgebildet. Die zwei Seiteninnenwände 98x, 98x' bilden die strukturierten Teilkanten 158x der Anwendungseinheit 12x aus.

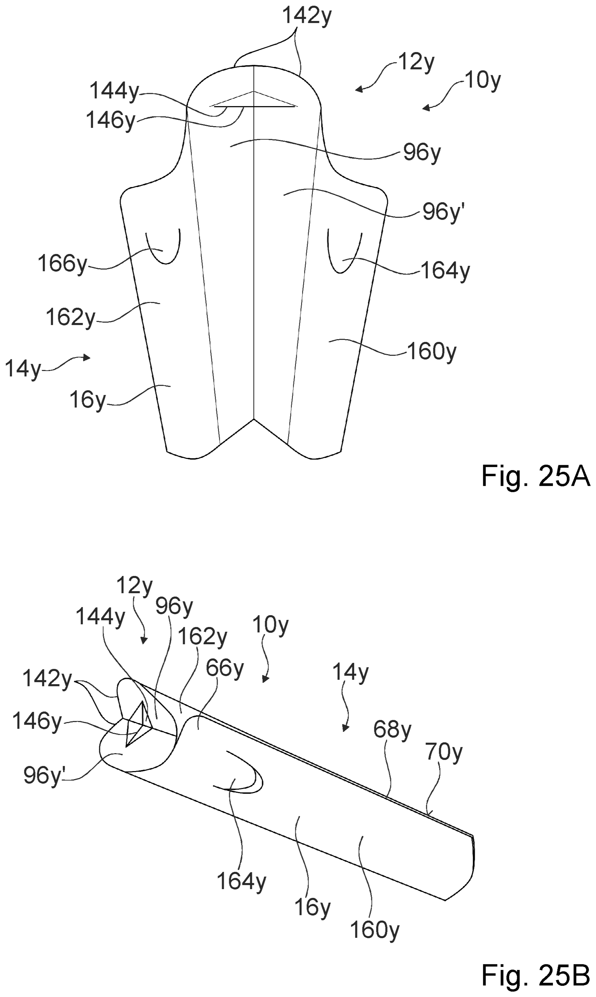

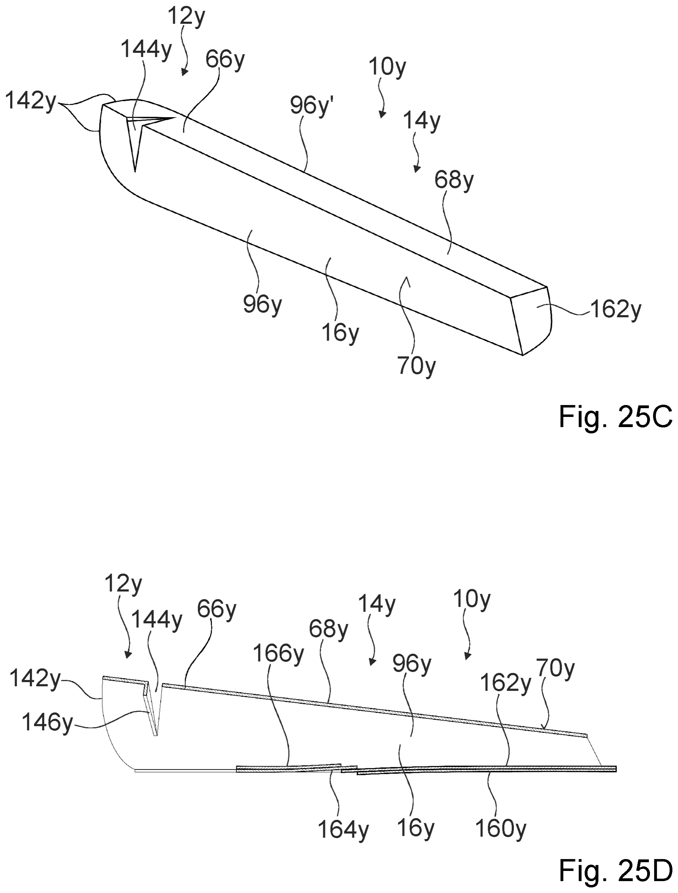

Die Figuren 25A bis 25D zeigen ein Körperpflegeprodukt 10y in einer schematischen perspektivischen Darstellung. Das Körperpflegeprodukt 10y ist von einem Mundhygienemittel gebildet. Das Körperpflegeprodukt 10y ist im vorliegenden Fall als ein Zungenreiniger ausgebildet.

Das Körperpflegeprodukt 10y weist eine Anwendungseinheit 12y auf. Ferner weist das Körperpflegeprodukt 10y eine Griffeinheit 14y auf, welche einen materiellen Griffkörper 16y aufweist. Die Anwendungseinheit 12y und die Griffeinheit 14y sind einteilig ausgebildet.

Die Anwendungseinheit 12y bildet einen Zungenreinigerkopf des Körperpflegeprodukts 10y. Die Anwendungseinheit 12y weist zwei Reinigungskanten 142y auf, welche insbesondere zu einem Abziehen einer Oberfläche der Zunge vorgesehen sind. Die Reinigungskanten 142y erstrecken sich insbesondere quer zu einer Längsrichtung der Griffeinheit 14y. Ferner sind die Reinigungskanten 142y zueinander abgewinkelt. Ferner weist die Anwendungseinheit 12y eine quer zu einer Längsrichtung verlaufende schlitzartige Ausnehmung 144y auf. Die Ausnehmung 144y bildet eine Zusatzreinigungskante 146y aus. Die Ausnehmung 144y erstreckt sich über zwei Seitenwände 96y, 96y' hinweg. Sie ist lediglich als Stanzkante in der jeweiligen Seiteninnenwand 98y, 98y' realisiert, durch das Falten bzw. das in den Winkel Stellen der Seiteninnenwände 98y, 98y' faltet sich das Element auf und es entsteht die Ausnehmung. Die Seitenwände 96y, 96y' werden im Bereich der Ausnehmung 144y nach innen gestülpt, sodass die Zusatzreinigungskante 146y entsteht.

Die Griffeinheit 14y ist zu einem Greifen durch den Bediener vorgesehen. Die Griffeinheit 14y weist den materiellen Griffkörper 16y auf. Der materielle Griffkörper 16y der Griffeinheit 14y weist einen Kopfbereich 66y auf. Ferner weist der materielle Griffkörper 16y der Griffeinheit 14y einen Griffbereich 68y auf. Der Kopfbereich 66y ist zu einer Anbindung der Anwendungseinheit 12y vorgesehen. Die Griffeinheit 14y weist zumindest eine Grifffläche 70y auf, welche eine Oberfläche des materiellen Griffkörpers 16y ausbildet. Der Griffkörper 16y wird aus dem ungefalteten Zustand, abgebildet in Fig. 25A, zu einem dreidimensionalen Körper gefaltet, abgebildet in Figur 25B. Der Griffkörper 16y weist in einem gefalteten Zustand einen dreieckigen Querschnitt auf, welcher sich aus drei Seiten des Griffkörpers 16y zusammensetzt. Der Griffkörper 16y ist in einem gefalteten Zustand hohl ausgebildet. Der Zuschnitt des Griffkörpers 16y besteht insbesondere aus einem Papierbogen, welcher aus zumindest einer, insbesondere genau einer Schicht besteht. Der Griffkörper 16y weist von 1 bis 10 Lagen, vorzugsweise von 1 bis 5 Lagen auf. Der materielle Griffkörper 16y weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16y ab. Es können insbesondere viele dünne Lagen oder wenige dicke Lagen realisiert werden. Die Lagen werden vorzugsweise verbunden. Durch das Realisieren des materiellen Griffkörpers16y in mehreren Lagen ergeben sich Stabilitätsvorteile gegenüber einem Körper aus einer oder weniger Lagen. Der Griffkörper 16y weist eine Rückwand 160y und zwei Seitenwände 96y, 96y' auf. Der Griffkörper 16y ist aus einem Zuschnitt hergestellt. Die Rückwand 160y bildet mit einer Innenrückwand 162y im Endprodukt eine Doppellage aus. Der Zuschnitt des Griffkörpers 16y besteht daher insbesondere aus vier Seiten, und zwar der Rückwand 160y, der Innenrückwand 162y und den zwei Seitenwänden 96y, 96y'. Die Doppellage ist über eine Steckverbindung verbunden. Die Rückwand 160y und die Innenrückwand 162y weisen dazu jeweils eine Lasche 164y, 166y auf. Die Lasche 164y der Rückwand 160y ist dazu vorgesehen durch die Lasche 166y bzw. durch eine Stanzung der Lasche 166y der Innenrückwand 162y hindurch zu greifen. Die größere Lasche 164y der Rückwand 160y wird durch die Lasche 166y bzw. durch die Stanzung der Lasche 166y der Innenrückwand 162y hindurchgesteckt, sodass die Teile ineinander halten. Die Laschen 164y, 166y sind jeweils durch bogenförmige Stanzungen und/oder Schlitzungen hergestellt.

Der Griffkörper 16y ist in Längsrichtung konisch gestaltet. Im gefalteten Zustand ist der Griffkörper 16y auf der Seite der Anwendungseinheit 12y offen. Beispielhaft ist der Griffkörper 16y auch an einem unteren, freien Ende offen gestaltet. Die Rückwand 160y und die Innenrückwand 162y des Griffkörpers 16y sind kürzer als die beiden Seitenwände 96y, 96y' und sind zu einer Unterseite konkav gerundet ausgebildet, damit die Reinigungskante 142y bei der Anwendung mit der Zunge in Kontakt kommen kann. Die beiden Seitenwände 96y, 96y' laufen zu einer abgerundeten Spitze zusammen. Es bildet sich insbesondere ein Verlauf von den Seitenflächen des freien Endes hin zu der Rückseite aus, welche insbesondere zurückspringen. Eine Körperstabilität des Griffkörpers 16y wird durch die Faltung bzw. durch das dadurch entstehende Fachwerk im Querschnitt sowie die Doppellagigkeit erreicht. Ein Winkel zwischen der Rückwand 160y und den Seitenwänden 96y, 96y' des Griffkörpers 16y ist in einem gefalteten Zustand links und rechts symmetrisch, insbesondere zwischen 45° und 85°, vorzugsweise zwischen 55° und 75°. Zwischen den Seitenwänden 96y, 96y' des Griffkörpers 16y beträgt der Winkel insbesondere zwischen 30° und 70°, vorzugsweise zwischen 40° und 60°.

In Fig. 25A ist ein Zuschnitt des Papierwerkstoffs für die Griffeinheit 14y gezeigt. Beim Falten um die Faltachsen werden die Teilschichten der Rückwand 160y, der Innenrückwand 162y und der zwei Seitenwände 96y, 96y' gegeneinander gefaltet, sodass diese einen 3D-Körper bilden. Es bildet sich ein dreieckiger Querschnitt aus. Der materielle Griffkörper 16y bildet im montierten Zustand mindestens abschnittsweise eine hohle Pyramide mit 3-eckigem Querschnitt aus.

Der materielle Griffkörper 16y besteht zumindest zu einem Großteil aus einem Papierwerkstoff. Der materielle Griffkörper 16y besteht vollständig aus einem Papierwerkstoff. Der materielle Griffkörper 16y der Griffeinheit 14y weist zumindest eine Schicht aus einem Papierwerkstoff auf, welche dreidimensional geformt ausgebildet ist. Der Zuschnitt des materiellen Griffkörpers 16y besteht aus genau einer Schicht aus einem Papierwerkstoff.

Die Anwendungseinheit 12y und die Griffeinheit 14y sind einstückig ausgebildet. Die Anwendungseinheit 12y und die Griffeinheit 14y sind einteilig ausgebildet. Die Anwendungseinheit 12y besteht zumindest zu einem Großteil aus einem Papierwerkstoff. Die Anwendungseinheit 12y besteht beispielhaft vollständig aus einem Papierwerkstoff.

Die zwei Seitenwände 96y, 96y' sind einteilig mit den Reinigungskanten 142y ausgebildet. Die zwei Seitenwände 96y, 96y' bilden die Reinigungskanten 142y der Anwendungseinheit 12y aus.

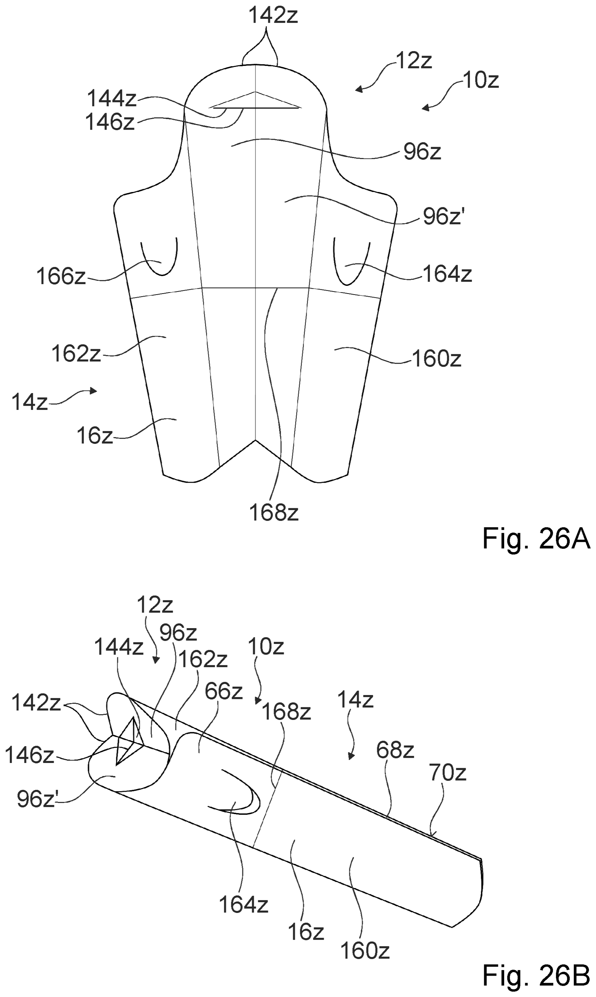

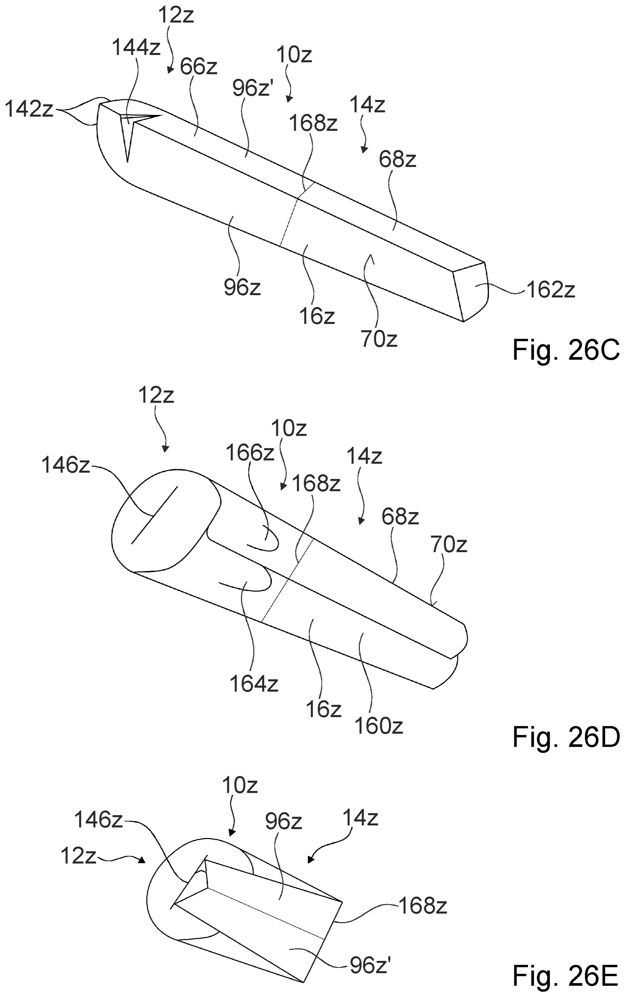

Die Figuren 26A bis 26D zeigen ein Körperpflegeprodukt 10z in einer schematischen perspektivischen Darstellung. Das Körperpflegeprodukt 10z ist von einem Mundhygienemittel gebildet. Das Körperpflegeprodukt 10z ist im vorliegenden Fall als eine Zungenreiniger ausgebildet.

Das Körperpflegeprodukt 10z weist eine Anwendungseinheit 12z auf. Ferner weist das Körperpflegeprodukt 10z eine Griffeinheit 14z auf, welche einen materiellen Griffkörper 16z aufweist. Die Anwendungseinheit 12z und die Griffeinheit 14z sind einteilig ausgebildet.

Die Anwendungseinheit 12z bildet einen Zungenreinigerkopf des Körperpflegeprodukts 10z. Die Anwendungseinheit 12z weist zwei Reinigungskanten 142z auf, welche insbesondere zu einem Abziehen einer Oberfläche der Zunge vorgesehen sind. Die Reinigungskanten 142z erstrecken sich insbesondere quer zu einer Längsrichtung der Griffeinheit 14z. Ferner sind die Reinigungskanten 142z zueinander abgewinkelt. Ferner weist die Anwendungseinheit 12z eine quer zu einer Längsrichtung verlaufende schlitzartige Ausnehmung 144z auf. Die Ausnehmung 144z bildet eine Zusatzreinigungskante 146z aus. Die Ausnehmung 144z erstreckt sich über zwei Seitenwände 96z, 96z' hinweg. Sie ist als Stanzkante in der jeweiligen Seitenwand 96z, 96z' realisiert, durch das Falten bzw. das in den Winkel Stellen der Seitenwände 96z, 96z' faltet sich das Element auf und es entsteht die Ausnehmung. Die Seitenwände 96z, 96z' werden im Bereich der Ausnehmung 144z nach innen gestülpt, sodass die Zusatzreinigungskante 146z entsteht.

Die Griffeinheit 14z ist zu einem Greifen durch den Bediener vorgesehen. Die Griffeinheit 14z weist den materiellen Griffkörper 16z auf. Der materielle Griffkörper 16z der Griffeinheit 14z weist einen Kopfbereich 66z auf. Ferner weist der materielle Griffkörper 16z der Griffeinheit 14z einen Griffbereich 68z auf. Der Kopfbereich 66z ist zu einer Anbindung der Anwendungseinheit 12z vorgesehen. Die Griffeinheit 14z weist zumindest eine Grifffläche 70z auf, welche eine Oberfläche des materiellen Griffkörpers 16z ausbildet. Der Griffkörper 16z wird aus dem ungefalteten Zustand, abgebildet in Fig. 26A, zu einem dreidimensionalen Körper gefaltet, abgebildet in Figur 26B. Der Griffkörper 16z weist in einem gefalteten Zustand einen dreieckigen Querschnitt auf, welcher sich aus drei Seiten des Griffkörpers 16z zusammensetzt. Der Griffkörper 16z ist in einem gefalteten Zustand hohl ausgebildet. Der Zuschnitt des Griffkörpers 16z besteht insbesondere aus einem Papierbogen, welcher aus zumindest einer, insbesondere genau einer Schicht besteht. Der Griffkörper 16z weist von 1 bis 10 Lagen, vorzugsweise von 1 bis 5 Lagen auf. Der materielle Griffkörper 16z weist beispielhaft genau drei Lagen auf, die die genannte Schicht bilden. Die Lagen bilden eine Schicht. Die Anzahl der Lagen hängt insbesondere von der gewünschten Endstärke bzw. Stabilität des materiellen Griffkörpers 16z ab. Es können insbesondere viele dünne Lagen oder wenige dicke Lagen realisiert werden. Die Lagen werden vorzugsweise verbunden. Durch das Realisieren des materiellen Griffkörpers16z in mehreren Lagen ergeben sich Stabilitätsvorteile gegenüber einem Körper aus einer oder weniger Lagen. Der Griffkörper 16z weist eine Rückwand 160z und zwei Seitenwände 96z, 96z' auf. Der Griffkörper 16z ist aus einem Zuschnitt hergestellt. Die Rückwand 160z bildet mit einer Innenrückwand 162z im Endprodukt eine Doppellage aus. Der Zuschnitt des Griffkörpers 16z besteht daher insbesondere aus vier Seiten, und zwar der Rückwand 160z, der Innenrückwand 162z und den zwei Seitenwänden 96z, 96z'. Die Doppellage ist über eine Steckverbindung verbunden. Die Rückwand 160z und die Innenrückwand 162z weisen dazu jeweils eine Lasche 164z, 166z auf. Die Lasche 164z der Rückwand 160z ist dazu vorgesehen, durch die Lasche 166z bzw. durch eine Stanzung der Lasche 166z der Innenrückwand 162z hindurch zu greifen. Die größere Lasche 164z der Rückwand 160z wird durch die Lasche 166z bzw. durch die Stanzung der Lasche 166z der Innenrückwand 162z hindurchgesteckt, sodass die Teile ineinander halten. Die Laschen 164z, 166z sind jeweils durch bogenförmige Stanzungen und/oder Schlitzungen hergestellt.

Der Griffkörper 16z ist in Längsrichtung konisch gestaltet. Im gefalteten Zustand ist der Griffkörper 16z auf der Seite der Anwendungseinheit 12z offen. Beispielhaft ist der Griffkörper 16z auch an einem unteren, freien Ende offen gestaltet. Die Rückwand 160z und die Innenrückwand 162z des Griffkörpers 16z sind kürzer als die beiden Seitenwände 96z, 96z' und sind zu einer Unterseite konkav gerundet ausgebildet, damit die Reinigungskante 142z bei der Anwendung mit der Zunge in Kontakt kommen kann. Die beiden Seitenwände 96z, 96z' laufen zu einer abgerundeten Spitze zusammen. Es bildet sich insbesondere ein Verlauf von den Seitenflächen des freien Endes hin zu der Rückseite aus, welche insbesondere zurückspringen. Eine Körperstabilität des Griffkörpers 16z wird durch die Faltung bzw. durch das dadurch entstehende Fachwerk im Querschnitt sowie die Doppellagigkeit erreicht. Ein Winkel zwischen der Rückwand 160z und den Seitenwänden 96z, 96z' des Griffkörpers 16z ist in einem gefalteten Zustand links und rechts symmetrisch, insbesondere zwischen 45° und 85°, vorzugsweise zwischen 55° und 75°. Zwischen den Seitenwänden 96z, 96z' des Griffkörpers 16z beträgt der Winkel insbesondere zwischen 30° und 70°, vorzugsweise zwischen 40° und 60°.

In Figur 26A ist ein Zuschnitt des Papierwerkstoffs für die Griffeinheit 14z gezeigt. Beim Falten um die Faltachsen werden die Teilschichten der Rückwand 160z, der Innenrückwand 162z und der zwei Seitenwände 96z, 96z' gegeneinander gefaltet, sodass diese einen 3D-Körper bilden. Es bildet sich ein dreieckiger Querschnitt aus. Der materielle Griffkörper 16z bildet im montierten Zustand mindestens abschnittsweise eine hohle Pyramide mit 3-eckigem Querschnitt aus.

Ferner kann das Körperpflegeprodukt 10z für einen Transport und/oder einen Verkauf in klein, insbesondere in Kreditkartengröße, gefaltet werden. Das Körperpflegeprodukt 10z bildet eine Reisevariante aus. Die Rückwand 160z, die Innenrückwand 162z und die zwei Seitenwände 96z, 96z' weisen dazu jeweils eine Faltkante 168z auf, die jeweils quer zu einer Längsrichtung des Griffkörpers 16z verlaufen. Die Faltkanten 168z sind dabei derart angeordnet und gegenüber einer Längsrichtung abgewinkelt, dass die Faltkanten 168z in einem montierten Gebrauchszustand nicht mehr in einer Ebene liegen. Hierdurch kann insbesondere eine erhöhte Stabilität ermöglicht werden.

In einem Zustand, in welchem die Rückwand 160z und die Innenrückwand 162z flach auf den zwei Seitenwänden 96z, 96z' aufliegen, kann das untere freie Ende des Griffbereich 68z über die Faltkanten 168z nach oben in Richtung der Anwendungseinheit 12z gefaltet werden. Die Faltung erfolgt insbesondere in einem Nicht-Gebrauchs-Zustand. Die Faltung kann dabei durch ein Einschieben des freien Endes in die Ausnehmung 144z gesichert werden.

Zu einer Erstellung des Gebrauchszustands wird alles aufgefaltet und neu gefaltet, wobei die Faltkante 168z nicht genutzt wird. Der Griffkörper 16z wird dabei in einem dreieckigen Querschnitt gefaltet und über die Laschen 164z, 166z gesichert. Die Faltkante 168z wird dabei stabil, da die Faltkante 168z nach der Faltung in den Gebrauchszustand in einem Winkel steht und kein Knicken möglich ist.

Der materielle Griffkörper 16z besteht zumindest zu einem Großteil aus einem Papierwerkstoff. Der materielle Griffkörper 16z besteht vollständig aus einem Papierwerkstoff. Der materielle Griffkörper 16z der Griffeinheit 14z weist zumindest eine Schicht aus einem Papierwerkstoff auf, welche dreidimensional geformt ausgebildet ist. Der Zuschnitt des materiellen Griffkörpers 16z besteht aus genau einer Schicht aus einem Papierwerkstoff.

Die Anwendungseinheit 12z und die Griffeinheit 14z sind einstückig ausgebildet. Die Anwendungseinheit 12z und die Griffeinheit 14z sind einteilig ausgebildet. Die Anwendungseinheit 12z besteht zumindest zu einem Großteil aus einem Papierwerkstoff. Die Anwendungseinheit 12z besteht beispielhaft vollständig aus einem Papierwerkstoff.

Die zwei Seitenwände 96z, 96z' sind einteilig mit den Reinigungskanten 142z ausgebildet. Die zwei Seitenwände 96z, 96z' bilden die Reinigungskanten 142z der Anwendungseinheit 12z aus.

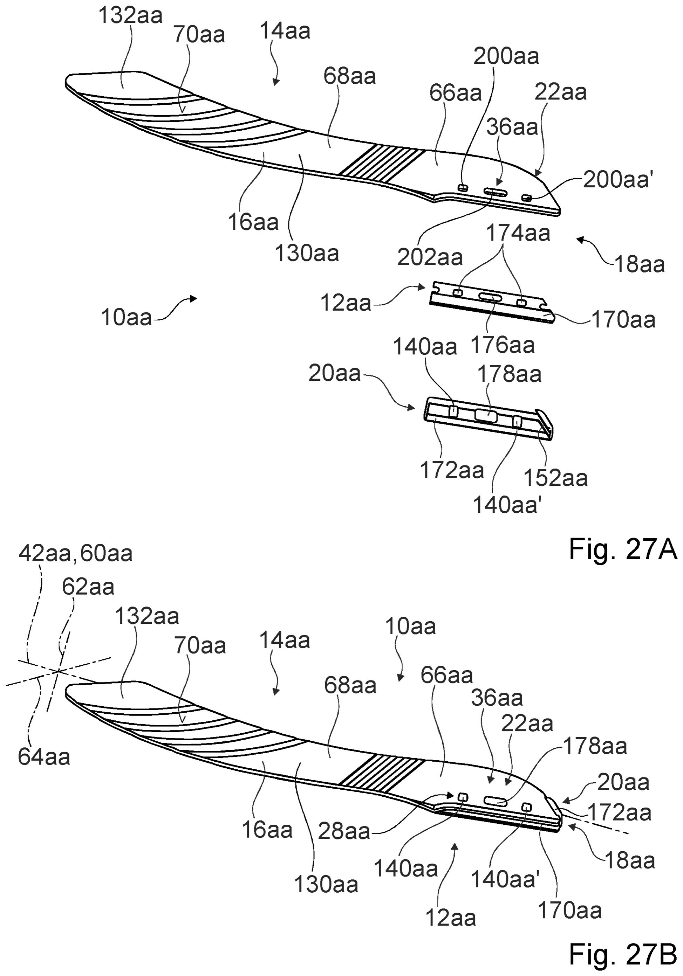

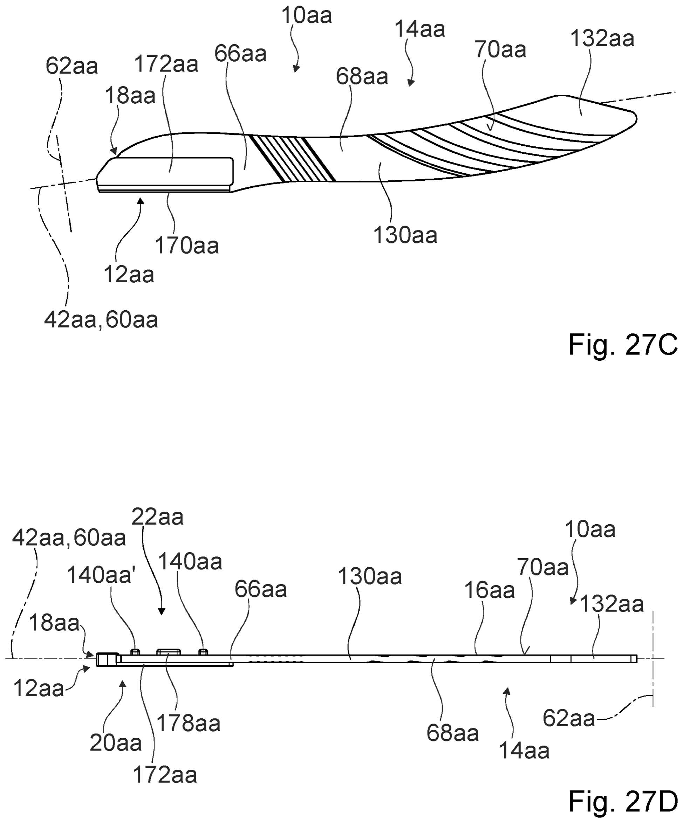

Die Figuren 27A bis 27F zeigen ein Körperpflegeprodukt 10aa in verschiedenen Darstellungen. Das Körperpflegeprodukt 10aa ist im vorliegenden Fall als ein Dermaplaning-Produkt, insbesondere als Dermaplaning-Rasierer, ausgebildet. Ein Dermaplaning-Rasierer stellt dabei insbesondere eine Art von Rasierer dar.

Das Körperpflegeprodukt 10aa weist eine Anwendungseinheit 12aa auf. Ferner weist das Körperpflegeprodukt 10aa eine Griffeinheit 14aa auf, welche einen materiellen Griffkörper 16aa aufweist. Des Weiteren weist das Körperpflegeprodukt 10aa eine Verbindungseinheit 18aa auf, welche die Anwendungseinheit 12aa mit der Griffeinheit 14aa verbindet.

Die Anwendungseinheit 12aa bildet einen Dermaplaning-Rasierkopf des Körperpflegeprodukts 10aa. Die Anwendungseinheit 12aa weist ein Klingenelement 170aa auf. Das Klingenelement 170aa ist von einer Klinge, insbesondere von einer Rasierklinge, gebildet. Das Klingenelement 170aa ist von einer Metall-Rasierklinge, wie beispielsweise aus einem Edelstahl, gebildet, obwohl auch andere Materialien wie Holz und Kunststoff in den Anwendungsbereich der vorliegenden Offenbarung fallen sollen. Es wäre jedoch auch eine andere, einem Fachmann als sinnvoll erscheinende Ausbildung denkbar. Das Klingenelement 170aa weist beispielhaft drei Ausnehmungen 174aa, 176aa auf. Die Ausnehmungen 174aa und 176aa sind beispielhaft in einer Linie angeordnet, wie beispielsweise in einer axialen Linie (z. B. die Längsachse 60aa, die Breitenachse 64aa oder die Höhenachse 62aa) oder allgemein parallel zu einer solchen axialen Linie. Die zwei äußeren Ausnehmungen 174aa sind von runden Ausnehmungen oder zumindest von Ausnehmungen mit einer allgemein runden Querschnittsform gebildet. Die mittlere Ausnehmung 176aa ist beispielhaft von einem Langloch oder zumindest einer Struktur, die entlang einer oder mehrerer Achsen (z. B. der Längsachse 60aa, der Höhenachse 62aa oder der Breitenachse 64aa) langgestreckt ist, gebildet. Die Ausnehmungen 174aa, 176aa dienen zu einem Halten, insbesondere einer Fixierung, des Klingenelements 170aa.

Die Griffeinheit 14aa ist zu einem Greifen durch den Bediener vorgesehen. Die Griffeinheit 14aa weist den materiellen Griffkörper 16aa auf. Der materielle Griffkörper 16aa der Griffeinheit 14aa weist einen einem Endbereich 132aa abgewandten Kopfbereich 66aa auf. Ferner weist der materielle Griffkörper 16aa der Griffeinheit 14aa einen Griffbereich 68aa mit einer Grifffläche 70aa auf. Die Grifffläche 70aa kann erhöhte und/oder vertiefte Merkmale im Griffbereich 68aa aufweisen. Der Kopfbereich 66aa kann einstückig mit einem weiteren Verbindungselement 22aa einer Verbindungseinheit 18aa ausgebildet sein, das so konfiguriert ist, dass es mit der Anwendungseinheit 12aa in Eingriff kommt. In solchen Ausführungsformen umfasst die Verbindungseinheit 18aa ein Verbindungselement 20aa, das so konfiguriert ist, dass es mit dem weiteren Verbindungselement 22aa in Eingriff kommt. Der Kopfbereich 66aa ist zu einer Anbindung der Anwendungseinheit 12aa vorgesehen. Des Weiteren weist der materielle Griffkörper 16aa der Griffeinheit 14aa an einem dem Kopfbereich 66aa abgewandten Ende einen Endbereich 132aa auf.

Der materielle Griffkörper 16aa besteht zumindest zu einem Großteil aus einem Papierwerkstoff. Der Griffkörper 16aa kann auch andere Materialien wie Holz, Gras (z. B. Bambus), andere nachhaltige, biologisch abbaubare, biologisch erneuerbare und/oder recycelte Materialien, einschließlich Biokunststoffe und recycelte Kunststoffe, sowie Kombinationen davon usw. umfassen. Zu den polymeren Werkstoffen können sowohl neue Kunststoffe (z. B. recycelbare neue Kunststoffe, neue Biokunststoffe, neue Biomaterialien usw.) als auch gemischte Polymere (z. B. gemischte neue und recycelte Kunststoffe) gehören. Der materielle Griffkörper 16aa besteht beispielhaft vollständig aus einem Papierwerkstoff. Der materielle Griffkörper 16aa weist eine flache, längliche Grundform auf, wobei die allgemeine Form eine einfache oder grundlegende Struktur aufweisen kann (z. B. allgemein rechteckig, leicht verjüngt oder aufgeweitet). Alternativ oder zusätzlich kann der Griffkörper 16aa weitere Merkmale wie Abrundungen, Abschrägungen oder Verrundungen aufweisen, wobei solche Merkmale eine weitere komplexe Herstellung (z. B. Stanzen, Schneiden, Schlitzen usw.) aus Papier oder einem anderen allgemein dünnen Material erfordern können. Der materielle Griffkörper 16aa der Griffeinheit 14aa weist zumindest zwei Lagen aus einem Werkstoff, insbesondere aus einem Papierwerkstoff, Holzwerkstoff, Bambuswerkstoff, Polymerwerkstoff oder einer Kombination davon, auf, die geschichtet miteinander verbunden sind. Der materielle Griffkörper 16aa der Griffeinheit 14aa weist beispielhaft genau zwei Lagen aus einem Papierwerkstoff auf. Vorzugsweise sind von 2 bis 6, vorzugsweise von 2 bis 4, Lagen vorgesehen. Bevorzugt sind die zumindest zwei Lagen senkrecht zu einer Haupterstreckungsebene der Lagen übereinander angeordnet und miteinander verbunden. Die Lagen sind im Wesentlichen identisch ausgebildet und bilden insbesondere gegenüberliegende Außenseiten des Körperpflegeprodukts 10aa. Die Lagen sind beispielsweise mittels Kleben und/oder Pressen und/oder Schweißen und/oder Laminieren miteinander verbunden. Die Lagen werden insbesondere bei einer Herstellung des Körperpflegeprodukts 10aa miteinander verbunden.

Der materielle Griffkörper 16aa der Griffeinheit 14aa weist einen Griffbereich 68aa auf. Ferner weist der materielle Griffkörper 16aa der Griffeinheit 14aa einen Endbereich 132aa auf. Der Griffbereich 68aa ist zu einer Anbindung der Anwendungseinheit 12aa vorgesehen. Der Griffbereich 68aa des Griffkörpers 16aa kann eine ovale Form aufweisen und/oder kann relativ zum Endbereich 132aa verbreitert sein. Der Kopfbereich 66aa kann eine allgemein viereckige, Trapez- oder prismatische Form aufweisen.

Ferner ist die Schicht des Griffkörpers 16aa verformt, bevorzugt tiefgezogen, insbesondere mittels Befeuchtung, Drucks und Wärme. Der materielle Griffkörper 16aa weist dreidimensionale Prägungen auf. Der Griffkörper 16aa weist in der Draufsicht in einem Bereich einer Grifffläche 70aa eine geschwungene Grundform auf. Der gesamte Griffkörper 16aa ist in der Draufsicht insbesondere teilweise S-förmig ausgebildet.

Ferner weist das Körperpflegeprodukt 10aa die Verbindungseinheit 18aa auf. Die Verbindungseinheit 18aa ist zu einer formschlüssigen Verbindung mit dem materiellen Griffkörper 16aa der Griffeinheit 14aa vorgesehen. In solchen Ausführungsformen kann die Verbindungseinheit 18aa ein Formschlusselement 186aa umfassen, das in ein wechselseitiges Formschlusselement 188aa, 188aa' an der Griffeinheit 14aa oder der Anwendungseinheit 12aa eingreift.

Die Anwendungseinheit 12aa kann mittels der Verbindungseinheit 18aa mit der Griffeinheit 14aa verbunden werden. Die Verbindungseinheit 18aa weist ein mit der Anwendungseinheit 12aa zusammenwirkendes, insbesondere verbundenes, ineinandergreifendes oder dergleichen, Verbindungselement 20aa und ein mit der Griffeinheit 14aa verbundenes weiteres Verbindungselement 22aa auf. Das Verbindungselement 20aa und das weitere Verbindungselement 22aa sind korrespondierend ausgebildet. Ferner ist das Verbindungselement 20aa der Verbindungseinheit 18aa unlösbar mit der Anwendungseinheit 12aa verbindbar. Das Verbindungselement 20aa bildet insbesondere einen Klingenträger für die Anwendungseinheit 12aa aus. Das weitere Verbindungselement 22aa der Verbindungseinheit 18aa ist zumindest teilweise einstückig mit der Griffeinheit 14aa ausgebildet. Das weitere Verbindungselement 22aa der Verbindungseinheit 18aa ist einstückig mit dem Griffkörper 16aa ausgebildet. Das weitere Verbindungselement 22aa der Verbindungseinheit 18aa bildet daher einen Teil des Griffkörpers 16aa. Das weitere Verbindungselement 22aa der Verbindungseinheit 18aa besteht daher ebenfalls zu einem Großteil, insbesondere vollständig, aus einem Werkstoff, insbesondere aus einem Papierwerkstoff, Holzwerkstoff, Bambuswerkstoff, Polymerwerkstoff oder einer Kombination davon. In einigen Ausführungsformen kann das Verbindungselement 20aa der Verbindungseinheit 18aa fest mit der Anwendungseinheit 12aa verbunden sein.

In einigen Ausführungsformen umfasst die Verbindungseinheit 18aa ein Polymermaterial (z. B. Kunststoff, PP, PE, PU, ABS, thermoplastische Elastomere, Mischungen davon usw.). Das Verbindungselement 20aa der Verbindungseinheit 18aa besteht beispielhaft zu einem Großteil aus einem Polymermaterial (z. B. Kunststoff, PP, PE, PU, ABS, thermoplastische Elastomere, deren Mischungen usw.). Das Verbindungselement 20aa der Verbindungseinheit 18aa umfasst beispielhaft einen Hartkunststoff. Das Verbindungselement 20aa besteht bevorzugt aus einem Biomaterial, Biokunststoff, recyceltes, recycelbares, kompostierbares, abbaubares Material, Kombinationen davon usw. Zu den Polymeren können sowohl neue Kunststoffe (z. B. recycelbare neue Kunststoffe, neue Biokunststoffe, neue Biomaterialien usw.) als auch gemischte Polymere (z. B. gemischte neue und recycelte Kunststoffe) gehören.

Das weitere Verbindungselement 22aa ist in einem Endbereich des Griffkörpers 16aa ausgebildet. Der Kopfbereich 66aa des Griffkörpers 16aa bildet in seinem Endbereich das weitere Verbindungselement 22aa aus, an welchem die Anwendungseinheit 12aa fixiert ist. Das weitere Verbindungselement 22aa bildet an dem Ende des Kopfbereichs 66aa einen Verbindungsbereich 28aa aus.

Das Verbindungselement 20aa der Verbindungseinheit 18aa ist zumindest teilweise formschlüssig mit dem weiteren Verbindungselement 22aa der Verbindungseinheit 18aa verbunden. Das Verbindungselement 20aa der Verbindungseinheit 18aa ist zumindest teilweise formschlüssig mit dem weiteren Verbindungselement 22aa der Verbindungseinheit 18aa verbunden. Das Verbindungselement 20aa und die Anwendungseinheit 12aa sind beispielhaft ebenfalls formschlüssig miteinander verbunden. In solchen Ausführungsformen ist das Verbindungselement 20aa beispielhaft ein erstes Formschlusselement 186aa, das in gegenseitige Formschlusselemente 188aa und 188aa' der Griffeinheit 14aa bzw. der Anwendungseinheit 12aa eingreift. Solche Formschlusselemente 186aa, 188aa, 188aa' greifen in einigen Ausführungsformen über eine Nietverbindung 140aa, 140aa', 178aa ineinander.

Das Verbindungselement 20aa weist einen Klingenträger 172aa auf. Der Klingenträger 172aa ist dazu vorgesehen, das Klingenelement 170aa an der Kante 116aa des Kopfbereichs 66aa des Griffkörpers 16aa zu verbinden, insbesondere zu fixieren, ineinanderzugreifen, zu befestigen, festzuhalten oder dergleichen. Der Klingenträger 172aa weist eine Auflagefläche zu einer Anlage an dem Klingenelement 170aa und drei auf der Auflagefläche angeordnete Fortsätze, insbesondere Nieten 140aa, 140aa', 178aa, auf. Die äußeren Fortsätze, insbesondere Nieten 140aa, 140aa', können eine kreisförmige (z. B. in der Draufsicht oder im Querschnitt) oder eine zylindrische (z. B. in drei Dimensionen, wie in einer Ebene, die durch die Breitenachse 64aa und die Längsachse 60aa oder die Breitenachse 64aa und die Höhenachse 62aa definiert ist) Form aufweisen. Insbesondere sind die äußeren Fortsätze, insbesondere Nieten 140aa, 140aa', kreiszylindrisch geformt. Ein mittlerer Fortsatz bzw. Niet 178aa kann eine längliche (z. B. in der Draufsicht oder im Aufriss) und kann eine prismatische oder polygonale Form aufweisen (z. B. in drei Dimensionen, wie in einer Ebene, die durch die Breitenachse 64aa und die Längsachse 60aa oder die Breitenachse 64aa und die Höhenachse 62aa definiert ist) aufweisen.

Die äußeren Fortsätze bzw. Nieten 140aa weisen jeweils beispielhaft einen Durchmesser von 1,5 mm bis 4 mm, vorzugsweise von 2 mm bis 3 mm, auf. Ferner weisen die mittleren Fortsätze bzw. Nieten 140aa, 178aa beispielhaft jeweils eine Höhe von 2 mm bis 4,5 mm, vorzugsweise von 2,7 mm bis 3,7 mm, auf. Die Fortsätze bzw. Nieten 140aa, 178aa sind dazu vorgesehen, sich beispielhaft jeweils durch die Ausnehmungen 174aa, 176aa des Klingenelements 170aa und durch Durchgangsausnehmungen 200aa, 200aa', 202aa des weiteren Verbindungselements 22aa hindurch zu erstrecken und dahinter verformt zu werden. Die Durchgangsausnehmungen des weiteren Verbindungselements 22aa sind zu den Fortsätzen, insbesondere Nieten 140aa, 178aa, korrespondierend geformt und angeordnet. Ferner sind die Ausnehmungen 174aa, 178aa des Klingenelements 170aa korrespondierend zu den Fortsätzen bzw. Nieten 140aa, 178aa korrespondierend geformt und angeordnet. Die Durchgangsausnehmungen 200aa, 200aa', 202aa des weiteren Verbindungselements 22aa sind korrespondierend zu den Ausnehmungen 174aa, 178aa des Klingenelements 170aa geformt und angeordnet. Die Durchgangsausnehmungen 200aa, 200aa', 202aa des weiteren Verbindungselements 22aa sind so geformt und angeordnet, dass sie mit den Ausnehmungen 174aa, 178aa des Klingenelements 170aa sowie mit den Fortsätzen bzw. Nieten 140aa, 140aa', 178aa übereinstimmen.

Der Klingenträger 172aa klemmt das Klingenelement 170aa zwischen der Auflagefläche und dem weiteren Verbindungselement 22aa im Verbindungsbereich 28aa, so dass das Klingenelement 170aa über die Kante 116aa hinausragt. Der längliche Fortsatz bzw. Niet 178aa hilft bei der Aufnahme von Kräften, insbesondere gegen Verdrehung (z. B. Torsions- oder Scherkräfte). Der längliche Fortsatz bzw. Niet 178aa weist gegenüber den kreiszylindrischen Fortsätzen bzw. Nieten 140aa eine verbesserte Kraftaufnahme auf. Ferner wäre denkbar, dass zusätzliche Elemente wie Anschläge an einer Außengeometrie vorgesehen sind, die zur Führung und Stabilisierung genutzt werden können.

Ferner weist das Verbindungselement 20aa zumindest eine Aufnahmenut 152aa, insbesondere Positioniernut, auf. Die Aufnahmenut 152aa ist in einem oberen Bereich des Klingenträgers 172aa angeordnet. Die Aufnahmenut 152aa ist dazu vorgesehen, eine der Anwendungseinheit 12aa zugewandte obere Kante des materiellen Griffkörpers 16aa der Griffeinheit 14aa aufzunehmen, so dass sich die Anwendungseinheit 12aa zwischen dem Klingenträger 172aa und dem Verbindungsbereich 28aa befindet. Die Aufnahmenut 15aa ist zu einer klemmenden Aufnahme zumindest einer Kante des materiellen Griffkörpers 16aa vorgesehen. Es ist auch möglich keine Aufnahmenut 152aa auszugestalten und das vorstehende Element lediglich als Abschirmelement zu nutzen, dass das Klingenelement 170aa nicht mit einer scharfen Kante vorsteht.

Es wäre auch denkbar, dass das Verbindungselement 20aa eine Bördelung aufweist, eine Bördelung wäre jedoch dem Klingenelement 170aa im Weg. Es sind daher insbesondere mehrere Fortsätze, insbesondere Nieten 140aa, 178aa, und keine Bördelung realisiert. Die Drehung des Klingenelements 170aa und/oder des Klingenträgers 172aa wird durch die mehreren Fortsätze, insbesondere Nieten 140aa, 178aa, sowie die Form der Fortsätze bzw. Nieten 140aa, 178aa verhindert.

Es wäre auch denkbar, dass auf einen Klingenträger 172aa verzichtet wird und das Klingenelement 170aa direkt an dem Griffkörper 16aa befestigt wird. Es wäre denkbar, dass das Klingenelement 170aa derart gestaltet ist, dass die Nieten 140aa, 178aa bzw. Geometrien an dem Klingenelement 170aa angeformt sind, welche durch Durchgangsausnehmungen in dem Griffkörper 16aa geführt und anschließend gebogen werden können. Hierdurch könnte auf ein Kunststoff-Teil verzichtet werden.

Das weitere Verbindungselement 22aa der Verbindungseinheit 18aa weist zumindest eine Formschlusskontur 36aa auf, welche dazu vorgesehen ist, einen Formschluss mit dem Verbindungselement 20aa auszubilden. Die Formschlusskontur 36aa des weiteren Verbindungselements 22aa weist die Durchgangsausnehmungen in dem Kopfbereich 66aa auf. Die Durchgangsausnehmungen dienen zu einer Aufnahme der Fortsätze bzw. Nieten 140aa, 178aa des Verbindungselements 20aa der Verbindungseinheit 18aa. Die Durchgangsausnehmungen 200aa, 200aa', 202aa und/oder die Ausnehmungen 174aa, 174aa', 178aa bilden zusammen mit den Fortsätzen bzw. Nieten 140aa, 140aa', 178aa eine Nietverbindung. Eine solche Verbindung kann auch als formschlüssige Verbindung bezeichnet werden.

Bei einer Montage wird das Klingenelement 170aa an dem Griffkörper 16aa fixiert. Dazu wird das Klingenelement 170aa an dem Griffkörper 16aa angeordnet und der Klingenträger 172aa mit den Nieten 140aa, 178aa durch die Ausnehmungen 174aa, 178aa des Klingenelements 170aa und die Durchgangsausnehmungen des weiteren Verbindungselements 22aa geführt. Die Nieten 140aa, 178aa führen vom Klingenträger 172aa durch das Klingenelement 170a und durch den Griffkörper 16aa. Anschließend werden die Nieten 140aa, 178aa verdrückt, sodass eine Fixierung des Klingenelements 170aa am Griffkörper 16aa erfolgt.

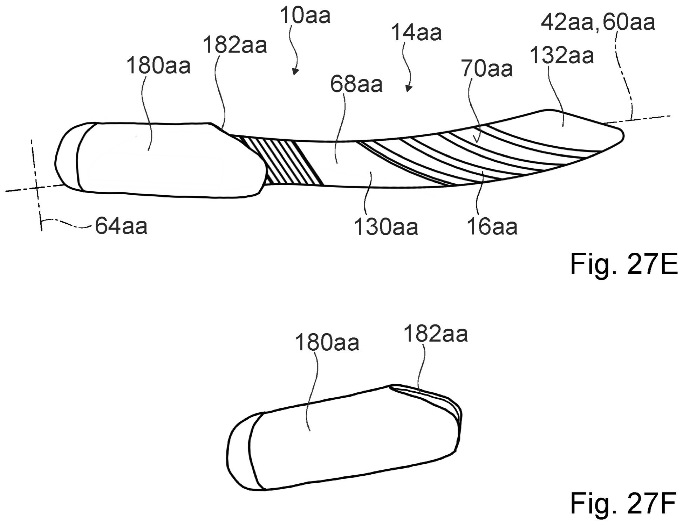

Ferner weist das Körperpflegeprodukt 10aa und insbesondere die Anwendungseinheit 12aa, und zwar insbesondere in der Nähe des Klingenelements 170aa, einen Klingenschutz 180aa auf. Der Klingenschutz 180aa ist beispielhaft rohrförmig ausgebildet. Der Klingenschutz 180aa ist beispielhaft von einem einseitig geöffneten Papierrohr, insbesondere Kartonrohr, gebildet. Der Klingenschutz 180aa weist auf einer Stirnseite eine, insbesondere schlitzartige, Öffnung 182aa zu einem Einschieben der Anwendungseinheit 12aa auf. Der Klingenschutz 180aa ist von einem zylindrischen Rohr mit einer schlitzartigen Öffnung 182aa gebildet. Ein der Öffnung182aa abgewandter Kopfbereich des Klingenschutzes 180aa ist geschlossen ausgebildet. Der Kopfbereich des Klingenschutzes 180aa bildet eine Kuppel aus. Der Klingenschutz 180aa ist dazu vorgesehen, die Anwendungseinheit 12aa und den Kopfbereich 66aa des Griffkörpers 16aa über die Öffnung 182aa aufzunehmen. Durch die knappe Bemessung der Öffnung 182aa ergibt sich eine Federung bzw. eine Klemmkraft gegen den Griffkörper 16aa. Der Klingenschutz 180aa besteht aus einem Papierwerkstoff. Der Klingenschutz 180aa ist teilweise wasserresistent ausgebildet. Eine Anforderung der Wasserresistenz ist auf die Anwendung ausgelegt. Der Klingenschutz 180aa kann etui-mäßig ausgebildet sein. Ferner kann der Klingenschutz 180aa flacher als ein herkömmliches Rohr, insbesondere aus Papier, Karton oder dergleichen, ausgebildet sein. Bevorzugt ist der Klingenschutz 180aa abgesehen von der Öffnung 182aa gefaltet und gesiegelt ausgebildet. Der Klingenschutz 180aa dient zu einem Schutz des Bedieners vor dem Klingenelement 170aa (Figur 27E und 27F).

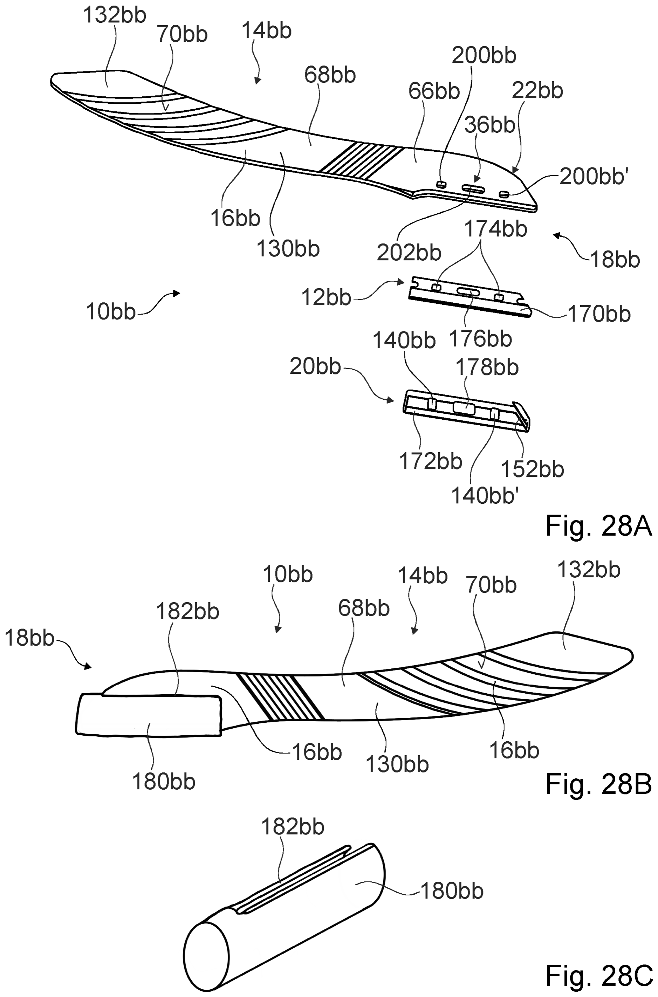

Die Figuren 28A bis 28C zeigen ein Körperpflegeprodukt 10bb und einen Klingenschutz 180bb jeweils in einer schematischen perspektivischen Darstellung. Das Körperpflegeprodukt 10bb ist im vorliegenden Fall als eine Dermaplaning-Produkt, insbesondere als Dermaplaning-Rasierer, ausgebildet. Dementsprechend ist ein solcher Dermaplaning-Rasierer eine Art von Rasierer. In ähnlicher Weise ähnelt das Körperpflegeprodukt 10bb dem Körperpflegeprodukt 10aa, und sofern nicht anders angegeben, schließt die Beschreibung des Körperpflegeprodukts 10aa das Körperpflegeprodukt 10bb ein. Wo Merkmale in Bezug auf das Körperpflegemittel 10bb nicht ausdrücklich beschrieben sind, sind solche Merkmale, die für das Körperpflegemittel 10aa beschrieben sind, relevant und inbegriffen, mutatis mutandis. Da es sich bei den Körperpflegeprodukten 10aa und 10bb um Rasierer handelt, sind die Merkmale des Körperpflegeprodukts 10i, sofern nicht anders angegeben, auch auf die Körperpflegeprodukte 10aa und 10bb anwendbar, insbesondere in Bezug auf die Materialien und die Zusammensetzung.

Das Körperpflegeprodukt 10bb weist eine Anwendungseinheit 12bb auf. Ferner weist das Körperpflegeprodukt 10bb eine Griffeinheit 14bb auf, welche einen materiellen Griffkörper 16bb aufweist. Des Weiteren weist das Körperpflegeprodukt 10bb eine Verbindungseinheit 18bb auf, welche die Anwendungseinheit 12bb mit der Griffeinheit 14bb verbindet.

Die Griffeinheit 14bb ist dazu bestimmt, von der Bedienperson ergriffen zu werden. Die Griffeinheit 14bb weist den Griffkörper 16bb auf. Der Griffkörper 16bb der Griffeinheit 14bb weist einen Kopfbereich 66bb auf, der im Allgemeinen einem Endbereich 132bb gegenüberliegt. An den Kopfbereich 66bb schließt sich ein Griffbereich 68bb an. Der Griffbereich 68bb grenzt an den Endbereich 132bb. Ferner weist der Griffkörper 16bb der Griffeinheit 14bb den Griffbereich 68bb mit einer Grifffläche 70bb auf. Die Grifffläche 70bb kann erhabene und/oder vertiefte Strukturen im Griffbereich 68bb aufweisen.

Der Kopfbereich 66bb kann ein Griffverbindungselement 22bb enthalten, das so konfiguriert ist, dass es mit einer Verbindungseinheit 18bb und/oder einer Anwendungseinheit 12bb in Eingriff kommt. In solchen Ausführungsformen umfassen die Verbindungseinheit 18bb und/oder die Anwendungseinheit 12bb ein Verbindungselement 20bb, das so konfiguriert ist, dass es mit dem Griffverbindungselement 22bb in Eingriff kommt.

Ferner weist das Körperpflegeprodukt 10bb einen Klingenschutz 180bb auf. Der Klingenschutz 180bb ist rohrförmig ausgebildet. Der Klingenschutz 180bb ist von einem zweiseitig geöffneten Rohr, insbesondere Papier- oder Kartonrohr, gebildet. Der Klingenschutz 180bb weist auf einer Stirnseite und einer Mantelfläche eine zusammenhängende, schlitzartige Öffnung zu einem Einschieben der Anwendungseinheit 12bb auf. Der Klingenschutz 180bb ist von einem zylindrischen Rohr mit einer insbesondere schlitzartigen Öffnung 182bb gebildet. Die Öffnung 182bb erstreckt sich über eine Stirnseite und eine Mantelfläche des Klingenschutzes 180bb. Ein der Öffnung182bb abgewandter Kopfbereich des Klingenschutzes 180bb ist geschlossen ausgebildet. Der Klingenschutz 180bb ist dazu vorgesehen, im Wesentlichen lediglich die Anwendungseinheit 12bb und die Verbindungseinheit 18bb über die Öffnung 182bb aufzunehmen. Durch die knappe Bemessung der Öffnung 182bb ergibt sich eine Federung bzw. eine Klemmkraft gegen den Griffkörper 16bb. Der Klingenschutz 180bb besteht aus einem Papier- oder Kartonwerkstoff. Der Klingenschutz 180bb dient zu einem Schutz des Bedieners vor dem Klingenelement 170bb.

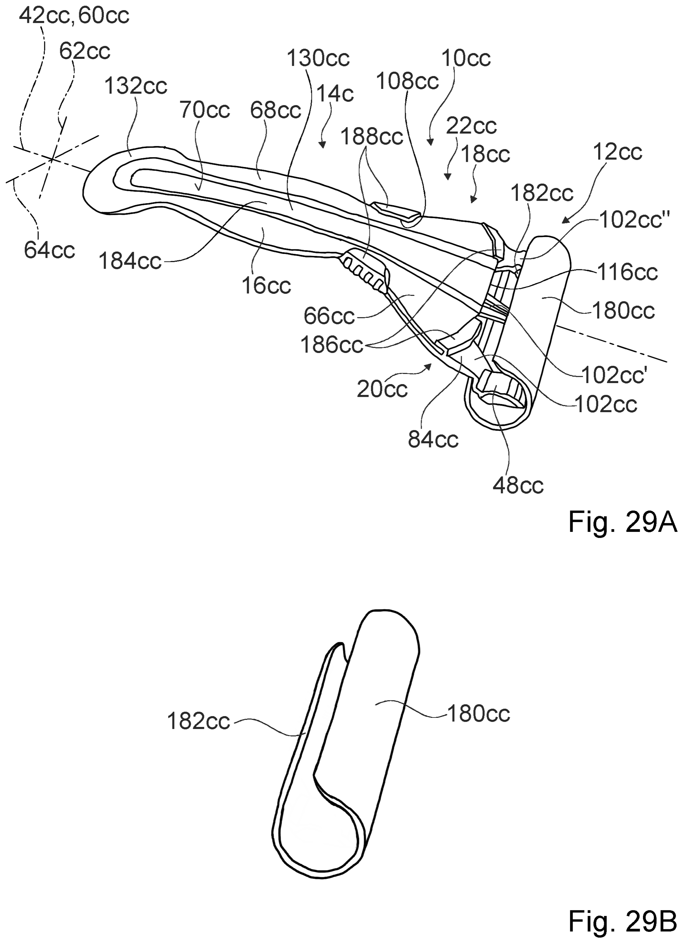

Die Figuren 29A und 29B zeigen ein Körperpflegeprodukt 10cc und einen Klingenschutz 180cc jeweils in einer schematischen perspektivischen Darstellung. Das Körperpflegeprodukt 10cc ist im vorliegenden Fall als ein Rasierer ausgebildet.

Das Körperpflegeprodukt 10cc weist eine Anwendungseinheit 12cc auf. Ferner weist das Körperpflegeprodukt 10cc eine Griffeinheit 14cc auf, welche einen materiellen Griffkörper 16cc aufweist. Des Weiteren weist das Körperpflegeprodukt 10cc eine Verbindungseinheit 18cc auf, welche die Anwendungseinheit 12cc mit der Griffeinheit 14cc verbindet.

Die Anwendungseinheit 12cc bildet einen Rasierkopf mit einem Klingenkopf 48cc des Körperpflegeprodukts 10cc mit einem Klingenelement. Die Anwendungseinheit 12cc kann Hart- und/oder Weichkomponenten umfassen.

Die Anwendungseinheit 12cc weist insbesondere einen als Klingenträger ausgebildeten Grundkörper 84cc auf. Es wäre auch denkbar, dass der Grundkörper 84cc einer Verbindungseinheit 18cc, insbesondere einem Verbindungselement 20cc, des Körperpflegeprodukts 10cc zugeordnet ist. Der Grundkörper 84cc der Anwendungseinheit 12cc ist, beispielhaft vollständig, aus einer Hartkomponente ausgebildet. Es wäre jedoch auch denkbar, dass der Grundkörper 84cc der Anwendungseinheit 12cc oder die Verbindungseinheit 18cc aus einer Hartkomponente und einer Weichkomponente gebildet ist. Der Grundkörper 84cc der Anwendungseinheit 12cc bildet einen statischen Klingenträger aus, welcher zu einer beweglichen, insbesondere schwenkbaren Aufnahme eines Klingenkopfes 48cc vorgesehen ist. Die Anwendungseinheit 12cc weist den Klingenkopf 48cc auf. Die Anwendungseinheit 12cc weist den an dem Grundkörper 84cc angeordneten Klingenkopf 48cc auf. Der Grundkörper 84cc weist drei Gelenkarme 102cc, 102cc', 102cc" auf.

Die drei Gelenkarme 102cc, 102cc', 102cc" sind zu einer schwenkbaren Aufnahme des Klingenkopfes 48cc vorgesehen. Der Klingenkopf 48cc kann insbesondere auswechselbar mit dem Grundkörper 84cc verbunden sein. Die Anwendungseinheit 12cc kann über den Klingenkopf 48cc eine statische Verbindung mit dem Klingenträger 172cc aufweisen.

Alternativ kann die Anwendungseinheit 12cc über die Gelenkarme 102cc, 102cc', 102cc" eine schwenkbare Verbindung mit der Anschlusseinheit 18i aufweisen.

Die Griffeinheit 14cc ist zu einem Greifen durch den Bediener vorgesehen. Die Griffeinheit 14cc weist den materiellen Griffkörper 16cc auf, geeignet, von einem Benutzer ergriffen, gegriffen oder gehalten zu werden. Der materielle Griffkörper 16cc der Griffeinheit 14cc weist einen Kopfbereich 66cc auf. Der Kopfbereich 66cc befindet sich an einem ersten (z.B. vorderen, oberen usw.) Ende der Griffeinheit 14cc, das im Allgemeinen einem Endbereich 132 (z.B. hinteren, unteren usw.) gegenüberliegt. Ein Griffbereich 68cc grenzt an den Kopfbereich 66cc. Der Griffbereich 68cc liegt neben dem Endbereich 132cc. Der Kopfbereich 66cc ist für eine Verbindung mit der Anschlusseinheit 18cc und/oder der Anwendungseinheit 12cc vorgesehen. Die Griffeinheit 14cc weist zumindest eine Grifffläche 70cc auf, welche eine Oberfläche des materiellen Griffkörpers 16cc ausbildet. Der gesamte Griffkörper 16cc ist in der Draufsicht insbesondere teilweise Y-förmig oder T-förmig ausgebildet. Der Griffkörper 16cc ist dreidimensional geformt, um die geknickte Form auszubilden. Die Grifffläche 70cc bildet entlang einer Längsachse 60cc auf der Vorderseite eine teilweise bombierte bzw. teilweise konvexe Form aus. Die bombierte Form ist entlang der Längsachse auf einer Rückseite umgekehrt ausgebildet. Der Griffkörper 16cc ist auf der Rückseite in einem Bereich der Grifffläche 70cc teilweise konkav geformt.

Der Griffkörper 16cc weist ferner eine im Wesentlichen konstante Materialstärke auf. Ferner weist der Griffkörper 16cc eine Nut 184cc auf, welche sich auf der Vorderseite von der Anwendungseinheit 12cc über die Grifffläche 70cc bis zu einer Unterseite der Griffeinheit 14cc erstreckt. Die Nut 184cc verläuft mittig entlang oder im Wesentlichen parallel zu der Längsachse der Griffeinheit 14cc und verläuft in der Breite entlang der Breitenachse 64cc, und hat eine Höhe, die sich entlang der Höhenachse 62cc erstreckt. Die Nut 184cc weist entlang einer Erstreckung parallel zu der Längsachse 60cc einen zumindest annähernd konstanten Querschnitt auf, wobei sich die Nut 184cc zu der Anwendungseinheit 12cc hin leicht verbreitert. Die Nut 184cc weist einen viereckigen (z. B. trapezförmigen), prismatischen, polygonalen, pyramidenförmigen und/oder kegelförmigen, mit oder ohne Kegelstumpf, Querschnitt auf, welcher sich zu einer Seite, insbesondere der Vorderseite hin aufweitet. Die Nut 184cc und der Griffkörper 16cc können Fasen, Abrundungen und/oder Verrundungen an den Kanten und/oder zwischen den Oberflächen (z. B. an den Seiten, Kanten usw.) der Übergänge aufweisen. Auf der Rückseite des materiellen Griffkörpers ist eine zu der Nut 184cc korrespondierende stegförmige Erhebung ausgebildet. Die stegförmige Erhebung entsteht dabei insbesondere durch die konstante Materialstärke bei einer Herstellung der Nut 184cc.

Der materielle Griffkörper 16cc besteht zumindest zu einem Großteil aus einem Papierwerkstoff oder anderen Materialien, wie Holz, Gras (z. B. Bambus), andere nachhaltige, biologisch abbaubare, biologisch erneuerbare und/oder recycelte Materialien, einschließlich Biokunststoffe und recycelte Kunststoffe, sowie Kombinationen davon usw. Zu den Polymermaterialien können sowohl neue (z. B. neue Kunststoffe, die recycelbar sind, neue Biokunststoffe, neue Biomaterialien usw.) als auch gemischte Polymere (z. B. gemischte neue und recycelte Kunststoffe) gehören. Der Griffkörper 16cc besteht vollständig aus einem Papierwerkstoff, einem Holz- oder Graswerkstoff (z. B. Bambus) oder einem anderen im Rahmen der vorliegenden Offenbarung beschriebenen Material. Der materielle Griffkörper 16cc der Griffeinheit 14cc weist zumindest eine Schicht aus einem Papierwerkstoff, einem Holz- oder Graswerkstoff (z. B. Bambus) auf, welche dreidimensional geformt ausgebildet ist. Der materielle Griffkörper 16cc besteht aus genau einer Schicht aus einem Papierwerkstoff, es wäre jedoch auch ein mehrschichtiger Aufbau innerhalb des Schutzbereichs denkbar.

Ferner weist das Körperpflegeprodukt 10cc die Verbindungseinheit 18cc auf. Die Verbindungseinheit 18cc ist zu einer formschlüssigen Verbindung mit dem materiellen Griffkörper 16cc der Griffeinheit 14cc vorgesehen. In solchen Ausführungsformen kann die Verbindungseinheit 18cc Formschlusselemente 186cc und 188cc umfassen, die in die Griffeinheit 14cc eingreifen. Jedes der Formschlusselemente 186cc, 188cc kann eine Einfahrnut 108cc aufweisen. Das Verbindungselement 20cc hat beispielhaft vier Formschlusselemente 186cc, 188cc, die dazu bestimmt sind, teilweise um den Kopfbereich 66cc des Griffkörpers 16cc herum einzugreifen. Wie in FIG. 29A gezeigt, sind die Formschlusselemente 186cc an der Verbindungseinheit 18cc so konfiguriert, dass sie in die Griffeinheit 14cc proximal der Kante 116cc des Kopfbereichs 66cc eingreifen. Wie in FIG. 29A gezeigt, sind die Formschlusselemente 188cc an der Verbindungseinheit 18cc so konfiguriert, dass sie mit der Griffachse 14cc im mittleren Bereich 130cc und/oder dem Kopfbereich 66cc proximal des Griffbereichs 68cc in Eingriff kommen. Während vier Formschlusselemente 186cc, 188cc dargestellt sind, liegt eine beliebige Anzahl von Formschlusselementen 186cc, 188cc im Rahmen der vorliegenden Offenbarung, so dass beispielsweise ein, zwei, drei oder vier der Formschlusselemente 186cc bzw. 188cc enthalten sind. Die Anzahl der Formschlusselemente 186cc, 188cc kann in Abhängigkeit von der Struktur (z.B. Geometrie, Form) der Griffeinheit 14cc, insbesondere der Struktur im Griffbereich 68cc und im Kopfbereich 66cc, variieren.

Das Körperpflegeprodukt 10cc weist die Verbindungseinheit 18cc auf. Die Verbindungseinheit 18cc weist ein Verbindungselement 20cc auf. Ferner weist die Verbindungseinheit 18cc ein weiteres Verbindungselement 22cc auf. Die Verbindungseinheit 18cc weist ein mit der Anwendungseinheit 12cc verbundenes Verbindungselement 20cc und ein mit der Griffeinheit 14cc verbundenes weiteres Verbindungselement 22cc auf. In einigen Ausführungsformen kann die Verbindungseinheit 18cc derart einstückig mit der Griffeinheit 14cc ausgebildet sein, dass der Grundkörper der Verbindungseinheit 18cc einstückig mit dem Kopfbereich 66bcc des Griffkörpers 16cc ausgebildet ist. Das Verbindungselement 20cc und das weitere Verbindungselement 22cc sind korrespondierend ausgebildet, insbesondere sodass sie ineinandergreifen oder verbindbar sind. Ferner ist das Verbindungselement 20cc der Verbindungseinheit 18cc einstückig mit dem Grundkörper 84cc der Anwendungseinheit 12cc ausgebildet. Das Verbindungselement 20cc bildet insbesondere einen Teil der Anwendungseinheit 12cc. In einigen Ausführungsformen ist die Verbindungseinheit 18cc einstückig mit der Anwendungseinheit 12cc ausgebildet, so dass der Grundkörper 84cc einstückig mit der Anwendungseinheit 12cc ausgebildet ist. Das weitere Verbindungselement 22cc der Verbindungseinheit 18cc ist zumindest teilweise einstückig mit der Griffeinheit 14cc ausgebildet. Das weitere Verbindungselement 22cc der Verbindungseinheit 18cc ist einstückig mit dem Griffkörper 16cc ausgebildet. Das weitere Verbindungselement 22cc der Verbindungseinheit 18cc ist einteilig mit dem Griffkörper 16cc ausgebildet. Das weitere Verbindungselement 22cc der Verbindungseinheit 18cc bildet daher einen Teil des Griffkörpers 16cc. Das weitere Verbindungselement 22cc der Verbindungseinheit 18cc besteht daher ebenfalls zu einem Großteil, insbesondere vollständig, aus einem Werkstoff der Griffeinheit 14cc, was im vorliegenden Fall ein Papier-, Holz- oder Graswerkstoff ist. Das weitere Verbindungselement 22cc ist in einem Endbereich des Griffkörpers 16cc ausgebildet.

Das Verbindungselement 20cc weist die vier Formschlusselemente 186cc, 188cc auf, welche dazu vorgesehen sind, den Kopfbereich 66cc des Griffkörpers 16cc teilweise zu umgreifen.

Der Grundkörper 84cc kann eine schwenkbare Verbindung (z.B. Montage, Passeingriff, etc.) mit dem Klingenkopf 48cc der Anwendungseinheit 12cc aufweisen. Der Grundkörper 84cc weist drei Gelenkarme 102cc, 102cc', 102cc" auf, die zur schwenkbaren Aufnahme des Klingenkopfs 48cc vorgesehen sind. Insbesondere kann der Klingenkopf 48cc der Anwendungseinheit 12cc über einen oder mehrere Gelenkarme 102cc, 102cc', 102cc" austauschbar mit dem Grundkörper 84cc verbunden werden. Dementsprechend weist die Anwendungseinheit 12cc, insbesondere der Klingenkopf 48cc, Strukturen auf, die geeignet sind, mit dem einen oder den mehreren Gelenkarmen 102cc, 102cc', 102cc" in Eingriff zu kommen. In einigen Ausführungsformen umfasst die Anwendungseinheit 12cc, insbesondere der Klingenkopf 48cc, Lagerflächen oder Stiftelemente, die in die äußeren Gelenkarme 102cc, 102cc" eingreifen. In einigen Ausführungsformen umfasst die Anwendungseinheit 12cc, insbesondere der Klingenkopf 48cc, eine Aussparung oder eine Spurrille, die so konfiguriert ist, dass sie in dem mittleren Gelenkarm 102cc' eingreift. Solche Merkmale an der Anwendungseinheit 12cc können ein Bestandteil des Klingenkopfes 48cc sein.

In einigen Ausführungsformen ist die Verbindungseinheit 18cc und die Anwendungseinheit 12cc teilweise einteilig oder einstückig ausgebildet. In solchen Ausführungsformen sind der eine oder die mehreren Gelenkarme 102cc, 102cc', 102cc" fest mit der Anwendungseinheit 12cc verbunden.

Ferner weist das Körperpflegeprodukt 10cc einen Klingenschutz 180cc auf. Der Klingenschutz 180cc ist bogenförmig oder rohrförmig ausgebildet. Der Klingenschutz 180cc ist von einem dreiseitig geöffneten Rohr, insbesondere Papier- oder Kartonrohr gebildet (z. B. jedes seitliche Ende, das sich entlang der Breitenachse 64cc erstreckt, und eine zentrale Öffnung, die so konfiguriert ist, dass sie die Anwendungseinheit 12cc aufnimmt, z. B. durch Gleiten oder Verschieben, was vielleicht auch eine Ablenkung des Klingenschutzes 180cc einschließt, wenn er auf der Anwendungseinheit 12cc installiert oder daran befestigt wird). Der Klingenschutz 180cc weist auf einer Mantelfläche eine schlitzartige Öffnung zu einem Einschieben der Anwendungseinheit 12cc, insbesondere des Klingenkopfes 48cc, auf. Der Klingenschutz 180cc ist von einem zylindrischen Rohr mit geöffneten Stirnseiten und mit einer, insbesondere schlitzartigen, Öffnung 182cc gebildet, welcher sich von einer Stirnseite zu der anderen Stirnseite erstreckt. Die Öffnung 182cc erstreckt sich von einer erste Stirnseite über die Mantelfläche hin zu einer zweiten Stirnseite des Klingenschutzes 180cc. Der Klingenschutz 180cc ist dazu vorgesehen, im Wesentlichen lediglich den Klingenkopf 48cc der Anwendungseinheit 12cc aufzunehmen. Durch die knappe Bemessung der Öffnung 182cc ergibt sich eine Federung bzw. eine Klemmkraft gegen die Anwendungseinheit 12cc. Der Klingenschutz 180cc besteht aus einem Papierwerkstoff, wie beispielsweise Karton oder dergleichen. Der Klingenschutz 180cc dient zu einem Schutz des Bedieners vor dem Klingenkopf 48cc.

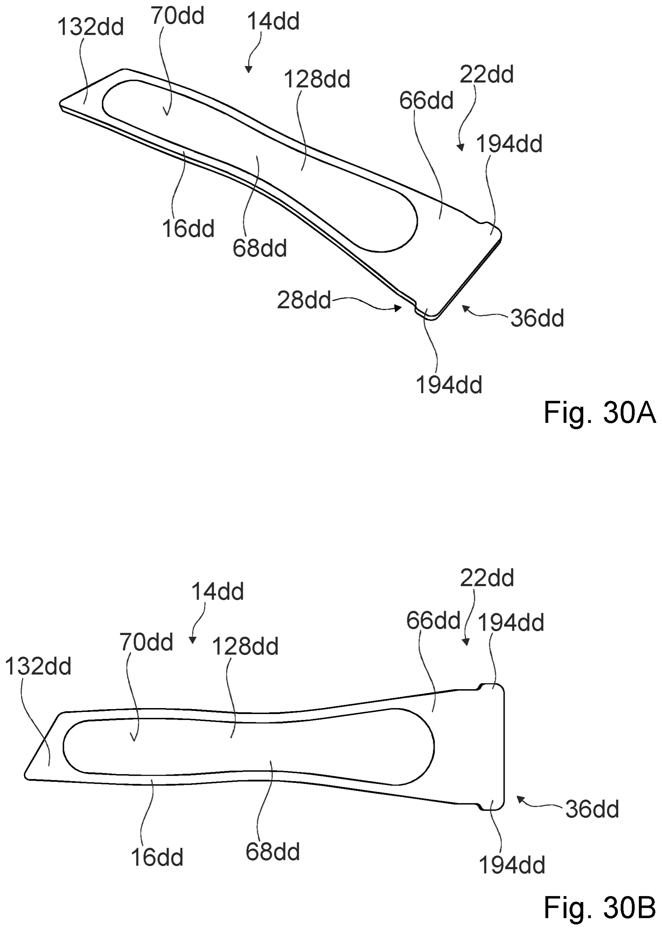

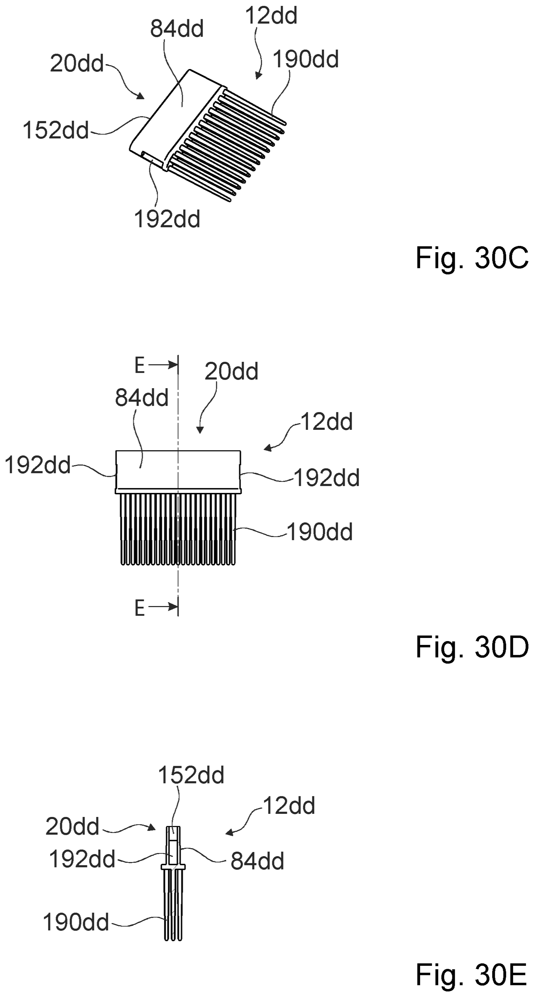

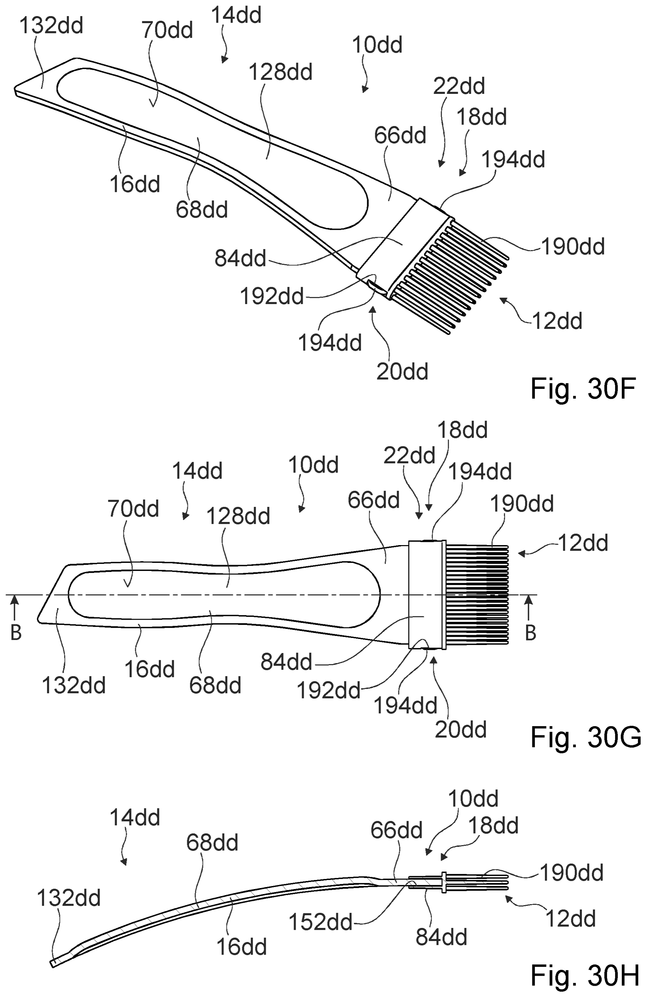

Die Figuren 30A bis 30H zeigen ein Körperpflegeprodukt 10dd in verschiedenen Darstellungen. Das Körperpflegeprodukt 10dd ist im vorliegenden Fall als ein Pinsel, insbesondere als ein Applikationspinsel, ausgebildet. Das Körperpflegeprodukt 10dd ist insbesondere von einem Haar- und/oder Bartfärbepinsel gebildet.

Das Körperpflegeprodukt 10dd weist eine Anwendungseinheit 12dd auf. Ferner weist das Körperpflegeprodukt 10dd eine Griffeinheit 14dd auf, welche einen materiellen Griffkörper 16dd aufweist. Des Weiteren weist das Körperpflegeprodukt 10dd eine Verbindungseinheit 18dd auf, welche die Anwendungseinheit 12dd mit der Griffeinheit 14dd verbindet.

Die Anwendungseinheit 12dd bildet einen Pinselkopf des Körperpflegeprodukts 10dd. Die Anwendungseinheit 12dd weist insbesondere einen als Pinselhaarträger ausgebildeten Grundkörper 84dd auf. Ein Grundkörper 84dd der Anwendungseinheit 12dd ist vollständig aus einer Hartkomponente ausgebildet. Es wäre jedoch auch denkbar, dass der Grundkörper 84dd der Anwendungseinheit 12dd aus einer Hartkomponente und einer Weichkomponente gebildet ist. Die Anwendungseinheit 12dd weist ferner mehrere an dem Grundkörper 84dd angeordnete Pinselborsten 190dd auf. Die Pinselborsten 190dd sind auf einer Oberseite an den Grundkörper 84dd angespritzt. Es wäre jedoch auch denkbar, dass die Pinselborsten 190dd von separaten Borsten gebildet sind, die beispielsweise in einem Ankerstanzverfahren oder in einem AFT-Verfahren mit dem Grundkörper 84dd verbunden sind.

Die Griffeinheit 14dd ist zu einem Greifen durch den Bediener vorgesehen. Die Griffeinheit 14dd weist den materiellen Griffkörper 16dd auf. Der materielle Griffkörper 16dd der Griffeinheit 14dd weist einen Kopfbereich 66dd auf. Ferner weist der materielle Griffkörper 16dd der Griffeinheit 14dd einen Griffbereich 68dd auf. Der Kopfbereich 66dd ist zu einer Anbindung der Anwendungseinheit 12dd vorgesehen. Des Weiteren weist der materielle Griffkörper 16dd der Griffeinheit 14dd an einem dem Kopfbereich abgewandten Ende einen Endbereich 132dd auf.

Der materielle Griffkörper 16dd besteht zumindest zu einem Großteil aus einem Papierwerkstoff. Der materielle Griffkörper 16dd besteht beispielhaft vollständig aus einem Papierwerkstoff. Der materielle Griffkörper 16dd besteht beispielhaft aus Holz. Der materielle Griffkörper 16dd besteht aus Massivholz. Alternativ wäre auch denkbar, dass der Griffkörper 16dd aus einem Schichtholz besteht. Der materielle Griffkörper 16dd weist eine flache, längliche Grundform auf.

Der materielle Griffkörper 16dd der Griffeinheit 14dd weist den Griffbereich 68dd auf. Ferner weist der materielle Griffkörper 16dd der Griffeinheit 14dd einen Endbereich 132dd auf. Der Griffbereich 68dd ist zu einer Anbindung der Anwendungseinheit 12dd vorgesehen. Der Kopfbereich 66dd weist eine trapezförmige Grundform auf. Der Endbereich 132dd bildet eine einseitige Spitze aus.

Ferner ist die Schicht des Griffkörpers 16dd verformt, bevorzugt tiefgezogen, insbesondere mittels Befeuchtung, Drucks und Wärme. Der materielle Griffkörper 16dd weist eine dreidimensionale, ovale Verformung 128dd auf. Die Griffeinheit 14dd weist zumindest eine Grifffläche 70dd auf, welche eine Oberfläche des materiellen Griffkörpers 16dd ausbildet. Die Grifffläche 70dd verläuft auf einer Vorderseite von dem Kopfbereich 66dd des Griffkörpers 16dd bis zum unteren Endbereich 132dd des Griffkörpers 16dd an der Unterseite. Die Grifffläche 70dd erstreckt sich über den Griffbereich 68dd des materiellen Griffkörpers 16dd. Die Grifffläche 70dd bildet entlang einer Längsachse auf der Vorderseite eine teilweise bombierte bzw. teilweise konvexe Form aus. Die bombierte Form ist entlang der Längsachse auf einer Rückseite umgekehrt ausgebildet. Der Griffkörper 16dd ist auf der Rückseite in einem Bereich der Grifffläche 70dd teilweise konkav geformt. Insbesondere verbreitert sich der Griffkörper 16dd zu der Anwendungseinheit 14dd hin. Der Griffkörper 16dd ist leicht geknickt auszubilden.

Ferner weist das Körperpflegeprodukt 10dd die Verbindungseinheit 18dd auf. Die Verbindungseinheit 18dd ist zu einer formschlüssigen Verbindung mit dem materiellen Griffkörper 16dd der Griffeinheit 14dd vorgesehen.

Die Anwendungseinheit 12dd kann mittels der Verbindungseinheit 18dd mit der Griffeinheit 14dd verbunden werden. Die Verbindungseinheit 18dd weist ein mit der Anwendungseinheit 12dd verbundenes Verbindungselement 20dd und ein mit der Griffeinheit 14dd verbundenes weiteres Verbindungselement 22dd auf. Das Verbindungselement 20dd und das weitere Verbindungselement 22dd sind korrespondierend ausgebildet. Ferner ist das Verbindungselement 20dd der Verbindungseinheit 18dd einstückig mit der Anwendungseinheit 12dd ausgebildet. Das Verbindungselement 20dd bildet insbesondere einen Teil der Anwendungseinheit 12dd. Das weitere Verbindungselement 22dd der Verbindungseinheit 18dd ist zumindest teilweise einstückig mit der Griffeinheit 14dd ausgebildet. Das weitere Verbindungselement 22dd der Verbindungseinheit 18dd ist einstückig mit dem Griffkörper 16dd ausgebildet. Das weitere Verbindungselement 22dd der Verbindungseinheit 18dd bildet daher einen Teil des Griffkörpers 16dd. Das weitere Verbindungselement 22dd der Verbindungseinheit 18dd besteht daher ebenfalls zu einem Großteil, insbesondere vollständig, aus einem Papierwerkstoff.

Das Verbindungselement 20dd der Verbindungseinheit 18dd besteht zu einem Großteil aus einem Polymer, insbesondere aus einem Kunststoff. Das Verbindungselement 20dd der Verbindungseinheit 18dd besteht aus einem Hartkunststoff.

Das weitere Verbindungselement 22dd ist in einem Endbereich des Griffkörpers 16dd ausgebildet. Der Kopfbereich 66dd des Griffkörpers 16dd bildet in seinem Endbereich das weitere Verbindungselement 22dd aus, an welchem die Anwendungseinheit 12dd fixiert ist. Das weitere Verbindungselement 22dd bildet an dem Ende des Kopfbereichs 66dd einen Verbindungsbereich 28dd aus.

Das Verbindungselement 20dd der Verbindungseinheit 18dd ist formschlüssig mit dem weiteren Verbindungselement 22dd der Verbindungseinheit 18dd verbunden. Das Verbindungselement 20dd und die Anwendungseinheit 12dd sind einteilig, insbesondere in einem Spitzgussverfahren, hergestellt.

Ferner weist das Verbindungselement 20dd zumindest eine Aufnahmenut 152dd auf. Die Aufnahmenut 152dd ist von dem Grundkörper 84dd begrenzt. Die Aufnahmenut 152dd erstreckt sich über einen Großteil des Grundkörpers 84dd und ist zu einer der Griffeinheit 14dd zugewandten Unterseite hin geöffnet. Die Aufnahmenut 152dd dient zu einer Aufnahme des weiteren Verbindungselements 22dd. Die Aufnahmenut 152dd weist eine schlitzartige Öffnung auf. Ferner weist das Verbindungselement 20dd zwei seitliche, rechteckige Ausnehmungen 192dd auf. Die Ausnehmungen 192dd erstrecken sich von außen durch den Grundkörper 84dd hin zu der Aufnahmenut 152dd. Die Ausnehmungen 192dd sind in den Grundkörper 84dd eingebracht. Die Ausnehmungen 192dd bilden zusätzlich Öffnungen der Aufnahmenut 152dd.

Das weitere Verbindungselement 22dd der Verbindungseinheit 18dd weist zumindest eine Formschlusskontur 36dd auf, welche dazu vorgesehen ist, einen Formschluss mit dem Verbindungselement 20dd auszubilden. Die Formschlusskontur 36dd weist zwei seitlich vorstehende Nasen 194dd auf. Die Nasen 194dd sind einteilig mit dem Griffkörper 16dd ausgebildet. Die Nasen 194dd weisen eine quaderförmige Grundform auf. Die Nasen 194d der Formschlusskontur 36dd weisen eine Länge von 3 mm bis 8 mm, vorzugsweise von 4 mm bis 6 mm, auf. Ferner weisen die Nasen 194dd jeweils eine Breite bzw. Höhe von 0,5 mm bis 3 mm, vorzugsweise von 0,8 mm bis 2 mm, auf. Die Nasen 194dd sind dazu vorgesehen, in die seitlichen Ausnehmungen 192dd des Verbindungselements 20dd einzugreifen. Die Nasen 194dd und die seitlichen Ausnehmungen 192dd wirken zu einem Formschluss zusammen.

Bei einer Montage wird insbesondere der Griffkörper 16dd mit dem Kopfbereich 66dd und dem weiteren Verbindungselement 22dd in die Aufnahmenut 152dd eingeschoben, bis die Nasen 194dd in den seitlichen Ausnehmungen 192dd verrasten. Bei einem Einschieben wird insbesondere eine Seitenwand des Grundkörpers 84dd elastisch verformt, um ein Einschieben der Nasen 194dd zu ermöglichen. Nach einer Montage sind die Anwendungseinheit 12dd und die Griffeinheit 14dd über die Verbindungseinheit 18dd unlösbar verbunden.

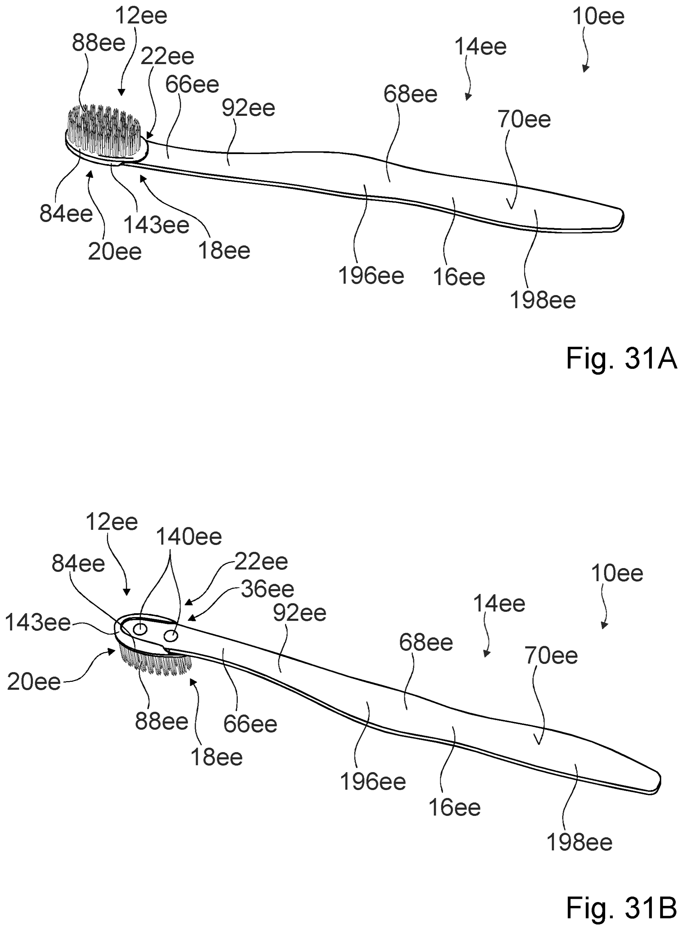

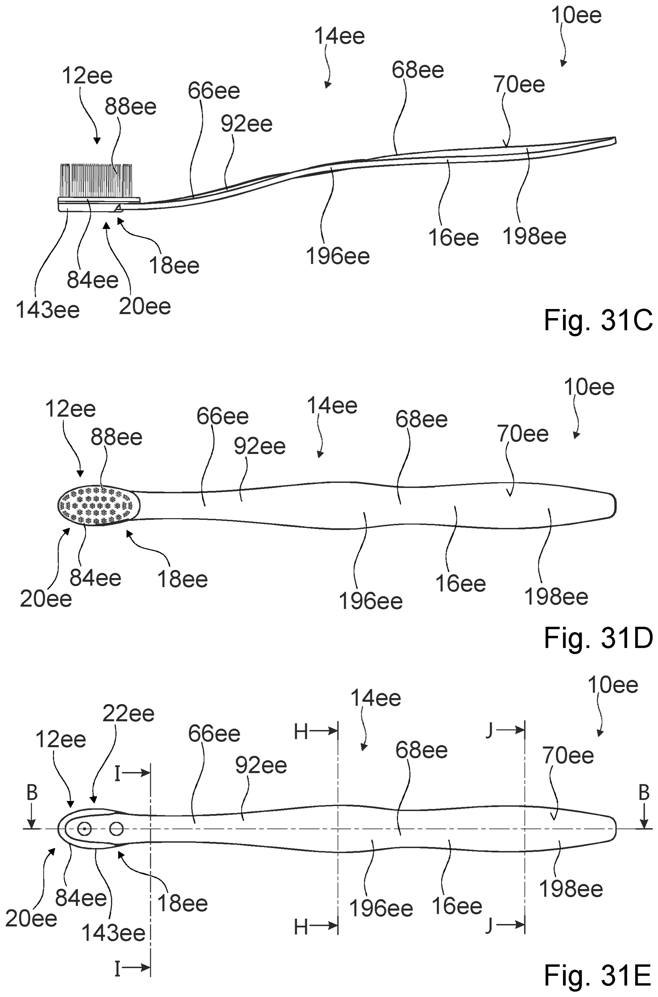

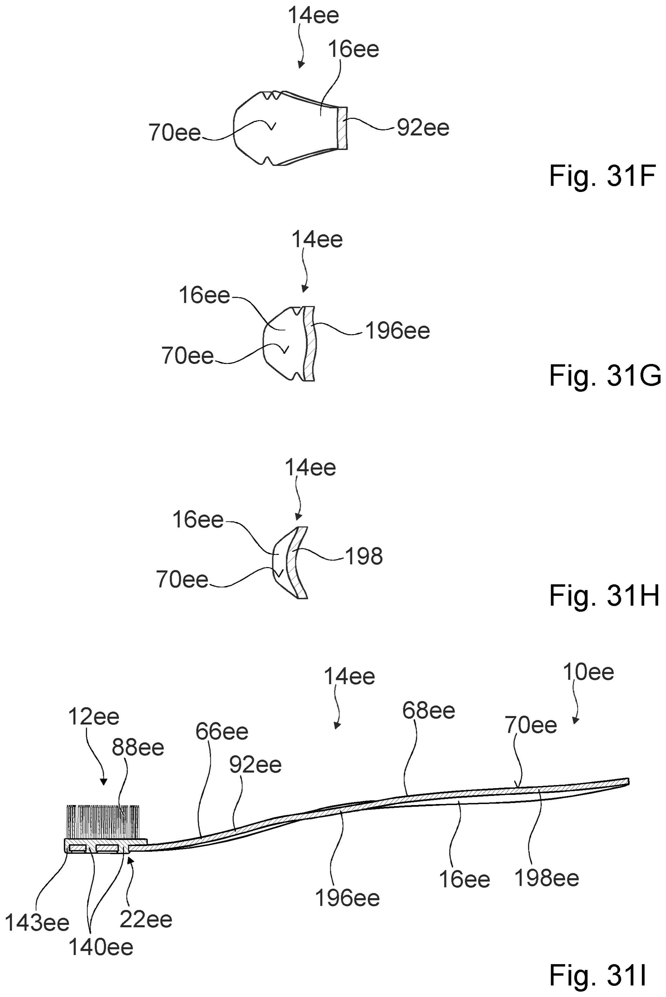

Die Figuren 31A bis 31I zeigen eine Griffeinheit 14ee eines Körperpflegeprodukts 10ee in verschiedenen Darstellungen. Das Körperpflegeprodukt 10ee ist von einem Mundhygienemittel gebildet. Das Körperpflegeprodukt 10ee ist im vorliegenden Fall als eine Zahnbürste ausgebildet.

Das Körperpflegeprodukt 10ee weist eine Anwendungseinheit 12ee auf. Ferner weist das Körperpflegeprodukt 10ee die Griffeinheit 14ee auf, welche einen materiellen Griffkörper 16ee aufweist. Des Weiteren weist das Körperpflegeprodukt 10ee eine Verbindungseinheit 18ee auf, welche die Anwendungseinheit 12ee mit der Griffeinheit 14ee verbindet.

Die Anwendungseinheit 12ee bildet einen Bürstenkopf des Körperpflegeprodukts 10ee. Im vorliegenden Fall ist die Anwendungseinheit 12ee als ein Zahnbürstenkopf ausgebildet. Die Anwendungseinheit 12ee weist insbesondere einen als Borstenträger ausgebildeten Grundkörper 84ee auf. Der Grundkörper 84ee der Anwendungseinheit 12ee ist vollständig aus einer Kunststoff-Komponente ausgebildet, hier aus Material für gespritzte Borsten. Es wäre jedoch auch denkbar, dass der Grundkörper 84ee der Anwendungseinheit 12ee aus einer Hartkomponente und einer Weichkomponente gebildet ist. Der Grundkörper 84ee der Anwendungseinheit 12ee bildet einen Borstenträger aus. Die Anwendungseinheit 12ee weist ferner mehrere mit dem Grundkörper 84ee zusammen ausgebildete Borsten 88ee auf. Die Anwendungseinheit 12ee ist im Spritzgussverfahren hergestellt und es bildet sich sowohl der Grundkörper 84ee wie auch die Borsten 88ee aus. Die Borsten 88ee können alternativ auch im Grundkörper 84ee aufgenommen, insbesondere eingestanzt sein. Alternativ können auf einer Vorderseite des Grundkörpers 84ee auch Aussparungen ausgeformt sein. Die Aussparungen sind zur Aufnahme der Borsten 88ee vorgesehen, welche im konventionellen Ankerstanz-Verfahren fixiert werden. Der Grundkörper 84ee weist in dem Fall eine Vielzahl von Aussparungen auf. Die Aussparungen sind von Borstenlöchern gebildet. Als Borsten 88ee kommen beliebige geeignete Borsten infrage, die, wie oben beschrieben, beispielsweise im Ankerstanz-Verfahren angestanzt sein können. Grundsätzlich wäre auch der Einsatz von AFT denkbar. Im Falle von AFT ist in dem Grundkörper 84ee eine Ausnehmung vorgesehen, welche zur Aufnahme eines Borstenplättchens parallel zur Griffeinheit 14ee vorgesehen ist. Das Plättchen ist insbesondere mittels eines Spritzgussverfahrens hergestellt, wobei das Plättchen bereits vor der Befestigung beborstet ist. Das Plättchen ist dazu vorgesehen, in der Ausnehmung des Grundkörpers 84ee, insbesondere mittels Verschweißens, verankert zu werden oder auch mittels anderer Verbindungstechniken und/oder außerhalb einer Ausnehmung angeordnet zu werden. Die Borsten 88ee können sich hinsichtlich ihrer Länge, ihrer Zusammensetzung, ihrer Borstenanzahl, eines Borstenmaterials, einer Farbe, einer Oberflächenstrukturierung und dergleichen mehr unterscheiden.

Die Anwendungseinheit 12ee ist an der Oberseite des Körperpflegeprodukts 10ee angeordnet. Die Anwendungseinheit 12ee bildet einen obersten Punkt des Körperpflegeprodukts 10ee. Die Anwendungseinheit 12ee ist vollständig aus einer Kunststoff-Komponente, hier einem Material für gespritzte Borsten ausgebildet. Es wäre jedoch auch denkbar, dass die Anwendungseinheit 12ee teilweise aus einer Weichkomponente und teilweise aus einer Hartkomponente ausgebildet ist. Bezüglich geeigneter Weich- und/oder Hartkomponenten wird auf obenstehende Beschreibung verwiesen.

Die Griffeinheit 14ee ist zu einem Greifen durch den Bediener vorgesehen. Die Griffeinheit 14ee weist den materiellen Griffkörper 16ee auf. Der materielle Griffkörper 16ee der Griffeinheit 14ee weist einen Kopfbereich 66ee auf. Ferner weist der materielle Griffkörper 16ee der Griffeinheit 14ee einen Griffbereich 68ee und einen zwischen dem Griffbereich 68ee und dem Kopfbereich 66ee angeordneten Halsbereich 92ee auf. Der Kopfbereich 66ee ist zu einer Anbindung der Anwendungseinheit 12ee vorgesehen. Die Griffeinheit 14ee weist zumindest eine Grifffläche 70ee auf, welche eine Oberfläche des materiellen Griffkörpers 16ee ausbildet. Die Grifffläche 70ee verläuft auf der Vorderseite von dem Halsbereich 92ee des Griffkörpers 16ee bis zum unteren Ende des Körperpflegeprodukts 10ee an der Unterseite. Die Grifffläche 70ee erstreckt sich über den Griffbereich 68ee des materiellen Griffkörpers 16ee. Die Grifffläche 70ee bildet entlang der Längsachse auf der Vorderseite eine bombierte bzw. konvexe Form aus.

Der materielle Griffkörper 16ee weist einen Daumengriffbereich 196ee auf, welcher zu einer Vorderseite hin teilweise bombiert ausgebildet ist. Der Daumengriffbereich 196ee weist einen geschwungenen Querschnitt auf (Fig. 31G). Der materielle Griffkörper 16ee ist insbesondere dünnwandig ausgebildet. Der materielle Griffkörper 16ee ist insbesondere wie eine gebogene Platte geformt. Der Griffkörper 16ee ist nachträglich verformt. Der Griffkörper 16ee ist verformt, bevorzugt tiefgezogen, insbesondere mittels Befeuchtung, Drucks und Wärme. Der Griffkörper 16ee ist insbesondere von einer Art Platte gebildet, die gebogen ist. Die Biegung ist insbesondere im Wesentlichen quer zur Längsachse der Griffeinheit 14ee. Der materielle Griffkörper 16ee weist insbesondere eine meist gebogene Querschnittsform auf, sodass wiederum eine voluminöse Außenform geschaffen wird. Bevorzugt ist der materielle Griffkörper 16ee insbesondere von hinten ausgenommen. Der materielle Griffkörper 16ee weist insbesondere eine dünne Wandstärke auf. Die dünne Wandstärke reicht insbesondere bis in den Halsbereich 92ee der Griffeinheit 14ee. Die dünne Wandstärke ist beispielsweise geschaffen durch Ausnehmungen auf der Rückseite. Der materielle Griffkörper 16ee weist ferner einen Handflächengriffbereich 198ee auf, welcher zu einer Vorderseite hin teilweise bombiert ausgebildet ist. Der materielle Griffkörper 16ee weist eine geschwungene Form auf.

Der materielle Griffkörper 16ee bildet auf einer dem Daumengriffbereich 196ee und dem Handflächengriffbereich 198ee abgewandten Seite einen im Wesentlichen konkaven Aufnahmebereich aus. Der materielle Griffkörper 16ee weist insbesondere eine meist zu einer Rückseite konkav gebogene Querschnittsform auf, sodass wiederum eine voluminöse Außenform geschaffen wird.

Der materielle Griffkörper 16ee besteht zumindest zu einem Großteil aus einem Papierwerkstoff. Der materielle Griffkörper 16ee besteht beispielhaft vollständig aus einem Papierwerkstoff. Der materielle Griffkörper 16ee besteht beispielhaft aus Holz. Der materielle Griffkörper 16ee besteht aus Massivholz. Alternativ wäre auch denkbar, dass der Griffkörper 16ee aus einem Schichtholz besteht. Der materielle Griffkörper 16ee weist eine flache, längliche Grundform auf.

Das Körperpflegeprodukt 10ee weist ferner die Verbindungseinheit 18ee auf. Die Verbindungseinheit 18ee weist ein mit der Anwendungseinheit 12ee verbundenes Verbindungselement 20ee und ein mit der Griffeinheit 14ee verbundenes weiteres Verbindungselement 22ee auf. Das Verbindungselement 20ee und das weitere Verbindungselement 22ee sind korrespondierend ausgebildet. Ferner ist das Verbindungselement 20ee der Verbindungseinheit 18ee einstückig mit der Anwendungseinheit 12ee ausgebildet. Das Verbindungselement 20ee bildet insbesondere einen Teil der Anwendungseinheit 12ee. Das Verbindungselement 20ee ist einteilig mit dem Grundkörper 84ee der Anwendungseinheit 12ee ausgebildet. Das weitere Verbindungselement 22ee der Verbindungseinheit 18ee ist zumindest teilweise einstückig mit der Griffeinheit 14ee ausgebildet. Das weitere Verbindungselement 22ee der Verbindungseinheit 18ee ist einstückig mit dem Griffkörper 16ee ausgebildet. Das weitere Verbindungselement 22ee der Verbindungseinheit 18ee bildet daher einen Teil des Griffkörpers 16ee. Das weitere Verbindungselement 22ee der Verbindungseinheit 18ee besteht daher ebenfalls zu einem Großteil, insbesondere vollständig, aus einem Papierwerkstoff.

Das Verbindungselement 20ee der Verbindungseinheit 18ee besteht zu einem Großteil aus einem Polymer, insbesondere aus einem Kunststoff. Das Verbindungselement 20ee der Verbindungseinheit 18ee besteht aus einem Hartkunststoff. Das Verbindungselement 20ee besteht bevorzugt aus Polypropylen (PP) und/oder einem nachhaltigen und/oder abbaubaren Material. Eine weitere Variante wäre die Verwendung von Polyethylen (PE).

Das weitere Verbindungselement 22ee ist in einem Endbereich des Griffkörpers 16ee ausgebildet. Der Kopfbereich 66ee des Griffkörpers 16ee bildet in seinem Endbereich das weitere Verbindungselement 22ee aus, an welchem die Anwendungseinheit 12ee fixiert ist. Das weitere Verbindungselement 22ee bildet an dem Ende des Kopfbereichs 66ee einen Verbindungsbereich 28ee aus.

Das Verbindungselement 20ee der Verbindungseinheit 18ee ist zumindest teilweise stoffschlüssig mit dem weiteren Verbindungselement 22ee der Verbindungseinheit 18ee verbunden. Das Verbindungselement 20ee der Verbindungseinheit 18ee ist zumindest teilweise formschlüssig mit dem weiteren Verbindungselement 22ee der Verbindungseinheit 18ee verbunden. Das weitere Verbindungselement 22ee der Verbindungseinheit 18ee ist mit dem Verbindungselement 20ee der Verbindungseinheit 18ee umspritzt.

Das Verbindungselement 20ee weist eine Auflagefläche zu einer Anlage an den Griffkörper 16ee und zwei auf der Auflagefläche angeordneter Nieten 140ee auf. Die Nieten 140ee weisen jeweils beispielhaft einen Durchmesser von 1,5 mm bis 4 mm, vorzugsweise von 2 mm bis 3 mm, auf. Ferner weisen die Nieten 140ee eine Höhe von 2 mm bis 4,5 mm, vorzugsweise von 2,7 bis 3,7 mm, auf. Die Nieten 140ee sind dazu vorgesehen, sich jeweils durch eine Durchgangsausnehmung des weiteren Verbindungselements 22ee zu erstrecken und dahinter verformt zu werden. Des Weiteren weist das Verbindungselement 20ee einen Bördelrand 143ee auf, welcher dazu vorgesehen ist, sich um zumindest eine Kante des Griffkörpers 16ee zu erstrecken. Der Bördelrand 143ee wird insbesondere nach einem Anbringen an den Griffkörper 16ee plastisch, insbesondere durch Hitzeeinwirkung, verformt.

Das weitere Verbindungselement 22ee der Verbindungseinheit 18ee weist zumindest eine Formschlusskontur 36ee auf, welche dazu vorgesehen ist, einen Formschluss mit dem Verbindungselement 20ee auszubilden. Das weitere Verbindungselement 22ee weist in dem Kopfbereich 66ee eine Formschlusskontur 36ee auf. Die Formschlusskontur 36ee ist derart gestaltet, dass keine Rotation und insbesondere kein Abziehen des Verbindungselements 20ee möglich ist. Die Formschlusskontur 36ee des weiteren Verbindungselements 22ee weist zwei Durchgangsausnehmungen in dem Kopfbereich 66ee auf. Die Durchgangsausnehmungen dienen zu einer Aufnahme der Nieten 140ee.

Bei einer Montage wird insbesondere der Griffkörper 16ee mit dem weiteren Verbindungselement 22ee in das Verbindungselement 20ee eingelegt. Der Kopfbereich 66ee des Griffkörpers 16ee liegt dabei auf der Auflagefläche des Verbindungselements 20ee auf, wobei die Nieten 140ee des Verbindungselements 20ee in die Durchgangsausnehmungen der Formschlusskontur 36ee eingeführt werden. Der Bördelrand 143ee liegt außen an dem Kopfbereich 66ee des Griffkörpers 16ee an. Anschließend erfolgt ein Umformverfahren. Bei dem Umformverfahren werden die Nieten 140ee und der Bördelrand 143ee verdrückt. Das Verdrücken erfolgt mittels Wärme und Druck. Bevorzugt wird das Verbindungselement 20ee vor dem Verdrücken erwärmt. Der Umformstempel wird insbesondere nicht gewärmt, wobei durch den kalten Stempel der Kunststoff schneller abkühlt. Hierdurch kann ein vorteilhaft schneller Zyklus ermöglicht werden.

### Bezugszeichenliste

- 10: Körperpflegeprodukt
- 12: Anwendungseinheit
- 14: Griffeinheit
- 16: Griffkörper
- 18: Verbindungseinheit
- 20: Verbindungselement
- 22: Verbindungselement
- 24: Zahnseidefaden
- 26: Arm
- 26': Arm
- 28: Verbindungsbereich
- 28': Verbindungsbereich
- 30: Kappe
- 30': Kappe
- 32: Verbindungsbügel
- 34: Anspritzpunkt
- 36: Formschlusskontur
- 38: Durchgangsausnehmung
- 38': Durchgangsausnehmung
- 40: Einkerbung
- 40': Einkerbung
- 42: Haupterstreckungsrichtung
- 44: Kernfortsatz
- 46: Bürstenkopf
- 48: Klingenkopf
- 50: Bereitstellungsschritt
- 52: Verbindungsschritt
- 54: Papierbogen
- 56: Trennschritt
- 58: Spritzgusswerkzeug
- 60: Längsachse
- 62: Höhenachse
- 64: Breitenachse
- 66: Kopfbereich
- 68: Griffbereich
- 70: Grifffläche
- 72: Zahnstocherspitze
- 74: Kavität
- 76: Kavität
- 78: Kavität
- 80: Kanalausnehmung
- 82: Kaltkanalanguss
- 83: Fortsatz
- 84: Grundkörper
- 86: Borstenplättchen
- 88: Borsten
- 90: Aufnahmebereich
- 92: Halsbereich
- 94: Vorderwand
- 96: Seitenwand
- 96': Seitenwand
- 98: Seiteninnenwand
- 98': Seiteninnenwand
- 100: Hülle
- 102: Gelenkarm
- 102': Gelenkarm
- 102": Gelenkarm
- 104: Anlagefläche
- 106: Anlagefläche
- 106': Anlagefläche
- 108: Einfahrnut
- 110: Rastkamm
- 112: Reinigungselementträger
- 114: Ausnehmung
- 116: Kante
- 118: Struktur
- 120: Träger
- 122: Vertiefung
- 124: Lamellen
- 126: Fluidkugel
- 128: Verformung
- 130: Mittelbereich
- 132: Endbereich
- 134: Verformung
- 136: Verformung
- 138: Schlitz
- 140: Niet
- 142: Reinigungskante
- 143: Bördelrand
- 144: Ausnehmung
- 146: Zusatzreinigungskante
- 148: Steg
- 150: Ausnehmung
- 152: Aufnahmenut
- 154: Noppe
- 156: Teilkante
- 158: Teilkante
- 160: Rückwand
- 162: Innenrückwand
- 164: Lasche
- 166: Lasche
- 168: Faltkante
- 170: Klingenelement
- 172: Klingenträger
- 174: Ausnehmung
- 176: Ausnehmung
- 178: Niet
- 180: Klingenschutz
- 182: Öffnung
- 184: Nut
- 186: Formschlusselement
- 188: Formschlusselement
- 190: Pinselborsten
- 192: Ausnehmung
- 194: Nase
- 196: Daumengriffbereich
- 198: Handflächengriffbereich
- 200: Durchgangsausnehmung
- 202: Durchgangsausnehmung

## Patentansprüche

1. Verbindungseinheit (18i; 18cc) für ein Körperpflegeprodukt (10i; 10cc), insbesondere Rasierer, umfassend: einen Grundkörper (84i; 84cc) mit einem Verbindungselement (20i; 20cc), wobei das Verbindungselement (20i; 20cc) mindestens eine Einfahrnut (108i; 108cc) und mindestens einen Rastkamm (110i), eine erste Kontaktfläche (104i), eine zweite Kontaktfläche (106i), eine dritte Kontaktfläche (106i') und ein Formschlusselement (186i; 186cc; 188cc) aufweist.

2. Verbindungseinheit (18i; 18cc) nach Anspruch 1, **dadurch gekennzeichnet, dass** das Verbindungselement (20i; 20cc) zwischen zwei Einfahrnuten (108i; 108cc) und vier Einfahrnuten (108i; 108cc) umfasst.

3. Verbindungseinheit (18i; 18cc) nach Anspruch 1 oder 2, **dadurch gekennzeichnet, dass** die erste Kontaktfläche (104i), die zweite Kontaktfläche (106i) und die dritte Kontaktfläche (106i') eine polygonale oder prismatische Struktur im Grundkörper (84i) bilden.

4. Verbindungseinheit (18i; 18cc) nach einem der Ansprüche 1 bis 3, **dadurch gekennzeichnet, dass** der Grundkörper (84i; 84cc) aus Papier, Holz, Gras (z.B. Bambus), nachhaltigem, biologisch abbaubarem, kompostierbarem, recycelbarem, recyceltem und/oder bioplastischem Material besteht.

5. Verbindungseinheit (18i; 18cc) nach einem der Ansprüche 1 bis 4, **dadurch gekennzeichnet, dass** der Grundkörper (84i; 84cc) eine oder mehrere Schichten umfasst.

6. Verbindungseinheit (18i; 18cc) nach einem der Ansprüche 1 bis 5, **dadurch gekennzeichnet, dass** der Grundkörper (84i; 84cc) eine harte Komponente und/oder eine weiche Komponente aufweist.

7. Verbindungseinheit (18i; 18cc) für ein Körperpflegeprodukt (10i; 10cc), insbesondere Rasierer oder Dermaplaning-Produktumfassend: ein Verbindungselement (18aa; 18bb) mit zumindest einem Fortsatz, insbesondere einer Niet (140aa; 140aa'; 178aa), und einer Aufnahmenut (152aa); und einen Klingenträger (172aa).

8. Verbindungseinheit (18aa; 18bb) nach Anspruch 7, **dadurch gekennzeichnet, dass** der mindestens eine Fortsatz zwischen zwei Fortsätzen, insbesondere Nieten (140aa; 140aa'; 178aa), und drei Fortsätzen, insbesondere Nieten (140aa; 140aa'; 178aa), umfasst.

9. Verbindungseinheit (18aa; 18bb) nach Anspruch 7 oder 8, **dadurch gekennzeichnet, dass** der mindestens eine Fortsatz mindestens eine Niete (140aa; 140aa'; 178aa) umfasst.

10. Verbindungseinheit (18aa; 18bb) nach einem der Ansprüche 7 bis 9, **dadurch gekennzeichnet, dass** der mindestens eine Fortsatz, insbesondere Niet (140aa; 140aa'), einen Querschnitt mit kreisförmiger Struktur aufweist.

11. Verbindungseinheit (18aa; 18bb) nach einem der Ansprüche 7 bis 10, **dadurch gekennzeichnet, dass** ein erster Fortsatz, insbesondere Niet (178aa), des mindestens einen Fortsatzes, insbesondere Niet (140aa; 140aa'; 178aa), länglich ist.

12. Verbindungseinheit (18aa; 18bb) nach einem der Ansprüche 7 bis 11, **dadurch gekennzeichnet, dass** der erste Fortsatz, insbesondere Niet (178aa), des mindestens einen Fortsatzes, insbesondere Niet (140aa; 140aa'; 178aa), größer ist als ein zweiter Fortsatz, insbesondere Niet (140aa; 140aa'), des mindestens einen Fortsatzes, insbesondere Niet (140aa; 140aa'; 178aa).

13. Verbindungseinheit (18aa; 18bb) nach einem der Ansprüche 7 bis 12, **dadurch gekennzeichnet, dass** die Verbindungseinheit (18aa; 18bb) Papier, Holz, Gras (z.B. Bambus), nachhaltiges, biologisch abbaubares, kompostierbares, wiederverwertbares, recyceltes und/oder bioplastisches Material umfasst.

14. Verbindungseinheit (18aa; 18bb) nach einem der Ansprüche 7 bis 13, **dadurch gekennzeichnet, dass** die Verbindungseinheit (18aa; 18bb) eine oder mehrere Schichten umfasst.

15. Griffeinheit (14i; 14aa; 14bb; 14cc) für ein Körperpflegeprodukt (10i; 10cc), insbesondere ein Rasierer oder Dermaplaning-Produkt umfassend:
einen Griffkörper (16i; 16aa; 16bb; 16cc), umfassend:
einen Kopfbereich (66i; 66aa; 66bb; 66cc), wobei der Kopfbereich (66i; 66aa; 66bb; 66cc) eine Kante (116i; 116aa; 116bb; 116cc) aufweist, wobei der Kopfbereich (66i; 66aa; 66bb; 66cc) ein weiteres Verbindungselement (22i; 22aa; 22bb; 22cc), insbesondere Griffverbindungselement, aufweist, wobei das weitere Verbindungselement (22i; 22aa; 22bb; 22cc) mindestens eine Ausnehmung (114i), einen Aufnahmebereich (152i; 152aa), eine Formschlusskontur (36aa), mindestens eine Durchgangsausnehmung (200aa; 200aa'; 202aa) und
mindestens ein Formschlusselement (188i, 188aa, 188cc) aufweist;
einen mittleren Bereich (130i; 130aa; 130bb; 130cc); und
einen Endbereich (132i; 132aa; 132bb; 132cc).
